Europäisches Patentamt

European Patent Office

Office européen des brevets

(19)

(11) EP 1 598 758 A1

(12) **EUROPEAN PATENT APPLICATION**
published in accordance with Art. 158(3) EPC

(43) Date of publication:
23.11.2005 Bulletin 2005/47

(51) Int Cl.7: **G06F 17/60**

(21) Application number: 03816064.4

(22) Date of filing: 28.02.2003

(86) International application number:
**PCT/JP2003/002319**

(87) International publication number:
**WO 2004/077323 (10.09.2004 Gazette 2004/37)**

(84) Designated Contracting States:
**AT BE BG CH CY CZ DE DK EE ES FI FR GB GR
HU IE IT LI LU MC NL PT SE SI SK TR**
Designated Extension States:
**AL LT LV MK RO**

(71) Applicant: **Shiomi, Yasushi
Tachikawa-shi, Tokyo 190-0022 (JP)**

(72) Inventor: **Shiomi, Yasushi
Tachikawa-shi, Tokyo 190-0022 (JP)**

(74) Representative: **Goddar, Heinz J.
FORRESTER & BOEHMERT
Pettenkoferstrasse 20-22
80336 München (DE)**

(54) **CALCULATION DEVICE AND METHOD AND POINT OR COUPON SERVICE SYSTEM**

(57)    A point or coupon service system for issuing a point or a coupon for discount in selling a commodity or providing a service and enabling a commodity sales or service provision without defraying any incentive cost. In a point service, when a consumer (3) purchases a particular content sold by a content seller (1), the consumer (3) can receive a discount if he/she has a prepaid royalty point generated when a commodity seller (5) sells a non-particular commodity and can receive a discount when purchasing a non-particular commodity sold by the commodity seller (5) if he/she has a pre-taken royalty point generated when the content seller (1) cells a particular commodity. The content seller (1) receives a sales price as a benefit even when the content is sold at a discount price and does not defray the incentive cost by issuing a point.

Fig. 1

EP 1 598 758 A1

**Description**

Technical Field

The present invention relates to a calculation device, a calculation method, a program enabling a computer to implement the calculation method, a recording medium recording the program readable with a computer, a calculation management system, a calculation transfer system and a point or coupon service system. It particularly relates to a calculation system and method in a point service system embodied by issuing a point or giving a discount (including a discount provided by the issuance of a coupon) when a commodity is sold, or a service is provided, to a consumer, a program enabling a computer to implement the calculation method, a recording medium recording the program readable with a computer, a calculation management system, a calculation transfer system and a point or coupon service system.

Technical Background

A point service is one of business tactics for enclosing customers to improve customers' use repetition. This service system makes use of the tendency of customers to accumulate points when points are given to the customers. That is, retail sellers or makers that implement the service make good use of the above consumer behavior of customers to increase the probability of their own commodities being purchased or their own services being provided so that long-term relationships with customers are established thereby to gain profits.

Further, there is also another point distribution system formulated as a "point effective use field" of which various service providers belonging to different lines of business are members (for example, see JP-A-2001-229459 and Japanese translation of PCT international application No. 2003-502763). This system provides each service provider with remarkable qualitative and quantitative improvements in a point system while alleviating a cost burden, and makes it possible to acquire customers of a variety of the service providers as customers to a network business operated by a system operator.

Further, there is another system for managing valuable points to be given to consumers as a privilege given with regard to consumption activities and managing communication points (virtual money) for use in online services (for example, see JP-A-2001-273453). In this system, a valuable point is exchanged for a communication point, so that a consumer can effectively use the valuable point, and that service providers can acquire new customers and improve repetition of use of the service.

Further, there is a system in which the function of a point service is separated from the function of settlement and the point service usable in common in a plurality of stores is provided (for example, see JP-A-2001-297244).

Meanwhile, in recent years, not only multi-channel broadcasts of TVs are advanced, but also commodities of small prices including digital contents such as movie contents or music contents have come to be provided through a network.

In the above conventional point services, however, the incentive cost for the issuance of points and the discount by points are always associated with commodities, etc.; based on which points are issued, and no conventional point service system has taken into account any commodities, etc., which are commercial articles, etc., on which points are issued or discounts are made when they are sold and which completely obviate the burden of the incentive cost for continuing their sales. In the above categories of business that have the ability to pull in more customers but have difficulties in managing to raise incentive costs involved in issuing points and making discounts, profits are reduced, so that it has been difficult to use any conventional point service system.

It is therefore an object of the present invention to provide a point or coupon service system that enables the sales of a commodity or the provision with a service which commodity or service is a commodity or service adaptable to the issuance of a point or coupon and which commodity or service can do without the burden of an incentive cost, and a calculation device, a calculation managing system and a calculation transfer system for use in the system. It is further another object of the present invention to provide a calculation method in the point or coupon service, a program enabling a computer to implement the calculation method and a recording medium recording the program readable with a computer.

Disclosure of the Invention

The calculation device recited in claim 1 is a calculation device for use in a point or coupon service wherein a point or coupon for making a discount can be generated when selling a commodity or providing a service; and further wherein there are a particular commodity or particular service with regard to which it is agreed that the particular commodity or particular service is a commodity or service that causes no decrease in net amount by discount reduction, and a single or plurality of non-particular commodities or non-particular services which is/are linked to said particular commodity or particular service so as to bear the burden of royalty payment for the particular commodity or particular service;

it is possible to generate a value of a pre-taken royalty point or a value of amount of money obtained by conversion thereof when said particular commodity or particular service is sold or provided, the pre-taken royalty point enabling a discount reduction in selling or providing said non-particular commodity or non-particular service;

it is possible to generate a value of prepaid royalty point or a value of amount of money obtained by conversion thereof when said non-particular commodity or non-particular service is sold or provided, the prepaid royalty point enabling a discount reduction in selling or providing said particular commodity or particular service;

it is agreed that there is receivable royalty when said particular commodity or particular service is sold or provided, the receivable royalty being equivalent to a sales price or provision price of said particular commodity or particular service; and

it is agreed that there is payable royalty when said non-particular commodity or non-particular service is sold or provided, the payable royalty being set at a smaller amount of money than a sale price or provision price of said non-particular commodity or non-particular service;

the calculation device being a calculation device for calculating discount reduction values including a discount made by issuing a coupon in selling or providing said particular commodity or particular service and said non-particular commodity or non-particular service, values of predetermined royalties for calculating net amounts brought by selling or providing said particular commodity or particular service and said non-particular commodity or non-particular service, and a value of said pre-taken royalty point or a value of amount of money obtained by conversion thereof and a value of said prepaid royalty point or a value of amount of money obtained by conversion thereof after the sales of or provision with said particular commodity or particular service and said non-particular commodity or non-particular service;

the calculation device comprising:

discount reduction value calculation means for performing predetermined operations to calculate a discount reduction value obtained by deducting a value of said pre-taken royalty point or a value of amount of money obtained by conversion thereof and a discount reduction value obtained by deducting a value of said prepaid royalty point or a value of amount of money obtained by conversion thereof;

royalty calculation means for calculating predetermined royalty values to calculate a net amount obtained by selling or providing said particular commodity or particular service such that the net amount is equivalent to an amount of money of said receivable royalty and to calculate a net amount obtained by selling or providing said non-particular commodity or non-particular service such that the net amount is equivalent to an amount of money obtained by deducting an amount of money of said payable royalty from a sales price or provision price of said non-particular commodity or non-particular service; and

royalty point calculation means for performing predetermined operation processing with regard to a value of said pre-taken royalty point or a value of amount of money obtained by conversion thereof and a value of said prepaid royalty point or a value of amount of money obtained by conversion thereof before the sale of a commodity or the provision with a service, with regard to the discount reduction value calculated by said discount reduction value calculation means, and with regard to an amount of money of said receivable royalty and an amount of money of said payable royalty, to calculate a value of said pre-taken royalty point or a value of amount of money obtained by conversion thereof and a value of said prepaid royalty point or a value of amount of money obtained by conversion thereof, these values being obtained after the sale of a commodity or the provision with a service;

wherein said discount reduction value calculation means determines a discount reduction value obtained by deducting a value of said prepaid royalty point or a value of amount of money obtained by conversion thereof each time when said particular commodity or particular service is sold or provided;

said royalty calculation means determines a discount reduction value caused by deducting a value of said prepaid royalty point or a value of amount of money obtained by conversion thereof, as a post-taken royalty and offsets an amount of money of said post-taken royalty and the discount reduction value caused by deducting a value of said prepaid royalty point or a value of amount of money obtained by conversion thereof, to calculate the net amount obtained by selling or providing said particular commodity or particular service such that the net amount is equivalent to an amount of money of said receivable royalty each time when said particular commodity or particular service is sold or provided;

said royalty point calculation means decreases a value of prepaid royalty point or a value of amount of money obtained by conversion thereof before the sales of or provision with said particular commodity or particular service, by a portion corresponding to the discount reduction value, to calculate a value of prepaid royalty point or a value of amount of money obtained by conversion thereof after the sales of or provision with said particular commodity or particular service; and adds a portion corresponding to a value obtained by deducting the discount reduction value from the amount of money of said receivable royalty to a value of pre-taken royalty point before the sales of or provision with said particular commodity or particular service or a value of amount of money obtained by conversion thereof, to calculate a value of prepaid royalty point after the sales of or provision with said particular commodity or particular service or a value of amount of money obtained by conversion thereof; each time when said particular commodity or particular service is sold or provided;

said discount reduction value calculation means determines a discount reduction value caused by decreasing a value of said pre-taken royalty point or a value of amount of money obtained by conversion thereof, each time when said non-particular commodity or non-particular service is sold or provided;

said royalty calculation means determines prepaid royalty by deducting a discount reduction value caused by decreasing a value of said pre-taken royalty point or a value of amount of money obtained by conversion thereof, from an amount of money of said payable royalty; and deducts a discount reduction value caused by decreasing an amount of money of said prepaid royalty and a value of said pre-taken royalty point or a value of amount of money obtained by conversion thereof from a sales price or provision price of said non-particular commodity or non-particular service, to calculate a net amount brought by the sales of or provision with said non-particular commodity or non-particular service such that the net amount is equivalent to an amount of money obtained by deducting an amount of payable royalty from the sales price or provision price of said non-particular commodity or non-particular service; each time when said non-particular commodity or non-particular service is sold or provided; and

said royalty point calculation means decreases a value of pre-taken royalty point or a value of amount of money obtained by conversion thereof before the sales of or provision with said non-particular commodity or non-particular service by a portion corresponding to the discount reduction value, to calculate a value of the pre-taken royalty point or a value of amount of money obtained by conversion thereof after the sales of or provision with said non-particular commodity or non-particular service; and adds a portion corresponding to a value caused by deducting the discount reduction value from an amount of money of said payable royalty to a value of prepaid royalty point or a value of amount of money obtained by conversion thereof before the sales of or provision with said non-particular commodity or non-particular service, to calculate a value of the prepaid royalty point or a value of amount of money obtained by conversion thereof after the sales of or provision with said non-particular commodity or non-particular service; each time when said non-particular commodity or non-particular service is sold or provided.

The calculation device recited in claim 2 is a calculation device for use in a point or coupon service wherein a point or coupon for making a discount can be generated in selling a commodity or providing a service; and

further wherein there are a particular commodity or particular service with regard to which it is agreed that the particular commodity or particular service is a commodity or service that causes no decrease in net amount by discount reduction, and a single or plurality of non-particular commodities or non-particular services which is/are linked to said particular commodity or particular service so as to bear the burden of royalty payment for the particular commodity or particular service;

it is possible to generate a value of a pre-taken royalty point or a value of amount of money obtained by conversion thereof by selling or providing said particular commodity or particular service, the pre-taken royalty point enabling a discount reduction in selling or providing said non-particular commodity or non-particular service;

it is possible to generate a value of prepaid royalty point or a value of amount of money obtained by conversion thereof by selling or providing said non-particular commodity or non-particular service, the prepaid royalty point enabling a discount reduction in selling or providing said particular commodity or particular service; and

it is agreed that there is receivable royalty when said particular commodity or particular service is sold or provided, the receivable royalty being equivalent to a sales price or provision price of said particular commodity or particular service; and

it is agreed that there is payable royalty when said non-particular commodity or non-particular service is sold or provided, the payable royalty being set at a smaller amount of money than a sale price or provision price of said non-particular commodity or non-particular service;

the calculation device being a calculation device for calculating discount reduction values including a discount made by issuing a coupon in selling or providing said particular commodity or particular service and said non-particular commodity or non-particular service, a value of said pre-taken royalty point or a value of amount of money obtained by conversion thereof and a value of said prepaid royalty point or a value of amount of money obtained by conversion thereof after the sales of or provision with said particular commodity or particular service and said non-particular commodity or non-particular service, and values of predetermined royalties for calculating net amounts brought by selling or providing said particular commodity or particular service and said non-particular commodity or non-particular service;

said calculation device comprising:

discount reduction value calculation means for comparing; each time when a predetermined term passes; a first sum of a value of amount of money obtained by converting a value of prepaid royalty point carried forward from a term preceding the predetermined term and a total amount of money of payable royalty generated during said predetermined term with a second sum of a value of amount of money obtained by converting a value of pre-taken

royalty point carried forward from a term preceding said predetermined term and a total amount of receivable royalty generated during said predetermined term to decide which sum is greater or smaller; the term being long enough for carrying out the sales of or provision with said particular commodity or particular service a plurality of times and the sales of or provision with said non-particular commodity or non-particular service a plurality of times; and determining a value of the sum having a smaller value or a value of one of the first and second sums when the first and second sums have the same values, as a sum total of discount reduction values during said predetermined term;

royalty point calculation means for determining; each time when a predetermined term passes; a point value or an amount of money obtained by conversion thereof which corresponds to a difference between the first sum of a value of amount of money obtained by conversion of a value of prepaid royalty point carried forward from a term preceding said predetermined term and a total amount of payable royalty generated during said predetermined term and the second sum of a value of amount of money obtained by conversion of pre-taken royalty point carried forward from a term preceding said predetermined term and a total amount of receivable royalty generated during said predetermined term, as a value to be carried forward to a next term with respect to the value of said prepaid royalty point or a value of amount of money obtained by conversion thereof or the value of said pre-taken royalty point or a value of amount of money obtained by conversion thereof, included in a larger sum of the first and second sums; the term being long enough for carrying out the sales of or provision with said particular commodity or particular service a plurality of times and the sales of or provision with said non-particular commodity or non-particular service a plurality of times; calculating a value to be carried forward to a next term as zero with respect to a value of said pre-taken royalty point or a value of amount of money obtained by conversion thereof or a value of said prepaid royalty point or a value of amount of money obtained by conversion thereof, included in a smaller sum; and calculating values to be carried forward to a next term to zero with respect to a value of said pre-taken royalty point or a value of amount of money obtained by conversion thereof and a value of said prepaid royalty point or a value of amount of money obtained by conversion thereof when the values of the first and second sums are equal to each other; and

royalty calculation means for determining; each time when a predetermined term passes; a difference between a value of amount of money obtained by conversion of prepaid royalty point carried forward from a term preceding the predetermined term and a value of amount of money obtained by conversion of prepaid royalty point to be carried forward to a next term; the term being long enough for carrying out the sales of or provision with said particular commodity or particular service a plurality of times and the sales of or provision with said non-particular commodity or non-particular service a plurality of times; and calculating the difference as a value of royalty for adjusting a relationship between a total amount of money of said receivable royalty generated during the predetermined term and a total amount of money of said payable royalty generated during said predetermined term, to calculate a total net amount brought by the sales of or provision with said particular commodity or particular service generated during said predetermined term such that the total net amount is equivalent to a total amount of money of said receivable royalty generated during said predetermined term and to calculate a total net amount brought by the sales of or provision with said non-particular commodity or non-particular service generated during said predetermined term by deducting said total amount of money of said payable royalty generated during said predetermined term from the total amount of money of sales price or provision price of said non-particular commodity or non-particular service generated during said predetermined term.

The calculation device recited in claim 3 is a calculation device for use in a point or coupon service wherein a point or coupon for making a discount can be generated when selling a commodity or providing a service; and

further wherein there are a particular commodity or particular service with regard to which it is agreed that the particular commodity or particular service is a commodity or service that causes no decrease in net amount by discount reduction, and a single or plurality of non-particular commodities or non-particular services which is/are linked to said particular commodity or particular service so as to bear the burden of royalty payment for the particular commodity or particular service;

it is possible to generate a value of a pre-taken royalty point or a value of amount of money obtained by conversion thereof when said particular commodity or particular service is sold or provided, the pre-taken royalty point enabling a discount reduction in selling or providing said non-particular commodity or non-particular service;

it is possible to generate a value of prepaid royalty point or a value of amount of money obtained by conversion thereof when said non-particular commodity or non-particular service is sold or provided, the prepaid royalty point enabling a discount reduction in selling or providing said particular commodity or particular service;

it is agreed that there is receivable royalty when said particular commodity or particular service is sold or provided, the receivable royalty being set at a smaller amount of money than a sales price or provision price of said particular commodity or particular service; and

it is agreed that there is payable royalty when said non-particular commodity or non-particular service is sold or provided, the payable royalty being set at a smaller amount of money than a sale price or provision price of said non-particular commodity or non-particular service;

the calculation device being a calculation device for calculating discount reduction values including a discount made by issuing a coupon in selling or providing said particular commodity or particular service and said non-particular commodity or non-particular service, values of predetermined royalties for calculating net amounts brought by selling or providing said particular commodity or particular service and said non-particular commodity or non-particular service, and a value of said pre-taken royalty point or a value of amount of money obtained by conversion thereof and a value of said prepaid royalty point or a value of amount of money obtained by conversion thereof after the sales of or provision with said particular commodity or particular service and said non-particular commodity or non-particular service,

the calculation device comprising:

discount reduction value calculation means for performing predetermined operations to calculate a discount reduction value obtained by deducting a value of said pre-taken royalty point or a value of amount of money obtained by conversion thereof and a discount reduction value obtained by deducting a value of said prepaid royalty point or a value of amount of money obtained by conversion thereof;

royalty calculation means for calculating predetermined royalty values to calculate a net amount brought by selling or providing said particular commodity or particular service such that the net amount is equivalent to a sale prices or provision price of said particular commodity or particular service and to calculate a net amount brought by selling or providing said non-particular commodity or non-particular service such that the net amount is equivalent to an amount of money obtained by deducting an amount of money of said payable royalty from a sales price or provision price of said non-particular commodity or non-particular service; and

royalty point calculation means for performing predetermined operation processing with regard to a value of said pre-taken royalty point or a value of amount of money obtained by conversion thereof and a value of said prepaid royalty point or a value of amount of money obtained by conversion thereof before the sale of a commodity or the provision with a service, with regard to the discount reduction value calculated by said discount reduction value calculation means, and with regard to an amount of money of said receivable royalty and an amount of money of said payable royalty, to calculate a value of said pre-taken royalty point or a value of amount of money obtained by conversion thereof and a value of said prepaid royalty point or a value of amount of money obtained by conversion thereof, these values being obtained after the sale of a commodity or the provision with a service;

wherein said discount reduction value calculation means determines a discount reduction value obtained by deducting a value of said prepaid royalty point or a value of amount of money obtained by conversion thereof each time when said particular commodity or particular service is sold or provided;

said royalty calculation means determines a discount reduction value caused by deducting a value of said prepaid royalty point or a value of amount of money obtained by conversion thereof, as a post-taken royalty and offsets at least an amount of money of said post-taken royalty and the discount reduction value caused by deducting a value of said prepaid royalty point or a value of amount of money obtained by conversion thereof, to calculate the net amount brought by selling or providing said particular commodity or particular service such that the net amount is equivalent to the sales price or provision price of said particular commodity or particular service which sales price or provision price is greater than said receivable royalty; each time when said particular commodity or particular service is sold or provided;

said royalty point calculation means decreases a value of prepaid royalty point or a value of amount of money obtained by conversion thereof before the sales of or provision with said particular commodity or particular service, by a portion corresponding to the discount reduction value, to calculate a value of prepaid royalty point or a value of amount of money obtained by conversion thereof after the sales of or provision with said particular commodity or particular service; and adds a portion corresponding to a value obtained by deducting the discount reduction value from the amount of money of said receivable royalty to a value of pre-taken royalty point before the sales of or provision with said particular commodity or particular service or a value of amount of money obtained by conversion thereof, to calculate a value of pre-taken royalty point after the sales of or provision with said particular commodity or particular service or a value of amount of money obtained by conversion thereof; each time when said particular commodity or particular service is sold or provided;

said discount reduction value calculation means determines a discount reduction value caused by decreasing a value of said pre-taken royalty point or a value of amount of money obtained by conversion thereof, each time when said non-particular commodity or non-particular service is sold or provided;

said royalty calculation means determines prepaid royalty by deducting a discount reduction value caused by decreasing a value of said pre-taken royalty point or a value of amount of money obtained by conversion thereof, from an amount of money of said payable royalty; and deducts a discount reduction value caused by decreasing an amount of money of said prepaid royalty and a value of said pre-taken royalty point or a value of amount of money obtained by conversion thereof from a sales price or provision price of said non-particular commodity or non-particular service;

to calculate a net amount brought by the sales of or provision with said non-particular commodity or non-particular service such that the net amount is equivalent to an amount of money obtained by deducting an amount of payable royalty from the sales price or provision price of said non-particular commodity or non-particular service; each time when said non-particular commodity or non-particular service is sold or provided; and

said royalty point calculation means decreases a value of pre-taken royalty point or a value of amount of money obtained by conversion thereof before the sales of or provision with said non-particular commodity or non-particular service by a portion corresponding to a discount reduction value, to calculate a value of the pre-taken royalty point or a value of amount of money obtained by conversion thereof after the sales of or provision with said non-particular commodity or non-particular service; and adds a portion corresponding to a value caused by deducting the discount reduction value from an amount of money of said payable royalty to a value of prepaid royalty point or a value of amount of money obtained by conversion thereof before the sales of or provision with said non-particular commodity or non-particular service, to calculate a value of the prepaid royalty point or a value of amount of money obtained by conversion thereof after the sales of or provision with said non-particular commodity or non-particular service, each time when said non-particular commodity or non-particular service is sold or provided.

The calculation device recited in claim 4 is a calculation device for use in a point or coupon service in which a point or coupon for making a discount can be generated in selling a commodity or providing a service; and

further wherein there are a particular commodity or particular service with regard to which it is agreed that the particular commodity or particular service is a commodity or service that causes no decrease in net amount by discount reduction, and a single or plurality of non-particular commodities or non-particular services which is/are linked to said particular commodity or particular service so as to bear the burden of royalty payment for the particular commodity or particular service;

it is possible to generate a value of a pre-taken royalty point or a value of amount of money obtained by conversion thereof by selling or providing said particular commodity or particular service, the pre-taken royalty point enabling a discount reduction in selling or providing said non-particular commodity or non-particular service;

it is possible to generate a value of prepaid royalty point or a value of amount of money obtained by conversion thereof by selling or providing said non-particular commodity or non-particular service, the prepaid royalty point enabling a discount reduction in selling or providing said particular commodity or particular service;

it is agreed that there is receivable royalty when said particular commodity or particular service is sold or provided, the receivable royalty being set a smaller amount of money than a sales price or provision price of said particular commodity or particular service; and

it is agreed that there is payable royalty when said non-particular commodity or non-particular service is sold or provided, the payable royalty being set at a smaller amount of money than a sale price or provision price of said non-particular commodity or non-particular service;

the calculation device being a calculation device for calculating discount reduction values including a discount made by issuing a coupon in selling or providing said particular commodity or particular service and said non-particular commodity or non-particular service, a value of said pre-taken royalty point or a value of amount of money obtained by conversion thereof and a value of said prepaid royalty point or a value of amount of money obtained by conversion thereof, after the sales of or provision with said particular commodity or particular service and said non-particular commodity or non-particular service, and values of predetermined royalty for calculating net amounts brought by selling or providing said particular commodity or particular service and said non-particular commodity or non-particular service;

said calculation device comprising:

discount reduction value calculation means for comparing; each time when a predetermined term passes; a first sum of a value of amount of money obtained by converting a value of prepaid royalty point carried forward from a term preceding the predetermined term and a total amount of money of payable royalty generated during said predetermined term with a second sum of a value of amount of money obtained by converting a value of pre-taken royalty point carried forward from a term preceding said predetermined term and a total amount of receivable royalty generated during said predetermined term to decide which sum is greater or smaller; the term being long enough for carrying out the sales of or provision with said particular commodity or particular service a plurality of times and the sales of or provision with said non-particular commodity or non-particular service a plurality of times; and determining the value of the sum having a smaller value or a value of one of the first and second sums when the first and second sums have the same values, as a sum total of discount reduction values during said predetermined term;

royalty point calculation means for determining; each time when a predetermined term passes; a point value or an amount of money obtained by conversion thereof which corresponds to a difference between the first sum of a value of amount of money obtained by conversion of a value of prepaid royalty point carried forward from a term preceding said predetermined term and a total amount of payable royalty generated during said predetermined term and the second sum of a value of amount of money obtained by conversion of pre-taken royalty point carried forward from a term preceding said predetermined term and a total amount of receivable royalty generated during said predetermined term, as a value to be carried forward to a next term with respect to the value of said prepaid royalty point or a value of amount of money obtained by conversion thereof or the value of said pre-taken royalty point or a value of amount of money obtained by conversion thereof, included in a larger sum of the first and second sums; the term being long enough for carrying out the sales of or provision with said particular commodity or particular service a plurality of times and the sales of or provision with said non-particular commodity or non-particular service a plurality of times; calculating a value to be carried forward to a next term as zero with respect to a value of said pre-taken royalty point or a value of amount of money obtained by conversion thereof or a value of said prepaid royalty point or a value of amount of money obtained by conversion thereof, included in a smaller sum; and calculating values to be carried forward to a next term to zero with respect to a value of said pre-taken royalty point or a value of amount of money obtained by conversion thereof and a value of said prepaid royalty point or a value of amount of money obtained by conversion thereof when the values of the first and second sums are equal to each other; and

royalty calculation means for determining; each time when a predetermined term passes; a difference between a value of amount of money obtained by conversion of prepaid royalty point carried forward from a term preceding the predetermined term and a value of amount of money obtained by conversion of prepaid royalty point to be carried forward to a next term; the term being long enough for carrying out the sales of or provision with said particular commodity or particular service a plurality of times and the sales of or provision with said non-particular commodity or non-particular service a plurality of times; and calculating the difference as a value of royalty for adjusting a relationship between a total amount of money of said receivable royalty generated during the predetermined term and a total amount of money of said payable royalty generated during said predetermined term; to calculate a total net amount brought by the sales of or provision with said particular commodity or particular service generated during said predetermined term such that the total net amount is equivalent to a total amount of money of sale price or provision price of said particular commodity or particular service which price is greater than a total amount of money of said receivable royalty generated during said predetermined term, and to calculate a total net amount brought by the sales of or provision with said non-particular commodity or non-particular service generated during said predetermined term by deducting said total amount of money of said payable royalty generated during said predetermined term from the total amount of money of sales price or provision price of said non-particular commodity or non-particular service generated during said predetermined term.

The calculation device recited in claim 5 is a calculation device for use in a point or coupon service wherein a point or coupon for making a discount can be generated when selling a commodity or providing a service; and

further wherein there are a particular commodity or particular service with regard to which it is agreed that the particular commodity or particular service is a commodity or service that causes no decrease in net amount by discount reduction, and a single or plurality of non-particular commodities or non-particular services which is/are linked to said particular commodity or particular service so as to bear the burden of royalty payment for the particular commodity or particular service;

it is possible to generate a value of a pre-taken royalty point or a value of amount of money obtained by conversion thereof when said particular commodity or particular service is sold or provided, the pre-taken royalty point enabling a discount reduction in selling or providing said non-particular commodity or non-particular service;

it is agreed that there is receivable royalty when said particular commodity or particular service is sold or provided, the receivable royalty being set at an amount of money equivalent to, or smaller than, a sales price or provision prices of said particular commodity or particular service, and

it is agreed that there is payable royalty when said non-particular commodity or non-particular service is sold or provided, the payable royalty being set at a smaller amount of money than a sale price or provision price of said non-particular commodity or non-particular service;

the calculation device being a calculation device for calculating discount reduction values including a discount made by issuing a coupon in selling or providing said non-particular commodity or non-particular service, and a value of said pre-taken royalty point or a value of amount of money obtained by conversion thereof after the sales of or provision with said particular commodity or particular service and said non-particular commodity or non-particular service;

the calculation device comprising:

discount reduction value calculation means for performing predetermined operations to calculate a discount reduction value obtained by deducting a value of said pre-taken royalty point or a value of amount of money obtained by conversion thereof; and

royalty point calculation means for performing predetermined operation processing with regard to a value of said pre-taken royalty point or a value of amount of money obtained by conversion thereof before the sales of a commodity or the provision with a service, with regard to discount reduction value calculated by said discount reduction value calculation means, and with regard to an amount of money of said receivable royalty and an amount of money of said payable royalty, to calculate a value of said pre-taken royalty point or a value of amount of money obtained by conversion thereof;

wherein said royalty point calculation means adds a portion corresponding to an amount of money of said receivable royalty to a value of pre-taken royalty point or a value of amount of money obtained by conversion thereof before the sales of or provision with said particular commodity or particular service; to calculate a value of pre-taken royalty point or particular service or a value of amount of money obtained by conversion thereof after the sales of or provision with said particular commodity, each time when said particular commodity or particular service is sold or provided; for calculating a net amount brought by the sale of or provision with said particular commodity or particular service such that the net amount is equivalent to an amount of money of said receivable royalty when the amount of money of said receivable royalty is equivalent to the sales price or provision price of said particular commodity or particular service or that the net amount is equivalent to an amount of money of the sales price or provision price of said particular commodity or particular service when the amount of money of said receivable royalty is smaller than the sales price or provision price of said particular commodity or particular service;

said discount reduction value calculation means determines a discount reduction value caused by decreasing a value of said pre-taken royalty point or a value of amount of money obtained by conversion thereof, each time when said non-particular commodity or non-particular service is sold or provided; and

said royalty point calculation means calculates a value of pre-taken royalty point or a value of amount of money obtained by conversion thereof after the sales of or provision with said non-particular commodity or non-particular service by deducting a portion corresponding to the discount reduction value from a value of pre-taken royalty point or a value of amount of money obtained by conversion thereof before the sales of or provision with said non-particular commodity or non-particular service; for calculating a net amount brought by the sale of or provision with said non-particular commodity or non-particular service such that the net amount comes to be an amount of money obtained by deducting the discount reduction value that is calculated by said discount reduction value calculation means and whose upper limit is an amount of money of said payable royalty, from the sales price or provision price of said non-particular commodity or non-particular service; each time when said non-particular commodity or non-particular service is sold or provided.

The calculation device recited in claim 6 is a calculation device for use in a point or coupon service wherein a point or coupon for making a discount can be generated in selling a commodity or providing a service; and

further wherein there are a particular commodity or particular service with regard to which it is agreed that the particular commodity or particular service is a commodity or service that causes no decrease in net amount by discount reduction, and a single or plurality of non-particular commodities or non-particular services which is/are linked to said particular commodity or particular service so as to bear the burden of royalty payment for the particular commodity or particular service;

it is possible to generate a value of a pre-taken royalty point or a value of amount of money obtained by conversion thereof when said particular commodity or particular service is sold or provided, the pre-taken royalty point enabling a discount reduction in selling or providing said non-particular commodity or non-particular service;

it is agreed that there is receivable royalty when said particular commodity or particular service is sold or provided, the receivable royalty being set at an amount of money equivalent to, or smaller than, a sales price or provision price of said particular commodity or particular service; and

it is agreed that there is payable royalty when said non-particular commodity or non-particular service is sold or provided, the payable royalty being set at a smaller amount of money than a sale price or provision price of said non-particular commodity or non-particular service;

the calculation device being a calculation device for calculating discount reduction values including a discount made by issuing a coupon in selling or providing said non-particular commodity or non-particular service, and a value of said pre-taken royalty point or a value of amount of money obtained by conversion thereof after the sales of or provision with said particular commodity or particular service and said non-particular commodity or non-particular service;

the calculation device comprising:

discount reduction value calculation means for comparing; each time when a predetermined term passes; a first sum of money of payable royalty generated during said predetermined term with a second sum of a value of amount of money obtained by conversion of a value of pre-taken royalty point carried forward from a term preceding said predetermined term and a total amount of receivable royalty generated during said predetermined term to decide which sum is greater or smaller; the term being long enough for carrying out the sales of or provision with said particular commodity or particular service a plurality of times and the sales of or provision with said non-particular commodity or non-particular service a plurality of times; and determining the value of the sum having a smaller value or one of the first and second sums having the same values, as a sum total of discount reduction value during said predetermined term; and

royalty point calculation means for comparing; each time when a predetermined term passes; the first sum of payable royalty generated during said predetermined term with the second sum of an amount of money obtained by conversion of a value of pre-taken royalty point carried forward from a term preceding said predetermined term and a total amount of money of receivable royalty generated during said predetermined term; the term being long enough for carrying out the sales of or provision with said particular commodity or particular service a plurality of times and the sales of or provision with said non-particular commodity or non-particular service a plurality of times; determining a point value or a value of money obtained by conversion thereof corresponding to a value obtained by deducting a total amount of payable royalty generated during said predetermined term from the total amount of a value of amount of money obtained by conversion of a value of pre-taken-royalty point carried forward from a term preceding said predetermined term and a total amount of money of receivable royalty generated during said predetermined term, as a value of said pre-taken royalty point or a value of amount of money obtained by conversion thereof to be carried forward to a neat term, when the second sum of an amount of money obtained by conversion of a value of pre-taken royalty point carried forward from a term preceding said predetermined term and a total amount of money of receivable royalty generated during said predetermined term is greater than or equivalent to the first sum; and calculating a value to be carried forward into zero with regard to a value of said pre-taken royalty point or a value of amount of money obtained by conversion thereof, when the second sum of an amount of money obtained by conversion of a value of pre-taken royalty point carried forward from a term preceding said predetermined term and a total amount of money of receivable royalty generated during said predetermined term is smaller than or equivalent to the first sum; so as to calculate a total net amount brought by the sale of or provision with said particular commodity or particular service during said predetermined term such that the total net amount is equivalent to a total amount of money of said receivable royalty generated during said predetermined term when the amount of money of said receivable royalty is equivalent to the sales price or provision price of said particular commodity or particular service; so as to calculate the total net amount such that it is equivalent to the total amount of the sales price or provision prices of said particular commodity or particular service generated during said predetermined term when the amount of said receivable royalty is smaller than the sales price or provision prices of said particular commodity or particular service; so as to calculate the total net amount brought by the sales of or provision with said non-particular commodity or non-particular service during said predetermined term, into a value obtained by deducting a total amount of money of payable royalty generated during said predetermined term from the total amount of money of the sales price or provision price of said non-particular commodity or non-particular service generated during said predetermined term, when the first sum of money of payable royalty generated during said predetermined term is compared with the second sum of a value of amount of money obtained by conversion of a value of pre-taken royalty point carried forward from a term preceding said predetermined term and a total amount of money of receivable royalty generated during said predetermined term to determine which is greater or smaller and when the second sum of a value of amount of money obtained by conversion of a value of pre-taken royalty point carried forward from a term preceding said predetermined term and a total amount of money of receivable royalty generated during said predetermined term is greater than or equivalent to the first sum; and so as to calculate the total net amount into a value obtained by deducting the total sum of the discount reduction value calculated by said discount reduction value calculation means from the total amount of money of sale price or provision price of said non-particular commodity or non-particular service generated during said predetermined term when the first sum of the payable royalty generated during said predetermined term is greater than or equivalent to the second sum.

The calculation method recited in claim 7 is a calculation method for use in a point or coupon service wherein a point or coupon for making a discount can be generated when selling a commodity or providing a service; and

further wherein there are a particular commodity or particular service with regard to which it is agreed that the particular commodity or particular service is a commodity or service that causes no decrease in net amount by discount reduction, and a single or plurality of non-particular commodities or non-particular services which is/are linked to said particular commodity or particular service so as to bear the burden of royalty payment for the particular commodity or particular service;

it is possible to generate a value of a pre-taken royalty point or a value of amount of money obtained by conversion thereof when said particular commodity or particular service is sold or provided, the pre-taken royalty point enabling a discount reduction in selling or providing said non-particular commodity or non-particular service;

it is possible to generate a value of prepaid royalty point or a value of amount of money obtained by conversion thereof when said non-particular commodity or non-particular service is sold or provided, the prepaid royalty point enabling a discount reduction in selling or providing said particular commodity or particular service;

it is agreed that there is receivable royalty when said particular commodity or particular service is sold or provided, the receivable royalty being equivalent to a sales price or provision price of said particular commodity or particular service; and

it is agreed that there is payable royalty when said non-particular commodity or non-particular service is sold or provided, the payable royalty being set at a smaller amount of money than a sale price or provision price of said non-particular commodity or non-particular service;

the calculation method being a calculation method for calculating discount reduction values including a discount made by issuing a coupon in selling or providing said particular commodity or particular service and said non-particular commodity or non-particular service, values of predetermined royalties for calculating net amounts brought by selling or providing said particular commodity or particular service and said non-particular commodity or non-particular service, and a value of said pre-taken royalty point or a value of amount of money obtained by conversion thereof and a value of said prepaid royalty point or a value of amount of money obtained by conversion thereof after the sales of or provision with said particular commodity or particular service and said non-particular commodity or non-particular service are sold or provided;

the calculation method comprising:

a step in which discount reduction value calculation means performs predetermined operations each time when said particular commodity or particular service is sold or provided, to calculate a discount reduction value obtained by deducting a value of said prepaid royalty point or a value of amount of money obtained by conversion thereof;

a step in which royalty calculation means determines a discount reduction value caused by deducting a value of said prepaid royalty point or a value of amount of money obtained by conversion thereof, as a post-taken royalty and offsets an amount of money of said post-taken royalty and the discount reduction value caused by deducting a value of said prepaid royalty point or a value of amount of money obtained by conversion thereof, to calculate the net amount obtained by selling or providing said particular commodity or particular service such that the net amount is equivalent to an amount of money of said receivable royalty each time when said particular commodity or particular service is sold or provided;

a step in which royalty point calculation means decreases a value of prepaid royalty point or a value of amount of money obtained by conversion thereof before the sales of or provision with said particular commodity or particular service, by a portion corresponding to the discount reduction value, to calculate a value of prepaid royalty point or a value of amount of money obtained by conversion thereof after the sales of or provision with said particular commodity or particular service; and adds a portion corresponding to a value obtained by deducting the discount reduction value from the amount of money of said receivable royalty to a value of pre-taken royalty point before the sales of or provision with said particular commodity or particular service or a value of amount of money obtained by conversion thereof, to calculate a value of prepaid royalty point after the sales of or provision with said particular commodity or particular service or a value of amount of money obtained by conversion thereof; each time when said particular commodity or particular service is sold or provided;

a step in which the discount reduction value calculation means determines a discount reduction value caused by decreasing a value of said pre-taken royalty point or a value of amount of money obtained by conversion thereof, each time when said non-particular commodity or non-particular service is sold or provided;

a step in which the royalty calculation means determines prepaid royalty by deducting a discount reduction value caused by decreasing a value of said pre-taken royalty point or a value of amount of money obtained by conversion thereof, from an amount of money of said payable royalty; and deducts a discount reduction value caused by decreasing an amount of money of said prepaid royalty and a value of said pre-taken royalty point or a value of amount of money obtained by conversion thereof from a sales price or provision price of said non-particular commodity or non-particular service, to calculate a net amount brought by the sales of or provision with said non-particular commodity or non-particular service such that the net amount is equivalent to an amount of money obtained by deducting an amount of payable royalty from the sales price or provision price of said non-particular commodity or non-particular service; each time when said non-particular commodity or non-particular service is sold or provided; and

a step in which the royalty point calculation means decreases a value of pre-taken royalty point or a value of amount of money obtained by conversion thereof before the sales of or provision with said non-particular commodity or non-particular service by a portion corresponding to the discount reduction value, to calculate a value of the pre-taken royalty point or a value of amount of money obtained by conversion thereof after the sales of or provision with said non-particular commodity or non-particular service; and adds a portion corresponding to a value caused by deducting the discount reduction value from an amount of money of said payable royalty to a value of prepaid royalty point or a value of amount of money obtained by conversion thereof before the sales of or provision with said non-particular commodity or non-particular service, to calculate a value of the prepaid royalty point or a value of amount of money obtained by conversion thereof after the sales of or provision with said non-particular commodity or non-particular service; each time when said non-particular commodity or non-particular service is sold or provided.

The calculation method recited in claim 8 is a calculation method for use in a point or coupon service wherein a point or coupon for making a discount can be generated in selling a commodity or providing a service; and

further wherein there are a particular commodity or particular service with regard to which it is agreed that the particular commodity or particular service is a commodity or service that causes no decrease in net amount by discount reduction, and a single or plurality of non-particular commodities or non-particular services which is/are linked to said particular commodity or particular service so as to bear the burden of royalty payment for the particular commodity or particular service;

it is possible to generate a value of a pre-taken royalty point or a value of amount of money obtained by conversion thereof when said particular commodity or particular service is sold or provided, the pre-taken royalty point enabling a discount reduction in selling or providing said non-particular commodity or non-particular service;

it is possible to generate a value of prepaid royalty point or a value of amount of money obtained by conversion thereof when said non-particular commodity or non-particular service is sold or provided, the prepaid royalty point enabling a discount reduction in selling or providing said particular commodity or particular service;

it is agreed that there is receivable royalty when said particular commodity or particular service is sold or provided, the receivable royalty being equivalent to a sales price or provision price of said particular commodity or particular service; and

it is agreed that there is payable royalty when said non-particular commodity or non-particular service is sold or provided, the payable royalty being set at a smaller amount of money than a sale price or provision price of said non-particular commodity or non-particular service;

the calculation method being a calculation method for calculating discount reduction values including a discount made by issuing a coupon in selling or providing said particular commodity or particular service and said non-particular commodity or non-particular service, a value of said pre-taken royalty point or a value of amount of money obtained by conversion thereof and a value of said prepaid royalty point or a value of amount of money obtained by conversion thereof after the sales of or provision with said particular commodity or particular service and said non-particular commodity or non-particular service, and values of predetermined royalties for calculating net amounts brought by selling or providing said particular commodity or particular service and said non-particular commodity or non-particular service;

the calculation method comprising:

a step in which discount reduction value calculation means compares; each time when a predetermined term passes; a first sum of a value of amount of money obtained by converting a value of prepaid royalty point carried forward from a term preceding the predetermined term and a total amount of money of payable royalty generated during said predetermined term with a second sum of a value of amount of money obtained by converting a value of pre-taken royalty point carried forward from a term preceding said predetermined term and a total amount of receivable royalty generated during said predetermined term to decide which sum is greater or smaller; the term being long enough for carrying out the sales of or provision with said particular commodity or particular service a plurality of times and the sales of or provision with said non-particular commodity or non-particular service a plurality of times; and determine a value of the sum having a smaller value or a value of one of the first and second sums when the first and second sums have the same values, as a sum total of discount reduction values during said predetermined term;

a step in which royalty point calculation means determines; each time when a predetermined term passes; a point value or an amount of money obtained by conversion thereof which corresponds to a difference between the first sum of a value of amount of money obtained by conversion of a value of prepaid royalty point carried forward from a term preceding said predetermined term and a total amount of payable royalty generated during said predetermined term and the second sum of a value of amount of money obtained by conversion of pre-taken royalty point carried forward from a term preceding said predetermined term and a total amount of receivable royalty generated during said predetermined term, as a value to be carried forward to a next term with respect to the value of said prepaid royalty point or a value of amount of money obtained by conversion thereof or the value of said pre-taken royalty point or a value of amount of money obtained by conversion thereof, included in a larger sum of the first and second sums; the term being long enough for carrying out the sales of or provision with said particular commodity or particular service a plurality of times and the sales of or provision with said non-particular commodity or non-particular service a plurality of times; calculates a value to be carried forward to a next term as zero with respect to a value of said pre-taken royalty point or a value of amount of money obtained by conversion thereof or a value of said prepaid royalty point or a value of amount of money obtained by conversion thereof, included in a smaller sum; and calculates values to be carried forward to a next term to zero with respect to a value of said pre-taken royalty point or a value of amount of money obtained by conversion thereof and a value of said prepaid royalty point or a value of amount of money obtained by conversion thereof when the values of the first and second sums are equal to each other; and

a step in which royalty calculation means determines; each time when a predetermined term passes; a difference between a value of amount of money obtained by conversion of prepaid royalty point carried forward from a term preceding the predetermined term and a value of amount of money obtained by conversion of prepaid royalty point to be carried forward to a next term; the term being long enough for carrying out the sales of or provision with said particular commodity or particular service a plurality of times and the sales of or provision with said non-particular commodity or non-particular service a plurality of times; and calculates the difference as a value of royalty for adjusting a relationship between a total amount of money of said receivable royalty generated during the predetermined term and a total amount of money of said payable royalty generated during said predetermined term, to calculate a total net amount brought by the sales of or provision with said particular commodity or particular service generated during said predetermined term such that the total net amount is equivalent to a total amount of money of said receivable royalty generated during said predetermined term, and to calculate a total net amount brought by the sales of or provision with said non-particular commodity or non-particular service generated during said predetermined term by deducting said total amount of money of said payable royalty generated during said predetermined term from the total amount of money of sales price or provision price of said non-particular commodity or non-particular service generated during said predetermined term.

The calculation method recited in claim 9 is a calculation method in a point or coupon service wherein a point or coupon for making a discount can be generated when selling a commodity or providing a service; and

further wherein there are a particular commodity or particular service with regard to which it is agreed that the particular commodity or particular service is a commodity or service that causes no decrease in net amount by discount reduction, and a single or plurality of non-particular commodities or non-particular services which is/are linked to said particular commodity or particular service so as to bear the burden of royalty payment for the particular commodity or particular service;

it is possible to generate a value of a pre-taken royalty point or a value of amount of money obtained by conversion thereof when said particular commodity or particular service is sold or provided, the pre-taken royalty point enabling a discount reduction in selling or providing said non-particular commodity or non-particular service;

it is possible to generate a value of prepaid royalty point or a value of amount of money obtained by conversion thereof when said non-particular commodity or non-particular service is sold or provided, the prepaid royalty point enabling a discount reduction in selling or providing said particular commodity or particular service;

it is agreed that there is receivable royalty when said particular commodity or particular service is sold or provided, the receivable royalty being set at a smaller amount of money than a sales price or provision price of said particular commodity or particular service; and

it is agreed that there is payable royalty when said non-particular commodity or non-particular service is sold or provided, the payable royalty being set at a smaller amount of money than a sale price or provision price of said non-particular commodity or non-particular service;

the calculation method being a calculation method for calculating discount reduction values including a discount made by issuing a coupon in selling or providing said particular commodity or particular service and said non-particular commodity or non-particular service, values of predetermined royalties for calculating net amounts brought by selling or providing said particular commodity or particular service and said non-particular commodity or non-particular service, and a value of said pre-taken royalty point or a value of amount of money obtained by conversion thereof and a value of said prepaid royalty point or a value of amount of money obtained by conversion thereof after the sales of or provision with said particular commodity or particular service and said non-particular commodity or non-particular service,

the calculation method comprising:

a step in which discount reduction value calculation means performs predetermined processing to determine a discount reduction value obtained by deducting a value of said prepaid royalty point or a value of amount of money obtained by conversion thereof each time when said particular commodity or particular service is sold or provided;

a step in which royalty calculation means determines a discount reduction value caused by deducting a value of said prepaid royalty point or a value of amount of money obtained by conversion thereof, as a post-taken royalty and offsets at least an amount of money of said post-taken royalty and the discount reduction value caused by deducting a value of said prepaid royalty point or a value of amount of money obtained by conversion thereof, to calculate the net amount brought by selling or providing said particular commodity or particular service such that the net amount is equivalent to the sales price or provision price of said particular commodity or particular service which sales price or provision price is greater than said receivable royalty; each time when said particular commodity or particular service is sold or provided;

a step in which royalty point calculation means decreases a value of prepaid royalty point or a value of amount of money obtained by conversion thereof before the sales of or provision with said particular commodity or particular service, by a portion corresponding to the discount reduction value, to calculate a value of prepaid royalty point or a value of amount of money obtained by conversion thereof after the sales of or provision with said particular commodity or particular service; and adds a portion corresponding to a value obtained by deducting the discount reduction value from the amount of money of said receivable royalty to a value of pre-taken royalty point before the sales of or provision with said particular commodity or particular service or a value of amount of money obtained by conversion thereof, to calculate a value of pre-taken royalty point after the sales of or provision with said particular commodity or particular service or a value of amount of money obtained by conversion thereof; each time when said particular commodity or particular service is sold or provided;

a step in which the discount reduction value calculation means performs predetermined processing to determine a discount reduction value caused by decreasing a value of said pre-taken royalty point or a value of amount of money obtained by conversion thereof, each time when said non-particular commodity or non-particular service is sold or provided;

a step in which the royalty calculation means determines prepaid royalty by deducting a discount reduction value caused by decreasing a value of said pre-taken royalty point or a value of amount of money obtained by conversion thereof, from an amount of money of said payable royalty; and deducts a discount reduction value caused by decreasing an amount of money of said prepaid royalty and a value of said pre-taken royalty point or a value of amount of money obtained by conversion thereof from a sales price or provision price of said non-particular commodity or non-particular service; to calculate a net amount brought by the sales of or provision with said non-particular commodity or non-particular service such that the net amount is equivalent to an amount of money obtained by deducting an amount of payable royalty from the sales price or provision price of said non-particular commodity or non-particular service; each time when said non-particular commodity or non-particular service is sold or provided; and

a step in which the royalty point calculation means decreases a value of pre-taken royalty point or a value of amount of money obtained by conversion thereof before the sales of or provision with said non-particular commodity or non-particular service by a portion corresponding to a discount reduction value, to calculate a value of the pre-taken royalty point or a value of amount of money obtained by conversion thereof after the sales of or provision with said non-particular commodity or non-particular service; and adds a portion corresponding to a value caused by deducting the discount reduction value from an amount of money of said payable royalty to a value of prepaid royalty point or a value of amount of money obtained by conversion thereof before the sales of or provision with said non-particular commodity or non-particular service, to calculate a value of the prepaid royalty point or a value of amount of money obtained by conversion thereof after the sales of or provision with said non-particular commodity or non-particular service, each time when said non-particular commodity or non-particular service is sold or provided.

The calculation method recited in claim 10 is a calculation method for use in a point or coupon service in which a point or coupon for making a discount can be generated in selling a commodity or providing a service; and

further wherein there are a particular commodity or particular service with regard to which it is agreed that the particular commodity or particular service is a commodity or service that causes no decrease in net amount by discount reduction, and a single or plurality of non-particular commodities or non-particular services which is/are linked to said particular commodity or particular service so as to bear the burden of royalty payment for the particular commodity or particular service;

it is possible to generate a value of a pre-taken royalty point or a value of amount of money obtained by conversion thereof by selling or providing said particular commodity or particular service, the pre-taken royalty point enabling a discount reduction in selling or providing said non-particular commodity or non-particular service;

it is possible to generate a value of prepaid royalty point or a value of amount of money obtained by conversion thereof by selling or providing said non-particular commodity or non-particular service, the prepaid royalty point enabling a discount reduction in selling or providing said particular commodity or particular service; and

it is agreed that there is receivable royalty when said particular commodity or particular service is sold or provided, the receivable royalty being set a smaller amount of money than a sales price or provision price of said particular commodity or particular service; and

it is agreed that there is payable royalty when said non-particular commodity or non-particular service is sold or provided, the payable royalty being set at a smaller amount of money than a sale price or provision price of said non-particular commodity or non-particular service;

the calculation method being a calculation method for calculating discount reduction values including a discount made by issuing a coupon in selling or providing said particular commodity or particular service and said non-particular commodity or non-particular service, a value of said pre-taken royalty point or a value of amount of money obtained by conversion thereof and a value of said prepaid royalty point or a value of amount of money obtained by conversion thereof, after the sales of or provision with said particular commodity or particular service and said non-particular commodity or non-particular service and values of predetermined royalty for calculating net amounts brought by selling or providing said particular commodity or particular service and said non-particular commodity or non-particular service; the calculation method comprising:

a step in which discount reduction value calculation means compares; each time when a predetermined term passes; a first sum of a value of amount of money obtained by converting a value of prepaid royalty point carried forward from a term preceding the predetermined term and a total amount of money of payable royalty generated during said predetermined term with a second sum of a value of amount of money obtained by converting a value of pre-taken royalty point carried forward from a term preceding said predetermined term and a total amount of receivable royalty generated during said predetermined term to decide which sum is greater or smaller; the term being long enough for carrying out the sales of or provision with said particular commodity or particular service a plurality of times and the sales of or provision with said non-particular commodity or non-particular service a plurality of times; and determining the value of the sum having a smaller value or a value of one of the first and second sums when the first and second sums have the same values, as a sum total of discount reduction values during said predetermined term;

a step in which royalty point calculation means determines; each time when a predetermined term passes; a point value or an amount of money obtained by conversion thereof which corresponds to a difference between the first sum of a value of amount of money obtained by conversion of a value of prepaid royalty point carried forward from a term preceding said predetermined term and a total amount of payable royalty generated during said predetermined term and the second sum of a value of amount of money obtained by conversion of pre-taken royalty point carried forward from a term preceding said predetermined term and a total amount of receivable royalty generated during said predetermined term, as a value to be carried forward to a next term with respect to the value of said prepaid royalty point or a value of amount of money obtained by conversion thereof or the value of said pre-taken royalty point or a value of amount of money obtained by conversion thereof, included in a larger sum of the first and second sums; the term being long enough for carrying out the sales of or provision with said particular commodity or particular service a plurality of times and the sales of or provision with said non-particular commodity or non-particular service a plurality of times; calculates a value to be carried forward to a next term as zero with respect to a value of said pre-taken royalty point or a value of amount of money obtained by conversion thereof or a value of said prepaid royalty point or a value of amount of money obtained by conversion thereof, included in a smaller sum; and calculates values to be carried forward to a next term to zero with respect to a value of said pre-taken royalty point or a value of amount of money obtained by conversion thereof and a value of said prepaid royalty point or a value of amount of money obtained by conversion thereof when the values of the first and second sums are equal to each other; and

a step in which royalty calculation means determines; each time when a predetermined term passes; a difference between a value of amount of money obtained by conversion of prepaid royalty point carried forward from a term preceding the predetermined term and a value of amount of money obtained by conversion of prepaid royalty point to be carried forward to a next term; the term being long enough for carrying out the sales of or provision with said particular commodity or particular service a plurality of times and the sales of or provision with said non-particular commodity or non-particular service a plurality of times; and calculate the difference as a value of royalty for adjusting a relationship between a total amount of money of said receivable royalty generated during the predetermined term and a total amount of money of said payable royalty generated during said predetermined term; to calculate a total net amount brought by the sales of or provision with said particular commodity or particular service generated during said predetermined term such that the total net amount is equivalent to a total amount of money of sale price or provision price of said particular commodity or particular service which price is greater than a total amount of money of said receivable royalty generated during said predetermined term, and to calculate a total net amount brought by the sales of or provision with said non-particular commodity or non-particular service generated during said predetermined term by deducting said total amount of money of said payable royalty generated during said predetermined term from the total amount of money of sales price or provision price of said non-particular commodity or non-particular service generated during said predetermined term.

The calculation method recited in claim 11 is a calculation method for use in a point or coupon service in which a point or coupon for making a discount can be generated when selling a commodity or providing a service; and

further wherein there are a particular commodity or particular service with regard to which it is agreed that the particular commodity or particular service is a commodity or service that causes no decrease in net amount by discount reduction, and a single or plurality of non-particular commodities or non-particular services which is/are linked to said particular commodity or particular service so as to bear the burden of royalty payment for the particular commodity or particular service;

it is possible to generate a value of a pre-taken royalty point or a value of amount of money obtained by conversion thereof when said particular commodity or particular service is sold or provided, the pre-taken royalty point enabling a discount reduction in selling or providing said non-particular commodity or non-particular service;

it is agreed that there is receivable royalty when said particular commodity or particular service is sold or provided, the receivable royalty being set at an amount of money equivalent to, or smaller than, a sales price or provision prices of said particular commodity or particular service, and

it is agreed that there is payable royalty when said non-particular commodity or non-particular service is sold or provided, the payable royalty being set at a smaller amount of money than a sale price or provision price of said non-particular commodity or non-particular service;

the calculation method being a calculation method for calculating discount reduction values including a discount made by issuing a coupon in selling or providing said non-particular commodity or non-particular service, and a value of said pre-taken royalty point or a value of amount of money obtained by conversion thereof after the sales of or provision with said particular commodity or particular service and said non-particular commodity or non-particular service;

the calculation method comprising:

a step in which royalty point calculation means adds a portion corresponding to an amount of money of said receivable royalty to a value of pre-taken royalty point or a value of amount of money obtained by conversion thereof before the sales of or provision with said particular commodity or particular service; to calculate a value of pre-taken royalty point or particular service or a value of amount of money obtained by conversion thereof after the sales of or provision with said particular commodity, each time when said particular commodity or particular service is sold or provided; for calculating a net amount brought by the sale of or provision with said particular commodity or particular service such that the net amount is equivalent to an amount of money of said receivable royalty when the amount of money of said receivable royalty is equivalent to the sales price or provision price of said particular commodity or particular service or that the net amount is equivalent to an amount of money of the sales price or provision price of said particular commodity or particular service when the amount of money of said receivable royalty is smaller than the sales price or provision price of said particular commodity or particular service; a step in which discount reduction value calculation means performs predetermined operations to determine a discount reduction value caused by decreasing a value of said pre-taken royalty point or a value of amount of money obtained by conversion thereof, each time when said non-particular commodity or non-particular service is sold or provided; and

a step in which royalty point calculation means calculates a value of pre-taken royalty point or a value of amount of money obtained by conversion thereof after the sales of or provision with said non-particular commodity or non-particular service by deducting a portion corresponding to the discount reduction value from a value of pre-taken royalty point or a value of amount of money obtained by conversion thereof before the sales of or provision with said non-particular commodity or non-particular service; for calculating a net amount brought by the sale of or provision with said non-particular commodity or non-particular service such that the net amount comes to be an amount of money obtained by deducting the discount reduction value that is calculated by said discount reduction value calculation means and whose upper limit is an amount of money of said payable royalty, from the sales price or provision price of said non-particular commodity or non-particular service; each time when said non-particular commodity or non-particular service is sold or provided.

The calculation method recited in claim 12 is a calculation method for use in a point or coupon service wherein a point or coupon for making a discount can be generated in selling a commodity or providing a service; and

further wherein there are a particular commodity or particular service with regard to which it is agreed that the particular commodity or particular service is a commodity or service that causes no decrease in net amount by discount reduction, and a single or plurality of non-particular commodities or non-particular services which is/are linked to said particular commodity or particular service so as to bear the burden of royalty payment for the particular commodity or particular service;

it is possible to generate a value of a pre-taken royalty point or a value of amount of money obtained by conversion thereof when said particular commodity or particular service is sold or provided, the pre-taken royalty point enabling a discount reduction in selling or providing said non-particular commodity or non-particular service;

it is agreed that there is receivable royalty when said particular commodity or particular service is sold or provided, the receivable royalty being set at an amount of money equivalent to, or smaller than, a sales price or provision price of said particular commodity or particular service; and

it is agreed that there is payable royalty when said non-particular commodity or non-particular service is sold or provided, the payable royalty being set at a smaller amount of money than a sale price or provision price of said non-particular commodity or non-particular service;

the calculation method being a calculation method for calculating discount reduction values including a discount made by issuing a coupon in selling or providing said non-particular commodity or non-particular service, and a value of said pre-taken royalty point or a value of amount of money obtained by conversion thereof after the sales of or provision with said particular commodity or particular service and said non-particular commodity or non-particular service;

the calculation method comprising:

a step in which discount reduction value calculation means compares; each time when a predetermined term passes; a first sum of money of payable royalty generated during said predetermined term with a second sum of a value of amount of money obtained by conversion of a value of pre-taken royalty point carried forward from a term preceding said predetermined term and a total amount of receivable royalty generated during said predetermined term to decide which sum is greater or smaller; the term being long enough for carrying out the sales of or provision with said particular commodity or particular service a plurality of times and the sales of or provision with said non-particular commodity or non-particular service a plurality of times; and determining the value of the sum having a smaller value or one of the first and second sums having the same values, as a sum total of discount reduction value during said predetermined term; and

a step in which royalty point calculation means compares the first sum of payable royalty generated during said predetermined term with the second sum of an amount of money obtained by conversion of a value of pre-taken royalty point carried forward from a term preceding said predetermined term and a total amount of money of receivable royalty generated during said predetermined term; determines a point value or a value of money obtained by conversion thereof corresponding to a value obtained by deducting a total amount of payable royalty generated during said predetermined term from the total amount of a value of amount of money obtained by conversion of a value of pre-taken-royalty point carried forward from a term preceding said predetermined term and a total amount of money of receivable royalty generated during said predetermined term, as a value of said pre-taken royalty point or a value of amount of money obtained by conversion thereof to be carried forward to a neat term, when the second sum of an amount of money obtained by conversion of a value of pre-taken royalty point carried forward from a term preceding said predetermined term and a total amount of money of receivable royalty generated during said predetermined term is greater than or equivalent to the first sum; and calculates a value to be carried forward into zero with regard to a value of said pre-taken royalty point or a value of amount of money obtained by conversion thereof, when the second sum of an amount of money obtained by conversion of a value of pre-taken royalty point carried forward from a term preceding said predetermined term and a total amount of money of receivable royalty generated during said predetermined term is smaller than or equivalent to the first sum; so as to calculate a total net amount brought by the sale of or provision with said particular commodity or particular service during said predetermined term such that the total net amount is equivalent to a total amount of money of said receivable royalty generated during said predetermined term when the amount of money of said receivable royalty is equivalent to the sales price or provision price of said particular commodity or particular service; so as to calculate the total net amount such that it is equivalent to the total amount of the sales price or provision prices of said particular commodity or particular service generated during said predetermined term when the amount of said receivable royalty is smaller than the sales price or provision prices of said particular commodity or particular service; so as to calculate the total net amount brought by the sales of or provision with said non-particular commodity or non-particular service during said predetermined term, into a value obtained by deducting a total amount of money of payable royalty generated during said predetermined term from the total amount of money of the sales price or provision price of said non-particular commodity or non-particular service generated during said predetermined term, when the first sum of money of payable royalty generated during said predetermined term is compared with the second sum of a value of amount of money obtained by conversion of a value of pre-taken royalty point carried forward from a term preceding said predetermined term and a total amount of money of receivable royalty generated during said predetermined term to determine which is greater or smaller and when the second sum of a value of amount of money obtained by conversion of a value of pre-taken royalty point carried forward from a term preceding said predetermined term and a total amount of money of receivable royalty generated during said predetermined term is greater than or equivalent to the first sum; and so as to calculate the total net amount into a value obtained by deducting the total sum of the discount reduction value calculated by said discount reduction value calculation means from the total amount of money of sale price or provision price of said non-particular commodity or non-particular service generated during said predetermined term when the first sum of the payable royalty generated during said predetermined term is greater than or equivalent to the second sum.

The subject matter of claim 13 is a program enabling a computer to implement the calculation method recited in any one of claims 7 to 12.

The subject matter of claim 14 is a recording medium recording the program recited in claim 13 in such a manner in which the program is readable with a computer.

The calculation management system recited in claim 15 is a calculation management system comprising:

the calculation device recited in any one of claims 1 to 6;

royalty point storage means for storing a value of pre-taken royalty point or a value of amount of money obtained by conversion thereof and a value of prepaid royalty point or a value of amount of money obtained by conversion thereof, calculated by the royalty point calculation means of the calculation device recited in claim 1, 2, 3 or 4, or storing a value of pre-taken royalty point or a value of amount of money obtained by conversion thereof, calculated by the royalty point calculation means of the calculation device recited in claim 5 or 6; and

conversion means;

wherein said conversion means checks the currency unit of the sales price or provision price of a particular commodity or particular service with regard to which it is agreed that it is a commodity or service that causes no decrease in net amount by discount reduction and a value of amount of money obtained by conversion of a point value stored in said royalty point storage means or the currency unit of the value of amount of money obtained by conversion thereof, to change the value of amount of money obtained by conversion of the point value stored in said royalty point storage means or the value of amount of money obtained by conversion thereof to an amount of money having the same currency unit as the currency unit of the sales price or provision price of said particular commodity or particular service according to an exchange rate when the current units differ; and checks the currency unit of the sales price or provision price of a single or plurality of non-particular commodities or non-particular services which is/are linked to said particular commodity or particular service so as to bear the burden of royalty payment for the particular commodity or particular service and the currency unit of the value of amount of money obtained by conversion of the point value stored in said royalty point storage means or the value of amount of money obtained by conversion thereof, to change the point value stored in said royalty point storage means to an amount of money having the same currency unit as the currency unit of the sales price or provision price of said non-particular commodity or non-particular service according to an exchange rate when the currency units differ;

the conversion means causes the calculation device recited in any one of claims 1 to 6 to perform calculation processing with regard to said changed amounts of money;

the conversion means changes the values of amounts of money obtained by conversion of pre-taken royalty point and prepaid royalty point calculated by the royalty point calculation means of the calculation device recited in claim 1, 2, 3 or 4 or values of amounts of money obtained by conversion thereof back to amounts of money having the currency unit to be used for changing a point value to be stored in said royalty point storage means or values of amounts of money obtained by conversion thereof, according to an exchange rate; or changes the value of amount of money obtained by conversion of point value of pre-taken royalty point calculated by the royalty point calculation means of the calculation device recited in claim 5 or 6 back to an amount of money having the currency unit to be used for changing a point value to be stored in said royalty point storage means or a value of amount of money obtained by conversion thereof, according to an exchange rate; and

the conversion means causes said royalty point storage means to store a point value corresponding to the amount of money changed back in currency unit or a value of amount of money that has been obtained by conversion thereof and has been changed back in currency unit.

The calculation management system recited in claim 16 comprises;

the calculation device recited in any one of claims 1 to 6; and

royalty management means for generating and outputting transfer data in which part or the whole of predetermined royalty values calculated by the royalty calculation means of the calculation device recited in any one of claims 1 to 4 and net amounts brought by the sales of or provision with said particular commodity or particular service and a net amount brought by the sales of or provision with said non-particular commodity or non-particular service, determined by the calculation device recited in any one of claims 1 to 6, are linked to account numbers of accounts to which they are to be transferred.

The calculation management system recited in claim 17 is a calculation management system comprising:

the calculation device recited in any one of claims 1 to 6;

royalty point storage means for storing a value of pre-taken royalty point or a value of amount of money obtained by conversion thereof and a value of prepaid royalty point or a value of amount of money obtained by conversion thereof calculated by the royalty point calculation means of the calculation device recited in claim 1, 2, 3 or 4 or storing a value of pre-taken royalty point or a value of amount of money obtained by conversion thereof calculated by the royalty point calculation means of the calculation device recited in claim 5 or 6;

royalty management means for generating and outputting transfer data in which some or all of predetermined royalty values calculated by the royalty calculation means of the calculation device recited in any one of claims 1 to 4 and net amounts brought by the sales of or provision with said particular commodity or particular service and a net amount brought by the sales or provision of/with said non-particular commodity or non-particular service, determined by the calculation device recited in any one of claims 1 to 6, are linked to account numbers of accounts to which they are to be transferred; and

conversion means;

wherein said conversion means checks the currency unit of the sales price or provision price of a particular commodity or particular service with regard to which it is agreed that it is a commodity or service that causes no decrease in net amount by discount reduction and a value of amount of money obtained by conversion of a point value stored in said royalty point storage means or the currency unit of the value of amount of money obtained by conversion thereof, to change the value of amount of money obtained by conversion of the point value stored in said royalty point storage means or the value of amount of money obtained by conversion thereof to an amount of money having the same currency unit as the currency unit of the sales price or provision price of said particular commodity or particular service according to an exchange rate when the current units differ; and checks the currency unit of the sales price or provision price of a single or plurality of non-particular commodities or non-particular services which is/are linked to said particular commodity or particular service so as to bear the burden of royalty payment for the particular commodity or particular service and the currency unit of the value of amount of money obtained by conversion of the point value stored in said royalty point storage means or the value of amount of money obtained by conversion thereof, to change the point value stored in said royalty point storage means to an amount of money having the same currency unit as the currency unit of the sales price or provision price of said non-particular commodity or non-particular service according to an exchange rate when the currency units differ;

the conversion means causes the calculation device recited in any one of claims 1 to 6 to perform calculation processing with regard to said changed amounts of money;

the conversion means changes the values of amounts of money obtained by conversion of pre-taken royalty point and prepaid royalty point calculated by the royalty point calculation means of the calculation device recited in claim 1, 2, 3 or 4 or values of amounts of money obtained by conversion thereof back to amounts of money having the currency unit to be used for changing a point value to be stored in said royalty point storage means or values of amounts of money obtained by conversion thereof, according to an exchange rate; or changes the value of amount of money obtained by conversion of point value of pre-taken royalty point calculated by the royalty point calculation means of the calculation device recited in claim 5 or 6 back to an amount of money having the currency unit to be used for changing a point value to be stored in said royalty point storage means or a value of amount of money obtained by conversion thereof, according to an exchange rate; and

said royalty management means performs management to cause said conversion means to store a point value corresponding to said amount of money changed back in currency or a value of amount of money obtained by conversion thereof in said royalty point storage means, in response to input of signals to the effect that predetermined amount(s) of money of all or some of said predetermined royalty values and the net amounts has/have been transferred according said transfer data outputted.

The calculation transfer system recited in claim 18 comprises:

the calculation device recited in any one of claims 1 to 4;
royalty point storage means for storing a value of prepaid royalty point or a value of amount of money obtained by conversion thereof calculated by the royalty point calculation means of the calculation device recited in any one of claims 1 to 4, and
royalty point transfer processing means for performing processing, in response to a transfer request signal inputted by a user, to prepare transfer data in which a value of amount of money obtained by conversion of a value of prepaid royalty point stored in said royalty point storage means or a requested amount of money equivalent to, or smaller than, the value of amount of money obtained by conversion thereof, an account number of a deposit account from which the transfer is to be made and an account number of a user account to which the transfer is to be made are linked, to output the transfer data, and to cause said royalty point storage means to store a value of prepaid royalty point or a value of amount of money obtained by conversion thereof, obtained by deducting a point value corresponding to said requested amount of money for the transfer or a value of amount of money obtained by conversion thereof.

The calculation transfer system recited in claim 19 comprises:

the calculation device recited in any one of claims 1 to 4;
royalty point storage means for storing a value of prepaid royalty point or a value of amount of money obtained by conversion thereof calculated by the royalty point calculation means of the calculation device recited in any one of claims 1 to 4; and

royalty point transfer processing, means for performing processing in response to a transfer request signal inputted by a user, to prepare transfer data in which a requested amount of money for the transfer for adding a value of prepaid royalty point or a value of amount of money obtained by conversion thereof stored in said royalty point storage means, an account number of a user account from which the transfer is to be made and an account number of a deposit account to which the transfer is to be made are linked, to output the transfer data, and to cause said royalty point storage means to store a value of prepaid royalty point or a value of amount of money obtained by conversion thereof obtained by adding a point value or a value of amount of money obtained by conversion thereof corresponding to said requested amount of money for the transfer.

The subject matter of the point or coupon service system recited in claim 20 comprises: particular commodity/ service discrimination means for judging whether a sold commodity or provided service is a particular commodity or particular service with regard to which it is agreed that the particular commodity or particular service is a commodity or service that causes no decrease in net amount by discount reduction, or whether a sold commodity or provided service comes under a single or plurality of non-particular commodities or non-particular services which is/are linked to said particular commodity or particular service so as to bear the burden of royalty payment for the particular commodity or particular service; outputting purchase information including an amount of money of receivable royalty to the calculation device recited in claim 1, 3 or 5 when it is judged that the sold commodity or provided service is said particular commodity or particular service; and outputting purchase information including an amount of money of payable royalty to the calculation device recited in claim 1, 3 or 5 when it is judged that the sold commodity or provided service is said non-particular commodity or non-particular service.

The subject matter of the point or coupon service system recited in claim 21 comprises:

the calculation device recited in claim 2, 4 or 6;
particular commodity/service discrimination means for judging whether a sold commodity or provided service is a particular commodity or particular service with regard to which it is agreed that the particular commodity or particular service is a commodity or service that causes no decrease in net amount by discount reduction, or whether a sold commodity or provided service comes under a single or plurality of non-particular commodities or non-particular services which is/are linked to said particular commodity or particular service so as to bear the burden of royalty payment for the particular commodity or particular service; outputting purchase information including an amount of money of receivable royalty when it is judged that the sold commodity or provided service is said particular commodity or particular service; and outputting purchase information including an amount of money of payable royalty when it is judged that the sold commodity or provided service is said non-particular commodity or non-particular service; and

discriminated purchase history storage means for storing, as discriminated purchase history information, purchase information including said amount of money of receivable royalty and said amount of money of payable royalty outputted by said particular commodity/service discrimination means after the discrimination, so that the thus-stored discriminated purchase history information can be outputted to the calculation device recited in claim 2, 4 or 6.

The subject matter of the point or coupon service system recited in claim 22 comprises:

the calculation device recited in claim 2, 4 or 6;
purchase history storage means storing purchase information on a sold commodity or service; and
particular commodity/service discrimination means for judging whether purchase information read out from said purchase history storage means is purchase information on a particular commodity or particular service with regard to which it is agreed that the particular commodity or particular service is a commodity or service that causes no decrease in net amount by discount reduction, or whether it is purchase information on a single or plurality of non-particular commodities or non-particular services which is/are linked to said particular commodity or particular service so as to bear the burden of royalty payment for the particular commodity or particular service; and outputting, as discriminated purchase history information, purchase information including said amount of money of receivable royalty, which has been judged to be an information on said particular commodity or particular service, and purchase information including said amount of money of payable royalty, which has been judged to be an information on said non-particular commodity or non-particular service, to the calculation device recited in claim 2, 4 or 6.

The point or coupon service system recited in claim 23 is a point or coupon service system in which there can be divided a net amount brought by sales of or provision with a net-profit-division-object commodity or net-amount-division-object service that is a particular commodity or particular service with regard to which it is agreed that the particular commodity or particular service is a commodity or service that causes no decrease in net amount by discount reduction and that the net amount therefrom are to be divided,

the point or coupon service system comprising:

the calculation device recited in any one of claims 1 to 6;
purchase information gathering means for gathering purchase data of the sold commodity or provided service and outputting the purchase information; and
net amount division processing means for judging whether or not the purchase information outputted by said purchase information gathering means is purchase information on said net-amount-division-object commodity or net-amount-division-object service, calculating a total amount of money obtained by totaling the sales price or provision price of said net-amount-division-object commodity or net-amount-division-object service that has been sold, when the purchase information is judged to be a purchase information on the net-amount-division-object commodity or net-amount-division-object service; dividing the sales price or provision price included in the inputted purchase information on the net-amount-division-object commodity or net-amount-division-object service into predetermined division proportions according to a predetermined recovery definition table until said calculated total amount reaches a predetermined recovery amount of money; and dividing the sales price or provision price included in the inputted purchase information on the net-amount-division-object commodity or net-amount-division-object service into predetermined division proportions according to a predetermined division definition table after said calculated total amount reaches a predetermined recovery amount of money.

The point or coupon service system recited in claim 24 is a point or coupon service system in which there can be divided a net amount brought by sales of or provision with a net-amount-division-object commodity or net-amount-division-object service that is a particular commodity or particular service with regard to which it is agreed that the particular commodity or particular service is a commodity or service that causes no decrease in net amount by discount reduction and that the net amount therefrom are to be divided,

the point or coupon service system comprising;
the calculation device recited in claim 2, 4 or 6;
purchase information gathering means for gathering purchase data of sold commodity or provided service and outputting purchase information;
purchase history storage means for storing, as purchase history information, the purchase information outputted by said purchase information gathering means; and
net amount division processing means for judging whether or not purchase information of purchase history information read out from said purchase history storage means is purchase information on said net-amount-division-object commodity or net-amount-division-object service; calculating a total amount of money obtained by totaling the sales price or provision price of said net-amount-division-object commodity or net-amount-division-object service that has been sold on the basis of purchase history information on net-amount-division-object commodity or net-amount-division-object service; dividing the sales price or provision price included in the inputted purchase history information on the net-amount-division-object commodity or net-amount-division-object service into predetermined division proportions according to a predetermined recovery definition table until said calculated total amount reaches a predetermined recovery amount of money; and dividing the sales price or provision price included in the inputted purchase history information on the net-amount-division-object commodity or net-amount-division-object service into predetermined division proportions according to a predetermined division definition table after said calculated total amount reaches a predetermined recovery amount of money.

The point or coupon service system recited in claim 25 is a point or coupon service system in which the advertisement effect can be measured with regard to an advertisement-carrying commodity or advertisement-carrying service that is a particular commodity or particular service with regard to which it is agreed that the particular commodity or particular service is a commodity or service that causes no decrease in net amount by discount reduction, and that carries an advertisement of a single or plurality of non-particular commodities or non-particular services which is/are linked to said particular commodity or particular service so as to bear the burden of royalty payment for the particular commodity or particular service;

the point or coupon service system comprising:

the calculation device recited in any one of claims 1 to 6;
purchase information gathering means for gathering purchase data of sold commodity or provided service and outputting purchase information; and
advertisement effect measurement processing means for judging whether or not purchase information outputted by said purchase information gathering means is purchase information within an object term defined in a predetermined effect measurement plan table and is also purchase information on said non-particular commodity or non-particular service of which the advertisement is placed on said advertisement-carrying commodity or advertisement-carrying service; recording the number of times of purchases of the commodity or number of times of purchases of the service when the purchase information is on said non-particular commodity or non-particular service of which the advertisement is placed on said advertisement-carrying commodity or advertisement-carrying service; and calculating an advertisement effect fee of said non-particular commodity or non-particular service of which the advertisement is placed on said advertisement-carrying commodity or advertisement-carrying service when the total value of number of times of purchases of the commodity or service reaches a predetermined payment standard value or more.

The point or coupon service system recited in claim 26 is a point or coupon service system in which the advertisement effect can be measured with regard to an advertisement-carrying commodity or advertisement-carrying service that is a particular commodity or particular service with regard to which it is agreed that the particular commodity or particular service is a commodity or service that causes no decrease in net amount by discount reduction, and that carries an advertisement of a single or plurality of non-particular commodities or non-particular services which is/are linked to said particular commodity or particular service so as to bear the burden of royalty payment for the particular commodity or particular service;
     the point or coupon service system comprising:

     the calculation device recited in any one of claims 1 to 6;
     purchase information gathering means for gathering purchase data of sold commodity or provided service and outputting purchase information; and
     advertisement effect measurement processing means for judging whether or not purchase information outputted by said purchase information gathering means is purchase information within an object term defined in a predetermined effect measurement plan table and is also purchase information on said non-particular commodity or non-particular service of which the advertisement is placed on said advertisement-carrying commodity or advertisement-carrying service; recording the number of common purchasers who have purchased said advertisement-carrying commodity or advertisement-carrying service and have purchased said non-particular commodity or non-particular service of which the advertisement is placed on said advertisement-carrying commodity or advertisement-carrying service when the purchase information is on said non-particular commodity or non-particular service of which the advertisement is placed on said advertisement-carrying commodity or advertisement-carrying service; and calculating an advertisement effect fee of said non-particular commodity or non-particular service of which the advertisement is placed on said advertisement-carrying commodity or advertisement-carrying service when the total value of the number of the common purchasers reaches a predetermined payment standard value or more.

The point or coupon service system recited in claim 27 is a point or coupon service system in which the advertisement effect can be measured with regard to an advertisement-carrying commodity or advertisement-carrying service that is a particular commodity or particular service with regard to which it is agreed that the particular commodity or particular service is a commodity or service that causes no decrease in net amount by discount reduction, and that carries an advertisement of a single or plurality of non-particular commodities or non-particular services which is/are linked to said particular commodity or particular service so as to bear the burden of royalty payment for the particular commodity or particular service;
     the point or coupon service system comprising:

     the calculation device recited in claim 2, 4 or 6;
     purchase information gathering means for gathering purchase data of sold commodity or provided service and outputting purchase information;
     purchase history storage means for storing, as purchase history information, purchase information outputted by said purchase information gathering means; and
     advertisement effect measurement processing means for judging whether or not purchase information of purchase history information read out from said purchase information storage means is purchase information within an object term defined in a predetermined effect measurement plan table and is also purchase information on said non-particular commodity or non-particular service of which the advertisement is placed on said advertisement-carrying commodity or advertisement-carrying service; recording the number of times of purchase of the commodity or the number of times of purchase of the service when the purchase information is on said non-particular commodity or non-particular service of which the advertisement is placed on said advertisement-carrying commodity or advertisement-carrying service; and calculating an advertisement effect fee of said non-particular commodity or non-particular service of which the advertisement is placed on said advertisement-carrying commodity or advertisement-carrying service when the total value of the number of times of the purchase of the commodity or service reaches a predetermined payment standard value or more.

The point or coupon service system recited in claim 28 is a point or coupon service system in which the advertisement effect can be measured with regard to an advertisement-carrying commodity or advertisement-carrying service that is a particular commodity or particular service with regard to which it is agreed that the particular commodity or particular service is a commodity or service that causes no decrease in net amount by discount reduction, and that carries an advertisement of a single or plurality of non-particular commodities or non-particular services which is/are linked to said particular commodity or particular service so as to bear the burden of royalty payment for the particular commodity or particular service;

the point or coupon service system comprising:

the calculation device recited in claim 2, 4 or 6;
purchase information gathering means for gathering purchase data of sold commodity or provided service and outputting purchase information;
purchase history storage means for storing, as purchase history information, purchase information outputted by said purchase information gathering means; and
advertisement effect measurement processing means for judging whether or not purchase information of purchase history information read out from said purchase information storage means is purchase information within an object term defined in a predetermined effect measurement plan table and is also purchase information on said non-particular commodity or non-particular service of which the advertisement is placed on said advertisement-carrying commodity or advertisement-carrying service; recording the number of common purchasers who have purchased said advertisement-carrying commodity or advertisement-carrying service and have purchased said non-particular commodity or non-particular service of which the advertisement is placed on said advertisement-carrying commodity or advertisement-carrying service when the purchase information is on said non-particular commodity or non-particular service of which the advertisement is placed on said advertisement-carrying commodity or advertisement-carrying service; and calculating an advertisement effect fee of said non-particular commodity or non-particular service of which the advertisement is placed on said advertisement-carrying commodity or advertisement-carrying service when the total value of the number of the common purchasers reaches a predetermined payment standard value or more.

Brief Description of Drawings

Fig. 1 is a first conceptual diagram for explaining a point service system according to an embodiment of the present invention.
Fig. 2 is a tabulated diagram showing classified cases for specifically explaining the concept shown in Fig. 1.
Fig. 3 is a second conceptual diagram for explaining a point service system according to an embodiment of the present invention.
Fig. 4 is a diagram showing a whole constitution of the point service system according to a first embodiment of the present invention.
Fig. 5 is a block diagram mainly showing an internal constitution of a center 19 in Fig. 4.
Fig. 6 is a block diagram showing an internal constitution of a purchase information gathering unit 23 in Fig. 5.
Fig. 7 is a block diagram showing an internal constitution of a particular commodity/service discrimination unit 25 in Fig. 5.
Fig. 8 is a block diagram showing an internal constitution of another particular commodity/service discrimination unit different from the particular commodity/service discrimination unit 25 in Fig. 7.
Fig. 9 is a diagram showing an example of a record format of information stored in a discrimination information storage unit 49 in Fig. 8.
Fig. 10 is a diagram showing an example of another record format different from the record format in Fig. 9.
Fig. 11 is a block diagram showing an internal constitution of a calculation unit 27 in Fig. 5 in the concept of the invention shown in Fig. 1.
Fig. 12 is a flow diagram for explaining the operation of a particular commodity/service processing unit 57 in Fig. 11.
Fig. 13 is a tabulated diagram showing classified cases for specifically explaining the process shown in Fig. 12.
Fig. 14 is a flow diagram for explaining the operation of a non-particular commodity/service processing unit 59 in Fig. 11.
Fig. 15 is a tabulated diagram showing classified cases for specifically explaining the process shown in Fig. 14.
Fig. 16 is a diagram showing an example of record constitution of information stored in a royalty point storage unit 29 in Fig. 5.

Fig. 17 is a diagram showing another example of record constitution of information stored in the royalty point storage unit 29 in Fig. 5.

Fig. 18 is a diagram showing still another example of record constitution of information stored in the royalty point storage unit 29 in Fig. 5.

Fig. 19 is a block diagram showing an internal constitution of a royalty management unit 31 in Fig. 5.

Fig. 20 is a diagram showing record constitution of information stored in a prepaid/post-taken royalty storage unit 97 in Fig. 19.

Fig. 21 is a diagram showing the relationship of data that flow between a seller and a center with regard to a royalty calculation model.

Fig. 22 is a diagram showing the relationship of data that flow among a consumer, the center, a banking institution, a content seller and a commodity seller with regard to a first royalty calculation and management model.

Fig. 23 is a diagram showing the relationship of data that flow among a consumer, the center, a banking institution, a content seller and a commodity seller with regard to a first royalty calculation and management and money collection model.

Fig. 24 is a diagram showing the relationship of data that flow among a consumer, the center, a banking institution, a content seller and a commodity seller with regard to a second royalty calculation and management model.

Fig. 25 is a diagram showing the relationship of data that flows among a consumer, the center, a banking institution, a content seller and a commodity seller with regard to a third royalty calculation and management model.

Fig. 26 is a diagram showing the relationship of data that flows among a consumer, the center, a banking institution, a content seller and a commodity seller with regard to a second royalty calculation and management and money collection model.

Fig. 27 is a diagram showing the relationship of data that flows among a consumer, the center, a banking institution, a content seller and a commodity seller with regard to a fourth royalty calculation and management model.

Fig. 28 is a flow diagram for explaining the operation of a particular commodity/service processing unit 57 of a calculation unit 27 in Fig. 11 in the concept of the invention shown in Fig. 3.

Fig. 29 is a flow diagram for explaining the operation of a non-particular commodity/service processing unit 59 of the calculation unit 27 in Fig. 11 in the concept of the invention shown in Fig. 3.

Fig. 30 is a block diagram mainly showing an internal constitution of a center of a point service system according to a second embodiment of the present invention.

Fig. 31 is a diagram showing an example of record constitution of a purchase history stored in a purchase history storage unit 107 in Fig. 30.

Fig. 32 is a diagram showing another example of record constitution of a purchase history stored in a purchase history storage unit 107 in Fig. 30.

Fig. 33 is a block diagram showing an internal constitution of a particular commodity/service discrimination unit 109 in Fig. 30.

Fig. 34 is a block diagram showing an internal constitution of another particular commodity/service discrimination unit different from the particular commodity/service discrimination unit 109 in Fig. 33.

Fig. 35 is a diagram showing record constitution of a discriminated purchase history stored in a discriminated purchase history storage unit 111 in Fig. 30.

Fig. 36 is a block diagram showing an internal constitution of a calculation unit 113 in Fig. 30.

Fig. 37 is a flow diagram for explaining the operation of a processing unit 131 in Fig. 36.

Fig. 38 is a relationship diagram for explaining the operation of the processing unit 131 in Fig. 36.

Fig. 39 is a diagram showing an internal constitution of a royalty management unit 115 in Fig. 30.

Fig. 40 is a diagram showing the relationship of data that flows between a settlement agency and the center with regard to a royalty calculation model.

Fig. 41 is a diagram showing the relationship of data that flows between a settlement agency and the center with regard to a royalty calculation and "Σuser payment amounts" calculation model.

Fig. 42 is a diagram showing the relationship of data that flows among a consumer (user), the center and a banking institution with regard to a royalty calculation and management model.

Fig. 43 is a diagram showing the relationship of data that flows among a consumer (user), the center and a banking institution with regard to a royalty calculation and management and "Σuser payment amounts" calculation model.

Fig. 44 is a flow diagram for explaining the operation of a calculation unit 113 in Fig. 36 in the concept of the invention shown in Fig. 3.

Fig. 45 is a relationship diagram for explaining the operation of the calculation unit 113 in Fig. 36 in the case of Fig. 44.

Fig. 46 is a diagram showing whole constitution of a point service system according to a third embodiment of the present invention.

Fig. 47 is a block diagram mainly showing an internal constitution of a center 145 in Fig. 46.

Fig. 48 is a block diagram mainly showing an internal constitution of another center different from the center 145 in Fig. 47.

Fig. 49 is a block diagram.showing an internal constitution of a royalty point transfer processing unit 151 in Figs. 47 and 48.

Fig. 50 is a diagram for mainly explaining a royalty point transfer processing unit 151 in Fig. 49.

Fig. 51 is a diagram showing an example of a point transfer login screen.

Fig. 52 is a diagram showing an example of a point transfer instruction screen when "Transfer points to user account" is selected in types of transfer in Fig. 51.

Fig. 53 is a diagram showing an example of a point transfer instruction screen when "Transfer from user account to points" is selected in types of transfer in Fig. 52.

Fig. 54 is a block diagram showing an internal constitution of a net amount division processing unit 153 in Figs. 47 and 48.

Fig. 55 is a flow diagram for explaining the operation of a net amount division processing unit 153 in Fig. 54.

Fig. 56 is a diagram showing a database structure for specifically explaining the operation of the net amount division processing unit 153 in Fig. 54.

Fig. 57 is a diagram showing a relationship of recovery and division amounts of money in the database structure shown in Fig. 56.

Fig. 58 is a diagram showing an internal constitution of an advertisement effect measurement processing unit 155 in Figs. 47 and 48.

Fig. 59 is a flow chart for explaining the operation of the advertisement effect measurement processing unit 155 in Fig. 58.

Fig. 60 is a diagram showing an advertisement effect measurement management database structure and a matching management database structure for explaining advertisement effect measurement and processing of calculation of fee for an advertisement producer.

Fig. 61 is a block diagram mainly showing an internal constitution of the center in a point service system according to a fourth embodiment of the present invention.

Fig. 62 is a view showing a program guide screen showing contents as a particular commodity/service, which can be purchased as a unit.

Fig. 63 is a view showing a purchased-content confirmation screen displayed when "Purchase items to be confirmed" is selected on the program guide screen in Fig. 62.

Fig. 64 is a view showing a subscription program guide screen showing contents as particular commodity/service, which can be subscribed to.

Fig. 65 is a view showing a purchased-items confirmation screen displayed when "Purchase items to be confirmed" is selected on the subscription program guide screen in Fig. 64.

Fig. 66 is a view showing a commodity catalog screen showing commodities as non-particular commodity/service which can be purchased.

Fig. 67 is a view showing a purchased-items confirmation screen displayed when "Purchase items to be confirmed" is selected on the commodity catalog screen in Fig. 66.

Fig. 68 shows an example of a usage bill.

Fig. 69 shows another example of a usage bill.

Fig. 70 is a block diagram showing a conversion unit 227 in Fig. 61 and a constitution related thereto.

Fig. 71 is a block diagram showing a point service system according to a first example of the present invention.

Fig. 72 is a block diagram showing a point service system according to a second example of the present invention.

Fig. 73 is a block diagram showing a point service system according to a third example of the present invention.

Fig. 74 is a block diagram showing a point service system according to a fourth example of the present invention.

Fig. 75 is a block diagram showing a point service system according to a fifth example of the present invention.

Fig. 76 is a block diagram showing a point service system according to a sixth example of the present invention.

Fig. 77 is a block diagram showing a point service system according to a seventh example of the present invention.

Fig. 78 is a third conceptual diagram for explaining a point service system according to an embodiment of the present invention.

Fig. 79 is a fourth conceptual diagram for explaining a point service system according to an embodiment of the present invention.

Preferred Embodiments of the Invention

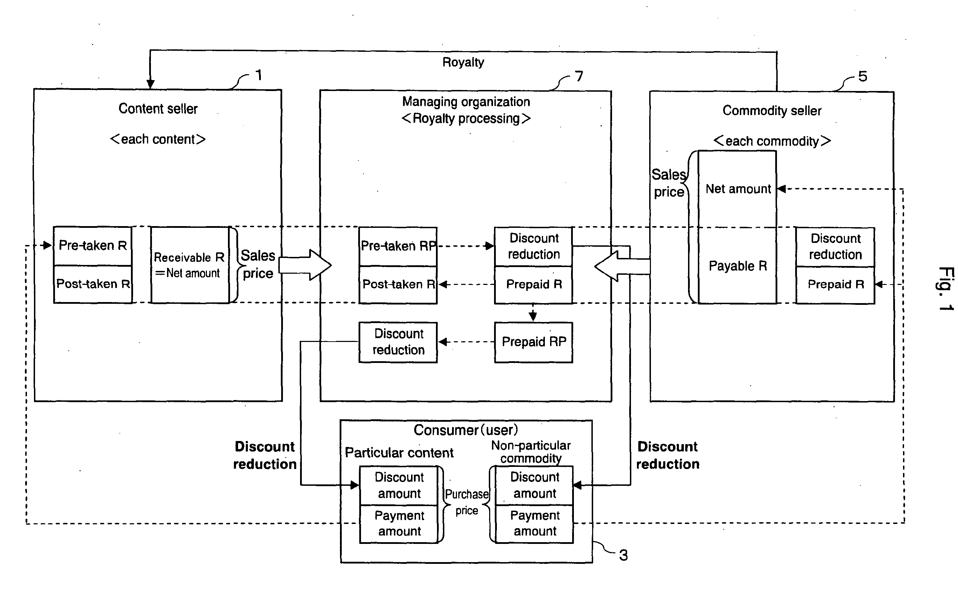

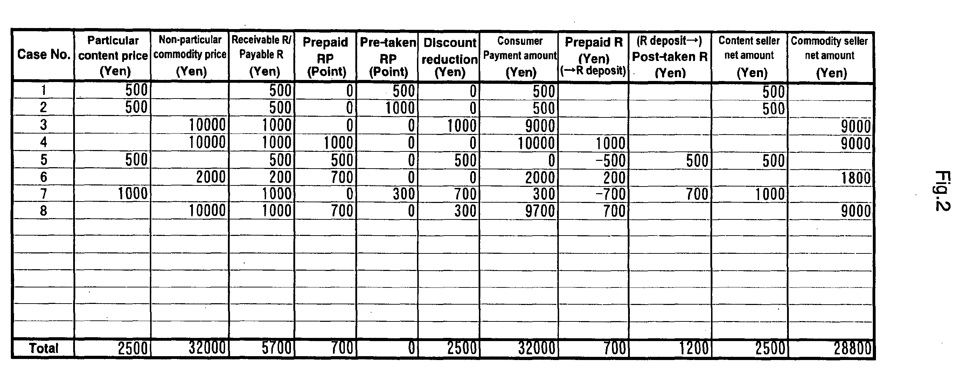

Fig. 1 is a first conceptual diagram for explaining a point service system according to an embodiment of the present invention, and Fig. 2 is a tabulated diagram for specifically explaining a concept shown in Fig. 1.

In Figs. 1 and 2, "R" represents a royalty, and "RP" represents a royalty point. "Receivable R" is a royalty equivalent to a maximum discount price that can be given to a consumer (user) 3 when a content is sold by a content seller 1 who sells the content as a particular commodity or particular service which is determined, by an agreement, or the like, to be a commodity or service causing no decrease in net amount by making a discount. "Payable R" is a royalty equivalent to a maximum discount price that can be given to the consumer 3 when a commodity is sold by a commodity seller 5 who sells the commodity as a non-particular commodity or non-particular service which is linked, by an agreement, or the like, with the above content such that the commodity seller bears the burden of royalty payment for the particular commodity or particular service. "Prepaid RP" is a point for discounting a price of a content to be paid by the consumer 3 on the basis of point reduction, and it is a point of which the value can increase when a commodity is sold or can decrease when a content is sold. "Pre-taken RP" is a point for discounting a price of a commodity to be paid by the consumer 3 on the basis of point reduction, and it is a point of which the value can increase when a content is sold or can decrease when a commodity is sold. Pre-taken R in Fig. 1 is a royalty corresponding to pre-taken RP. "Prepaid R" represents money on deposit for a royalty to be paid to the content seller 1 by the commodity seller 5, and it can increase when a commodity is sold or can decrease when a content is sold. Post-taken R represents division money for a royalty to be paid to the content seller 1 by the commodity seller 5, and it is generated when the prepaid R decreases. The above prepaid RP, pre-taken RP, prepaid R and post-taken R are calculated in a managing organization 7. In Fig. 2, the maximum discount rate of a content price is set at 100 %, and the maximum discount rate of a commodity price is set at 10 %. Further, "/" in Fig. 2 and Figures following it stands for "or".

First, with reference to Fig. 1 and Case No. 1 in Fig. 2, there will be explained a case where the consumer 3 purchases a content having a content price of 500 Yen when both the prepaid RP and the pre-taken RP are zero.

In this case, the receivable R is 500 Yen while a maximum discount rate of 100 % is applied. The consumer 3 has not so far accumulated any prepaid RP, so that he or she cannot get any discount reduction, and he or she pays a full amount of 500 Yen while accumulating 500 points (1 point = 1 Yen, which rate will be also applicable hereinafter) in the pre-taken RP. As a result, the net amount that the content seller 1 receives is 500 Yen, and the content seller 1 issues points but can do without the need of including any incentive cost in the content sales price.

Then, with reference to Fig. 1 and Case No. 2 in Fig. 2, there will be explained a case where the consumer 3 purchases a content having a content price of 500 Yen when the prepaid RP is zero and when 500 points are accumulated in the pre-taken RP.

In this case, the receivable R is 500 Yen while a maximum discount rate of 100 % is applied. The consumer 3 cannot get any discount reduction since there is not accumulated any prepaid RP at this time, either, and the consumer 3 pays 500 Yen while further adding 500 points (1 point = 1 Yen) to, and accumulating 1,000 points in, the pre-taken RP. As a result, the net amount that the content seller 1 receives is again 500 Yen in this case, and the content seller 1 issues points but can do without the need of including any incentive cost in the content sales price.

Then, with reference to Fig. 1 and Case No. 3 in Fig. 2, there will be explained a case where the consumer 3 purchases a commodity having a price of 10,000 Yen when the prepaid RP is zero and when 1,000 points have been accumulated in the pre-taken RP.

In this case, the payable R is 1,000 Yen while a maximum discount rate of 10 % is applied. At this time, 1,000 points (1 point = 1 Yen) have been accumulated in the pre-taken RP, so that the consumer 3 can get a discount reduction of 1,000 Yen. In this case, the consumer 3 gets a discount reduction of 1,000 Yen and his or her payment amount is 9,000 Yen. In this case, the net amount that the commodity seller 5 receives is 9,000 Yen, and the commodity seller 5 sells the commodity while defraying the incentive cost corresponding to the points that the content seller 1 has issued.

Then, with reference to Fig. 1 and Case No. 4 in Fig. 2, there will be explained a case where the consumer 3 purchases a commodity having a price of 10,000 Yen when both the prepaid RP and the pre-taken RP are zero.

In this case, the payable R is 1,000 Yen while a maximum discount rate of 10 % is applied. At this time, the pre-taken RP is zero, so that the consumer 3 cannot get any discount, and the consumer 3 pays a full amount of 10,000 Yen while accumulating 1,000 points (1 point = 1 Yen) in the prepaid RP. Further, as the points are accumulated in the prepaid RP, 1,000 Yen of the 10,000 Yen that is an amount of the payment made by the consumer is taken into the prepaid R. As a result, the net amount that the commodity seller 5 receives is 9,000 Yen.

Then, with reference to Fig. 1 and Case No. 5 in Fig. 2, there will be explained a case where the consumer 3 purchases a content having a content price of 500 Yen when 1,000 points have been accumulated in the prepaid RP and when the pre-taken RP is zero.

In this case, the receivable R is 500 Yen while a maximum discount rate of 100 % is applied. The consumer 3 can get a discount reduction since 1,000 points (1 point = 1 Yen) have been accumulated in the prepaid RP. In this case, the consumer 3 gets a discount reduction equivalent to an amount of money of 500 Yen, so that the payment amount is zero. As the discount reduction has been given, the prepaid RP is decreased from 1,000 points to 500 points, and in the prepaid R, 500 Yen is deducted from 1,000 Yen, and the deducted 500 Yen is taken into the post-taken R and allocated as a net amount that the content seller 1 receives. In this case, the content seller 1 makes a point-based reduction to the consumer 3 and can also do without the need of including any incentive cost in the content sales price.

Then, with reference to Fig. 1 and Case No. 6 in Fig. 2, there will be explained a case where the consumer 3 purchases a commodity having a commodity price of 2,000 Yen when 500 points has been accumulated in the prepaid RP and when the pre-taken RP is zero.

In this case, the payable R is 200 Yen while a maximum discount rate of 10 % is applied. The consumer 3 has accumulated 500 points in the prepaid RP. However, since the pre-taken RP is zero, the consumer 3 cannot get any discount, so that he or she pays a full amount of 2,000 Yen. Further, 200 points (1 point = 1 Yen) are added to the prepaid RP, so that a total 700 points are accumulated in the prepaid RP, and 200 Yen is accordingly added to the prepaid R. At this time, the prepaid R amounts to 700 Yen. As a result, the commodity seller 5 does not receive 2,000 Yen that the consumer has paid, but receives, as a net amount, 1,800 Yen left by deducting 200 Yen that has been added to the prepaid R.

Then, with reference to Fig. 1 and Case No. 7 in Fig. 2, there will be explained a case where the consumer 3 purchases a content having a content price of 1,000 Yen when 700 points have been accumulated in the prepaid RP and when the pre-taken RP is zero.

In this case, the receivable R is 1,000 Yen while a maximum discount rate of 100 % is applied. The consumer 3 has accumulated 700 points (1 point = 1 Yen) in the prepaid RP and can therefore get a discount reduction up to 700 Yen. In this case, the consumer 3 gets a discount reduction of 700 Yen and pays 300 Yen. Since 300 Yen is paid, 300 points (1 point = 1 Yen) are accumulated in the pre-taken RP, and since the discount of 700 Yen is obtained, the prepaid R is decreased by 700 Yen and comes to be zero. This decrement of 700 Yen in the prepaid R is allocated to the content seller 1 as a post-taken R. As a result, the net amount that the content seller 1 receives is 1,000 Yen, and in this case, the content seller 1 makes a point-based reduction to the consumer 3 and can do without the need of including any incentive cost in the content sales price.

Then, with reference to Fig. 1 and Case No. 8 in Fig. 2, there will be explained a case where the consumer 3 purchases a commodity having a commodity price of 10,000 Yen when the prepaid RP is zero and when the pre-taken RP is 300 points.

In this case, the payable R is 1,000 Yen while a maximum discount rate of 10 % is applied. The consumer 3 has accumulated 300 points (1 point = 1 Yen) in the pre-taken RP and can get a discount reduction up to 300 Yen. The consumer 3 gets a discount reduction of 300 Yen, and pays 9,700 Yen. In the prepaid RP, 700 points are accumulated, and the prepaid R is 700 Yen. As a result, the net amount that the commodity seller 5 receives is 9,000 Yen.

With regard to the net amount that the content seller 1 receives, the following equation is established (see Fig. 1).

$$\text{Net amount to be received} = \text{Sales price of content} = \text{Receivable R} =$$

$$(\text{Amount paid by consumer}) + (\text{Post-taken R}) = (\text{Content sales price}) - (\text{Discount}$$

$$\text{reduction}) + (\text{Post-taken R}).$$

Further, with regard to the net amount that the commodity seller 5 receives, the following equation is established (see Fig. 1).

$$\text{Net amount to be received} = (\text{Sales price of commodity}) - (\text{Payable R}) =$$

$$(\text{Amount paid by consumer}) + (\text{Discount reduction}) - (\text{Payable R}) = (\text{Amount paid by}$$

$$\text{consumer}) - (\text{Prepaid R})$$

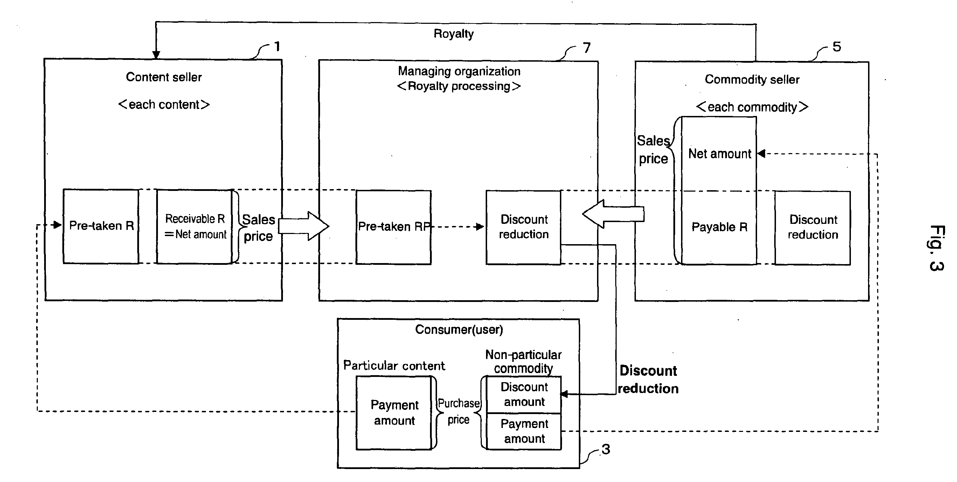

Fig. 3 is a second conceptual diagram for explaining a point service system according to an embodiment of the present invention. Particulars different from those of the concept shown in Fig. 1 will be explained below.

In Fig. 1, the content seller 1 can issue a pre-taken RP, the commodity seller 5 can issue a prepaid RP, the consumer 3 can use an accumulated pre-taken RP to get a discount reduction when he or she purchases a commodity, and the consumer 3 can use an accumulated prepaid RP to get a discount reduction when he or she purchases a content. In contrast, the embodiment in Fig. 3 employs a constitution in which the content seller 1 can issue a pre-taken RP, while the commodity seller 5 cannot issue any prepaid RP, and the consumer 3 can get a discount reduction only when he or she uses an accumulated a pre-taken RP to buy a commodity. In this case, the content seller 1 can also do without the need of including any incentive cost in a content sales price, and the commodity seller 5 alone bears the burden of an incentive cost.

In the concepts shown in Figs. 1 and 3, contents are employed as those free of bearing any incentive cost, and commodities are employed as those bearing incentive cost, while there is an embodiment that shall not be limited thereto. For example, contents may be employed as those free of bearing any incentive cost and as those bearing incentive costs. As those free of bearing any incentive cost, however, it is preferred to employ those highly capable of pulling in more customers such as sales of contents such as movies.

While the concepts shown in Figs. 1 and 3 employ contents and commodities that can be sold with bearing incentive cost or without bearing any incentive cost, there may be employed a service that can be provided for one or both of these. The service may be medical services, care services, etc., which require to maintain qualities and secure reliability, since they can be done without bearing any incentive cost.

In the concepts shown in Figs. 1 and 3, further, content seller 1 and the commodity seller 5 may be one and the same or may be different. That is, one seller/provider can sell or provide a particular commodity or particular service and can sell or provide a non-particular commodity and a non-particular service, or a seller/provider who sells or provides a particular commodity or particular service and a seller/provider who sells or provides a non-particular commodity or non-particular service may be different.

Further, in the concepts shown in Figs. 1 and 3, there may be one commodity seller 5 who bears incentive costs or there may be a plurality of commodity sellers 5 who bear incentive costs. Particularly, when there are a plurality of the commodity sellers 5, the plurality of the commodity sellers 5 can bear the incentive costs at predetermined ratios.

Further, in the concept shown in Fig. 1, when the commodity seller 5 sells a commodity, there is generated the prepaid RP for the consumer 3 to get a discount reduction when he or she purchases a content provided by the content seller 1, while there is an embodiment that shall not be limited thereto. For example, there may be a case where a first non-particular commodity or non-particular service with regard to a first particular commodity or particular service can be a second particular commodity or particular service with regard to a second non-particular commodity or non-particular service.

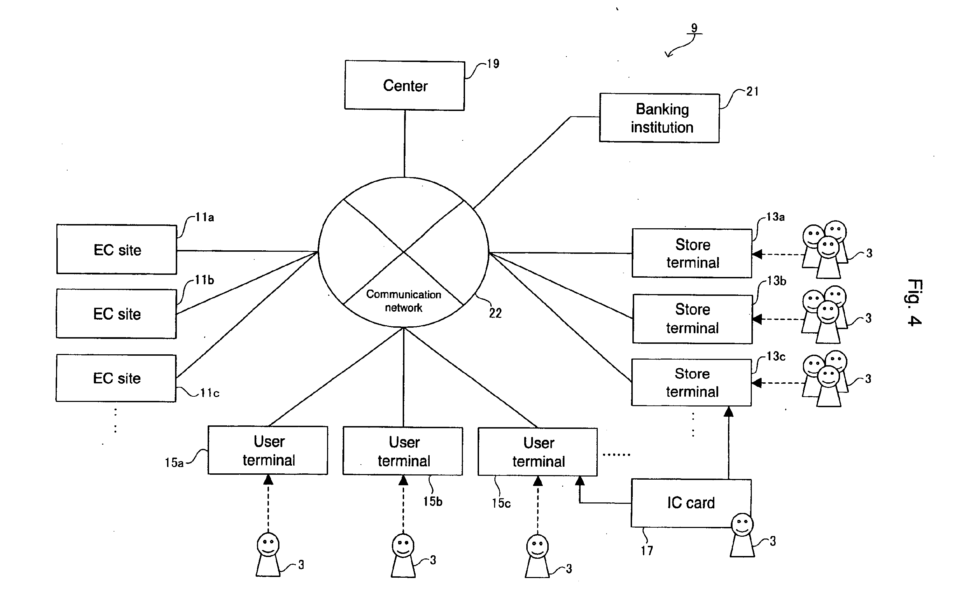

Fig. 4 is a diagram showing a whole constitution of the point service system according to a first embodiment of the present invention.

A point service 9 comprises EC sites 11a, 11b, 11c, store terminals 13a, 13b, 13c, user terminals 15a, 15b, 15c, an IC card 17 capable of exchanging data with the store terminals 13a, etc., or the user terminals 15a, etc., a center 19 and a banking institution 12. The EC sites 11a, etc., the store terminals 13a, etc., the user terminals 15a, etc., the center 19 and the banking institution 21 are connected through a communication network 22.

The EC sites 11a, etc., and the store terminals 13a, etc., correspond to the content seller 1 or the commodity seller in Figs. 1 and 3, and the user 3 can access these with the user terminal 15a or the like, and he or she can purchase a content or can purchase a commodity. When a content or a commodity is purchased as described above, the center 19 corresponding to the managing organization 7 in Figs. 1 and 3 performs a predetermined process. The user terminals 15a, etc., may be information terminals with a receiver each. In this case, there may be employed a constitution in which information on a content or a commodity is downloaded from broadcast waves of data casting or the like, to purchase the commodity or content.

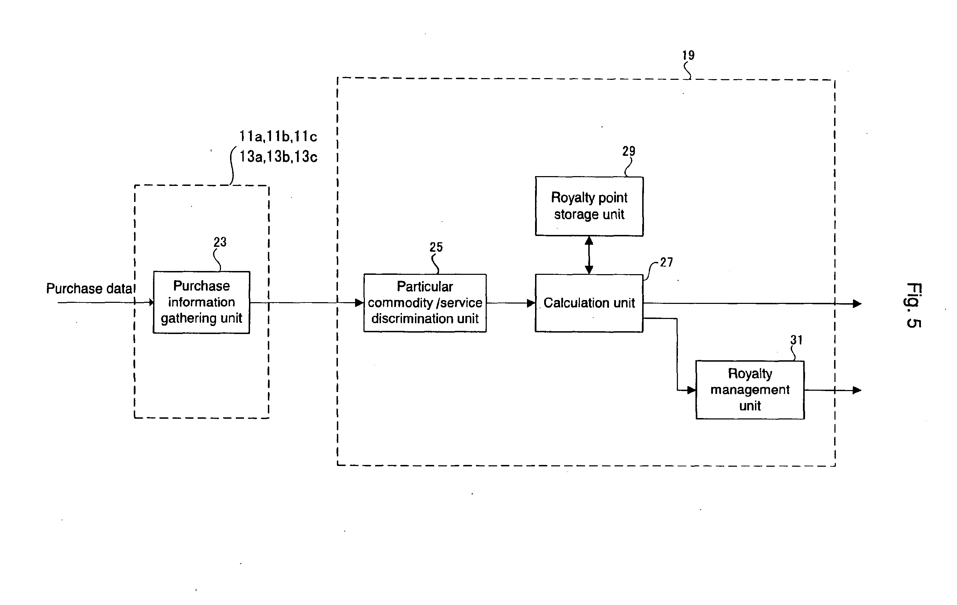

Fig. 5 is a block diagram for mainly showing an internal constitution of the center 19 in Fig. 4.

The center 19 has a particular commodity/service discrimination unit 25, a calculation unit 27, a royalty point storage unit 29 and a royalty management unit 31, and it implements a process on demand like a real time processing. Purchase information outputted from a purchase information gathering unit 23 of the EC sites 11a, 11b, 11c or the store terminals 13a, 13b, 13c is inputted to the particular commodity/service discrimination unit 25 on demand.

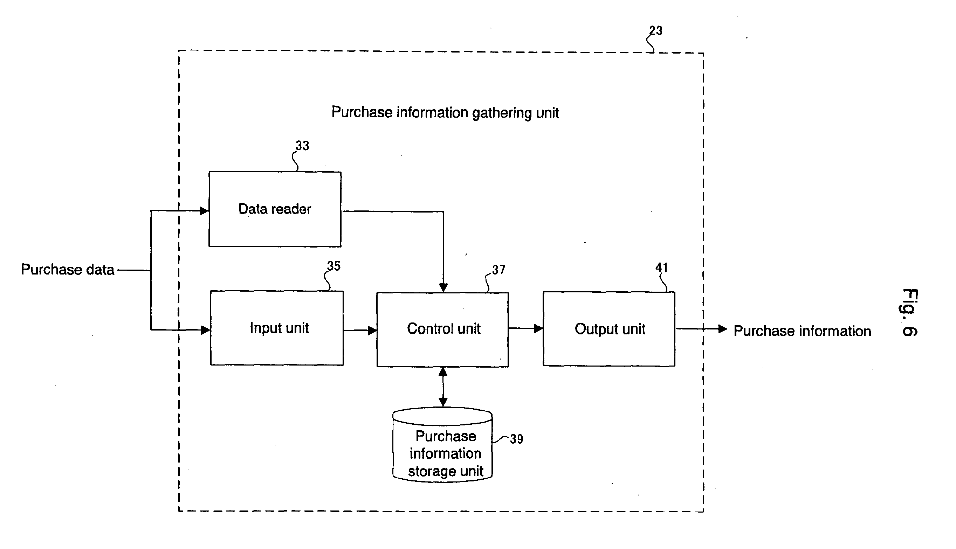

Fig. 6 is a block diagram showing an internal constitution of the purchase information gathering unit 23 in Fig. 5.

The above purchase information gathering unit 23 is included, for example, in the store terminals 13a, 13b, 13c and has a data reader 33, an input unit 35, a control unit 37, a purchase information storage unit 39 and an output unit 41.

Specifically, the data reader 33 may include a barcode reader, a read-writer reading data from a wireless tag or a card or an infrared information reader for a portable information terminal. The input unit 35 may specifically include a keyboard, a touch panel or a mouse. The control unit 37 performs the storing of inputted purchase data in the purchase information storage unit 39 and also controls the output of necessary purchase information out of purchase data into the output portion 41.

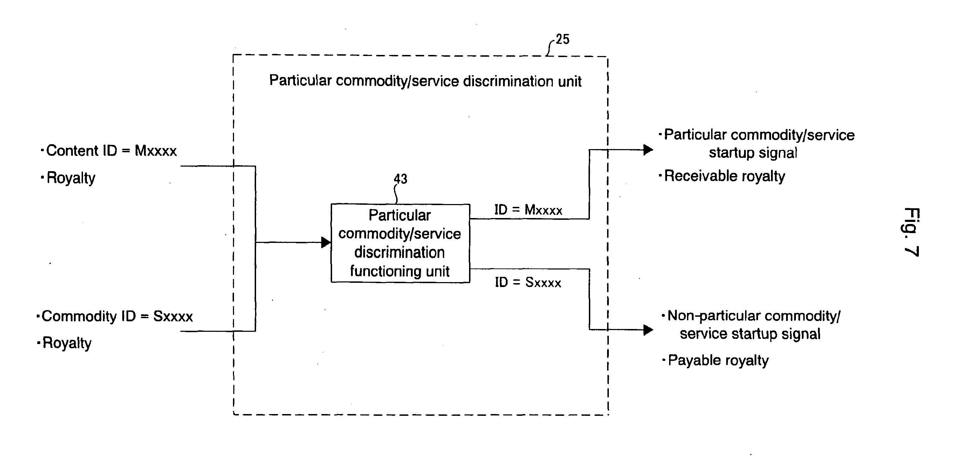

Fig. 7 is a block diagram showing an internal constitution of the particular commodity/service discrimination unit 25 in Fig. 5.

The particular commodity/service discrimination unit 25 in Fig. 7 has a particular commodity/service discrimination functioning unit 43. Of purchase information outputted by the purchase information gathering unit 23, at least items of information showing content ID (= Mxxxx) or commodity ID (Sxxxx) and information on royalty are inputted to the particular commodity/service discrimination function unit 43. Information on royalty at this stage is information with regard to which no discrimination is made between receivable royalty and payable royalty. On the basis of ID, the particular commodity/service discrimination functioning unit 43 determines that a content in the conceptual diagram shown in Figs. 1 and 3 is a particular commodity/service, and with respect to ID = Mxxxx, it outputs a particular commodity/service startup signal and information on the value of receivable royalty. On the basis of ID, it determines that a commodity in the conceptual diagram shown in Figs. 1 and 3 is a non-particular commodity/service, and with respect to ID = Sxxxx, it outputs a non-particular commodity/service startup signal and information on the value of payable royalty.

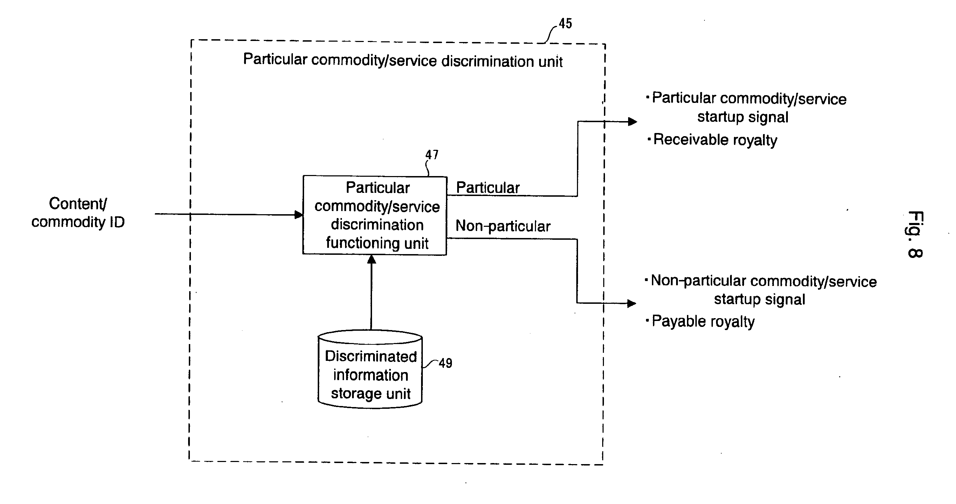

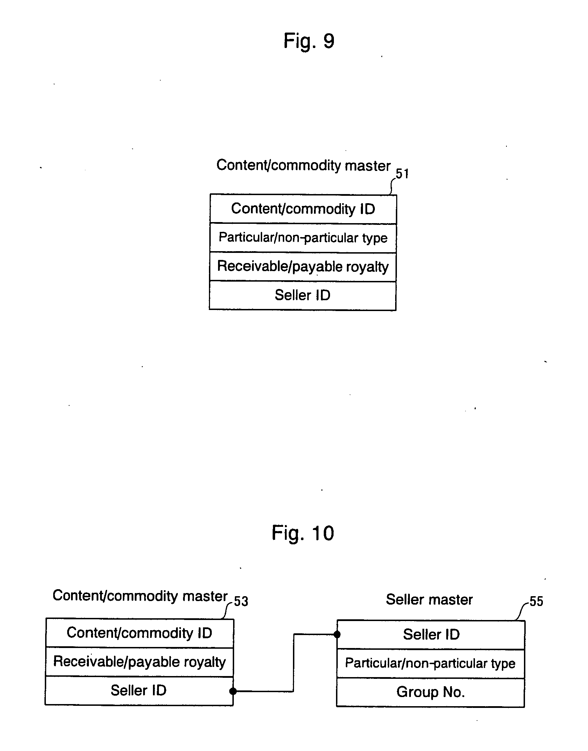

Fig. 8 is a block diagram showing an internal constitution of another particular commodity/service discrimination unit different from the particular commodity/service discrimination unit 25 in Fig. 7. Fig. 9 is a diagram showing an example of recording format of information stored in a discrimination information storage unit 49 in Fig. 8.

The particular commodity/service discrimination unit 45 in Fig. 8 has a particular commodity/service discrimination functioning unit 47 and a discriminated information storage unit 49. Of purchase information outputted from the purchase information gathering unit 23, at least an item information showing a content/commodity ID is inputted to the particular commodity/service discrimination functioning unit 47. The particular commodity/service discrimination functioning unit 47 identifies a type of a particular commodity/service or a non-particular commodity/service on the basis of inputted ID according to a content/commodity master 51 as a recording format in the discrimination information storage unit 49. Further, the particular commodity/service discrimination functioning unit 47 identifies receivable royalty on a particular commodity/service and payable royalty on a non-particular commodity/service on the basis of an inputted ID according to the content/commodity master 51 as a recording format in the discrimination information storage unit 49, and it further identifies a seller ID identifying a seller, whereby the particular commodity/service discrimination functioning unit 47 outputs a particular commodity/service startup signal and information on a value of receivable royalty with respect to a particular commodity/service, or it outputs a non-particular commodity/service startup signal and information on a value of payable royalty with respect to a non-particular commodity/service, depending upon the particular or non-particular type of the content/commodity ID.

Fig. 10 is a diagram showing an example of another recording format different from the recording format in Fig. 9.

This recording format is constituted of a content/commodity master 53 and a seller master 55. The content/commodity master 53 can be used for identifying a content/commodity ID, receivable/payable royalty and a seller ID. The seller master 55 can be used to for identifying a seller ID, a particular/non-particular type as to whether it is a particular commodity/service or not and a group number in classification into groups of business partnership. By collating a seller ID of content/commodity master 53 with the seller ID of the seller master 55, the particular commodity/service discrimination functioning unit 47 outputs a particular commodity/service startup signal and information on a value of receivable royalty with respect to a particular commodity/service, or it outputs a non-particular commodity/service startup signal and information on a value of payable royalty with respect to a non-particular commodity/service, depending upon the particular or non-particular type of the content/commodity ID, like the case shown in Fig. 9.

The recording format as shown in Fig. 10 is a recording format effective when the discrimination is made between particular and non-particular types with regard to companies as in a case where a commodity/service sold by a particular seller is a particular commodity/service.

The information on the value of royalty to be inputted to the particular commodity/service discrimination functioning unit 43 in Fig. 7 and the information on the value of receivable/payable royalty in Figs. 9 and 10 stored in the discrimination information storage unit 49 in Fig. 8 may be expressed by using an amount of money, and beside it, they may be also expressed by using a sales price and a maximum discount rate thereto, or by using a maximum discount rate to a sales price when a sales price is set for each commodity/service beforehand.

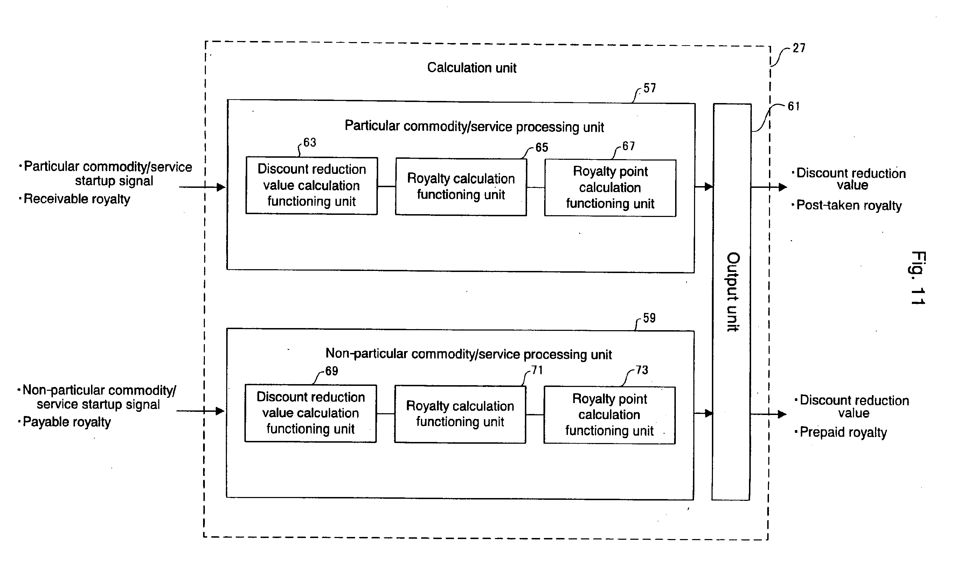

Fig. 11 is a block diagram showing an internal constitution of the calculation unit 27 in Fig. 5 in the concept of the invention shown in Fig. 1.

The calculation unit 27 has a particular commodity/service processing unit 57, a non-particular commodity/service processing unit 59 and an output unit 61. The particular commodity/service processing unit 57 has a discount reduction value calculation functioning unit 63, a royalty calculation functioning unit 65 and a royalty point calculation functioning unit 67. The non-particular commodity/service processing unit 59 has a discount reduction value calculation functioning unit 69, a royalty calculation functioning unit 71 and a royalty point calculation functioning unit 73. A particular commodity/service startup signal and information on receivable royalty are inputted to the particular commodity/service processing unit 57, and a non-particular commodity/service startup signal and information on a value of payable royalty are inputted to the non-particular commodity/service processing unit 59. The particular commodity/service processing unit 57 and the non-particular commodity/service processing unit 59 perform predetermined processes as will be described later. The output unit 61 at least outputs information on a discount reduction value and information on a value of post-taken royalty, or outputs information on a discount reduction value and information on a value of prepaid royalty.

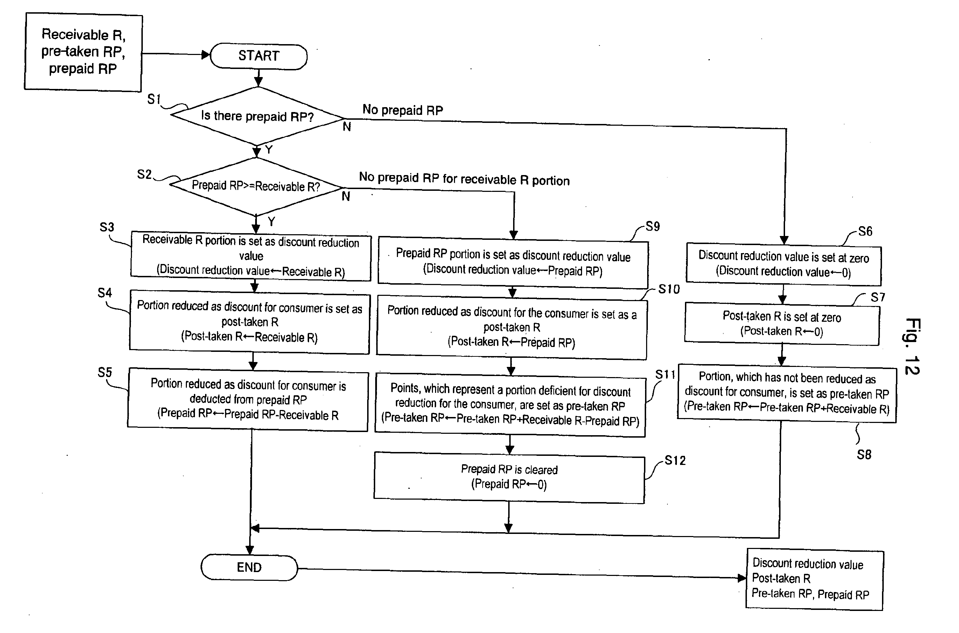

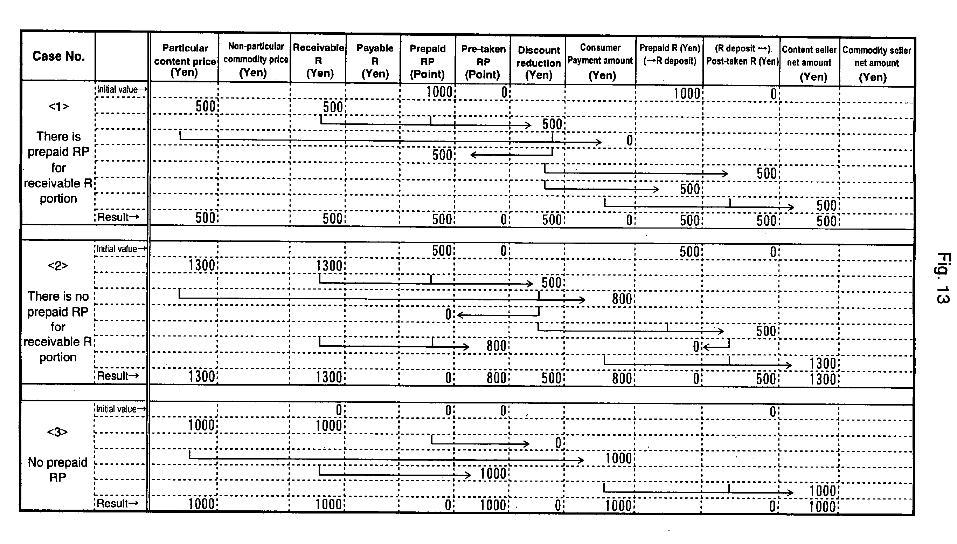

Fig. 12 is a flow diagram for explaining the operation of the particular commodity/service processing unit 57 in Fig. 11. Fig. 13 is a tabulated diagram showing classified cases for specifically explaining the process shown in Fig. 12. In this diagram, 1 point is to be exchanged with 1 Yen, and the proportion of receivable R to a sales price in Fig. 13 is to be 100 %, and the proportion of payable R to a sales price is to be 10 %.

First, a value of receivable R is inputted to the particular commodity/service processing unit 57, and in addition thereto, a value of pre-taken RP and a value of prepaid RP stored in the royalty point storage unit 29 are inputted thereto.

In step S1, the discount reduction value calculation functioning unit 63 judges whether or not there is any prepaid RP. When there is a prepaid RP, the processing proceeds to step S2 (see Case No. <1> and <2> in Fig. 13), and when there is no prepaid RP, the processing proceeds to step S6 (see Case No. <3> in Fig. 13).

In step S2, the discount reduction value calculation functioning unit 63 compares a value of prepaid RP with a value of receivable R to determine which is greater or smaller. When the value of prepaid RP is equivalent to, or greater than, the value of receivable R, the processing proceeds to step S3 (see Case No. <1> in Fig. 13), and when the value of prepaid RP is smaller than the value of receivable R, the processing proceeds to step S9 (see Case No. <2> in Fig. 13).

In step S3, the discount reduction value calculation functioning unit 63 sets a receivable R portion as a discount reduction value. In Case No. <1> in Fig. 13, the prepaid RP as an initial value is 1,000 point, and the receivable R is 500 Yen, so that the discount reduction value is 500 Yen. And, since a content has a price of 500 Yen, the amount to be paid by a consumer is 0 Yen. In step S4, the royalty calculation functioning unit 65 sets a portion, which has been reduced as a discount for the consumer, as a post-taken R. In step S5, the royalty point calculation functioning unit 67 deducts a point portion that has been reduced as a discount for the consumer from the prepaid RP. In Case No. <1> in Fig. 13, the prepaid RP after the deduction is 500 points. In connection with the process in step S4 and the process in step S5, the royalty calculation functioning unit 65 also calculates a value of prepaid R. In Case No. <1> in Fig. 13, the post-taken R is 500 Yen, the prepaid R after a 500 Yen portion is deducted from 1,000 Yen is 500 Yen, and even when the amount paid by the consumer is zero, the net amount received by the content seller who sells a content that is a particular commodity/service is 500 Yen since the content seller receives the post-taken R.

In step S9, the discount reduction calculation functioning unit 63 sets the prepaid RP portion as a discount reduction value. In Case No. <2> in Fig. 13, the prepaid RP as an initial value is 500 points, and the receivable R is 1,300 Yen, so that the discount reduction value is 500 Yen. And, since the content price is 1,300 Yen, the amount to be paid by a consumer is 800 Yen. In step S10, the royalty calculation functioning unit 65 sets a portion, which has been reduced as a discount for the consumer, as a post-taken R. In step S11, the royalty point calculation functioning unit 67 sets points, which represent a portion deficient for a discount reduction for the consumer, as a pre-taken RP. In Case No. <2> in Fig. 13, the pre-taken RP after the calculation is 800 points. In step S 12, the royalty point calculation functioning unit 67 clears the prepaid RP. In connection with the process from step S10 to step S 12, the royalty calculation functioning unit 65 also calculates a value of prepaid R. In Case No. <2> in Fig. 13, the post-taken R is 500 Yen, and the prepaid R after the 500 Yen portion is deducted from 500 Yen is 0 Yen. The net amount that the content seller selling a content that is a particular commodity/service receives is 1,300 Yen based on 800 Yen as an amount of money paid by the consumer and 500 Yen as post-taken R.

In step S6, the discount reduction calculation functioning unit 63 sets a discount reduction value at zero. In Case No. <3> in Fig. 13, the discount reduction value is also 0 Yen, and the content price is also 1,000 Yen, so that the amount to be paid by a consumer is 1,000 Yen. In step S7, the royalty calculation functioning unit 65 sets the post-taken R at zero. In step S8, the royalty point calculation functioning unit 67 sets a portion, which has not been reduced as a discount for the consumer, as pre-taken RP. In Case No. <3> in Fig. 13, the pre-taken RP after the addition is 1,000 points. The net amount received by the content seller who sells a content that is a particular commodity/service is 1,000 Yen, which is the same as the amount paid by the consumer.

On the basis of the process from step S1 to step S12, the content seller who sells a content that is a particular commodity/service can receive, as a net amount, an amount of receivable R equivalent to a sales price in any case, and the discount reduction value, the post-taken R, the pre-taken RP and the prepaid RP in connection therewith are calculated.

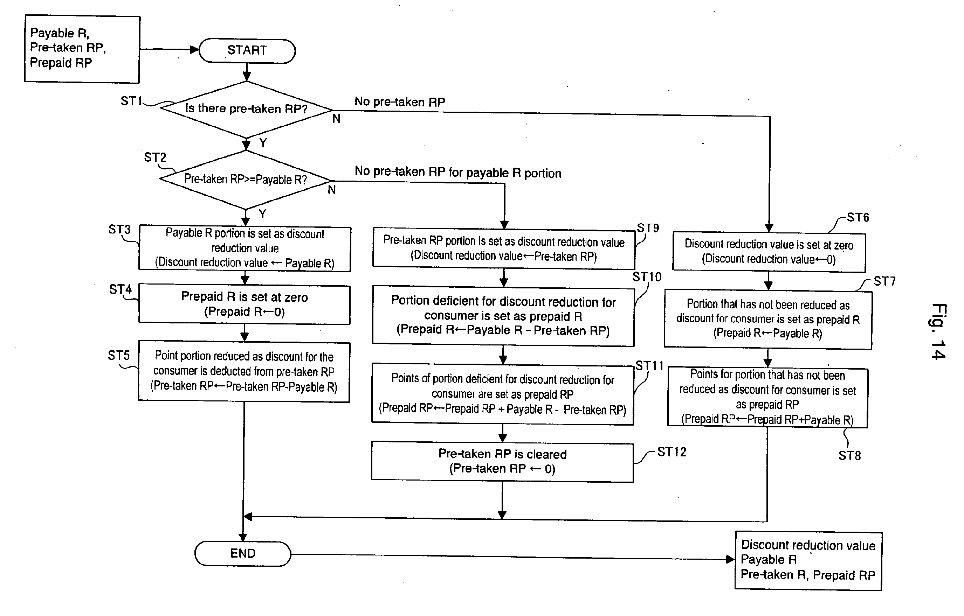

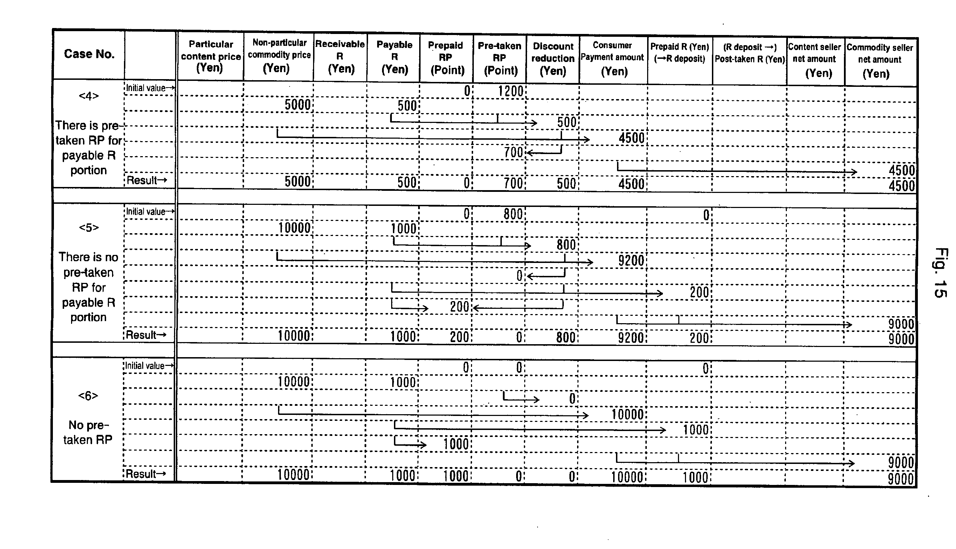

Fig. 14 is a flow diagram for explaining the operation of the non-particular commodity/service processing unit 59 in Fig. 11, and Fig. 15 is a tabulated diagram showing classified cases for specifically explaining the process shown in Fig. 14. In this diagram, 1 point is to be exchanged with 1 Yen, and the proportion of receivable R to a sales price in Fig. 15 is to be 100 %, and the proportion of payable R to a sales price is to be 10 %.

First, a value of receivable R is inputted to the non-particular commodity/service processing unit 59, and in addition thereto, a value of pre-taken RP and a value of prepaid RP stored in the royalty point storage unit 29 are inputted thereto.

In step ST1, the discount reduction value calculation functioning unit 69 judges whether or not there is a pre-taken RP. When there is the pre-taken RP, the processing proceeds to step ST2 (see Cases Nos. <4> and <5> in Fig. 15), and when there is no pre-taken RP, the processing proceeds to step ST6 (see Case No. <6> in Fig. 15).

In step ST2, the discount reduction value calculation functioning unit 69 compares the value of pre-taken RP with the value of payable R to determine which is greater or smaller. When the value of pre-taken RP is equivalent to, or greater than, the value of payable R, the processing proceeds to step ST3 (see Case No. <4> in Fig. 15), or when the value of pre-taken RP is smaller than the value of payable R, the processing proceeds to step ST9 (see Case No.

<5> in Fig. 15).

In step ST3, the discount reduction value calculation functioning unit 69 sets a payable R portion as a discount reduction value. In Case No. <4> in Fig. 15, the pre-taken RP as an initial value is 1,200 points, and the payable R is 500 Yen, so that the discount reduction value is 500 Yen. Further, since the commodity price is 5,000 Yen, the amount of money paid by a consumer is 4,500 Yen. In step ST4, the royalty calculation functioning unit 71 sets the prepaid R at zero. In step ST5, the royalty point calculation functioning unit 73 deducts a point portion, which has been reduced as a discount for the consumer, from the pre-taken RP. In Case No. <4> in Fig. 15, the pre-taken RP after the deduction is 700 points. The net amount that a commodity seller selling a commodity as a non-particular commodity/service receives is 4,500 Yen.

In step ST9, the discount reduction value calculation functioning unit 69 sets a pre-taken RP portion as a discount reduction value. In Case No. <5> in Fig. 15, the pre-taken RP as an initial value is 800 points, and the payable R is 1,000 Yen, so that the discount reduction value is 800 Yen. Further, since the commodity price is 10,000 Yen, the amount of money paid by a consumer is 9,200 Yen. In step ST10, the royalty calculation functioning unit 71 sets a portion deficient for the discount reduction for the consumer as a prepaid R. In Case No. <5> in Fig. 15, the prepaid R is 200 Yen. In step ST11, in connection with the processing in step ST10, the royalty point calculation functioning unit 73 sets points of the portion deficient for the discount reduction for the consumer as a prepaid RP. In Case No. <5> in Fig. 15, the portion deficient for the discount reduction is 200 points. In step ST12, the royalty point calculation functioning unit 73 clears the pre-taken RP so that the pre-taken RP is zero. The amount of money paid by the consumer is 9,200 Yen, and the prepaid R is 200 Yen, so that the net amount that the commodity seller selling the commodity as a non-particular commodity/service receives is 9,000 Yen, which is obtained by deducting the pre-paid R from the amount of money paid by the consumer.

In step ST6, the discount reduction calculation functioning unit 69 sets the discount reduction value at zero. In Case No. <6> in Fig. 15, the discount reduction value is also 0 Yen, and the commodity price is 10,000 Yen, so that the amount of money paid by a consumer is 10,000 Yen. In step ST7, the royalty calculation functioning unit 71 sets a portion that has not been reduced as a discount for the consumer as a prepaid R. In Case No. <6> in Fig. 15, the prepaid R is set at 1,000 Yen. In step ST8, in connection with the processing in step ST7, the royalty point calculation functioning unit 73 sets, as a prepaid RP, points for the portion that has not been reduced as a discount for the consumer. In Case No. <6> in Fig. 15, 1,000 points are set in the prepaid RP. The amount of money paid by the consumer is 10,000 Yen, and the prepaid R is 1,000 Yen, so that the net amount that the commodity seller selling a commodity as a non-particular commodity/service receives comes to be 9,000 Yen, which is obtained by deducting the prepaid R from the amount of money paid by the consumer.

Due to the above process from step ST1 to step ST12, the commodity seller who sells a commodity as a non-particular commodity/service can receive, as a net amount, the amount of money obtained by deducting the payable R from the sales price in any case. In connection therewith, the discount reduction value, the prepaid R, the pre-taken RP and the prepaid RP are calculated.

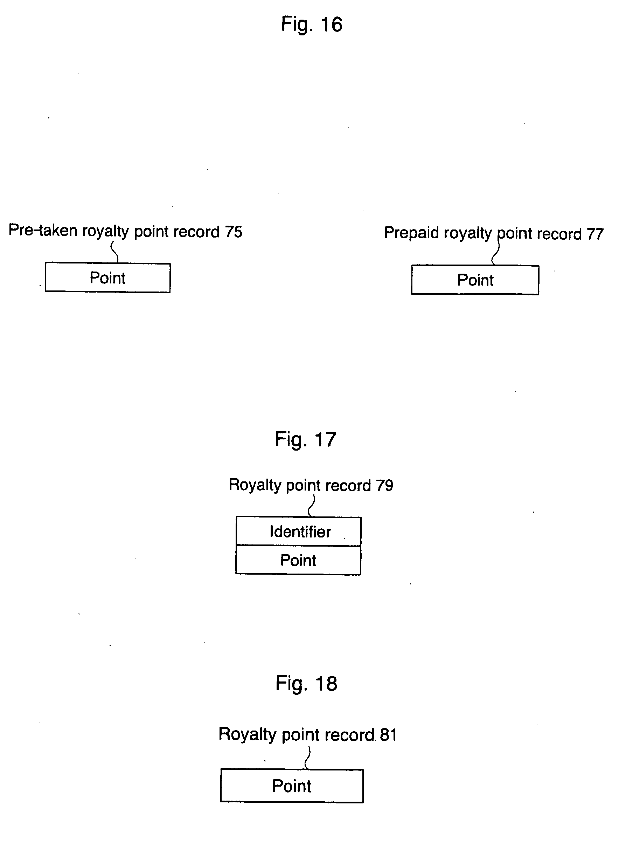

Fig. 16 shows an example of record constitution of information stored in the royalty point storage unit 29 in Fig. 5.

In Fig. 16, royalty points are classified and discriminated as records. That is, a pre-taken royalty point record 75 records a point value of the pre-taken point, and a prepaid royalty point record 77 records a point value of the prepaid point.

Fig. 17 shows another example of record constitution of information stored in the royalty point storage unit 29 in Fig. 5.

In Fig. 17, royalty points are discriminated by means of identifiers. That is, a royalty point record 79 stores identifiers and point values, and the identifiers identify "pre-taken" or "prepaid".

Fig. 18 shows still another example of record constitution of information stored in the royalty point storage unit 29 in Fig. 5.

In Fig. 18, royalty points are discriminated by means of codes. That is, a royalty point record 81 stores a positive or negative point value. For example, a negative value is used as a pre-taken point, and a positive value is used as a prepaid point, so that "prepaid" and "pre-taken" can be distinguished.

In spite of the above examples, the prepaid royalty point and the pre-taken royalty point may have any constitution so long as they can be discriminated, and there is no limitation to be imposed on the record constitution thereof.

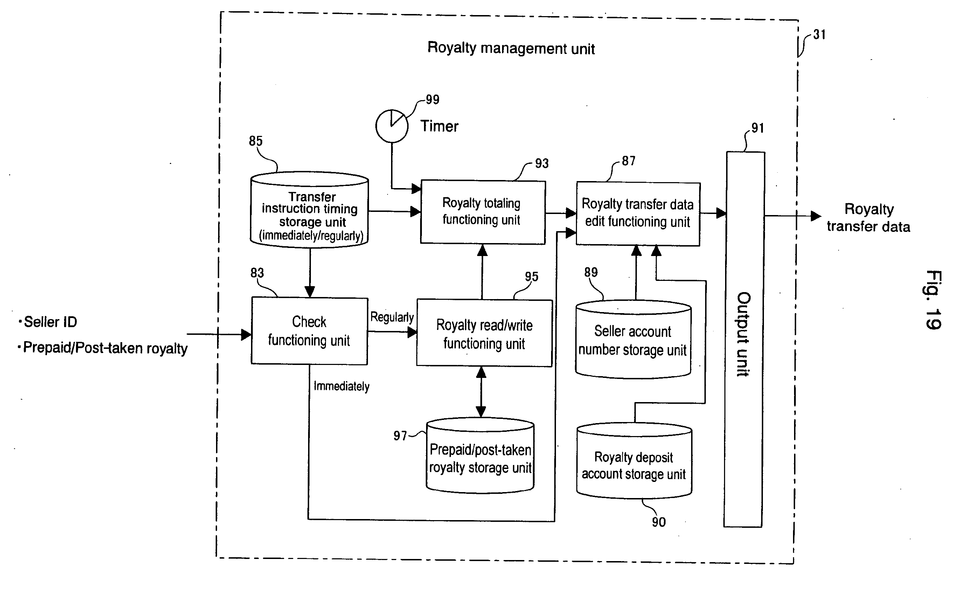

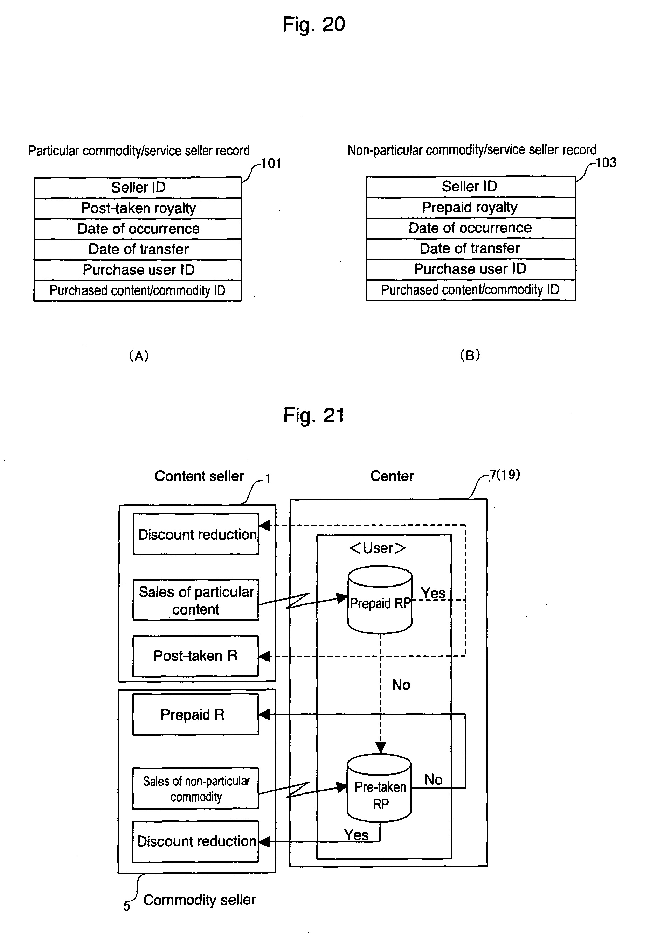

Fig. 19 is a block diagram showing an internal constitution of the royalty management unit 31 in Fig. 5. Fig. 20 shows record constitution of information stored in a prepaid/post-taken royalty storage unit 97 in Fig. 19. Particularly, Fig. 20(A) shows a record constitution of a seller who sells a particular commodity/service, and Fig. 20(B) shows a record constitution of a seller who sells a non-particular commodity/service.

With reference to Fig. 19, the royalty management unit 31 has a check functioning unit 83, a transfer instruction timing storage unit 85, a royalty transfer data edit functioning unit 87, a seller account number storage unit 89, a royalty deposit account storage unit 90, an output unit 91, a royalty totaling functioning unit 93, a royalty read/write functioning unit 95, a prepaid/post-taken royalty storage unit 97 and a timer 99. The royalty deposit account storage unit 90 stores a royalty deposit account banking institution code, a royalty deposit account store number and a royalty deposit account number.

Information on a seller ID and a value of prepaid royalty are inputted to the check functioning unit 83, or information on the seller ID and a value of post-taken royalty are inputted thereto. According to the inputted information on the seller ID and the inputted value of prepaid/post-taken royalty, the check functioning unit 83 reads out a transfer instruction timing stored in the transfer instruction timing storage unit 85. The above transfer instruction timing includes an immediate transfer case in which the processing of real time transfer is implemented and a regular transfer case in which the processing of transfer is implemented at regular intervals. The above processing at regular intervals may include a case in which transfer instructions are given to all of sellers at intervals of the same period of time and a case in which the transfer instruction is given to each seller at intervals of a different period of time depending upon sellers. Further, when the transfer instructions are given at intervals of the same period of time, the transfer instructions may be given at the same time or at different points of time.

When the check functioning unit 83 determines to perform the processing of immediate transfer, the royalty transfer data edit functioning unit 87 reads out a royalty deposit account number, etc., stored in the royalty deposit account storage unit 90, reads out the account number of a seller stored in the seller account number storage unit 89 and edits them and prepaid/post-taken royalty.

On the other hand, when the check functioning unit 83 determines to perform the processing of transfer at regular intervals, which is a regular transfer case, the royalty read/write functioning unit 95 identifies a seller by means of a seller ID and writes prepaid/post-taken royalty in the prepaid/post-taken royalty storage unit 97.

A particular commodity/service seller record 101 and a non-particular commodity/service seller record 103 stored in the prepaid/post-taken royalty storage unit 97 will be explained below with reference to Fig. 20. The particular commodity/service seller record 101 stores a seller ID, a value of post-taken royalty, date of occurrence of post-taken royalty, date of transfer specified by regular transfer, a purchase user ID and a purchase content/commodity ID. The non-particular commodity/service seller record 103 stores a seller ID, a value of prepaid royalty, date of occurrence of prepaid royalty, date of transfer specified by regular transfer, a purchase user ID and a purchase content/commodity ID. In addition, the purchase user ID and the purchase content/commodity ID in the particular commodity/service seller record 101 and the non-particular commodity/service seller ID 103 are those that are used to respond to a cancellation based on "cooling off" and the like.

The royalty totaling functioning unit 93 grasps an instruction timing to be determined by regular intervals stored in the transfer instruction timing storage unit 85, causes the royalty read/write functioning unit 95 to read out prepaid/post-taken royalty stored in the prepaid/post-taken royalty storage unit 97, and makes up a total prepaid/post-taken royalty. Then, the royalty transfer data edit functioning unit 87 reads out the royalty deposit account number, etc., stored in the royalty deposit account number storage unit 90, reads out a seller account number stored in the seller account number storage unit 89, and edits them and prepaid/post-taken royalty.

The output portion 91 outputs an edited royalty transfer data to the banking institution 21 in Fig. 4. The banking institution 21 carries out transfer processing according to the instructed royalty transfer data.

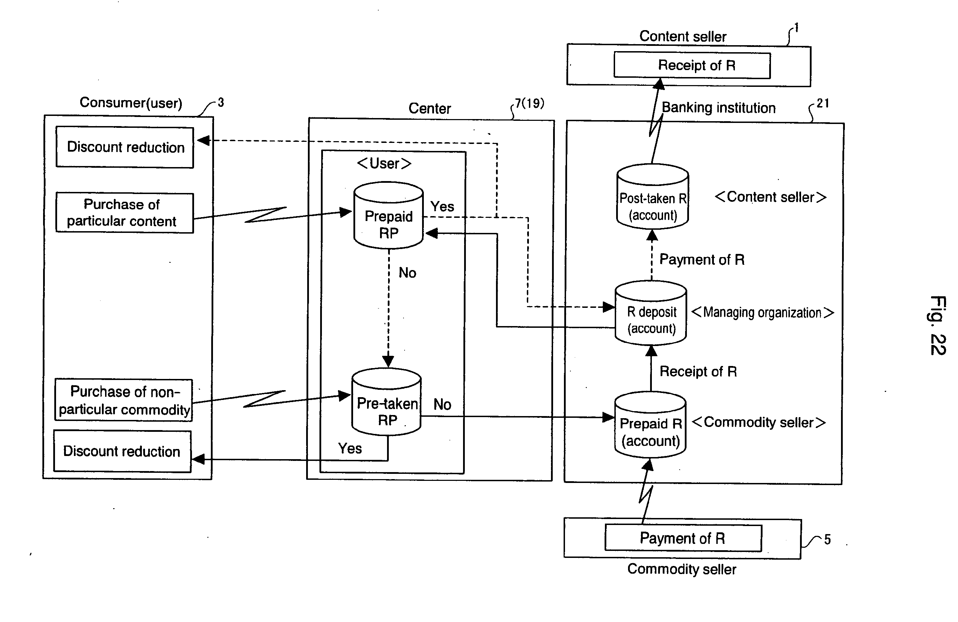

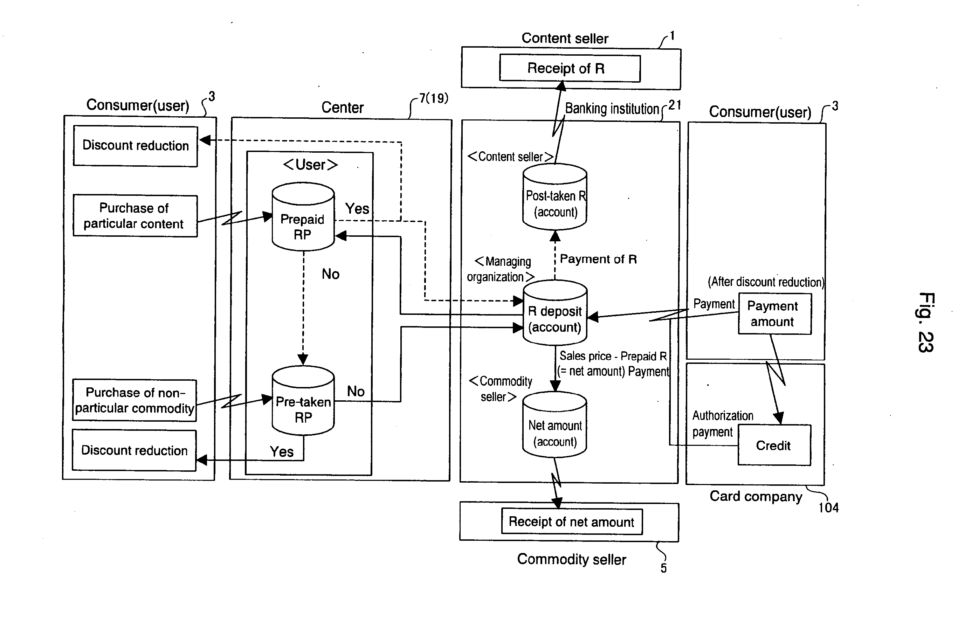

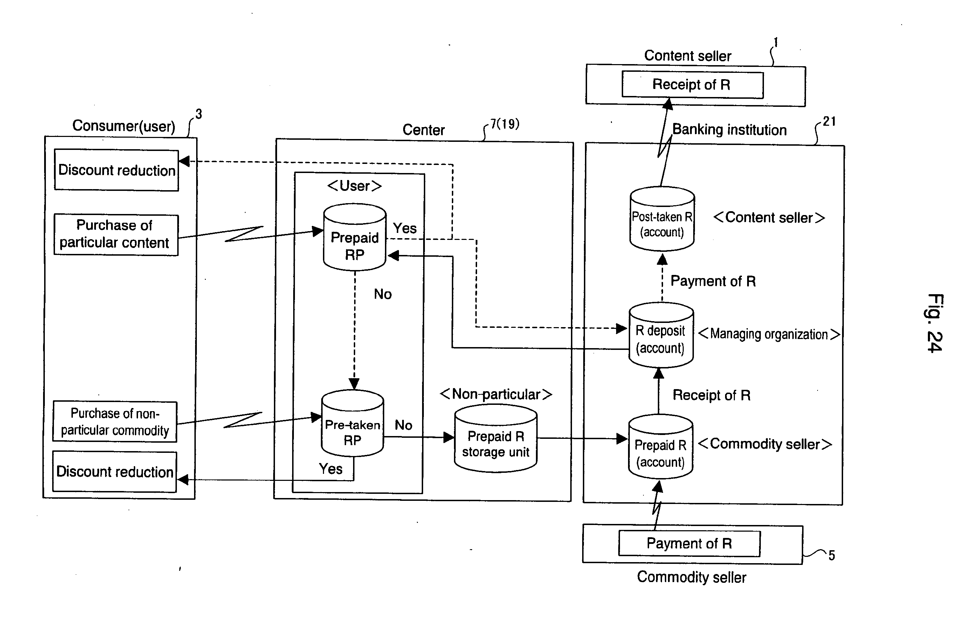

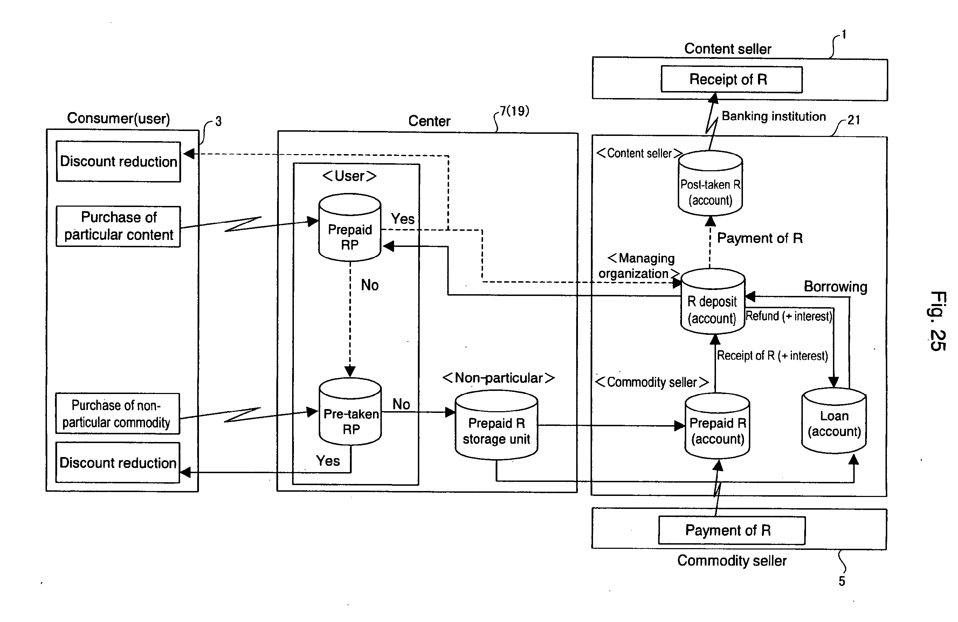

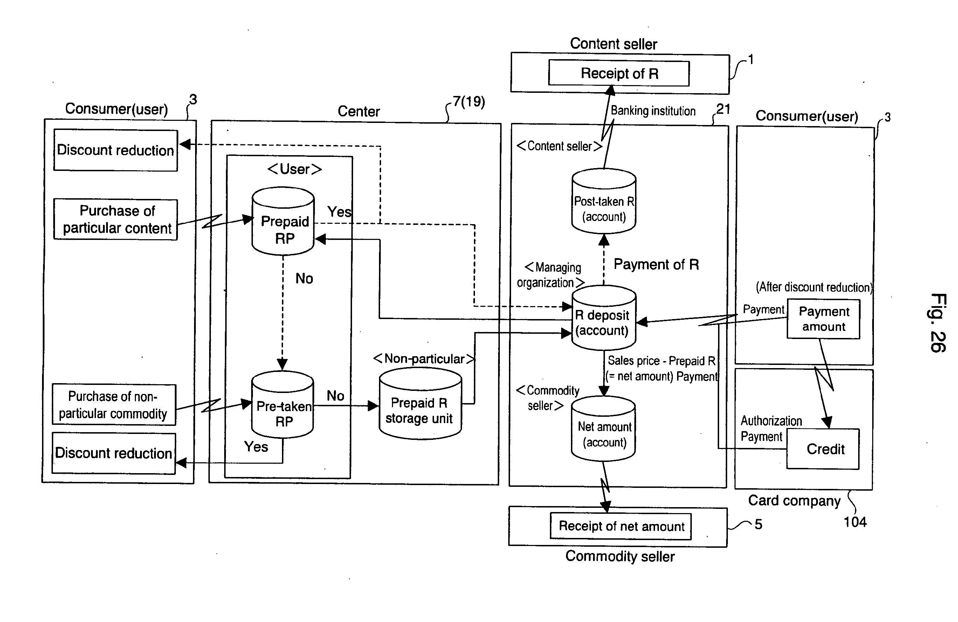

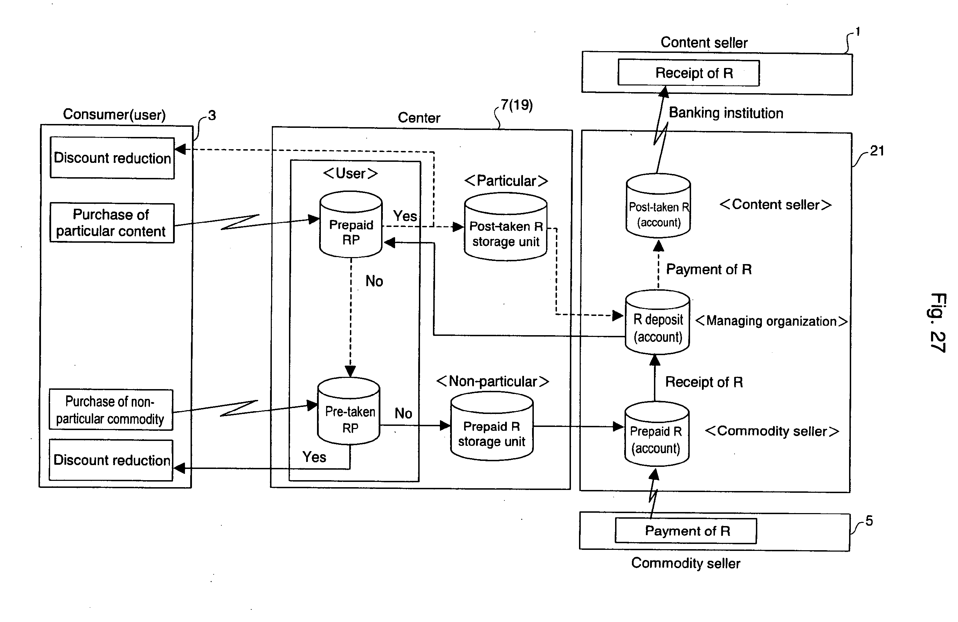

Fig. 21 is a diagram showing relationships of data that flows between a seller and the center with regard to a royalty calculation model. Fig. 22 is diagram showing relationships of data that flows among a consumer, the center, a banking institution, a content seller and a commodity seller with regard to a first royalty calculation and management model. Fig. 23 is a diagram showing relationships of data that flows among a consumer, the center, a banking institution, a content seller and a commodity seller with regard to a first royalty calculation, management and money-collection model. Fig. 24 is a diagram showing relationships of data that flows among a consumer, the center, a banking institution, a content seller and a commodity seller with regard to a second royalty calculation and management model. Fig. 25 is a diagram showing relationships of data that flows among a consumer, the center, a banking institution, a content seller and a commodity seller with regard to a third royalty calculation and management model. Fig. 26 is a diagram showing relationships of data that flows among a consumer, the center, a banking institution, a content seller and a commodity seller with regard to a second royalty calculation, management and money-collection model. Fig. 27 is a diagram showing relationships of data that flows among a consumer, the center, a banking institution, a content seller and a commodity seller with regard to a fourth royalty calculation and management model. The gist of the embodiment shown in Figs. 4 to 20 based on the concept shown in Figs. 1 and 2 will be also explained below with reference to Figs. 21 to 27.

With reference to Fig. 21, when a content seller 1 who sells a content that is a particular commodity/service sells a particular content, the center 7(19) checks whether or not there is prepaid RP with regard to a user who is a purchaser thereof. When there is prepaid RP, the center 7(19) informs the content seller 1 that a discount reduction can be made and that post-taken R can be generated, and when there is no prepaid RP, it accumulates pre-taken RP. Further, when a commodity seller 5 who sells a commodity that is a non-particular commodity/service sells a non-particular commodity, the center 7(19) checks whether or not there is pre-taken RP with regard to a user who is a purchaser thereof. When there is pre-taken RP, the center 7(19) informs the commodity seller 5 that a discount reduction can be made, and when there is no pre-taken RP, it informs that prepaid R can be generated. When prepaid R is generated, the point value of the prepaid RP is accordingly changed.

Fig. 22 shows a model in which prepaid RP can be given in real time. When a consumer (user) 3 purchases a particular content that is a particular commodity/service, the center 7(19) checks whether or not there is prepaid RP with regard to the user. When there is prepaid RP, the center 7(19) informs the consumer 3 that a discount reduction can be obtained, and when the discount reduction is made, it instructs a banking institution 21 to transfer post-taken R from an R deposit account of a managing organization managing the center 7(19) to a post-taken R account of a content seller for payment of royalty, whereby a content seller 1 receives royalty from the banking institution 21. When there is no prepaid RP, the center 7(19) performs processing to accumulate pre-taken RP.

When the consumer 3 purchases a commodity that is a non-particular commodity/service, the center 7(19) checks whether or not there is pre-taken RP with regard to the user. When there is pre-taken RP, it informs the consumer 3 that a discount reduction can be obtained. When there is no pre-taken RP, the center 7(19) instructs the banking institution 21 to transfer prepaid R from the prepaid R account of a commodity seller to the R deposit account of the managing organization managing the center 7(19) for receipt of royalty, and the banking institution 21 instructs the center 7(19) to increase the prepaid RP in connection with a portion transerred from the prepaid R account to the R deposit account. In addition, the commodity seller 5 is required to pay royalty to the prepaid R account. The value of receivable R that is a portion transferred from the prepaid R account to the R deposit account represents prepaid R, and in connection with this prepaid R, addition to the prepaid RP is implemented.

Fig. 23 shows a model in which there is no time lag between purchase information and payment information and prepaid RP can be given in real time. That is, Fig. 23 shows a data relationship of information on payment among the banking institution 21, the consumer 3 and a card company 104 in addition to the model shown in Fig. 22. With regard to the model in Fig. 23, additional points to Fig. 22 will be explained below.

When the consumer 3 purchases a commodity that is a non-particular commodity/service, if he or she effects payment to the banking institution 21 for payment to the R deposit account, or effects payment with a credit card of a card company 104 authorized by the banking institution 21, the prepaid RP can be given in real time. Then, the banking institution 21 transfers a net amount to be received by the commodity seller, obtained by deducting prepaid R from a commodity sales price, to a receipt account of the commodity seller from the R deposit account of the managing organization managing the center 7(19), whereby the commodity seller 5 can receive the net amount. The banking institution 21 is required to pay to the card company 104 a portion borne when the consumer 3 has purchased the commodity by using a credit card.

Fig. 24 shows a model different from the model shown in Fig. 22, and in this model, a prepaid R storage unit for storing prepaid R is provided in the center 7(19), there is a time lag between purchase information and receipt of prepaid R and prepaid RP cannot be given in real time.

Fig. 25 shows a model in which the time lag from the purchase information is overcome by borrowing of prepaid R and prepaid RP can be given in real time. Points different from those in Fig. 24 will be explained below.

A loan account is opened in the banking institution 21. There is employed a constitution in which the banking institution 21 transfers a prepaid R portion from the loan account to the R deposit account of the managing organization without making any transfer from the prepaid R account of the commodity seller to the R deposit account of the managing organization, so that the managing organization borrows the prepaid R portion from the banking institution 21, whereby the prepaid RP can be given in real time. The banking institution 21 receives royalty by making a transfer from the prepaid R account of the commodity seller to the R deposit account of the managing organization and then makes a transfer for making payment back to the loan account. In addition, an interest generated by the loan may be borne by the managing organization or the commodity seller.

Fig. 26 shows a model different from the model shown in Fig. 23, and in this model, a prepaid R storage unit for storing prepaid R is provided in the center 7(19), there is a time lag between purchase information and prepaid R receipt and prepaid RP cannot be given in real time.

Fig. 27 shows a model different from the model shown in Fig. 24, and in this model, a post-taken R storage unit for storing post-taken R is provided in the center 7(19), prepaid R is received, for example, on a day that comes after the timing of acquiring purchase information and the payment for post-taken R is implemented.

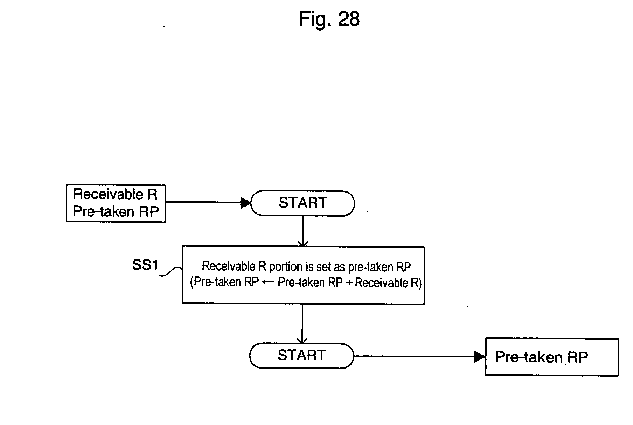

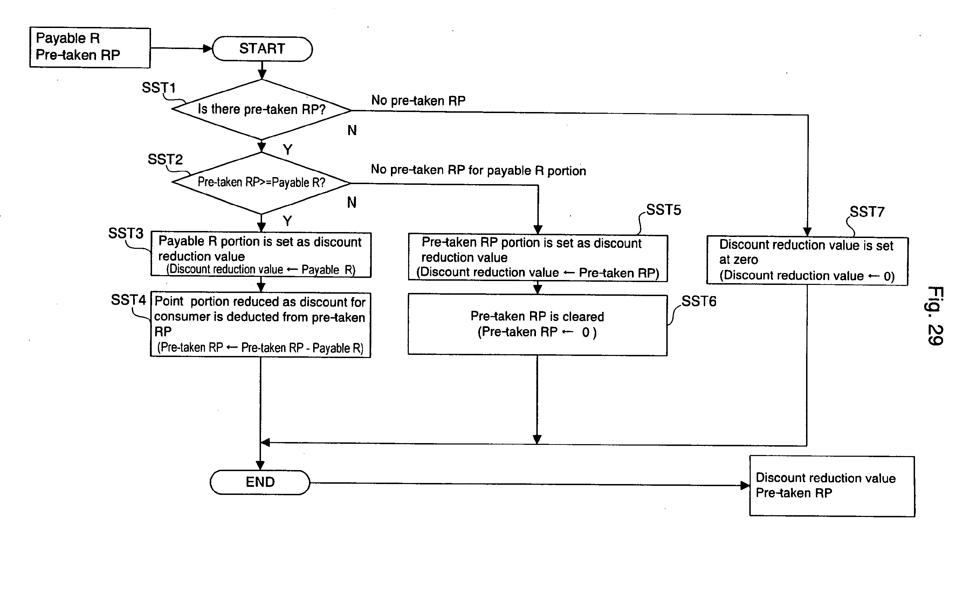

Fig. 28 is a flow diagram for explaining the operation of the particular commodity/service processing unit 57 in the calculation unit 27 in Fig. 11 in the concept of the invention shown in Fig. 3. Fig. 29 is a flow diagram for explaining the operation of the non-particular commodity/service processing unit 59 in the calculation unit 27 in Fig. 11 in the concept of the invention shown in Fig. 3.

With reference to Fig. 28, first, a value of receivable R is inputted to the particular commodity/service processing unit 57, and a value of pre-taken RP stored in the royalty point storage unit 29 in Fig. 5 is also inputted thereto. Then, in step SS1, the royalty point calculation functioning unit 67 in the particular commodity/service processing unit 57 sets a receivable R portion in addition to prepaid RP, whereby pre-taken RP is calculated. Then, a seller who sells a particular commodity/service receives an amount of money paid by a consumer (receivable R) as a net amount as it is.

With reference to Fig. 29, first, not only a value of payable R but also a value of pre-taken RP stored in the royalty point storage unit 29 in Fig. 5 are inputted to the non-particular commodity/service processing unit 59.

In step SST1, the discount reduction value calculation functioning unit 69 checks whether or not there is pre-taken RP. When there is the pre-taken RP, the processing proceeds to step SST2, and when there is no pre-taken RP, the processing proceeds to step SST7.

In step SST2, the discount reduction calculation functioning unit 69 compares the value of pre-taken RP with the value of payable R to determine which is greater or smaller. When the value of pre-taken RP is equivalent to, or greater than, the value of payable R, the processing proceeds to step SST3. When the value of pre-taken R is smaller than the value of payable R, the processing proceeds to step SST5.

In step SST3, the discount reduction value calculation functioning unit 69 sets a payable R portion as a discount reduction value. In step SST4, the royalty point calculation functioning unit 73 deducts a point portion that has been reduced as a discount for a consumer from the pre-taken RP.

In step SST5, the discount reduction value calculation functioning unit 69 sets a pre-taken RP portion as a discount reduction value. In step SST6, the royalty point calculation functioning unit 73 clears the pre-taken RP.

In step SST7, the discount reduction value calculation functioning unit 69 sets the discount reduction value at zero.

In the above process from step SST1 to step SST7, the discount reduction value and the value of pre-taken RP are calculated, and the seller who sells a commodity which is a non-particular commodity or non-particular service receives, as a net amount, an amount of money obtained by deducting the net amount discount reduction value whose upper limit is payable R from a commodity sales price.

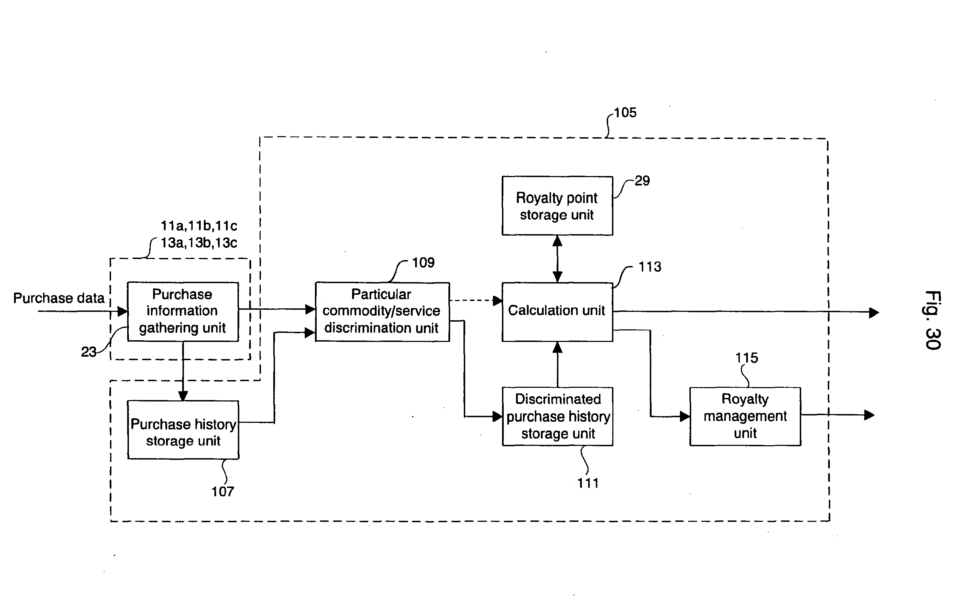

Fig. 30 is a block diagram showing the internal constitution of a center of a point service system according to a second embodiment of the present invention.

A center 105 has a purchase history storage unit 107, a particular commodity/service discrimination unit 109, a discriminated purchase history storage unit 111, a calculation unit 113, a royalty management unit 115 and a royalty point storage unit 29. And, purchase information outputted from a purchase information gathering unit 23 of EC site 11a, 11b, 11c or a store terminal 13a, 13b, 13c is inputted to the purchase history storage unit 107 and the particular commodity/service discrimination unit 109. The center 105 has the purchase history storage unit 107 and the discriminated purchase history storage unit 111. Differing the center 19 in Fig. 5, therefore, it can perform processing at regular intervals each time when a predetermined period of time passes, based on the accumulated history data.

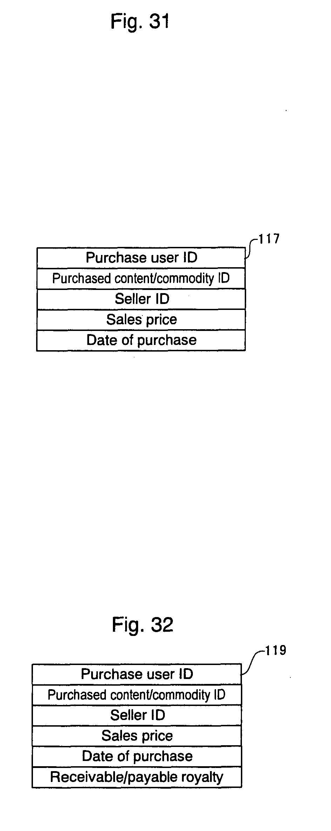

Fig. 31 shows an example of record constitution of purchase history stored in the purchase history storage unit 107 in Fig. 30, and Fig. 32 shows another example of record constitution of purchase history stored in the purchase history storage unit 107 in Fig. 30.

In Fig. 31, the purchase history record 117 is constituted of a purchase user ID, a purchased content/commodity ID, a seller ID, a sales price, and a date and time of purchase. In Fig. 32, the purchase history record 119 is constituted of a purchase user ID, a purchased content/commodity ID, a seller ID, a sales price, a date and time of purchase and a value of receivable/payable royalty.

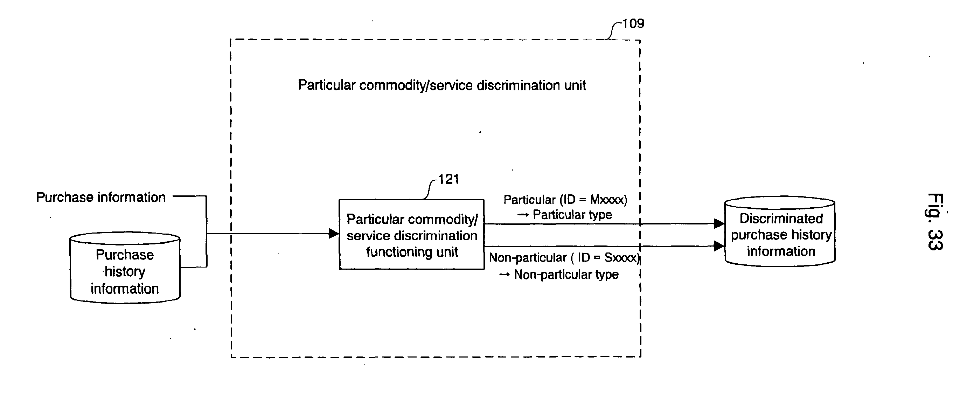

Fig. 33 is a block diagram showing an internal constitution of the particular commodity/service discrimination unit 109 in Fig. 30.

The particular commodity/service discrimination unit 109 has a particular commodity/service discrimination functioning unit 121. Purchase information outputted by the purchase information gathering unit 23 is inputted to the particular commodity/service functioning unit 121, and purchase history information stored in the purchase history storage unit 107 is read out and inputted thereto. The particular commodity/service discrimination functioning unit 121 performs processing similar to the processing which the particular commodity/service discrimination functioning unit 43 of the particular commodity/service discrimination unit 25 in Fig. 7 performs, and it checks whether inputted information is information on a particular commodity/service or whether it is information on a non-particular commodity/service, to discriminate between a particular type or a non-particular type.

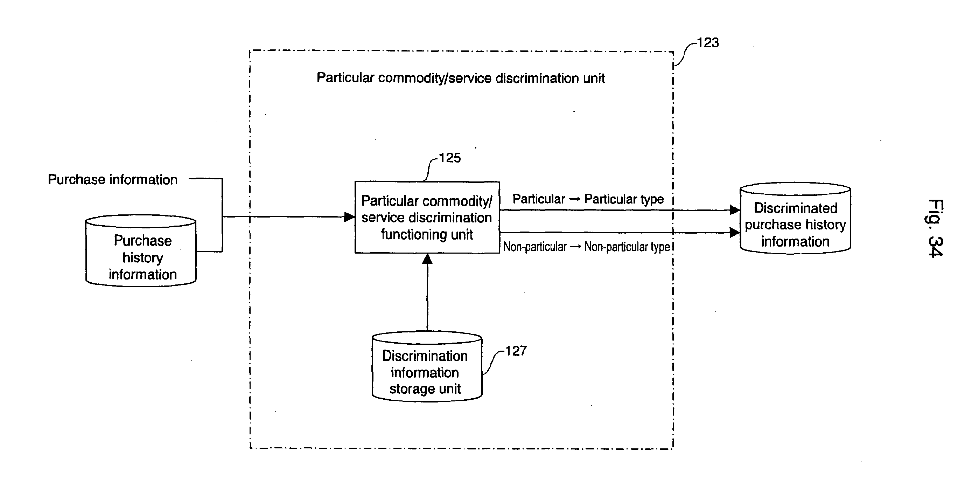

Fig. 34 is a block diagram showing an internal constitution of another particular commodity/service discrimination unit different from the particular commodity/service discrimination unit 109 in Fig. 33.

A particular commodity/service discrimination unit 123 has a particular commodity/service discrimination functioning unit 125 and a discrimination information storage unit 127. Purchase information outputted by the purchase information gathering unit 23 is inputted to the particular commodity/service discrimination functioning unit 125. Further, purchase history information stored in the purchase history storage unit 107 is read out and inputted thereto, and further, discrimination information stored in the discrimination information storage unit 127 is read out and inputted thereto. The discrimination information storage unit 127 is similar to the discrimination information storage unit 49 in Fig. 8. The particular commodity/service discrimination functioning unit 125 performs processing similar to the processing that the particular commodity/service discrimination functioning unit 47 of the particular commodity/service discrimination unit 45 performs, and it checks whether it is information on a particular commodity/service or whether it is information on a non-particular commodity/service to discriminate between a particular type and a non-particular type.

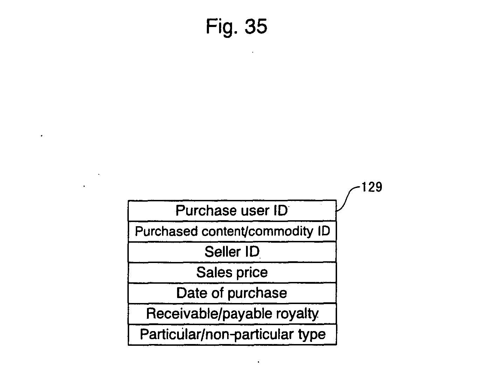

Fig. 35 shows a record constitution of a discriminated purchase history stored in the discriminated purchase history storage unit 111 in Fig. 30.

A discriminated purchase history record 129 is constituted of a purchase user ID, a purchase content/commodity ID, a seller ID, a sales price, a date and time of purchase, a value of receivable/payable royalty and a particular/non-particular type. This particular/non-particular type is obtained by discrimination processing performed by the particular commodity/service discrimination functioning unit 121 of the particular commodity/service discrimination unit 109 in Fig. 33 or discrimination processing performed by the particular commodity/service discrimination functioning unit 125 of the particular commodity/service discrimination unit 123 in Fig. 34.

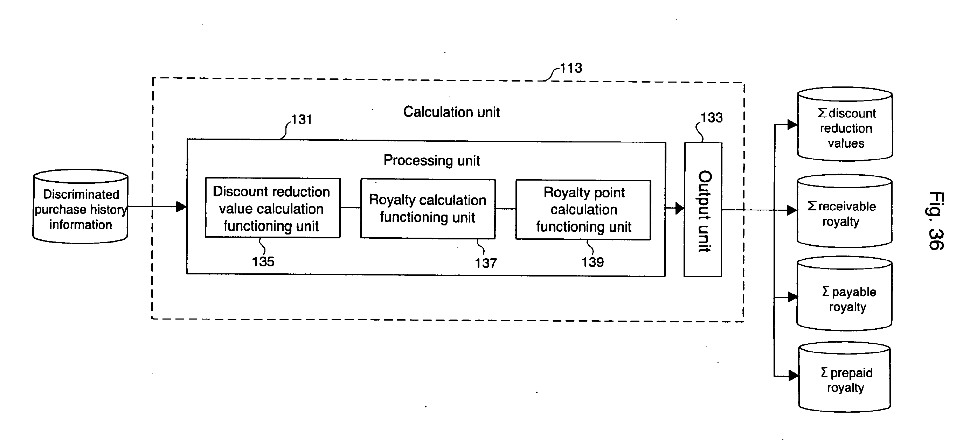

Fig. 36 is a block diagram showing an internal constitution of the calculation unit 113 in Fig. 30.

The calculation unit 113 has a processing unit 131 and an output unit 133. The processing unit 131 has a discount reduction value calculation functioning unit 135, a royalty calculation functioning unit 137 and a royalty point calculation functioning unit 139.

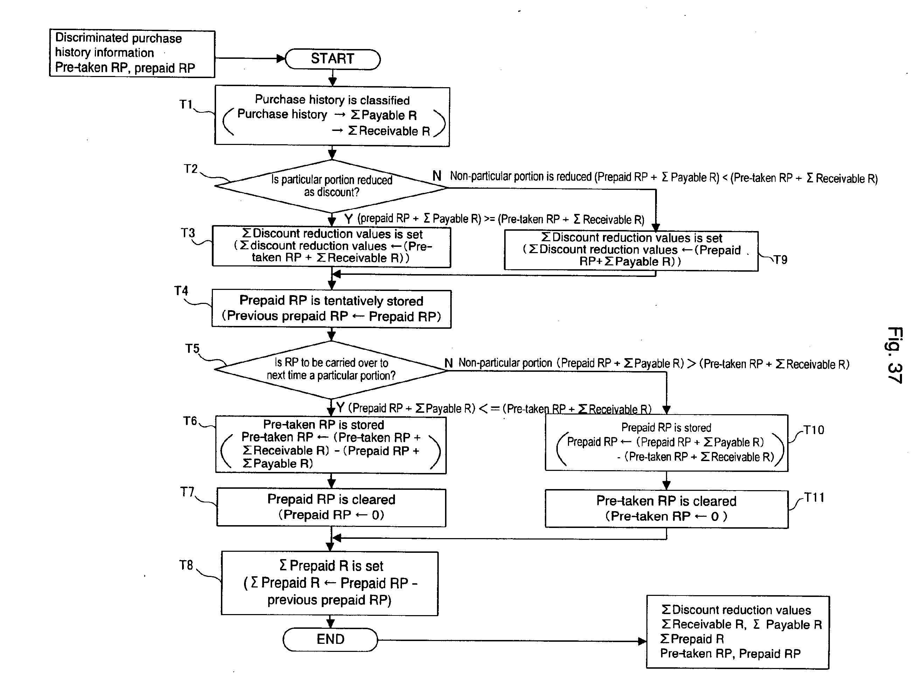

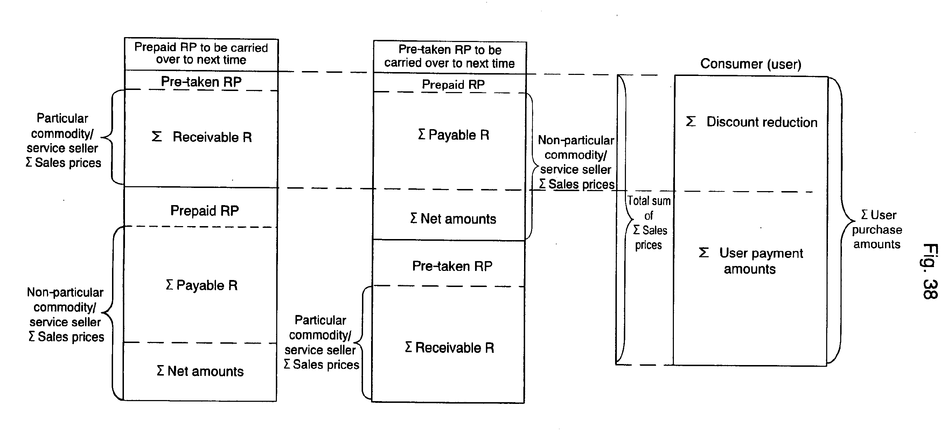

Fig. 37 is a flow diagram for explaining the operation of the processing unit 131 in Fig. 36. Fig. 38 is a relationship diagram for explaining the operation of the processing unit 131 in Fig. 36.

First, discriminated purchase history information is inputted to the processing unit 131 in Fig. 36, and a value of pre-taken RP and a value of prepaid RP stored in the royalty point storage unit 29 in Fig. 30 are inputted thereto.

In step T1, the royalty calculation functioning unit 137 classifies the purchase history. Specifically, the purchase history is classified to "Σpayable R" that is a total sum of payable R and "Σreceivable R" that is a total sum of receivable R.

In step T2, the discount reduction value calculation functioning unit 135 judges whether or not a particular commodity/service portion is reduced as a discount. This determination is made on the basis of whether or not [(prepaid RP) + (Σpayable R)] ≥ [(pre-taken RP) + (Σreceivable R)] is satisfied. When it is determined that the discount reduction is a particular commodity/service portion, the processing proceeds to step T3, and when it is determined that the discount reduction is a non-particular commodity/service portion, the processing proceeds to step T9.

In step T3, [(pre-taken RP) + (Σreceivable R)] is set as a "Σdiscount reduction values". In step T9, [(prepaid RP) + (Σpayable R)] is set as a Σdiscount reduction values.

The above Σdiscount reduction values will be explained briefly with reference to Fig. 38. The total of a total sum (Σsales prices) of sales prices of particular commodity/service that a particular commodity/service seller sells and a total sum (Σsales prices) of sales prices of non-particular commodity/service that a non-particular commodity/service seller sells agrees with a total sum (Σuser purchase amounts) of purchase prices of a consumer (user).

Since the receivable R is set at a maximum discount rate of 100 %, the total sum (Σsale prices) of sales prices of particular commodity/service that the particular commodity/service seller sells agrees with the total sum (Σreceivable R) of the receivable R.

The payable R is set at a maximum discount rate, for example, of 10 %, and the total sum (Σsales prices) of sales prices of non-particular commodity/service that the non-particular commodity/service seller sells is set at a total of total sum (Σpayable R) of payable R and total sum (Σnet amounts) of net amounts that the non-particular commodity/service seller receives.

In the above case, the total sum (Σdiscount reduction) of discount reduction that a consumer receives is set at [(pre-taken RP) + (Σreceivable R)] or [(prepaid RP) + (Σpayable R)] in steps T3 or step T9. "Σuser payment aounts" is an amount of money obtained by deducting (Σ values of discount reduction) from (Σuser purchase amounts) which is equivalent to the total sum of (Σsales prices).

In step T4, a value of prepaid RP carried forward from a previous time is tentatively stored.

In step T5, the royalty point calculation functioning unit 139 judges whether or not RP to be carried over to a next time is a particular portion. This determination is made on the basis of whether or not [(prepaid RP) + (Σpayable R)] ≤ [(pre-taken RP) + (Σreceivable R)] is satisfied. When the RP to be carried over to a next time is determined to be a particular portion, the processing proceeds to step T6, and when the RP to be carried over to a next time is determined to be a non-particular portion, the processing proceeds to step T10.

In step T6, the royalty point calculation functioning unit 139 calculates a value of [(pre-taken RP) + (Σreceivable R)] - [(prepaid RP) + (Σpayable R)] as pre-taken RP and causes the royalty point storage unit 29 in Fig. 30 to store the calculated value of pre-taken RP. In step T7 following step T6, the royalty point calculation functioning unit 139 clears prepaid RP and brings the value of prepaid RP stored in the royalty point storage unit 29 in Fig. 30 into zero.

In step T10, the royalty point calculation functioning unit 139 calculates a value of [(prepaid RP) + (Σpayable R)] - [(pre-taken RP) + (Σreceivable R)] as prepaid RP, and causes the royalty point storage unit 29 in Fig. 30 to store the calculated value of prepaid RP. In step T11 following step T10, the royalty point calculation functioning unit 139 clears the pre-taken RP and brings the value of pre-taken RP stored in the royalty point storage unit 29 in Fig. 30 into zero.

In step T8, "Σprepaid R" is set. Specifically, a value obtained by deducting previous prepaid RP tentatively stored in step T4 from prepaid RP carried over to a next time is set as Σprepaid R. When the value of previous prepaid RP is a value greater than zero and when the value of [(prepaid RP) + (Σpayable R)] is set as Σdiscount reduction values, the prepaid RP is cleared in step T7 and there is nothing that is carried over to a next time, so that Σprepaid R has a minus value. When the value of previous pre-taken RP is zero, and when the value of Σreceivable R is set as Σdiscount reduction values, the Σprepaid R has a minus value or a plus value depending upon which of a value of the previous prepaid RP and a value of the prepaid RP carried over to a next time is greater or smaller. Further, when the value of the previous prepaid RP is zero, and when the value of Σpayable R is set as Σdiscount reduction values, Σprepaid R is not generated. When the value of [(pre-taken RP) + (Σreceivable R)] is set as Σdiscount reduction values, Σprepaid R having a plus value corresponding to prepaid RP carried over to a next time is generated.

The processing in step T8 may be a processing for determining an absolute value of Σprepaid R. Specifically, there can be employed a constitution in which when the prepaid RP carried over to a next time has a greater value than the tentatively stored previous prepaid RP, a value of [(prepaid RP carried over to a next time) - (previous prepaid RP)] is determined to set Σprepaid R that is a portion to be added; when the tentatively stored previous prepaid RP and the prepaid RP carried over to a next time have the same values, the Σprepaid R is set at zero; and when the prepaid RP carried over to a next time has a smaller value than the tentatively stored previous prepaid RP, a value of [(previous prepaid RP) - (prepaid RP carried over to a next time)] is determined to set Σprepaid R that is a portion to be deducted.

In the process from step T1 to step T11, Σdiscount reduction values, Σreceivable R, Σpayable R, Σprepaid R, pre-taken RP and prepaid RP are calculated, and the output unit 133 in Fig. 36 outputs them.

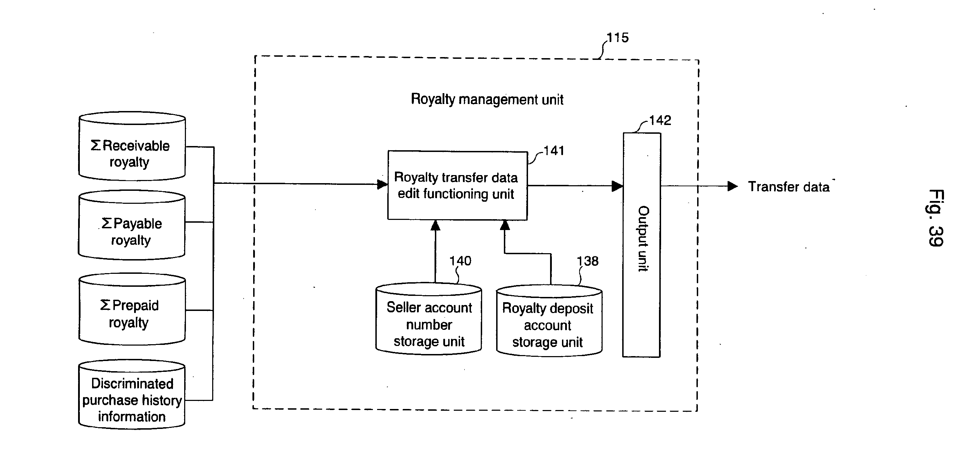

Fig. 39 is a diagram showing an internal constitution of the royalty management unit 115 in Fig. 30.

The royalty management unit 115 has a royalty transfer data edit functioning unit 141, a royalty deposit account storage unit 138, a seller account number storage unit 140 and an output unit 142. The royalty deposit account storage unit 138 stores a royalty deposit account banking institution code, a royalty deposit account store number and a royalty deposit account number. "Σreceivable R" equivalent to a total sum of net amounts based on sales of particular commodity/service, "Σpayable R" based on the sales of non-particular commodity/service, "Σprepaid R" and discriminated purchase history information are inputted to the royalty transfer edit functioning unit 141, and the royalty transfer data edit functioning unit 141 reads out a royalty deposit account number, etc., stored in the royalty deposit account storage unit 138 and reads out a seller account number stored in the seller account number storage unit 140, and edits the above inputted Σreceivable R, etc., and the account number, etc., that have been read out, to determine transfer data. This edited transfer data is outputted by the output unit 142, and the banking institution 21 in Fig. 4 carries out transfer processing according to the inputted transfer data.

Σprepaid R will be further explained below with reference to the banking institution 21. While the value of Σprepaid R is described as an accumulated value using a symbol of "Σ", it is actually a value for adjusting a relationship between Σreceivable R and Σpayable R. For the purpose of an explanation, it is assumed that there is a "Σprepaid R deposit pool account" (pool account for all users). Further, it is assumed that there is a "Σpayable R pool account" for all users which is used as an account from which Σprepaid R increased when the value of previous prepaid RP is smaller than the value of prepaid RP carried over to a next time is transferred to a Σprepaid R deposit pool account, and it is assumed that there is a "Σreceivable R pool account" for all users which is used as an account to which Σprepaid R decreased when the value of previous prepaid RP is greater than the value of prepaid RP carried over to a next time is transferred from the Σprepaid R deposit pool account. It is assumed that the royalty management unit 115 in Fig. 39 outputs transfer data based on discriminated purchase history information, whereby Σpayable R obtained by totaling and calculation with regard to each seller is transferred from each "Σpayable R account" corresponding to each seller on the non-particular side to the Σpayable R pool account, and Σreceivable R obtained by totaling and calculation with regard to each seller is transferred from the Σreceivable R pool account to each "Σreceivable R" account corresponding to each seller on the particular side. It is also assumed that all or part of Σpayable R is transferred from the Σpayable R pool account to the Σreceivable R pool account. In the above relationship, when the value of previous prepaid RP is smaller than the value of prepaid RP carried over to a next time, a relational equation of (Σreceivable R) = (Σpayable R) - (Σprepaid R) is established; when the value of previous prepaid RP is greater than the value of prepaid RP carried over to a next time, a relational equation of (Σreceivable R) = (Σpayable R) + (Σprepaid R) is established; and when the value of previous prepaid RP is equivalent to the value of prepaid RP carried over to a next time, a relational equation of (Σreceivable R) = (Σpayable R) is established. In addition, the Σreceivable R pool account and the Σpayable R pool account are provided for the sake of an explanation above, while they are not necessarily required, and it is sufficient to perform calculations that determine a series of processing procedures for implementing the transfer from each Σpayable R account corresponding to each seller on the non-particular side to each Σreceivable R account corresponding to each seller on the particular side through the Σprepaid R deposit pool account. Further, while the above pool accounts are intended for all users for convenience, they may be provided for all sellers.

In Fig. 30, the purchase history storage unit 107 is provided in the center 105. Since, however, the discriminated purchase history storage unit 111 is provided in the center 105, it is not necessarily required to provide the purchase history storage unit 107. Further, when purchase information to be outputted by the purchase information gathering unit 23 is stored in the purchase history storage unit 107, when the particular commodity/service discrimination unit 109 makes the discrimination between a particular type and a non-particular type with regard to purchase history information, and when discriminated purchase history information is inputted to the calculation unit 113, the discriminated purchase history storage unit 111 is not required, and the purchase history storage unit 107 may be provided in EC sites 11a, 11b, 11c or store terminals 13a, 13b, 13c.

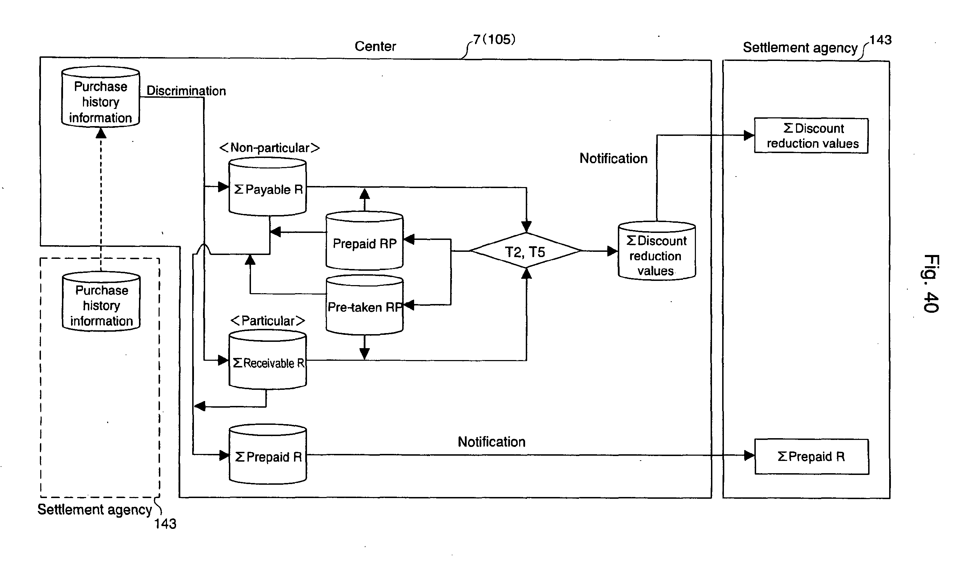

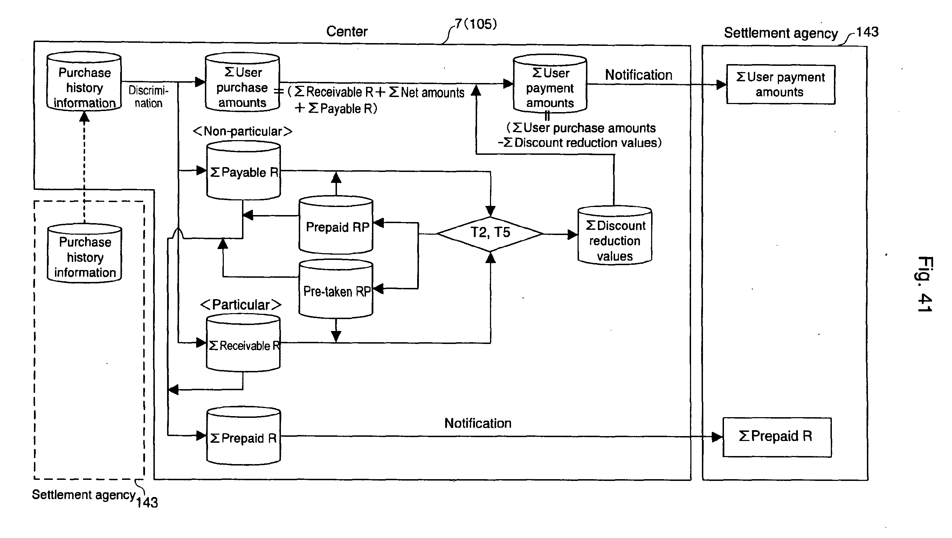

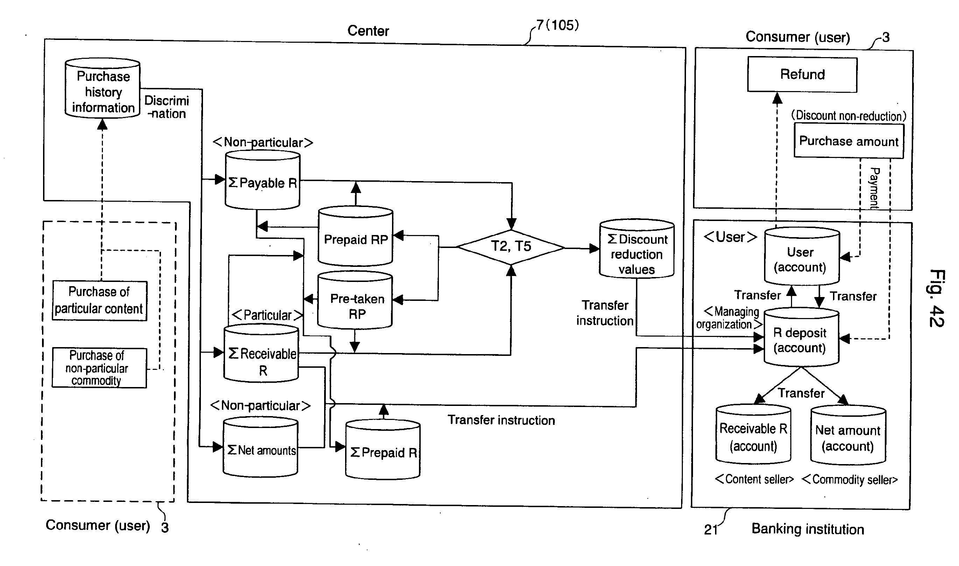

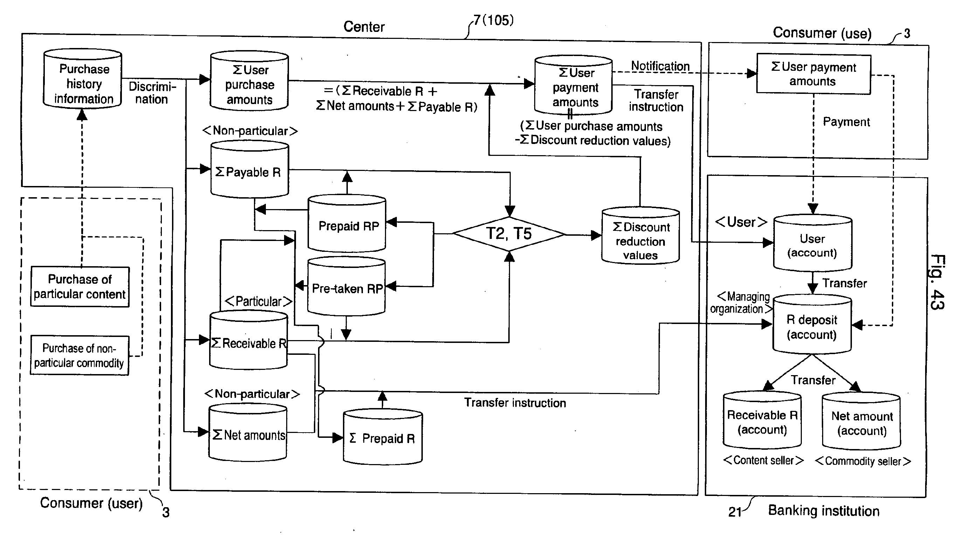

Fig. 40 is a diagram showing the relationship of data that flows between a settlement agency and the center with regard to a royalty calculation model. Fig. 41 is a diagram showing the relationship of data that flows between a settlement agency and the center with regard to a royalty calculation and "Σuser payment amounts" calculation model. Fig. 42 is a diagram showing the relationship of data that flows among a consumer, the center and a banking institution with regard to a royalty calculation and management model. Fig. 43 is a diagram showing the relationship of data that flows among a consumer, the center and a banking institution with regard to a royalty calculation and management and "Σuser payment amounts" calculation model. The gist of the embodiment shown in Figs. 30 to 39 based on the concept shown in Figs. 1 and 2 will be also explained below with reference to Figs. 40 to 43.

In Fig. 40, purchase history information is provided from a settlement agency 143 to the center 7(105). The center 7(105) classifies it to "Σpayable R" and "Σreceivable R" according to step T1 in Fig. 37. The above Σpayable R is concerned with non-particular commodity/service, and the above Σreceivable R is concerned with particular commodity/service. Discrimination processing similar to those in steps T2 and T5 in Fig. 37 is implemented. When [(prepaid RP) + (Σpayable R)]>[(pre-taken RP) + (Σreceivable R)], a difference thereof is stored as prepaid RP. When [(prepaid RP) + (Σpayable R)]≤[(pre-taken RP) + (Σreceivable R)], a difference thereof is stored as pre-taken RP. Of [(prepaid RP) + (Σpayable R)] and [(pre-taken RP) + (Σreceivable R)], a smaller value thereof is used as a discount reduction value. The center 7(105) notifies the settlement agency 143 of Σprepaid R and Σdiscount reduction values. When prepaid RP carried over to a next time is increased to be greater than previous prepaid RP, the settlement agency 143 transfers Σprepaid R of an increased portion from a "net amount account" on the non-particular side to a "prepaid R deposit account". When prepaid RP carried over to a next time is decreased to be smaller than previous prepaid RP, the settlement agency 143 transfers Σprepaid R of a decreased portion from the prepaid R deposit account to the net amount account on the particular side.

In Fig. 41, the purchase history information is classified into Σpayable R and Σreceivable R and also additionally classified into "Σuser purchase amounts" unlike the case in Fig. 40. This Σuser purchase amounts can be determined on the basis of [(Σreceivable R) + (Σnet amounts received) + (Σpayable R)]. And, "Σdiscount reduction values" is deducted from the Σuser purchase amounts to obtain "Σuser payment amounts", and the center 7(105) notifies the settlement agency 143 of the Σuser payment amounts and Σprepaid R.

In Fig. 42, the consumer (user) 3 purchases a particular content, or he or she purchases a non-particular commodity, and then the center 7(105) sends transfer instructions on calculated Σreceivable R, Σnet amounts on the non-particular side and Σprepaid R to the banking institution 21. The banking institution 21 processes Σprepaid R in the same manner as in Fig. 40, and it transfers Σreceivable R from the R deposit account of the managing organization managing the center 7(105) to the receivable R account of a content seller selling particular contents and transfers Σnet amounts from the R deposit account to the net amount account of a commodity seller selling non-particular commodity. When the consumer 3 pays a purchase amount to the R deposit account of the managing organization managing the center 7(105), or when a purchase amount is paid to the user account by the user 3 and transferred from the user account to the R deposit account, before the center 7(105) gives the transfer instruction on Σdiscount reduction values to the banking institution 21, the Σdiscount reduction values is transferred from the R deposit account to the user account after the center 7(105) gives the transfer instruction on Σdiscount reduction values to the banking institution 21, and the user has it refunded(cash-backed).

In Fig. 43, Σuser payment amounts [= (Σuser purchase amounts)-(Σdiscount reduction values)] is determined like the case in Fig. 41, the Σuser payment amounts is notified to the consumer 3, and the consumer 3 pays the Σuser payment amounts to the user account or the R deposit account. When the Σuser payment amounts is paid to the user account, the banking institution 21 transfers the Σuser payment amounts from the user account to the R deposit account according to the transfer instruction on the Σuser payment amounts. In addition, Σprepaid R, Σreceivable R and Σnet amounts received on the non-particular side are processed in the same manner as in the case in Fig. 42.

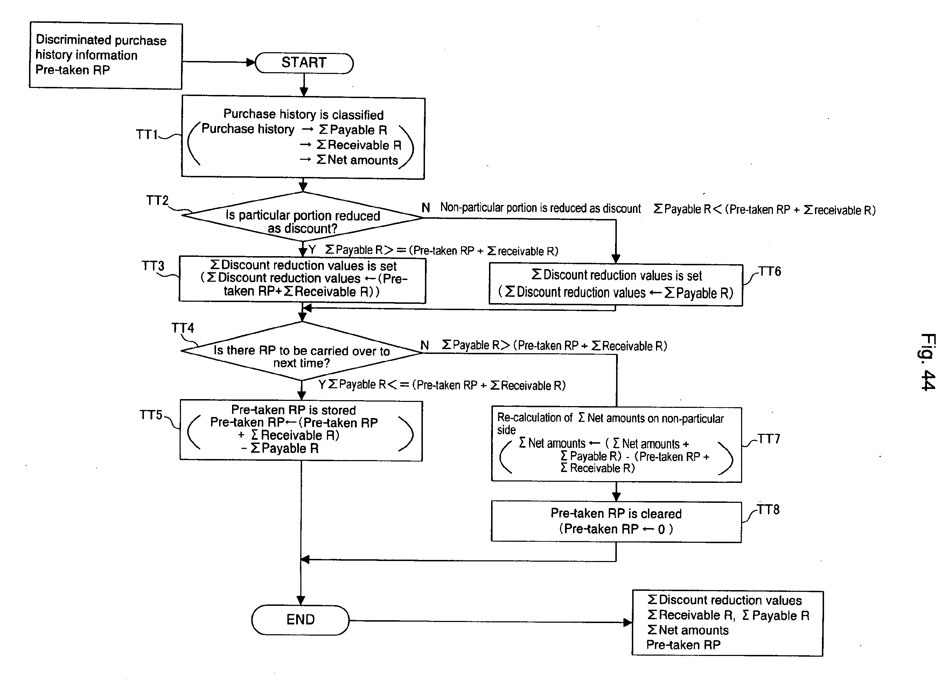

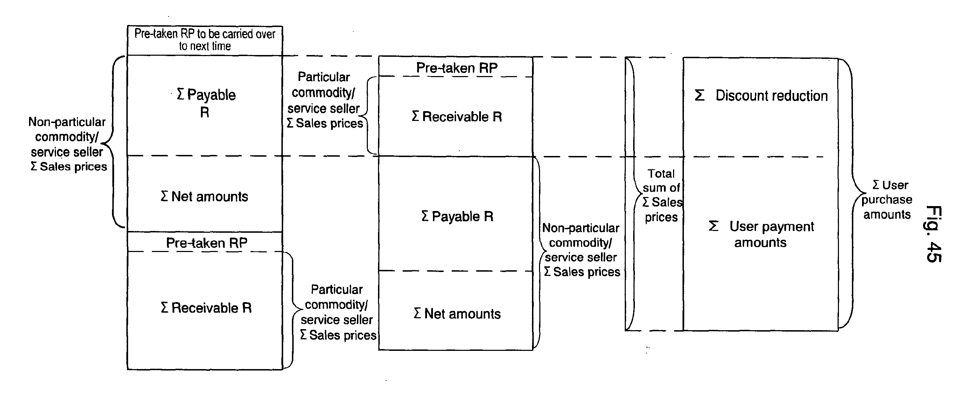

Fig. 44 is a flow diagram for explaining the operation of the calculation unit 113 in Fig. 36 in the concept of the invention shown in Fig. 3. Fig. 45 is a relationship diagram for explaining the operation of the calculation unit 113 in Fig. 36 in the case of Fig. 44.

First, discriminated purchase history information is inputted to the processing unit 131 in Fig. 36, and a value of pre-taken R stored in the royalty point storage unit 29 in Fig. 30 is inputted thereto.

In step TT1, the royalty calculation functioning unit 137 classifies the purchase history. Specifically, the purchase history is classified into "Σpayable R" that is a total sum of payable R, "Σreceivable R" that is a total sum of receivable R and "Σnet amounts" that is a total sum of net amounts on the non-particular side.

In step TT2, the discount reduction value calculation functioning unit 135 judges whether or not a particular commodity/service portion is reduced as a discount. This determination is made on the basis of whether or not ($\Sigma$payable R) $\geq$ [(pre-taken RP) + ($\Sigma$receivable R)] is satisfied. When it is determined that the discount reduction is a particular commodity/service portion, the processing proceeds to step TT3. When it is determined that the discount reduction is a non-particular commodity/service portion, the processing proceeds to step TT6.

In step TT3, [(pre-taken RP) + ($\Sigma$receivable R)] is set as "$\Sigma$discount reduction values". In step TT6, $\Sigma$payable R is set as $\Sigma$discount reduction values.

The above $\Sigma$discount reduction values will be briefly explained with reference to Fig. 45. The total of the total sum ($\Sigma$sales prices)of sales prices of particular commodity/service sold by a particular commodity/service seller and total sum ($\Sigma$sales prices) of sales prices of non-particular commodity/service sold by a non-particular commodity/service agrees to the total sum ($\Sigma$user purchase amounts) of purchase amounts of a consumer (user).

Since receivable R is set at a maximum discount rate of 100 %, the total sum ($\Sigma$sales prices) of sales prices of particular commodity/service sold by a particular commodity/service seller agrees to the total sum ($\Sigma$receivable R) of receivable R.

The payable R is set at a maximum discount rate, for example, of 10 %, and the total sum ($\Sigma$sales prices) of sales prices of non-particular commodity/service sold by a non-particular commodity/service seller is set at the total of the total sum ($\Sigma$payable R) of payable R and the total sum ($\Sigma$net amounts) of net amounts of the non-particular commodity/service seller.

In the above case, the total sum ($\Sigma$discount reduction) of discount reduction obtained by a consumer is set at [(pre-taken RP) + ($\Sigma$receivable R)] or $\Sigma$payable R in step TT3 or step TT6. In addition, $\Sigma$user payment amounts is an amount obtained by deducting $\Sigma$discount reduction values from $\Sigma$user purchase amounts that is equivalent to the total sum of $\Sigma$sale prices.

In step TT4, the royalty point calculation functioning unit 139 judges whether or not there is RP to be forwarded to a next time. This determination is made on the basis of whether or not [($\Sigma$payable R) $\leq$ [(pre-taken RP) + ($\Sigma$receivable R)]] is satisfied. When there is RP to be forwarded to a next time, the processing proceeds to step TT5, and when there is no RP to be forwarded to a next time, the processing proceeds to step TT7.

In step TT5, the royalty point calculation functioning unit 139 calculates a value of [[(pre-taken RP) + ($\Sigma$receivable R)] - ($\Sigma$payable R)] as pre-taken RP and causes the royalty point unit 29 in Fig. 30 to store the calculated value of pre-taken RP.

In step TT7, the royalty calculation functioning unit 137 re-calculates a value of [[($\Sigma$net amounts) + ($\Sigma$payable R)] - [(pre-taken RP) + ($\Sigma$receivable R)]] as $\Sigma$net amounts on the non-particular side. The above value of [($\Sigma$net amounts) + ($\Sigma$payable R)] is a total sales amount of non-particular commodity/service, and the value of [(pre-taken RP) + ($\Sigma$receivable R)] is "$\Sigma$discount reduction value" that is a total sum of discount reduction values. In step TT8, the royalty point calculation functioning unit 139 clears the pre-taken RP, and brings the value of pre-taken RP stored in the royalty point storage unit 29 in Fig. 30 into zero.

According to the above process from step TT1 to step TT8, the $\Sigma$discount reduction values, $\Sigma$receivable R, $\Sigma$payable R, $\Sigma$net amounts, and pre-taken RP are calculated, and the output unit 133 in Fig. 36 outputs them. While the $\Sigma$net amounts on the non-particular side is classified in step TT1 and re-calculated in step TT7, the calculation unit 113 in Fig. 36 may calculate $\Sigma$discount reduction values, $\Sigma$receivable R, $\Sigma$payable R and pre-taken RP without processing the $\Sigma$net amounts, and then, the $\Sigma$net amounts may be calculated using these later on.

In the embodiment shown in Figs. 30 to 45, there is employed a technique (see the purchase user ID in Figs. 31 and 32) of calculating $\Sigma$discount reduction values for each consumer from the viewpoint of focusing on a consumer (user) (see Figs. 38 and 45). From the viewpoint of focusing on a seller, there may be employed a technique of calculating $\Sigma$receivable R and $\Sigma$payable R for each seller with respect to all consumers (see the seller ID in Figs. 31 and 32).

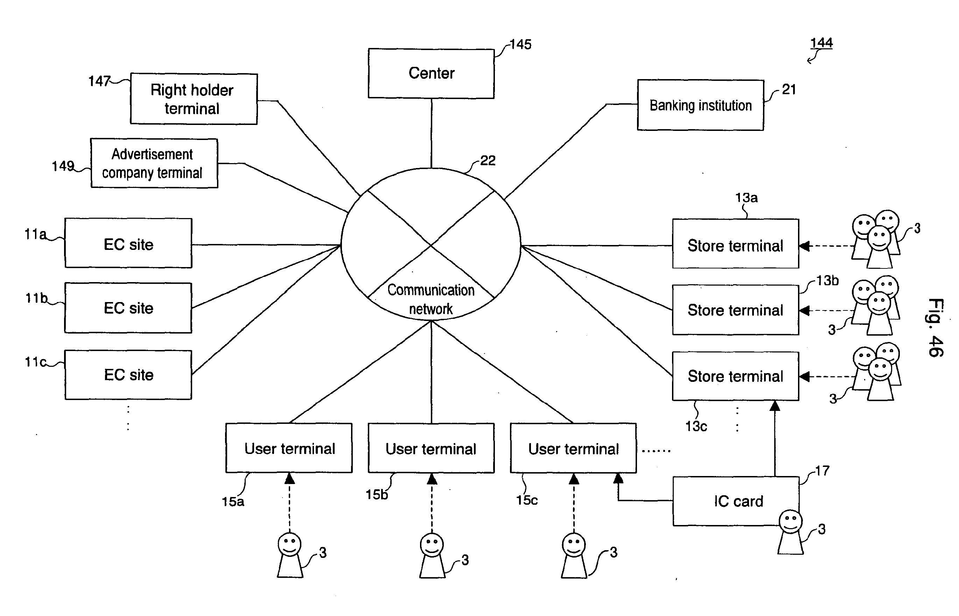

Fig. 46 is a diagram showing a total constitution of a point service system according to a third embodiment of the present invention.

Points different from those of the point service system 9 shown in Fig. 4 will be particularly explained. A point service system 144 has a center 145 in place of the center 19 in Fig. 4, EC sites 11a, 11b, 11c, store terminals 13a, 13b, 13c, user terminals 15a, 15b, 15c, IC card 17 for use in the store terminal 13a, or the like or the user terminal 15a, or the like, and a banking institution 21, and it further has a right holder terminal 147 and an advertising company terminal 149. These are connected through a communication network 22.

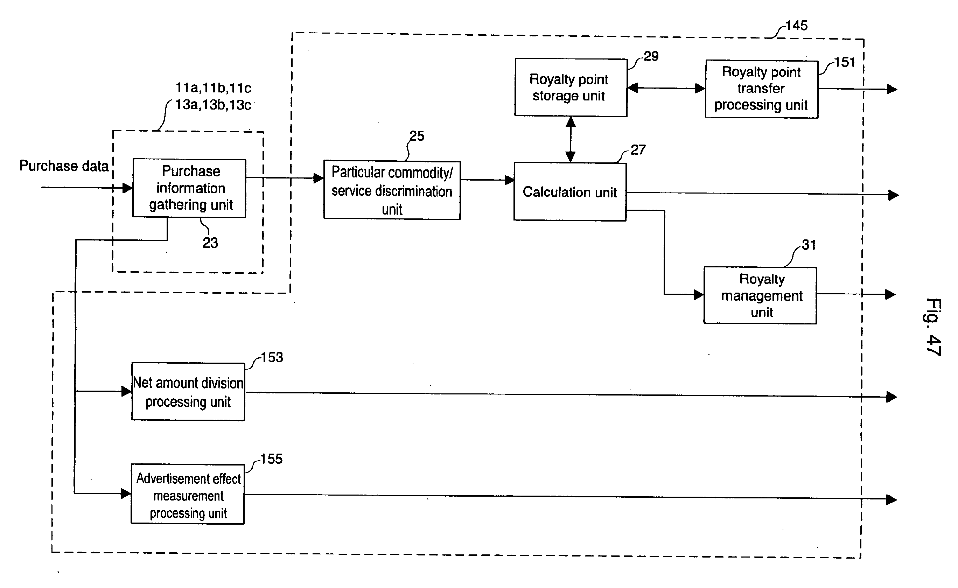

Fig. 47 is a block diagram showing an internal constitution of the center 145 mainly in Fig. 46. Points different from those in the center 19 in Fig. 5 will be explained in particular.

The center 145 has a particular commodity/service discrimination unit 25, a calculation unit 27, a royalty point storage unit 29 and a royalty management unit 31, and it further has a royalty point transfer processing unit 151, a net amount division processing unit 153 and an advertisement effect measurement processing unit 155.

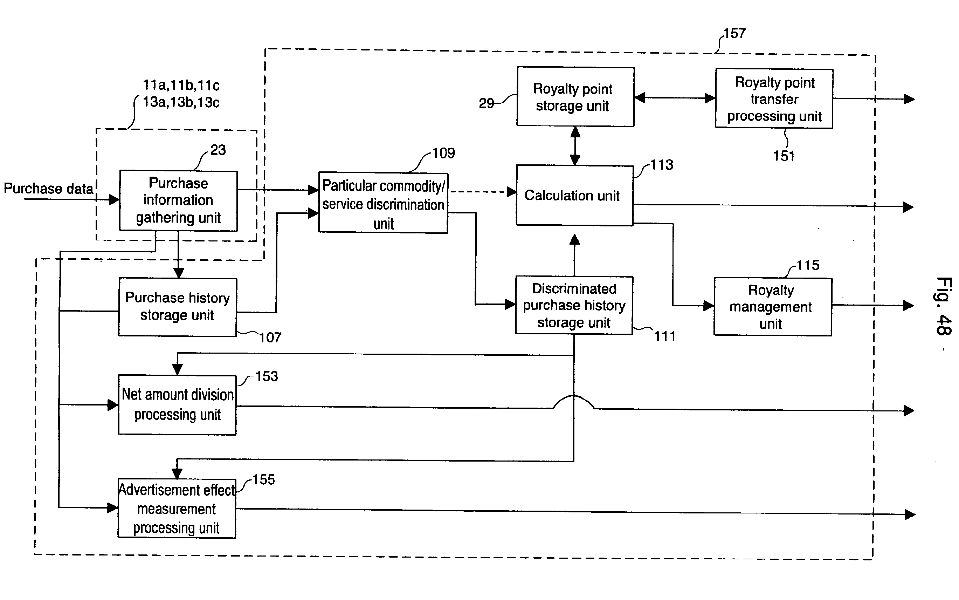

Fig. 48 is a block diagram showing an internal constitution of another center different from the center 145 in Fig. 47. Points different from the center 105 in Fig. 30 will be explained below.

The center 157 has a purchase history storage unit 107, a particular commodity/service discrimination unit 109, a discriminated purchase history storage unit 111, a calculation unit 113, a royalty point storage unit 29 and a royalty management unit 115, and it further has a royalty point transfer processing unit 151, a net amount division processing unit 153 and an advertisement effect measurement processing unit 155.

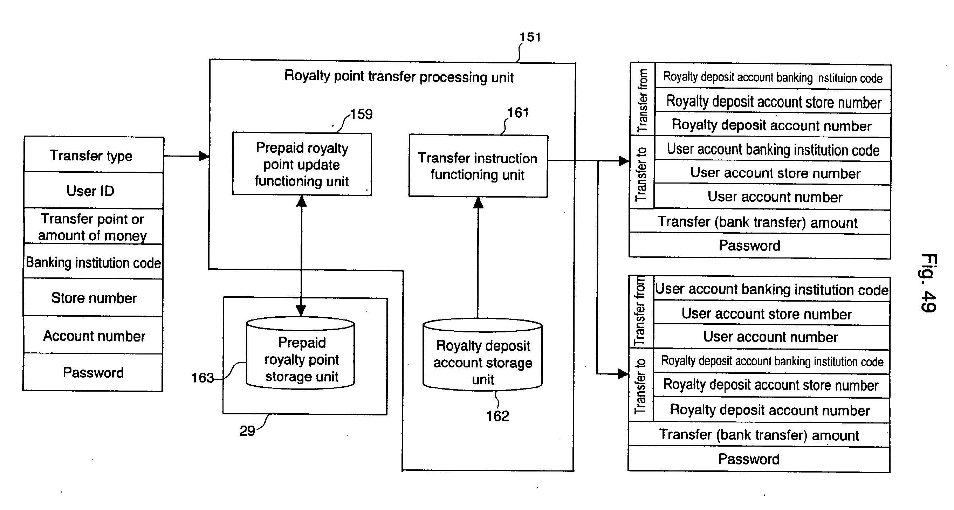

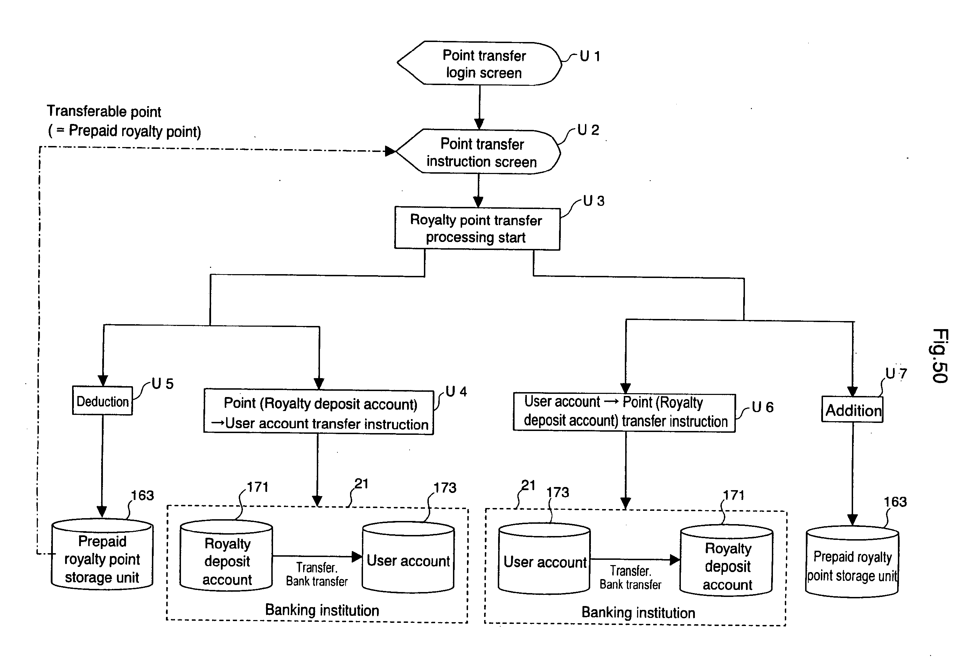

Fig. 49 is a block diagram showing an internal constitution of the royalty point transfer processing unit 151 in Figs, 47 and 48, and Fig. 50 is a diagram for mainly explaining the operation of royalty point transfer processing unit 151 in Fig. 49.

The royalty point transfer processing unit 151 has a prepaid royalty point update functioning unit 159, a transfer instruction functioning unit 161 and a royalty deposit account storage unit 162. The royalty deposit account storage unit 162 stores a royalty deposit account banking institution code, a royalty deposit account store number and a royalty deposit account number. The operation will be explained below.

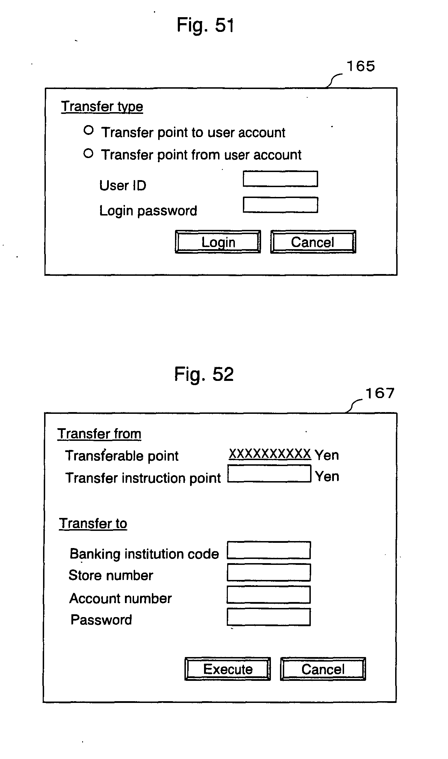

In step U1, for example, a point transfer login screen 165 shown in Fig. 51 is displayed on the user terminal 15a accessing the EC site 11a. In the point transfer login screen 165, a user 3 can select either "transfer points to user account" or "transfer from user account to points" as a transfer type. After the user 3 selects the transfer type, he or she inputs a user ID and login password in the point transfer login screen 165 and clicks a "login" button to proceed to step U2.

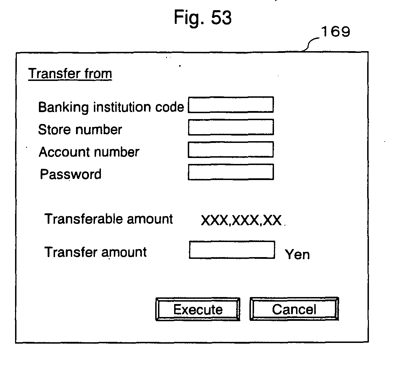

In step U2, a point transfer instruction screen 167 shown in Fig. 52 or a point transfer instruction screen 169 shown in Fig. 53 is displayed on the user terminal 15a. The point transfer instruction screen 167 is displayed when the transfer type of "Transfer points to user account" is selected on the point transfer login screen 165, and the point transfer instruction screen 169 is displayed when the transfer type of "Transfer from user account to points" is selected on the point transfer login screen 165.

When the user 3 inputs transfer instruction points not exceeding transferable points displayed in a "transfer from" field and a banking institution code, a store number, an account number and a password in a "transfer to" field and clicks an "execute" button on the point transfer instruction screen 167, or when he or she inputs a banking institution code, a store number, an account number and a password in a "transfer from" field and a transfer amount of money (not exceeding a transferable amount of money displayed) and clicks an "execute" button on the point transfer instruction screen 169, the processing proceeds to step U3, and the royalty point transfer processing unit 151 starts processing. Differing from the point transfer instruction screen 169 shown in Fig. 53, there may be employed a constitution in which a password is inputted and an "execute" button is clicked to display a banking institution code, a store number, an account number, a transferable amount of money and a transfer amount of money other than the password in Fig. 53. Further, with regard to the transferable amount of money a "balance inquiry" button may be provided and it may be clicked as required to display the transferable amount.

When the transfer type is a case where "points are transferred to a user account", then in step U4, the transfer instruction functioning unit 161 outputs information on an account from which the transfer is made (a royalty deposit account banking institution code, royalty deposit account store number and royalty deposit account number), information on an account to which the transfer is made (a user account banking institution code, user account store number and user account number), a transfer (remittance) amount and a password to the banking institution 21 to implement transfer instructions. And, the banking institution 21 carries out the transfer-remittance processing from the royalty deposit account 171 to the user account 173.

When the transfer type is a case where "points are transferred to user account", then in step U5, the prepaid royalty point update functioning unit 159 performs processing to deduct a transfer instruction point portion from the prepaid royalty point stored in the prepaid royalty point storage unit 163 of the royalty point storage unit 29.

When the transfer type is a case where "the transfer is made from user account to points", then in step U6, the transfer instruction functioning unit 161 outputs information on an account from which the transfer is made (a user account banking institution code, user account store number and user account number), information on an account to which the transfer is made (a royalty deposit account banking institution code, royalty deposit account store number and royalty deposit account number), a transfer (remittance) amount of money and a password to the banking institution 21 to implement transfer instructions. And, the banking institution 21 carries out the transfer-remittance processing from the user account 173 to the royalty deposit account 171.

Further, when the transfer type is a case where "points are transferred to user account", then in step U7, the prepaid royalty point update functioning unit 159 performs processing to add a transfer amount portion to the prepaid royalty point stored in the prepaid royalty point storage unit 163 of the royalty point storage unit 29.

The prepaid royalty point after step U5 is reflected as transferable points on the point transfer instruction screen 167 to be displayed a next time.

In Fig. 49, etc., there is employed a constitution in which the user 3 inputs the banking institution code, store number and account number of the user account, while there may be employed a constitution in which these are stored beforehand in the royalty point transfer processing unit 151.

Further, when the royalty point transfer processing unit 151 in Fig. 49 performs transfer processing, it may perform transfer processing in foreign currency using an exchange rate according to the instruction of a consumer (user).

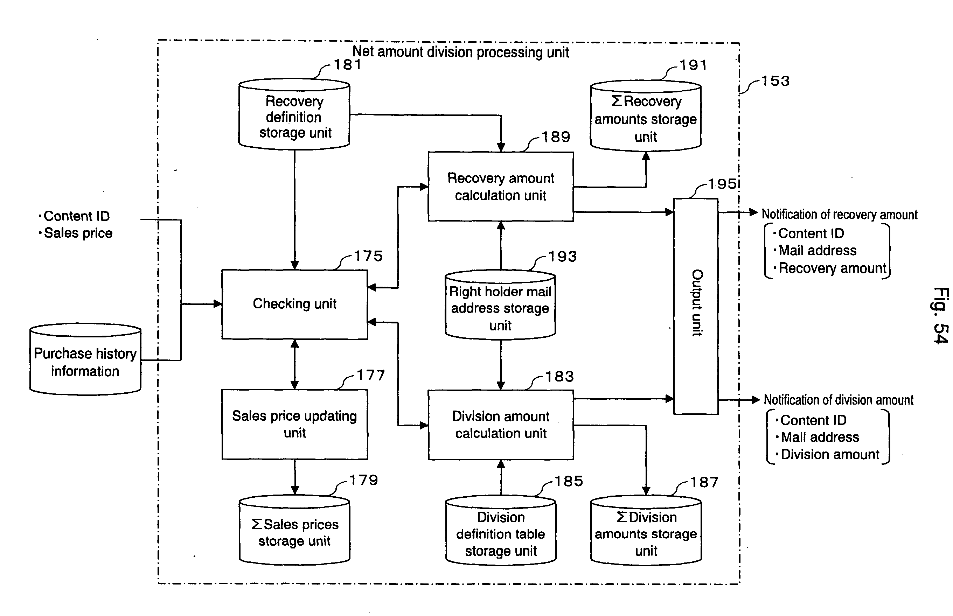

Fig. 54 is a block diagram showing an internal constitution of the net amount division processing unit 153 in Figs. 47 and 48.

The net amount division processing unit 153 has a checking unit 175, a sales amount updating unit 177, a "Σsales amounts" storage unit 179, a recovery definition table storage unit 181, a division amount calculation unit 183, a division definition table storage unit 185, a "Σdivision amounts" storage unit 187, a recovery amount calculation unit 189, a "Σrecovery amounts" storage unit 191, a right holder mail address storage unit 193 and an output unit 195.

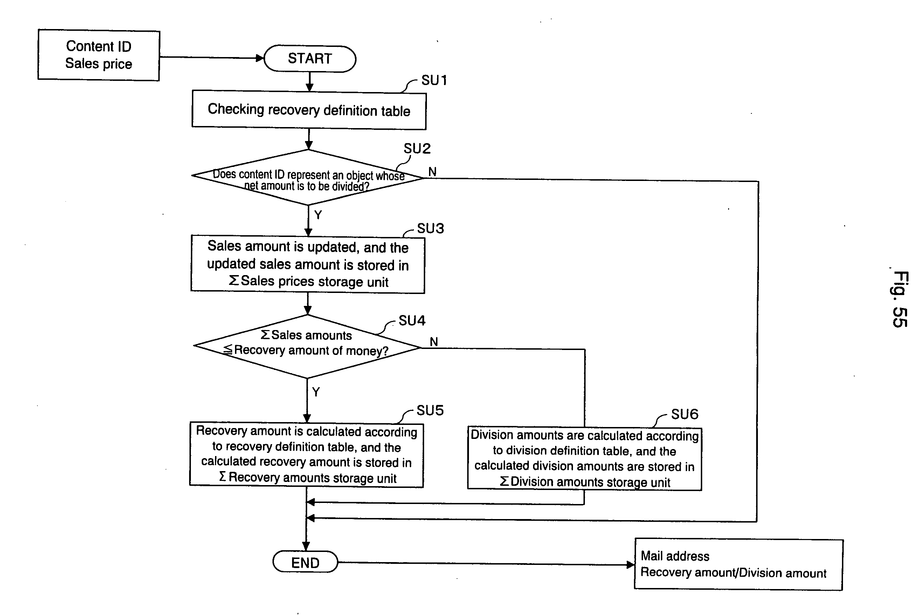

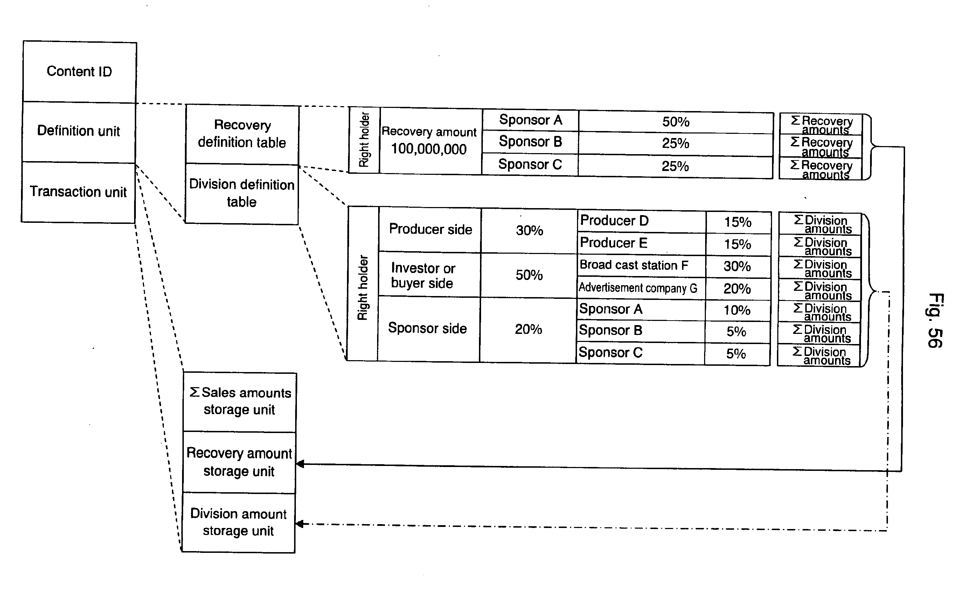

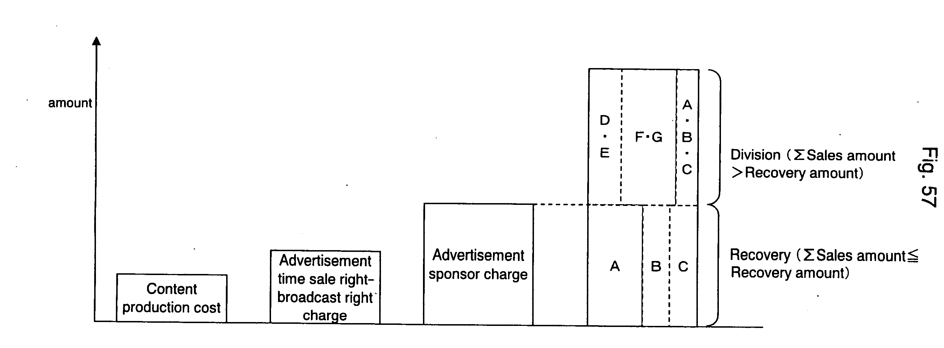

Fig. 55 is a flow diagram for explaining the operation of the net amount division processing unit 153 in Fig. 54. Fig. 56 is a diagram showing a database structure for specifically explaining the operation of the net amount division processing unit 153 in Fig. 54. Fig. 57 is a diagram showing the relationship between the recovery and division of amounts of money in the database structure shown in Fig. 56.

In step SU1, the checking unit 175 checks a recovery definition table stored in the recovery definition table storage unit 181 according to a content ID and a sales price inputted from the purchase information gathering unit 23 in Fig. 47 or Fig. 48 or according to purchase history information inputted from the purchase history storage unit 107 in Fig. 48. The recovery definition table defines a recovery amount of money to be recovered, right holders having rights to receive the recovery amount of money until the recovery amount is reached at a ratio determined for each and ratios determined for the right holders. In Fig. 56, the recovery amount is 100,000,000 Yen, and the right holders are determined to be a sponsor A, a sponsor B and a sponsor C. The ratio of the sponsor A is determined to be 50 % (the maximum value of "Σrecovery amounts" is 50,000,000 Yen), the ratio of the sponsor B is determined to be 25 % (the maximum value of Σrecovery amounts is 25,000,000 Yen) and the ratio of the sponsor C is determined to be 25 % (the maximum value of Σrecovery amounts is 25,000,000 Yen).

The recovery amount will be further explained below. The recovery amount agrees with an advertising sponsor fee shown in Fig. 57, and the advertising sponsor fee is contributed by the sponsors A, B and C in Fig. 56 for a content production fee and an advertisement time sales right fee and broadcasting right fee.

In step SU2, the checking unit 175 judges whether or not a content ID represents an object whose net amount is to be divided, according to a content ID inputted from the purchase information editing unit 23 in Fig. 47 or Fig. 48 or purchase history information inputted from the purchase history storage unit 107 in Fig. 48. When the content ID represents an object whose net amount is to be divided, the processing proceeds to step SU3, and when it does not represent any object whose net amount is to be divided, the processing comes to an end.

In step SU3, the sales amount updating unit 177 updates "Σsales amounts" using an inputted sales amount and causes the Σsales amounts storage unit 179 to store the updated Σsales amounts.

In step SU4, the checking unit 175 compares the updated Σsales amounts with the recovery amount of money defined in the recovery definition table stored in the recovery definition table storage unit 181 to determine which is greater. In the case of (Σsales prices) ≤ (recovery amount of money), the processing proceeds to step SU5, and in the case of (Σsales prices) > (recovery amount of money), the processing proceeds to step SU6.

In step SU5, the recovery amount calculation unit 189 calculates a recovery amount recovered this time for each right holder and a total sum of the recovery amounts (Σrecovery amounts) or each right holder according to the recovery definition table stored in the recovery definition table storage unit 181 and causes the Σrecovery amounts storage unit 191 to store the Σrecovery amounts for each right holder.

The Σrecovery amounts for each right holder will be explained with reference to Fig. 56 and Fig. 57. It is necessary for the sponsors A, B and C who have contributed the advertising sponsor fees to recover profits obtained by sales of contents until the recovered amount of money comes to be equivalent to the advertising sponsor fee (100,000,000 Yen in Fig. 56, the Σrecovery amounts is 50,000,000 Yen for the sponsor A, the Σrecovery amounts is 25,000,000 Yen for the sponsor B and the Σrecovery amounts is 25,000,000 Yen for the sponsor C). Therefore, the recovery amount for each right holder is calculated, and Σrecovery amounts for each right holder is also calculated and stored until (Σsales amounts) ≤ (recovery amount) is satisfied, so that the sponsor A receives 50 % of the recovery amounts, that the sponsor B receives 25 % of the recovery amounts and that the sponsor C receives 25 % of the recovery amounts.

In step SU6, the division amount calculation unit 183 calculates a division amount of money provided this time for each right holder and a total sum of the division amounts (Σdivision amounts) for each right holder according to the division definition table stored in the division definition table storage unit 185 and causes the Σdivision amounts storage unit 187 to store the Σdivision amounts of money for each right holder.

The above division definition table will be explained below. The division definition table defines right holders for whom the division should be made and division ratios determined with regard to the right holders. In Fig. 56, the right holders are largely classified into a producer side, an investor or buyer side and a sponsor side, and the division ratio for the producer side is determined to be 30 %, the division ratio for the investor or buyer side is determined to be 50 %, and the division ratio for the sponsor side is determined to be 20 %. It is defmed that the producer side includes a producer D and a producer E who have a division ratio of 15 % each. It is defined that the investor or buyer side includes a broadcast station F having a division ratio of 30 % and an advertisement company G having a division ratio of 20 %. It is also defined that the sponsor side includes the sponsor A having a division ratio of 10 % and the sponsors B and C having a division ratio of 5 % each.

The Σdivision amounts for each right holder will be explained with reference to Fig. 56 and Fig. 57. In the case of (Σsales prices) > (recovery amount of money), the sponsors A, B and C who had contributed the advertisement sponsor fee have recovered amounts of money equivalent to the advertisement sponsor fee, so that the net amount thereafter is divided for the right holders at ratios defined in the division definition table. Specifically, both the producer D and the producer E receive division amounts at a division ratio of 15 % each, the broadcast station F receives a division amount at a division ratio of 30 %, the advertisement company G receives a division amount at a division ratio of 20 %, the sponsor A receives a division amount at a division ratio of 10 % and both the sponsors B and C receive division amounts at a division ratio of 5 % each. Division amounts for the right holders are calculated to make the above division, and Σdivision amounts for each right holder is also calculated and stored.

Thus-calculated recovery amounts or division amounts for the right holders are outputted to the right holder terminals in Fig. 46 through the output unit 195 together with the content ID according to right holder mail addresses stored in the mail address storage unit 193.

In view of recovery and division of a net amount, the above particular commodity or particular service is preferably one that a large number of consumers (users) purchase.

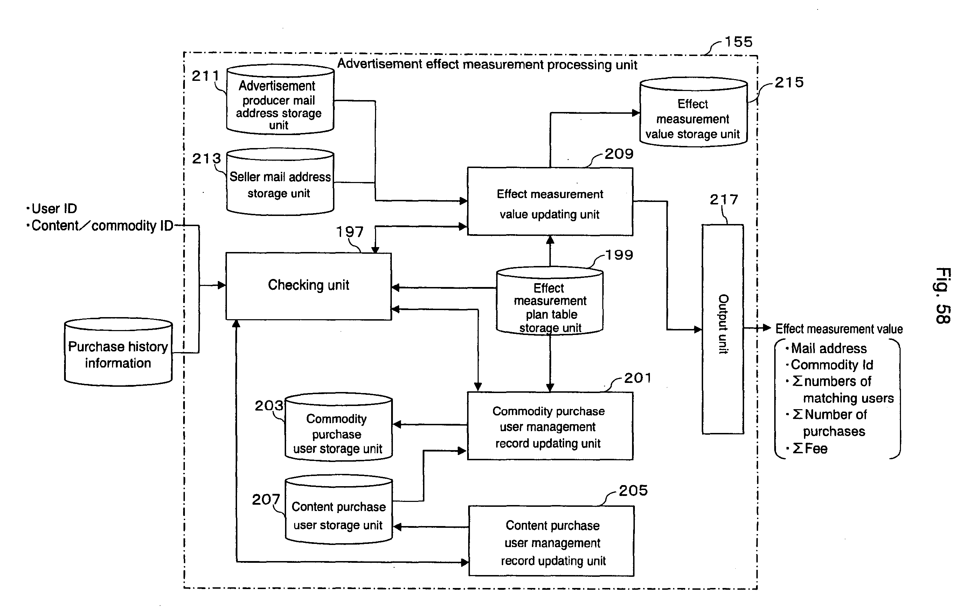

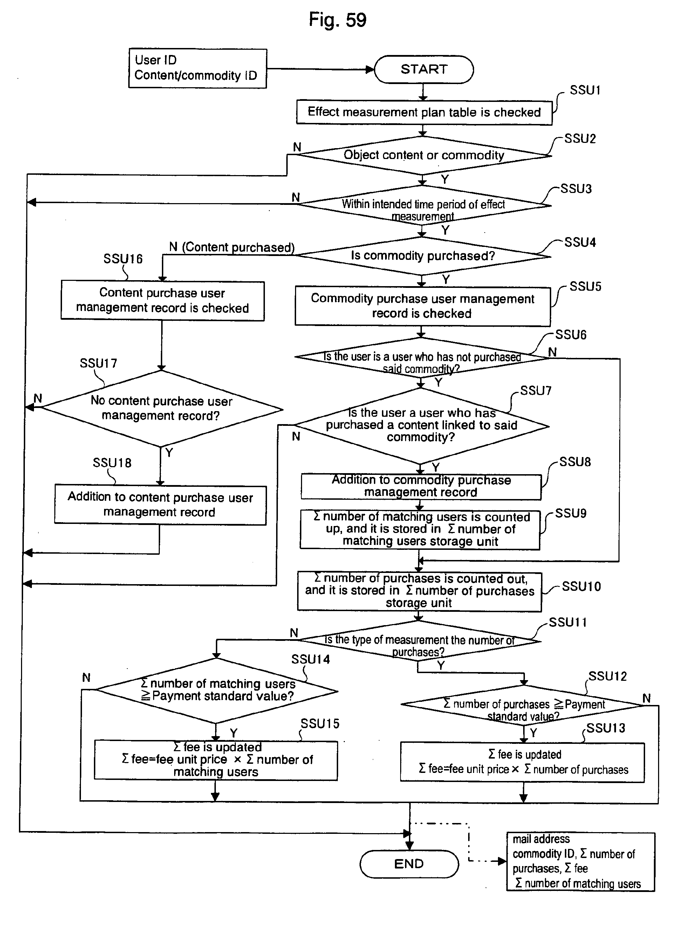

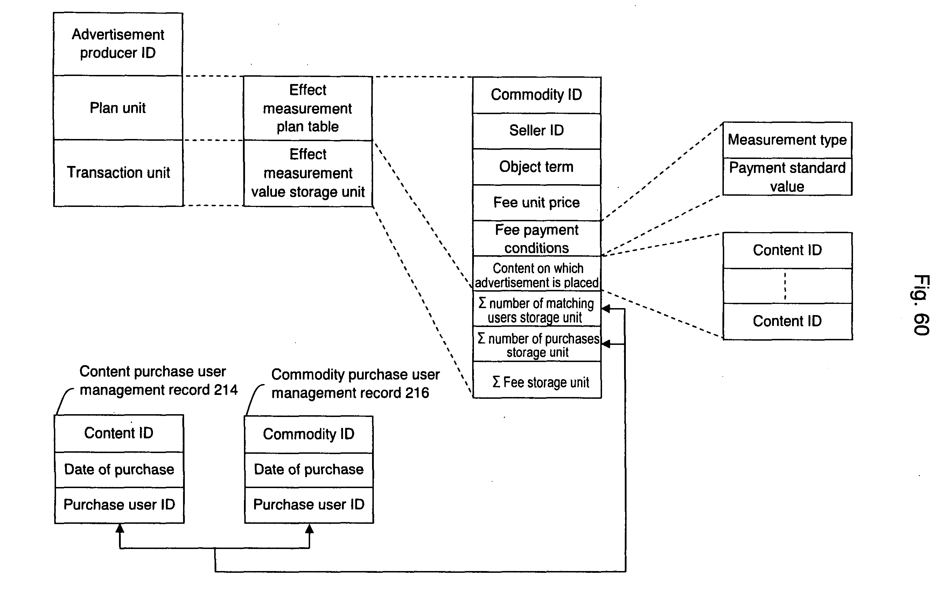

Fig. 58 is a diagram showing an internal structure of the advertisement effect measurement processing unit 155 in Fig. 47 and Fig. 48. Fig. 59 is a flow diagram for explaining the operation of the advertisement effect measurement processing unit 155 in Fig. 58. Fig. 60 is a diagram showing an advertisement effect measurement management database structure and matching management database structure for explaining the advertisement effect measurement and the calculation processing of fees to the advertisement producers.

The advertisement effect measurement processing unit 155 has a checking unit 197, an effect measurement plan table storage unit 199, a commodity purchase user management record updating unit 201, a commodity purchase user storage unit 203, a content purchase user management record updating unit 205, a content purchase user storage unit 207, an effect measurement value updating unit 209, an advertisement producer mail address storage unit 211, seller mail address storage unit 213, effect measurement value storage unit 215 and an output unit 217.

In step SSU1, the checking unit 197 checks an effect measurement plan table stored in the effect measurement plan table storage unit 199 according to a user ID and content/commodity ID inputted from the purchase information gathering unit 23 in Fig. 47 or Fig. 48 or purchase history information inputted from the purchase history storage unit 107 in Fig. 48.

The above effect measurement plan table will be explained below with reference to Fig. 60. In the effect measurement plan table in the advertisement effect measurement management database, there are defined a commodity ID, a seller ID such as a maker etc. as an advertiser, an intended period of time for effect measurement, a fee unit price, fee payment conditions and an advertisement media content. The definition of the fee payment conditions includes a measurement type and a payment reference value (the value includes zero), while the definition of the advertisement media content includes a content ID of a content on which an advertisement for advertising a content identified by a commodity ID is placed. The above "fee" refers to a fee that an advertising company as an advertisement producer receives from an advertiser and includes returns for advertisement effect measurement, market research, demand forecast, and the like.

In step SSU2, the checking unit 197 checks whether or not a content or commodity is an object content or commodity of the effect measurement. When it is an object content or commodity, the processing proceeds to step SSU3, and the checking unit 197 checks whether or not the intended time period for effect measurement is effective. When the intended time period for effect measurement is effective, the processing proceeds to step SSU4. When the content or commodity is not any object content or commodity in step SSU2, or when the intended time period for effect measurement is not effective in step SSU3, the processing comes to an end.

In step SSU4, the checking unit 197 checks whether or not a purchased one is a commodity. When it is a commodity, the processing proceeds to SSU5 and the checking unit 197 checks the commodity purchase user management record 216 in a matching management database shown in Fig. 60 that is stored in the commodity purchase user storage portion 203. When it is a content, the processing proceeds to step SSU16, the checking unit 197 checks the content purchase user management record 214 in the matching management database shown in Fig. 60.

In step SSU6 following step SSU5, the checking unit 197 checks whether or not the user is a user who has not purchased said commodity, and when he or she is a user who has purchased the same, the processing proceeds to step SS10. In step SSU10, the effect measurement value updating unit 209 counts up "Σ number of purchases" and causes the Σnumber of purchases storage unit of the effect measurement value storage unit 215 to store it. The above number of purchases is used as a type of the measurement, which is because of the following. It can be assumed that the user has viewed the advertisement of the commodity placed in the content and has purchased the commodity, so that the number of purchases can be used as a criterion for the advertisement effect measurement.

In step SSU6, when the user is a user who has not purchased the commodity, the processing proceeds to step SSU7, and the checking unit 197 checks whether or not he or she has purchased a "content linked to said commodity". When he or she is not any user who has purchased a content linked to said commodity, the processing comes to an end. When he or she is a user who has purchased a content linked to said commodity, the processing proceeds to step SSU8.

In step SSU8, the commodity purchase user management record updating unit 201 adds the above user to the commodity purchase management record 216 stored in the commodity purchase user storage unit 203, and in step SSU9, the effect measurement value updating unit 209 counts up the "Σmatching user number" and causes the Σmatching user number storage unit of the effect measurement value storage unit 215 to store it, and the processing proceeds to step SSU10. The above matching user number is used as a type of the measurement, which is because of the following. It can be assumed that he or she has viewed the advertisement of the commodity placed in the content and has purchased said commodity, so that the number of users who have purchased both the content and the commodity can be used as a criterion for the advertisement effect measurement.

In step SSU11, the checking unit 197 checks whether or not the type of measurement is the number of purchases. When it is the number of purchases, the processing proceeds to step SSU12, and the checking unit 197 checks whether or not (Σnumber of purchases) $\geq$ (payment reference value) is satisfied. In the case of (Σnumber of purchases) < (payment reference value), the processing comes to an end. In the case of (Σnumber of purchases) $\geq$ (payment reference value), the processing proceeds to step SSU13 to update Σfee [= (fee unit price) x (Σnumber of purchases)], and Σfee is also stored in the effect measurement value storage unit 215.

In step SSU11, when the measurement type is not the number of purchases, the processing proceeds to step SSU14, and the checking unit 197 checks whether or not (Σmatching user numbers) $\geq$ (payment reference value) is satisfied. In the case of (Σmatching user numbers) < (payment reference value), the processing comes to an end. In the case of (Σmatching user numbers) $\geq$ (payment reference value), the processing proceeds to step SSU15 to update Σfee [=(fee unit price) x (Σmatching user numbers)], and Σfee is also stored in the effect measurement value storage unit 215.

On the other hand, in step SSU17 following step SSU16, the checking unit 197 checks whether or not there is a record of a purchased content in the content purchase user management record 214. When there is the record of the same, the processing comes to an end. When there is no record thereof, then in step SSU18, the content purchase user management record updating unit 205 adds the record of the purchased content to the content purchase management record 214 stored in the content purchase user storage unit 207, then the processing comes to an end.

Necessary values out of the thus-determined commodity ID, Σmatching user numbers, Σnumber of purchases and Σfee as effect measurement values are outputted to the advertising company terminal 149 in Fig. 46 and seller terminals of makers who are advertisement sponsors, and the like, through the output unit 217, according to mail addresses of advertisement producers as advertising companies stored in the advertisement producer mail address storage unit 211 or mail addresses of sellers stored in the seller mail address storage unit 213.

From the viewpoint of advertisement effect measurement, preferably, a particular commodity or particular service and a non-particular commodity or non-particular service are selected such that the particular commodity or particular service is purchased before the non-particular commodity or non-particular service.

In the above embodiment, the number of matching users and the number of purchases with regard to each combination of a commodity and a content are used as a measurement type, while there may be employed a total number of users, for example, with regard to the number of matching users.

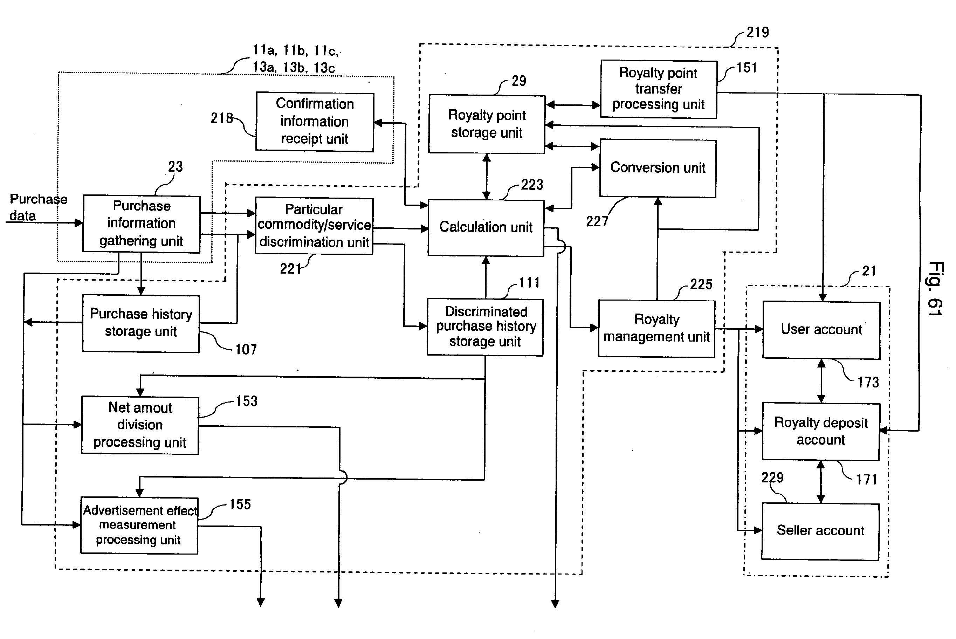

Fig. 61 is a block diagram mainly showing an internal constitution of the center of a point service system according to a fourth embodiment of the present invention.

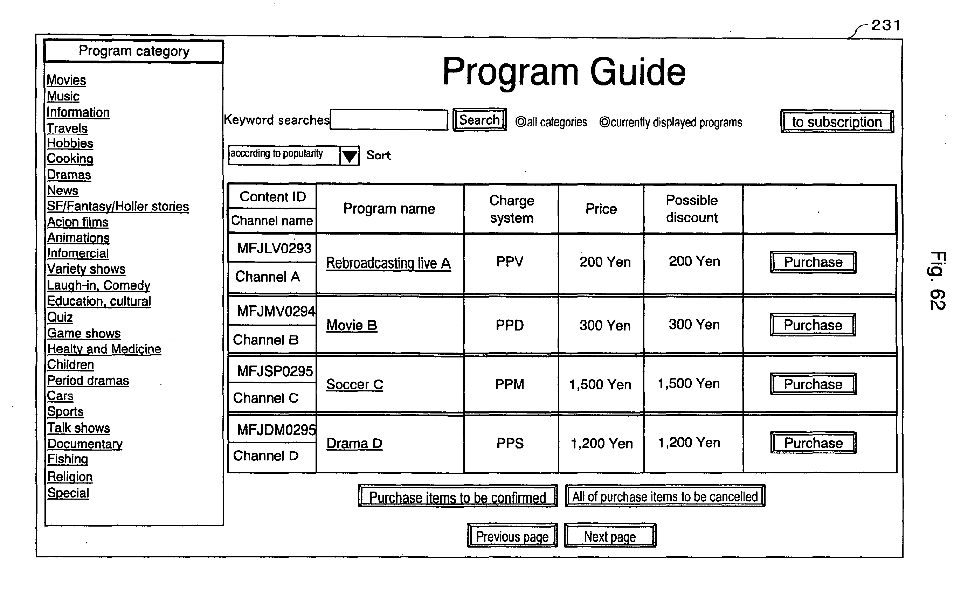

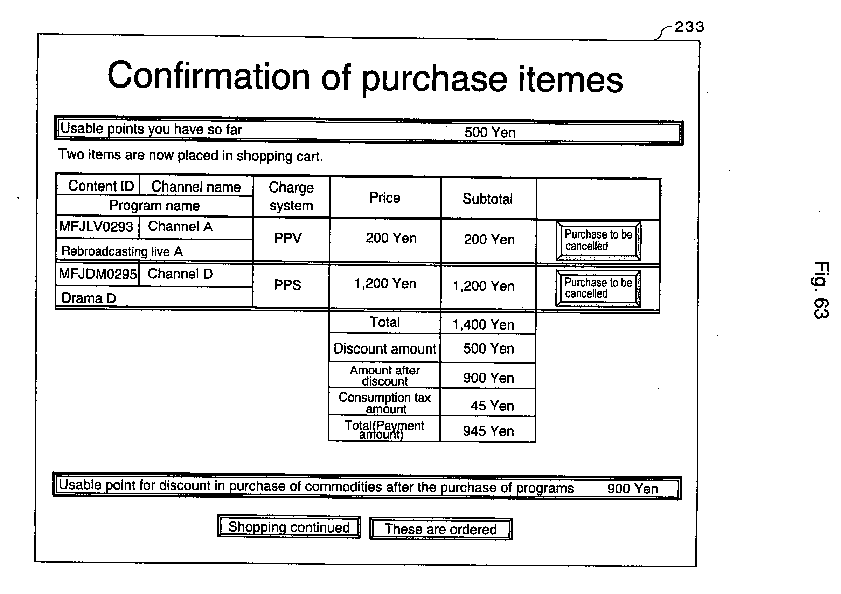

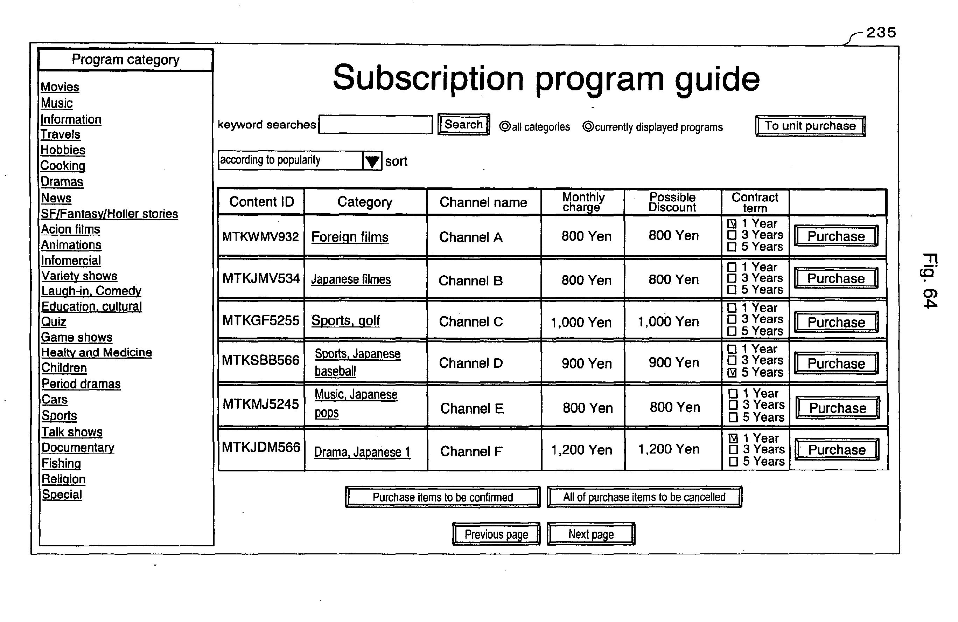

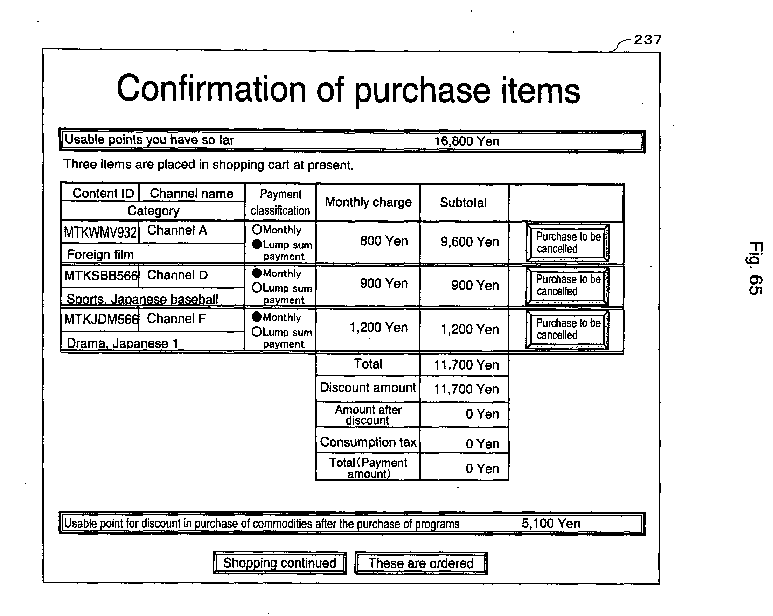

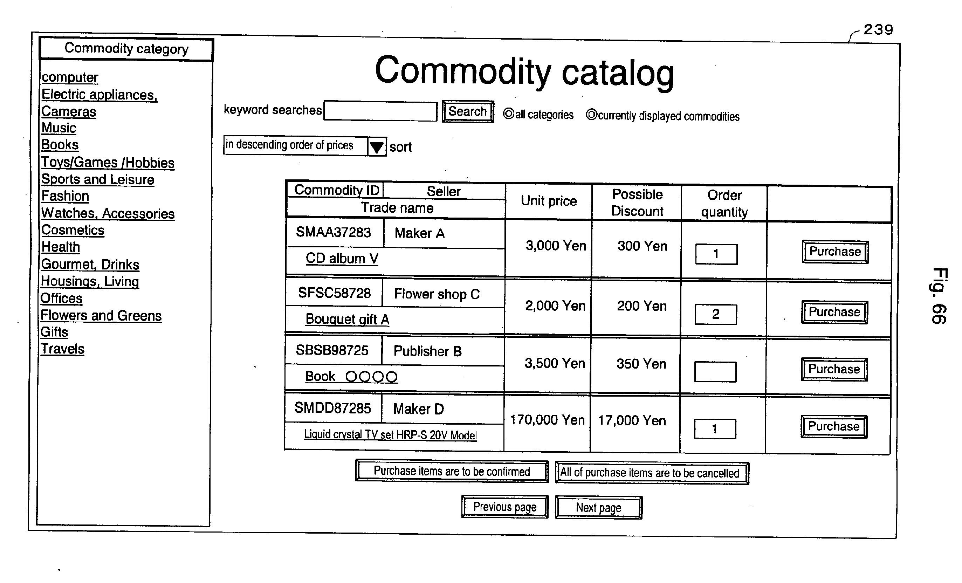

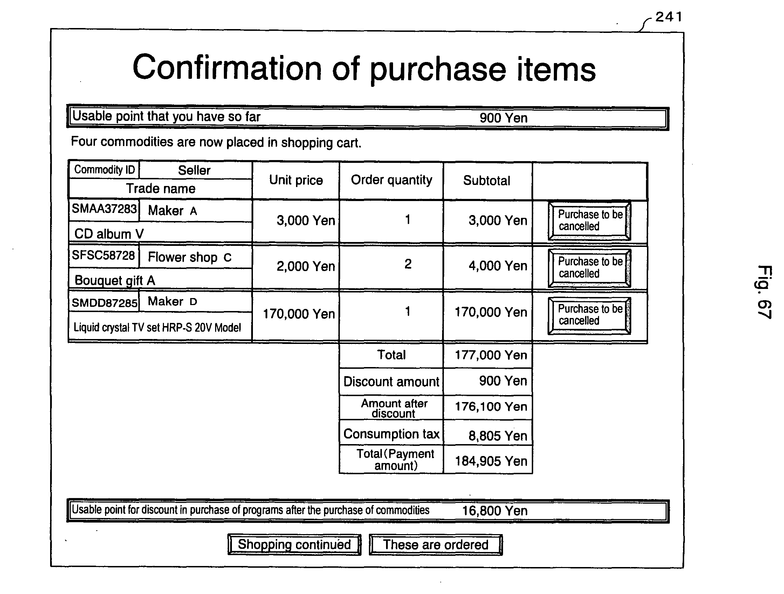

EC sites 11a, 11b, 11c and store terminals 13a, 13b, 13c have a confirmation information receipt unit 218 in addition to the purchase information gathering unit 23. When there is displayed a program guide screen 231 showing contents as particular commodity/service that can be purchased as a unit as shown in Fig. 62, and when the button of "Purchase items to be confirmed" is clicked, the confirmation information receipt unit 218 can display a confirmation screen 233 of the purchased contents shown in Fig. 63. And, when the button of "To subscribe" on the program guide screen 231 is clicked, there is displayed a subscription program guide screen 235 showing contents that can be subscribed to as a particular commodity/service shown in Fig. 64, so that the confirmation information receipt unit 218 can similarly display a confirmation screen 237 of purchased items shown in Fig. 65 when the button of "Purchase items to be confirmed" is clicked. Further, when there is displayed a commodity catalog screen 239 showing commodities that can be purchased as non-particular commodity/service shown in Fig. 66, and when the button of "Purchase items to be confirmed" is clicked, the confirmation information receipt unit 218 can display a confirmation screen 241 of purchase items shown in Fig. 67.

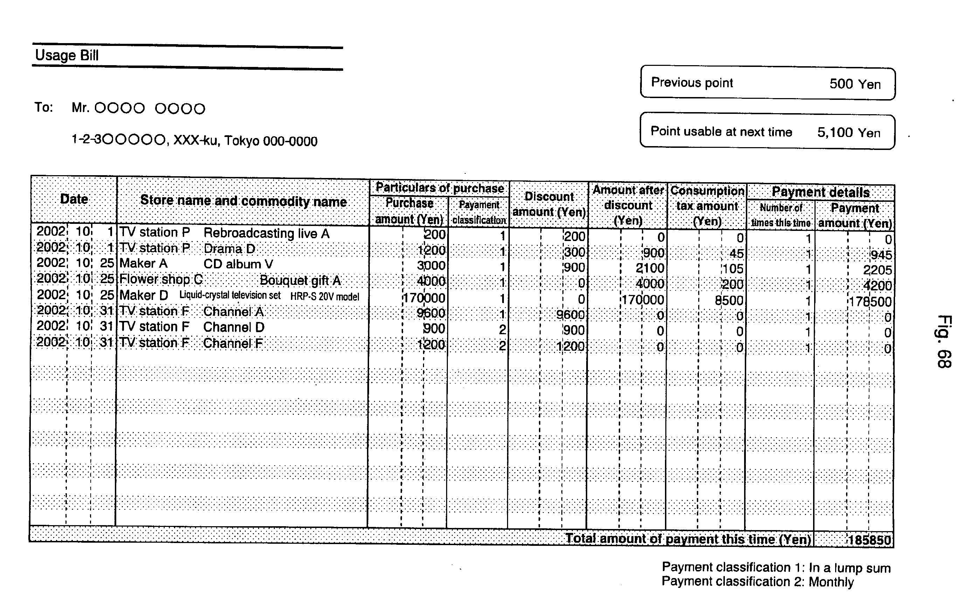

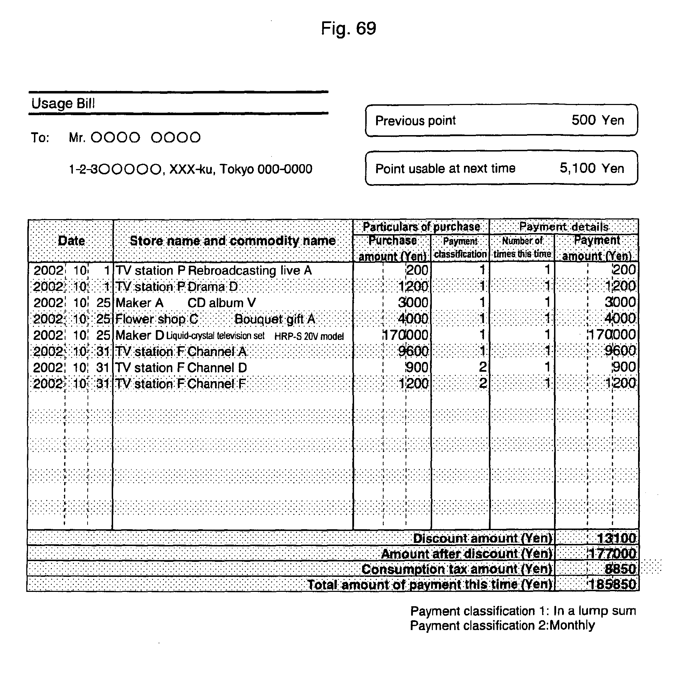

In addition, when the button of "These are ordered" is clicked in the confirmation screen 233 of purchased items in Fig. 63, the confirmation screen 237 of purchased items in Fig. 65 and the confirmation screen 241 of purchased items in Fig. 67, for example, a usage bill shown in Fig. 68 or Fig. 69 is sent to the user 3.

While Fig. 62, etc., give an image of a display on a screen of a television set or personal computer, there may be employed a display on screens of hand-held terminals such as PDA, and the like.

The center 219 has a purchase history storage unit 107, a net amount division processing unit 153, an advertisement effect measurement processing unit 155, a particular commodity/service discrimination unit 221, a discriminated purchase history storage unit 111, a calculation unit 223, a royalty point storage unit 29, a royalty point transfer processing unit 151, a conversion unit 227 and a royalty management unit 225.

The above particular commodity/service discrimination portion 221 fills the roles of the particular commodity/service discrimination unit 25 in Fig. 47 and the particular commodity/service discrimination unit 109 in Fig. 48. The above calculation unit 223 fills the roles of the calculation portion 27 in Fig. 47 and the calculation portion 113 in Fig. 48. The above royalty management unit 225 fills the roles of the royalty management unit 31 in Fig. 47 and the royalty management unit 115 in Fig. 48.

The royalty management unit 225 and the royalty point transfer processing unit 151 output information on account transfer, etc., to a banking institution 21, and the banking institution 21 can carry out processing of transfer to a user account 173, a royalty deposit account 171 or a seller account 229.

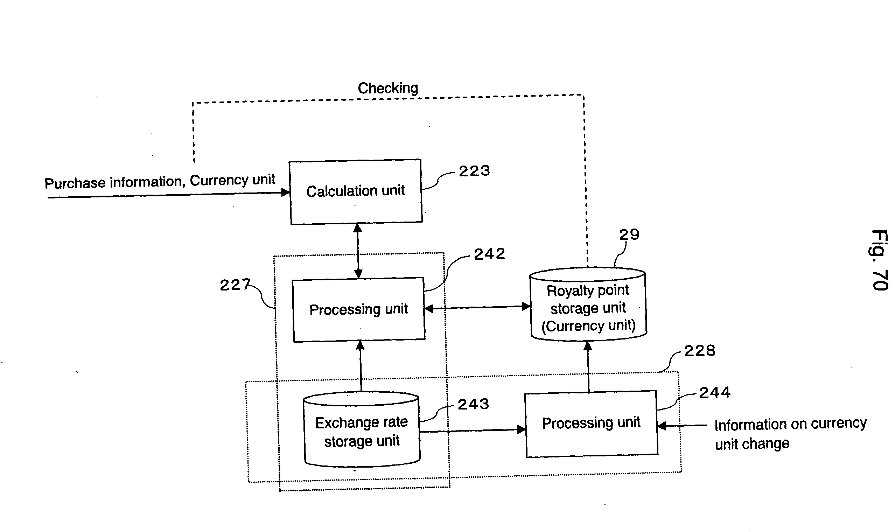

Fig. 70 is a block diagram showing a conversion unit 227 in Fig. 61 and a constitution related thereto.

The conversion unit 227 has a processing unit 242 and an exchange rate storage unit 243. The processing unit 242 receives purchase information and a currency unit used in the information through the calculation unit 223 and checks the received currency unit with the current unit of royalty point stored in the royalty point storage unit 29. When the currency units differ, the processing unit 242 converts the royalty point to a current unit used in the EC sites 11a, 11b, 11c and the store terminals 13a, 13b, 13c according to an exchange rate stored in the exchange rate storage unit 243, and outputs the result to the calculation unit 223. The exchange rate storage unit 243 may be provided in the royalty management unit 225.

The calculation unit 223 performs calculation processing using the converted royalty point and outputs the royalty point determined by the calculation to the conversion unit 227. The processing unit 242 of the conversion unit 227 performs reverse conversion to convert the currency unit of the royalty point determined by the calculation back to the currency unit in the royalty point storage unit 29 and causes the royalty point storage unit 29 to store the royalty point obtained by the reverse conversion.

When prepaid RP is increased after the transfer to the R deposit account of the managing organization as shown in Figs. 22 to 27, the royalty management unit 225 which has received a notification on completion of the transfer from the banking institution 21 can manage the conversion unit 227 so that the conversion unit 227 causes the royalty point storage unit 29 to store the value of the royalty point obtained by the reverse conversion.

Further, there may be provided a current unit changing unit 228 in place of, or together with, the conversion unit 227 as shown in Fig. 70, so that a user (consumer) can input current unit change information to change currency units in the royalty point storage unit 29 as required. The currency unit change unit 228 has a processing unit 244 and an exchange rate storage unit 243, and the processing unit 244 performs processing to change the currency units in the royalty point storage unit 29 with using the currency units before and after such a change in the inputted current unit change information and an exchange rate stored in the exchange rate storage unit 243.

Preferred examples with regard to the main constitution of the point service system according to the above embodiment of the present invention will be shown below.

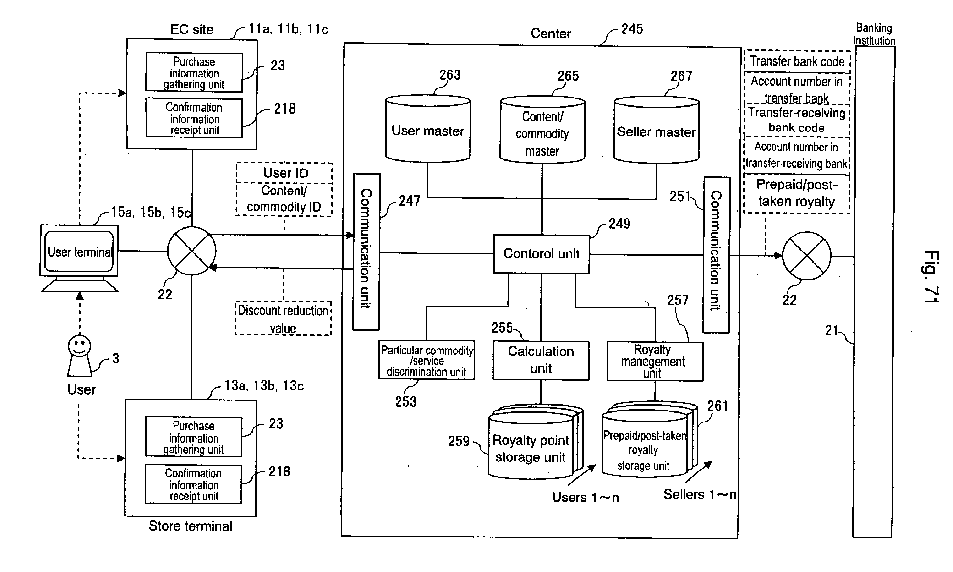

Fig. 71 is a block diagram showing the constitution of the point service system according to a first example of the present invention.

A user 3 can access EC sites 11a, 11b, 11c through a user terminals 15a, 15b, 15c and can purchase a content as a particular commodity/service and a commodity as a non-particular commodity/service. The EC sites 11a, 11b, 11c have a purchase information gathering unit 23 and a confirmation information receipt unit 218. The user 3 can make confirmation through the confirmation information receipt unit 218, and the purchase information gathering unit 23 of the EC site can obtain purchase information on the basis of purchase data inputted. Further, the user 3 can purchase a content as a particular commodity/service and a commodity as a non-particular commodity/service in stores having store terminals 13a, 13b, 13c.

A center 245 has a communication unit 247 that can communicate with the EC sites 11a, etc., and the store terminals 13a, etc., through a communication network 22, a particular commodity/service discrimination unit 253, a royalty point storage unit 259 for storing royalty point for each of 1 to n users, a calculation unit 255 connected to the royalty point storage unit 259, a prepaid/post-taken royalty storage unit 261 for storing prepaid/post-taken royalty for each of 1 to n sellers, a royalty management unit 257 connected to the prepaid/post-taken royalty storage unit 261, a user master 263 for storing information on the users, a content/commodity master 265 for storing information on contents/commodities, a seller master 267 for storing information on the sellers, a communication unit 251 that can transmit information to a banking institution 21 through the communication network 22 and a control unit 249 for controlling these.

In this example, the calculation portion 255 is provided in the center 245. In this constitution, data can be processed on demand. The flow of the process will be briefly explained below.

Using purchase information (including user ID and content/commodity ID) gathered by the purchase information gathering unit 23, the particular commodity/service discrimination unit 253 judges whether the purchase information is information on a particular commodity/service or whether it is information on a non-particular commodity/service. Then, the calculation unit 255 connected to the royalty point storage unit 259 performs calculation processing, and the resultant discount reduction value is shown to a user 3 through the confirmation information receipt unit 218. Then, the royalty point is updated and stored in the royalty point storage unit 259. Then, the royalty management unit 257 operates to send transfer information (including a transfer bank code, the account number in the transfer bank, a transfer-receiving bank code, the account number in the transfer-receiving bank and prepaid/post-taken royalty) to the banking institution 21.

The user terminals 15a, 15b, 15c may be hand-held terminals, or the like.

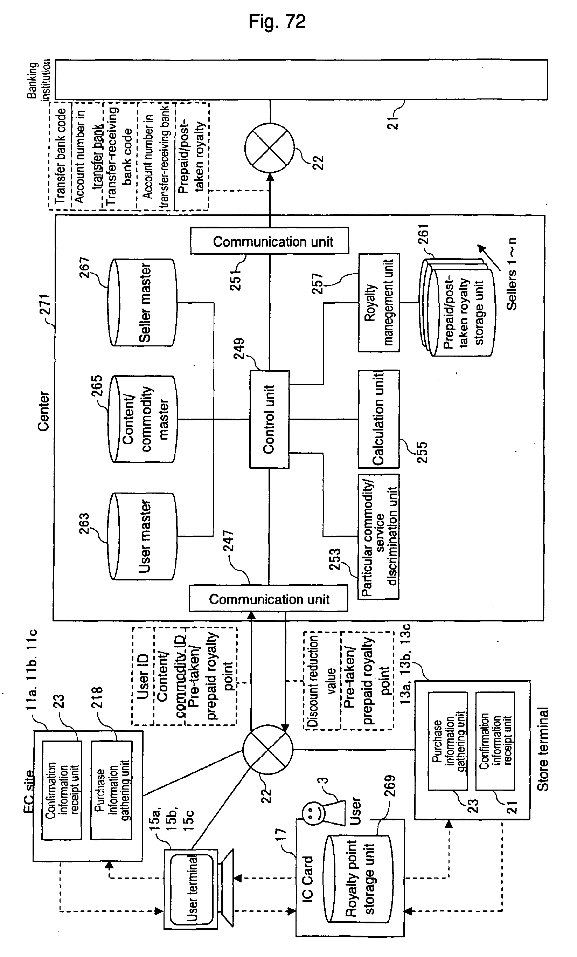

Fig. 72 is a block diagram showing a constitution of a point service system according to a second example of the present invention. Points different from those in the example shown in Fig. 71 will be explained in particular.

In this example, an IC card 17 is used. The IC card 17 has a royalty point storage unit 269, and the user 3 can use the IC card 17 in the user terminals 15a, etc., and the store terminals 13a, etc. The center 271 allows the communication unit 247 to perform on-demand data communication of pre-taken/prepaid royalty point between the communication network 22 that the center 271 has and the royalty point storage unit 269 of the IC card 17 through the calculation unit 255.

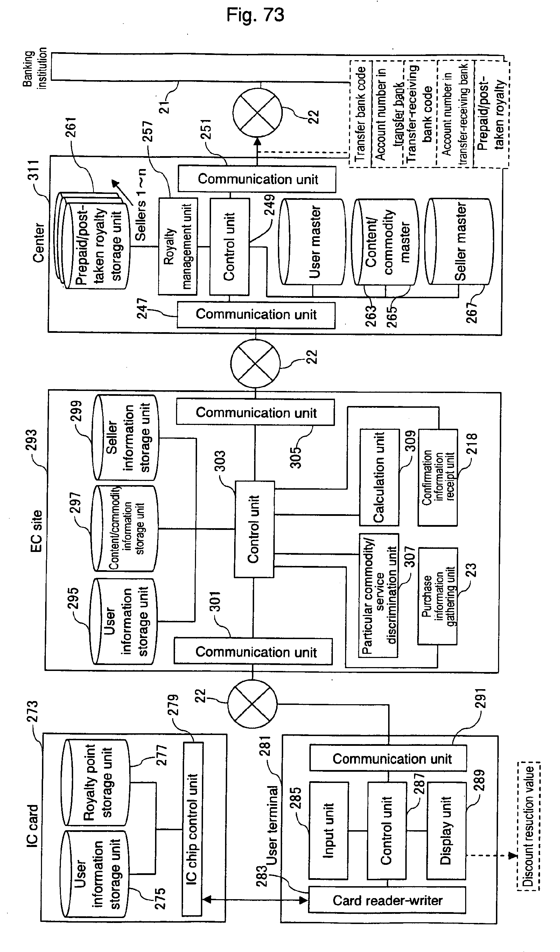

Fig. 73 is a block diagram showing a constitution of a point service system according to a third example of the present invention. Points different from those in the example shown in Fig. 72 will be explained below.

In this example, data processing can be performed on demand, and an EC site 293 is provided with a calculation portion 309. The EC site 293 has a particular commodity/service discrimination unit 307, a user information storage unit 295, a content/commodity information storage unit 297, a seller information storage unit 299, a communication unit 301 that can perform information communication with a user terminal 281 through a communication network 22, a communication unit 305 that can perform information communication with a center 311 through the communication network 22 and a control unit 303 for controlling a purchase information gathering unit 23 and a confirmation information receipt unit 218.

And, an IC card 273 has a user information storage unit 275, a royalty point storage unit 277 and an IC chip control unit 279. Further, the user terminal 281 has a card reader-writer 283 for reading and writing data in/to the IC card 273, an input unit 285, a control unit 287 and a display unit 289.

The IC card 273 may be replaced with a device having an IC chip incorporated thereto.

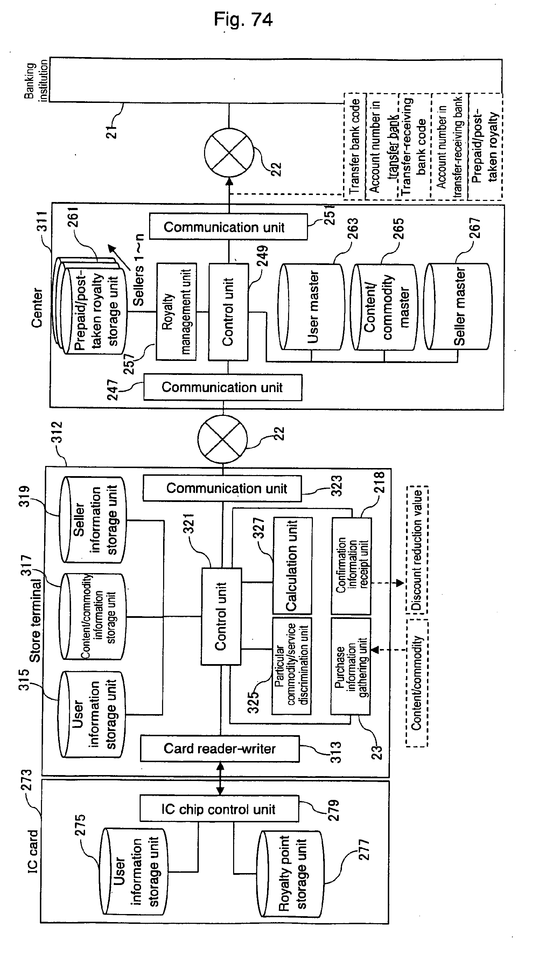

Fig. 74 is a block diagram showing a constitution of a point service system according to a fourth example of the present invention. Points different from those in the example shown in Fig. 73 will be particularly explained below.

In this example, data processing can be performed on demand, and the store terminal 312 is provided with a calculation unit 327. The store terminal 312 has a particular commodity/service discrimination unit 325, a user information storage unit 315, a content/commodity information storage unit 317, a seller information storage unit 319, a card reader-writer 313 for reading and writing data in/to the IC card 273, a communication unit 323 that can perform information communication with a center 311 through a communication network 22 and a control unit 321 for controlling a purchase information gathering unit 23 and a confirmation information receipt unit 218.

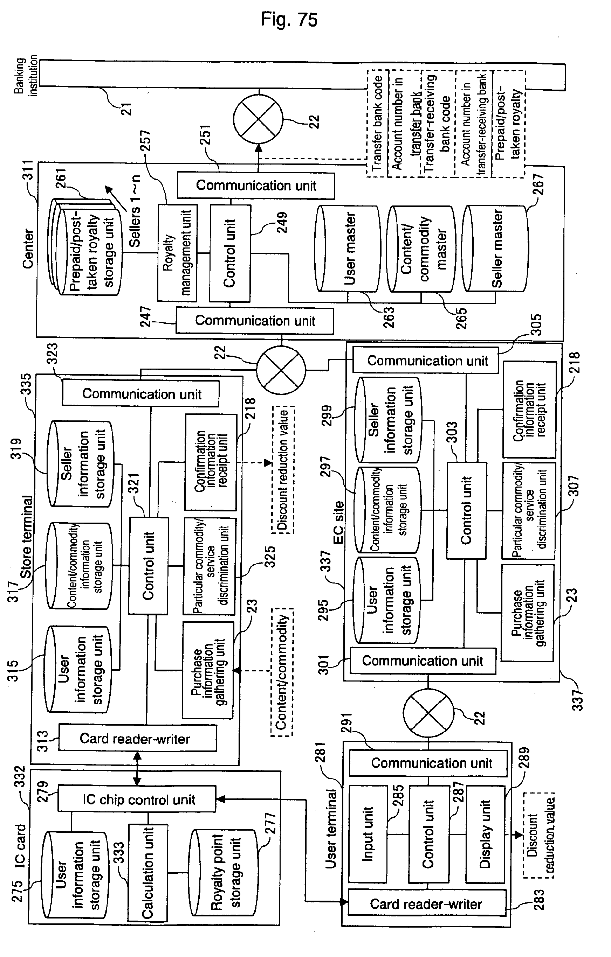

Fig. 75 is a block diagram showing a constitution of a point service system according to a fifth example of the present invention. Points different from those in the examples shown in Figs. 73 and 74 will be particularly explained below.

In this example, an IC card 332 is internally provided with a calculation unit 333. The store terminal 335 and the EC site 337 are accordingly not provided with any calculation portion.

The place where the calculation unit is provided is not limited to the above-described one, and it may be provided, for example, in the user terminal.

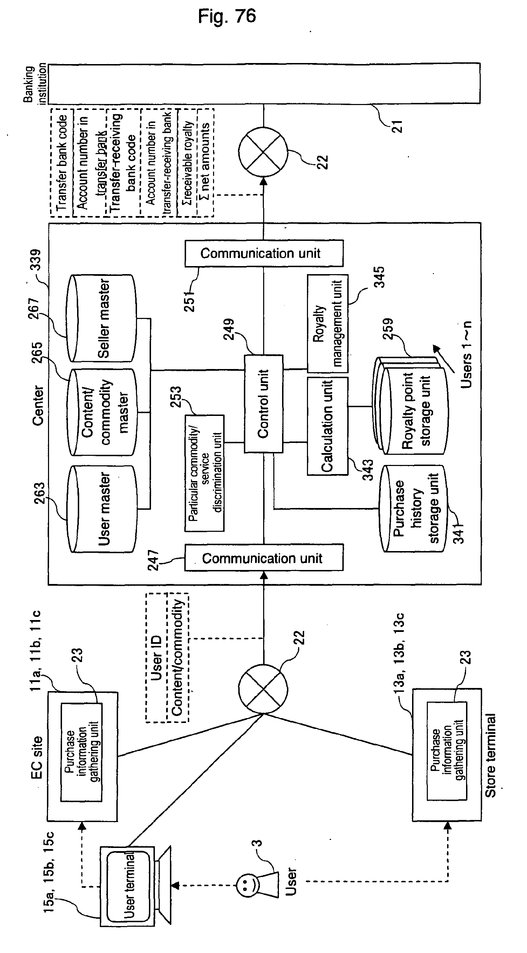

Fig. 76 is a block diagram showing a constitution of a point service system according to a sixth example of the present invention. Points different from those of the example shown in Fig. 71 will be particularly explained below.

In this example, not processing on demand but processing at regular intervals is carried out. EC sites 11a, 11b, 11c and store terminals 13a, 13b, 13c are therefore not provided with any confirmation information receipt unit. Further, a purchase history storage unit 341 is provided in a center 339. A calculation unit 343 in the center 339 performs calculation processing, and then a royalty management unit 345 outputs "Σreceivable royalty" and "Σnet amounts" as transfer information to a banking institution 21. Naturally, the center 339 can notify "Σprepaid royalty" to the banking institution 21 although such is not shown in Fig. 76, and a prepaid royalty storage unit may be provided in the center 339.

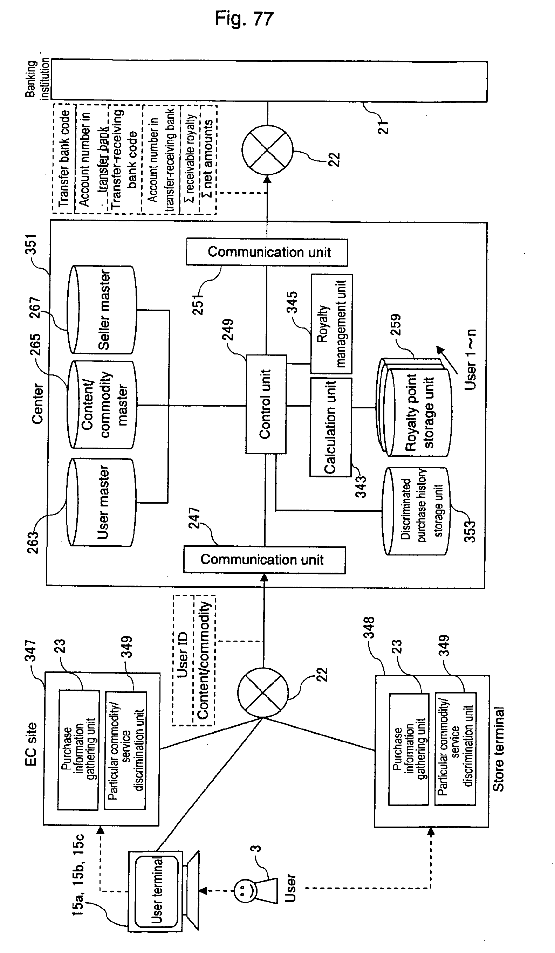

Fig. 77 is a block diagram showing a constitution of a point service system according to a seventh example of the present invention. Points different from those of the example shown in Fig. 76 will be particularly explained below.

In this example, processing is carried out at regular intervals. However, different from the case in Fig. 76, a particular commodity/service discrimination unit 349 is provided in each of the EC site 347 and the store terminal 348. A center 351 has a discriminated purchase history storage unit 353 in place of the purchase history storage unit.

In the processing at regular intervals, the calculation unit may not be provided in the center, either.

In the above point service system, it is sufficient that a constitution of the calculation unit, etc., should be provided in any of the center, EC site, store terminal, user terminal, etc., which constitute the system, and it is sufficient that the constitution of the calculation unit, etc., should be connected each other through the communication network.

In the above point service system, the calculation unit may be interpreted as a calculation device, and a system having the calculation unit and the royalty management unit may be interpreted as a calculation management system.

An advertisement-income-based free content business where the point service system according to the above embodiments (including examples) effectively functions will be explained below.

Multi-channel broadcasting based on BS, CS, ground wave and broadband transmission of Internet is rapidly advancing due to digitalization in recent years. In contrast, the entire advertisement charge is not in proportion to an increase in the number of channels, and audience ratings are decentralized. As a result, the advertisement income per channel tends to decrease.

Under the circumstances, for suppressing a decrease in advertisement income, there are devised measures to secure major contents and make use of the ability of the major contents to pull in more customers in order to have sponsors contribute advertisement charges.

Since, however, the number of the above major contents is small, devastating competitions for acquiring the contents increase the cost for the broadcast right thereof, or the cost for content productions amounts to a vast amount of money due to content production competitions, and when an advertisement charge alone is a last resort, it is difficult to recover the large cost for the broadcast right or the large production cost.

A pay service according to the above embodiments, which does not rely on an advertisement income as an income source, or a pay service which is according to the above embodiments and also relies on an advertisement income can constitute a new profit business model that can overcome the above problem.

That is, due to the calculation unit 27, etc., a service is a pay service on a content supplier side (particular side), but a viewer (consumer) gets a service close to a free content service since a discount is provided, so that pay content services can be promoted.

Due to the net amount division processing unit 153, further, a sponsor (non-particular side) can expect to recover an advertisement charge, so that a large amount of advertisement expenses can be easily inputted. Further, a production side (particular side) can easily recover an invested cost for a broadcast right or production.

Due to the net amount division processing unit 153, further, a sponsor (non-particular side) can recover an advertisement charge portion on the basis of the net amount of content sales even if the sponsor carries out promotional activities with regard to both an advertisement and point incentive or places an advertisement on a content on which the advertisement can be placed, so that the sponsor can bear the point incentive expenses alone. In addition thereto, when a net amount after the recovery of the advertisement charge comes to be divided, the point incentive expense can be decreased or can be finally recovered.

Due to the advertisement effect measurement processing unit 155, further, an object commodity on which an advertisement is placed (particular side) and an object commodity to be advertised (non-particular side) are linked, and purchase matching of these is implemented, whereby there can be realized an advertisement effect measurement model in which there are measured achievements such as the number of users who have purchased object commodities advertised since he or she had viewed the advertisement, the number of the object commodities and sales amount thereof, and the like. An advertisement company is therefore led to a new fee business.

A further developed example with regard to the above embodiments will be explained below.

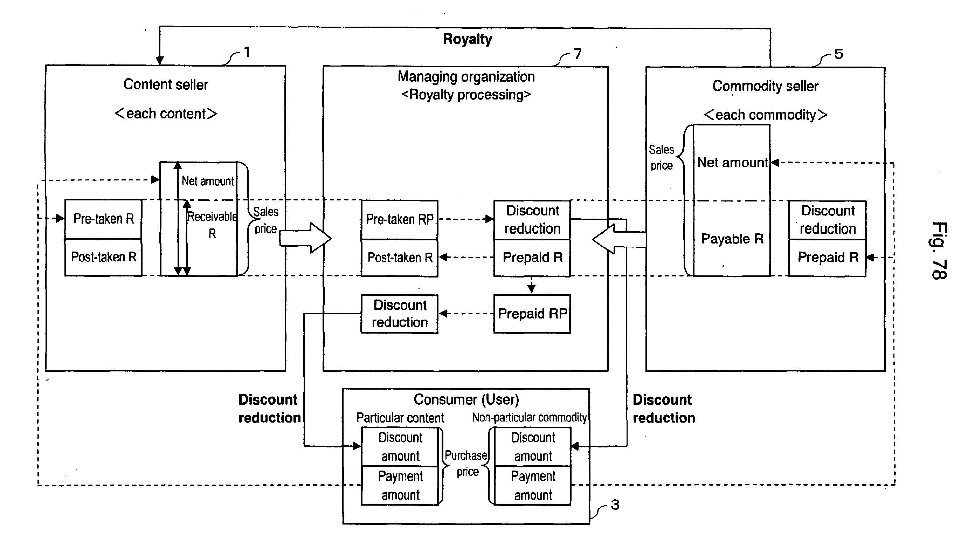

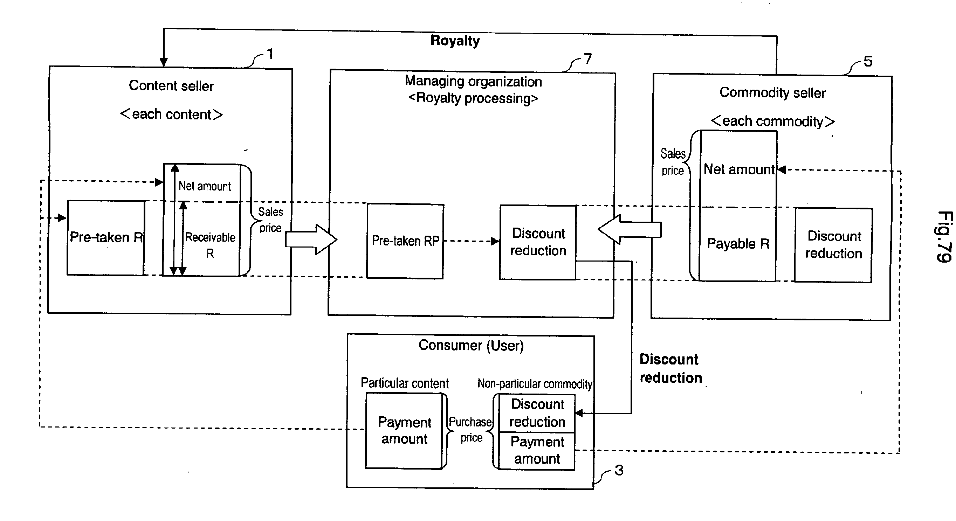

In the conceptual diagrams shown in Figs. 1 and 3, the sales price of the content sold by the content seller 1 as a particular commodity or particular service agrees with the value of receivable R, while the sales prices may be greater than the value of receivable R as shown in Figs. 78 and 79. In these cases, the net amount received by the content seller 1 agrees with the sales price of the content, and it is sufficient that a difference between the net amount and the receivable R should be borne by the consumer (user) 3. The processing shown in Figs. 12, 14, 28 and 29 can be modified according to the above concept.

In the processing shown in Figs. 37 and 38 and the processing shown in Figs. 44 and 45, the sales price of the content sold by the content seller 1 as a particular commodity or particular service also agrees with the value of receivable R, while the sales prices may be greater than the value of receivable R. In these cases, however, the net amount received by the content seller 1 agrees with the sales prices of the content, and it is sufficient that a difference between the net amount and the receivable R should be borne by the consumer (user) 3. In this case, as Σnet amounts in Figs. 42 and 43, the net amount of a particular portion can be processed on the basis of a form based on a sales price of the particular portion or a form in which a value obtained by deducting receivable R from the sales price of a particular portion is determined in advance and receivable R is added thereto later, besides a non-particular portion.

In all of the above embodiments, the maximum discount rate [(receivable R)/(sales price on particular side), (payable R)/(sales price on non-particular side)] for sales prices of the particular commodity or particular service and the non-particular commodity or non-particular service is given as an example, and it shall not be limited to a combination of 100 % and 10 % shown, for example, in Fig. 1.

The method for the advertisement employed for the advertisement sponsor charge in the embodiment shown in Figs. 54 to 57 and the method for the advertisement in the embodiment shown in Figs. 58 to 60 is not limited to a commercial message advertisement, and it may be a so-called product placement. The above product placement is not a commercial message but refers to a method in which a commodity, or the like is introduced in a program (content), and for example, a business organization puts a commodity in a TV program or a movie by paying a fee therefor.

In all of the above embodiments, when the pre-taken royalty point or the prepaid royalty point are accumulated, or when they are used for reduction as a discount, the consumer (user) and an increase or decrease in the point value have a one-to-one correspondence, while they shall not be limited thereto. For example, there is a case where family members share the royalty point. As a specific means, when a parent has the user ID of "ABC" and when his or her child has the user ID of "DEF", the right of use of RP point is set, and it can be arranged that the condition of the right of use of RP point is that "the user ID is ABC or DEF".

In all of the above embodiments, the unit for converting the point value to an amount of money is 1 Yen /point, so that the numerical magnitude of the point value is substantially equivalent to a value obtained by converting it to an amount of money, and the values of prepaid RP, etc., may be replaced with values obtained by converting the prepaid RP, etc., to amounts of money.

In all of the above embodiments, the unit for converting the point value to an amount of money is 1 Yen /point, while the unit shall not be limited thereto.

In all of the above embodiments, the amount of money to be paid by a consumer is reduced for reduction as a discount, while the reduction as a discount shall not be limited thereto. A coupon (including a gift certificate) equivalent to a discount reduction value may be issued without reducing the amount to be paid by a consumer.

In embodiments shown Figs. 22 to 27, Figs. 40 to 43, Fig. 50, Fig. 61 and Figs. 71 to 77, the transfer or transfer processing by the banking institution (including the settlement agency in Figs. 40 and 41) can be performed by means of transfer or transfer processing means, or the like. Further, the information communication between the card company and the banking institution can be implemented by means of data communication using an information communication network.

In the above embodiments, the processing on demand shown in Figs. 12, 14, etc., and the processing at regular intervals shown in Fig. 37, etc., may be performed in combination. In this case, there can be employed a constitution in which the constitution in Fig. 5 and the constitution in Fig. 30 are combined, discrimination data for discriminating between the processing on demand and the processing at regular intervals, outputted from the purchase information gathering unit 23, is inputted to the calculation unit 27, 113, and the calculation unit 27 operates when the processing on demand is performed or the calculation unit 113 operates when the processing at regular intervals is performed.

The present invention shall not be limited to the above embodiments (examples) and can be naturally altered or modified so long as the alteration or modification is in the scope of the technical thought described in claims.

Industrial Applicability

According to the calculation device or calculation method for use in the above point or coupon service system, when the service is practiced, there can be sold or provided a commodity or service which is a commodity or service adaptable to the issuance of a point or coupon and which can do without the burden of an incentive cost, and a particular commodity or particular service determined as a commodity or service that causes no decrease in net amount by making a discount can be improved in the ability to pull in more customers and repetition of sales.

According to the above calculation device or calculation method, when the service is practiced it is defined that a single or plurality of non-particular commodities or non-particular services is/are associated with a particular commodity or particular service so as to bear the burden of royalty payment for the particular commodity or particular service, and a value of pre-taken royalty point or a value obtained by converting it to an amount of money can be generated for enabling the discount reduction in selling or providing the non-particular commodity or non-particular service when the particular commodity or particular service is sold or provided, whereby the non-particular commodity or non-particular service can be improved in recognition by making use of the ability of the particular commodity or particular service to pull in more customers through the above pre-taken royalty point.

According to the above calculation device or calculation method, further, when the service is practiced the linkage of the particular commodity or particular service and the non-particular commodity or non-particular service gets intensified as they are sold or provided, and the cost effectiveness of the incentive cost borne by the non-particular commodity or non-particular service is increased. As a result, the sales of the particular commodity or particular service and the non-particular commodity or non-particular service are promoted, and the circulation thereof activates consumption activities.

**Claims**

1. A calculation device for use in a point or coupon service wherein a point or coupon for making a discount can be generated when selling a commodity or providing a service; and

further wherein there are a particular commodity or particular service with regard to which it is agreed that the particular commodity or particular service is a commodity or service that causes no decrease in net amount by discount reduction, and a single or plurality of non-particular commodities or non-particular services which is/ are linked to said particular commodity or particular service so as to bear the burden of royalty payment for the particular commodity or particular service;

it is possible to generate a value of a pre-taken royalty point or a value of amount of money obtained by conversion thereof when said particular commodity or particular service is sold or provided, the pre-taken royalty point enabling a discount reduction in selling or providing said non-particular commodity or non-particular service;

it is possible to generate a value of prepaid royalty point or a value of amount of money obtained by conversion thereof when said non-particular commodity or non-particular service is sold or provided, the prepaid royalty point enabling a discount reduction in selling or providing said particular commodity or particular service;

it is agreed that there is receivable royalty when said particular commodity or particular service is sold or provided, the receivable royalty being equivalent to a sales price or provision price of said particular commodity or particular service; and

it is agreed that there is payable royalty when said non-particular commodity or non-particular service is sold or provided, the payable royalty being set at a smaller amount of money than a sale price or provision price of said non-particular commodity or non-particular service;

the calculation device being a calculation device for calculating discount reduction values including a discount made by issuing a coupon in selling or providing said particular commodity or particular service and said non-particular commodity or non-particular service, values of predetermined royalties for calculating net amounts brought by selling or providing said particular commodity or particular service and said non-particular commodity or non-particular service, and a value of said pre-taken royalty point or a value of amount of money obtained by conversion thereof and a value of said prepaid royalty point or a value of amount of money obtained by conversion thereof after the sales of or provision with said particular commodity or particular service and said non-particular commodity or non-particular service;

the calculation device comprising;

discount reduction value calculation means for performing predetermined operations to calculate a discount reduction value obtained by deducting a value of said pre-taken royalty point or a value of amount of money obtained by conversion thereof and a discount reduction value obtained by deducting a value of said prepaid royalty point or a value of amount of money obtained by conversion thereof;

royalty calculation means for calculating predetermined royalty values to calculate a net amount obtained by selling or providing said particular commodity or particular service such that the net amount is equivalent to an amount of money of said receivable royalty and to calculate a net amount obtained by selling or providing said non-particular commodity or non-particular service such that the net amount is equivalent to an amount of money obtained by deducting an amount of money of said payable royalty from a sales price or provision price of said non-particular commodity or non-particular service; and

royalty point calculation means for performing predetermined operation processing with regard to a value of said pre-taken royalty point or a value of amount of money obtained by conversion thereof and a value of said prepaid royalty point or a value of amount of money obtained by conversion thereof before the sale of a commodity or the provision with a service, with regard to the discount reduction value calculated by said discount reduction value calculation means, and with regard to an amount of money of said receivable royalty and an amount of money of said payable royalty, to calculate a value of said pre-taken royalty point or a value of amount of money obtained by conversion thereof and a value of said prepaid royalty point or a value of amount of money obtained by conversion thereof, these values being obtained after the sale of a commodity or the provision with a service;

wherein said discount reduction value calculation means determines a discount reduction value obtained by deducting a value of said prepaid royalty point or a value of amount of money obtained by conversion thereof each time when said particular commodity or particular service is sold or provided;

said royalty calculation means determines a discount reduction value caused by deducting a value of said prepaid royalty point or a value of amount of money obtained by conversion thereof, as a post-taken royalty and offsets an amount of money of said post-taken royalty and the discount reduction value caused by deducting a value of said prepaid royalty point or a value of amount of money obtained by conversion thereof, to calculate the net amount obtained by selling or providing said particular commodity or particular service such that the net amount is equivalent to an amount of money of said receivable royalty each time when said particular commodity or particular service is sold or provided;

said royalty point calculation means decreases a value of prepaid royalty point or a value of amount of money obtained by conversion thereof before the sales of or provision with said particular commodity or particular service, by a portion corresponding to the discount reduction value, to calculate a value of prepaid royalty point or a value of amount of money obtained by conversion thereof after the sales of or provision with said particular commodity or particular service; and adds a portion corresponding to a value obtained by deducting the discount reduction value from the amount of money of said receivable royalty to a value of pre-taken royalty point before the sales of or provision with said particular commodity or particular service or a value of amount of money obtained by conversion thereof, to calculate a value of prepaid royalty point after the sales of or provision with said particular commodity or particular service or a value of amount of money obtained by conversion thereof; each time when said particular commodity or particular service is sold or provided;

said discount reduction value calculation means determines a discount reduction value caused by decreasing a value of said pre-taken royalty point or a value of amount of money obtained by conversion thereof, each time when said non-particular commodity or non-particular service is sold or provided;

said royalty calculation means determines prepaid royalty by deducting a discount reduction value caused by decreasing a value of said pre-taken royalty point or a value of amount of money obtained by conversion thereof, from an amount of money of said payable royalty; and deducts a discount reduction value caused by decreasing an amount of money of said prepaid royalty and a value of said pre-taken royalty point or a value of amount of money obtained by conversion thereof from a sales price or provision price of said non-particular commodity or non-particular service, to calculate a net amount brought by the sales of or provision with said non-particular commodity or non-particular service such that the net amount is equivalent to an amount of money obtained by deducting an amount of payable royalty from the sales price or provision price of said non-particular commodity or non-particular service; each time when said non-particular commodity or non-particular service is sold or provided; and

said royalty point calculation means decreases a value of pre-taken royalty point or a value of amount of money obtained by conversion thereof before the sales of or provision with said non-particular commodity or non-particular service by a portion corresponding to the discount reduction value, to calculate a value of the pre-taken royalty point or a value of amount of money obtained by conversion thereof after the sales of or provision with said non-particular commodity or non-particular service; and adds a portion corresponding to a value caused by deducting the discount reduction value from an amount of money of said payable royalty to a value of prepaid royalty point or a value of amount of money obtained by conversion thereof before the sales of or provision with said non-particular commodity or non-particular service, to calculate a value of the prepaid royalty point or a value of amount of money obtained by conversion thereof after the sales of or provision with said non-particular commodity or non-particular service; each time when said non-particular commodity or non-particular service is sold or provided.

**2.** A calculation device for use in a point or coupon service wherein a point or coupon for making a discount can be generated in selling a commodity or providing a service; and

further wherein there are a particular commodity or particular service with regard to which it is agreed that the particular commodity or particular service is a commodity or service that causes no decrease in net amount by discount reduction, and a single or plurality of non-particular commodities or non-particular services which is/ are linked to said particular commodity or particular service so as to bear the burden of royalty payment for the particular commodity or particular service;

it is possible to generate a value of a pre-taken royalty point or a value of amount of money obtained by conversion thereof by selling or providing said particular commodity or particular service, the pre-taken royalty point enabling a discount reduction in selling or providing said non-particular commodity or non-particular service;

it is possible to generate a value of prepaid royalty point or a value of amount of money obtained by conversion thereof by selling or providing said non-particular commodity or non-particular service, the prepaid royalty point enabling a discount reduction in selling or providing said particular commodity or particular service; and

it is agreed that there is receivable royalty when said particular commodity or particular service is sold or provided, the receivable royalty being equivalent to a sales price or provision price of said particular commodity or particular service; and

it is agreed that there is payable royalty when said non-particular commodity or non-particular service is sold or provided, the payable royalty being set at a smaller amount of money than a sale price or provision price of said non-particular commodity or non-particular service;

the calculation device being a calculation device for calculating discount reduction values including a discount made by issuing a coupon in selling or providing said particular commodity or particular service and said non-particular commodity or non-particular service, a value of said pre-taken royalty point or a value of amount of money obtained by conversion thereof and a value of said prepaid royalty point or a value of amount of money obtained by conversion thereof after the sales of or provision with said particular commodity or particular service and said non-particular commodity or non-particular service, and values of predetermined royalties for calculating net amounts brought by selling or providing said particular commodity or particular service and said non-particular commodity or non-particular service;

said calculation device comprising:

discount reduction value calculation means for comparing; each time when a predetermined term passes; a first sum of a value of amount of money obtained by converting a value of prepaid royalty point carried forward from a term preceding the predetermined term and a total amount of money of payable royalty generated during said predetermined term with a second sum of a value of amount of money obtained by converting a value of pre-taken royalty point carried forward from a term preceding said predetermined term and a total amount of receivable royalty generated during said predetermined term to decide which sum is greater or smaller; the term being long enough for carrying out the sales of or provision with said particular commodity or particular service a plurality of times and the sales of or provision with said non-particular commodity or non-particular service a plurality of times; and determining a value of the sum having a smaller value or a value of one of the first and second sums when the first and second sums have the same values, as a sum total of discount reduction values during said predetermined term;

royalty point calculation means for determining; each time when a predetermined term passes; a point value or an amount of money obtained by conversion thereof which corresponds to a difference between the first sum of a value of amount of money obtained by conversion of a value of prepaid royalty point carried forward from a term preceding said predetermined term and a total amount of payable royalty generated during said predetermined term and the second sum of a value of amount of money obtained by conversion of pre-taken royalty point carried forward from a term preceding said predetermined term and a total amount of receivable royalty generated during said predetermined term, as a value to be carried forward to a next term with respect to the value of said prepaid royalty point or a value of amount of money obtained by conversion thereof or the value of said pre-taken royalty point or a value of amount of money obtained by conversion thereof, included in a larger sum of the first and second sums; the term being long enough for carrying out the sales of or provision with said particular commodity or particular service a plurality of times and the sales of or provision with said non-particular commodity or non-particular service a plurality of times; calculating a value to be carried forward to a next term as zero with respect to a value of said pre-taken royalty point or a value of amount of money obtained by conversion thereof or a value of said prepaid royalty point or a value of amount of money obtained by conversion thereof, included in a smaller sum; and calculating values to be carried forward to a next term to zero with respect to a value of said pre-taken royalty point or a value of amount of money obtained by conversion thereof and a value of said prepaid royalty point or a value of amount of money obtained by conversion thereof when the values of the first and second sums are equal to each other; and

royalty calculation means for determining; each time when a predetermined term passes; a difference between a value of amount of money obtained by conversion of prepaid royalty point carried forward from a term preceding the predetermined term and a value of amount of money obtained by conversion of prepaid royalty point to be carried forward to a next term; the term being long enough for carrying out the sales of or provision with said particular commodity or particular service a plurality of times and the sales of or provision with said non-particular commodity or non-particular service a plurality of times; and calculating the difference as a value of royalty for adjusting a relationship between a total amount of money of said receivable royalty generated during the predetermined term and a total amount of money of said payable royalty generated during said predetermined term, to calculate a total net amount brought by the sales of or provision with said particular commodity or particular service generated during said predetermined term such that the total net amount is equivalent to a total amount of money of said receivable royalty generated during said predetermined term, and to calculate a total net amount brought by the sales of or provision with said non-particular commodity or non-particular service generated during said predetermined term by deducting said total amount of money of said payable royalty generated during said predetermined term from the total amount of money of sales price or provision price of said non-particular commodity or non-particular service generated during said predetermined term.

3. A calculation device for use in a point or coupon service wherein a point or coupon for making a discount can be generated when selling a commodity or providing a service; and

further wherein there are a particular commodity or particular service with regard to which it is agreed that the particular commodity or particular service is a commodity or service that causes no decrease in net amount by discount reduction, and a single or plurality of non-particular commodities or non-particular services which is/are linked to said particular commodity or particular service so as to bear the burden of royalty payment for the particular commodity or particular service;

it is possible to generate a value of a pre-taken royalty point or a value of amount of money obtained by conversion thereof when said particular commodity or particular service is sold or provided, the pre-taken royalty point enabling a discount reduction in selling or providing said non-particular commodity or non-particular service;

it is possible to generate a value of prepaid royalty point or a value of amount of money obtained by conversion thereof when said non-particular commodity or non-particular service is sold or provided, the prepaid royalty point enabling a discount reduction in selling or providing said particular commodity or particular service;

it is agreed that there is receivable royalty when said particular commodity or particular service is sold or provided, the receivable royalty being set at a smaller amount of money than a sales price or provision price of said particular commodity or particular service; and

it is agreed that there is payable royalty when said non-particular commodity or non-particular service is sold or provided, the payable royalty being set at a smaller amount of money than a sale price or provision price of said non-particular commodity or non-particular service;

the calculation device being a calculation device for calculating discount reduction values including a discount made by issuing a coupon in selling or providing said particular commodity or particular service and said non-particular commodity or non-particular service, values of predetermined royalties for calculating net amounts brought by selling or providing said particular commodity or particular service and said non-particular commodity or non-particular service, and a value of said pre-taken royalty point or a value of amount of money obtained by conversion thereof and a value of said prepaid royalty point or a value of amount of money obtained by conversion thereof after the sales of or provision with said particular commodity or particular service and said non-particular commodity or non-particular service,

the calculation device comprising:

discount reduction value calculation means for performing predetermined operations to calculate a discount reduction value obtained by deducting a value of said pre-taken royalty point or a value of amount of money obtained by conversion thereof and a discount reduction value obtained by deducting a value of said prepaid royalty point or a value of amount of money obtained by conversion thereof;

royalty calculation means for calculating predetermined royalty values to calculate a net amount brought by selling or providing said particular commodity or particular service such that the net amount is equivalent to a sale prices or provision price of said particular commodity or particular service and to calculate a net amount brought by selling or providing said non-particular commodity or non-particular service such that the net amount is equivalent to an amount of money obtained by deducting an amount of money of said payable royalty from a sales price or provision price of said non-particular commodity or non-particular service; and

royalty point calculation means for performing predetermined operation processing with regard to a value of said pre-taken royalty point or a value of amount of money obtained by conversion thereof and a value of said prepaid royalty point or a value of amount of money obtained by conversion thereof before the sale of a commodity or the provision with a service, with regard to the discount reduction value calculated by said discount reduction value calculation means, and with regard to an amount of money of said receivable royalty and an amount of money of said payable royalty, to calculate a value of said pre-taken royalty point or a value of amount of money obtained by conversion thereof and a value of said prepaid royalty point or a value of amount of money obtained by conversion thereof, these values being obtained after the sale of a commodity or the provision with a service;

wherein said discount reduction value calculation means determines a discount reduction value obtained by deducting a value of said prepaid royalty point or a value of amount of money obtained by conversion thereof each time when said particular commodity or particular service is sold or provided;

said royalty calculation means determines a discount reduction value caused by deducting a value of said prepaid royalty point or a value of amount of money obtained by conversion thereof, as a post-taken royalty and offsets at least an amount of money of said post-taken royalty and the discount reduction value caused by deducting a value of said prepaid royalty point or a value of amount of money obtained by conversion thereof, to calculate the net amount brought by selling or providing said particular commodity or particular service such that the net amount is equivalent to the sales price or provision price of said particular commodity or particular service which sales price or provision price is greater than said receivable royalty; each time when said particular commodity or particular service is sold or provided;

said royalty point calculation means decreases a value of prepaid royalty point or a value of amount of money obtained by conversion thereof before the sales of or provision with said particular commodity or particular service, by a portion corresponding to the discount reduction value, to calculate a value of prepaid royalty point or a value of amount of money obtained by conversion thereof after the sales of or provision with said particular commodity or particular service; and adds a portion corresponding to a value obtained by deducting the discount reduction value from the amount of money of said receivable royalty to a value of pre-taken royalty point before the sales of or provision with said particular commodity or particular service or a value of amount of money obtained by conversion thereof, to calculate a value of pre-taken royalty point after the sales of or provision with said particular commodity or particular service or a value of amount of money obtained by conversion thereof; each time when said particular commodity or particular service is sold or provided;

said discount reduction value calculation means determines a discount reduction value caused by decreasing a value of said pre-taken royalty point or a value of amount of money obtained by conversion thereof, each time when said non-particular commodity or non-particular service is sold or provided;

said royalty calculation means determines prepaid royalty by deducting a discount reduction value caused by decreasing a value of said pre-taken royalty point or a value of amount of money obtained by conversion thereof, from an amount of money of said payable royalty; and deducts a discount reduction value caused by decreasing an amount of money of said prepaid royalty and a value of said pre-taken royalty point or a value of amount of money obtained by conversion thereof from a sales price or provision price of said non-particular commodity or non-particular service; to calculate a net amount brought by the sales of or provision with said non-particular commodity or non-particular service such that the net amount is equivalent to an amount of money obtained by deducting an amount of payable royalty from the sales price or provision price of said non-particular commodity or non-particular service; each time when said non-particular commodity or non-particular service is sold or provided; and

said royalty point calculation means decreases a value of pre-taken royalty point or a value of amount of money obtained by conversion thereof before the sales of or provision with said non-particular commodity or non-particular service by a portion corresponding to a discount reduction value, to calculate a value of the pre-taken royalty point or a value of amount of money obtained by conversion thereof after the sales of or provision with said non-particular commodity or non-particular service; and adds a portion corresponding to a value caused by deducting the discount reduction value from an amount of money of said payable royalty to a value of prepaid royalty point or a value of amount of money obtained by conversion thereof before the sales of or provision with said non-particular commodity or non-particular service, to calculate a value of the prepaid royalty point or a value of amount of money obtained by conversion thereof after the sales of or provision with said non-particular commodity or non-particular service, each time when said non-particular commodity or non-particular service is sold or provided.

4. A calculation device for use in a point or coupon service in which a point or coupon for making a discount can be generated in selling a commodity or providing a service; and

further wherein there are a particular commodity or particular service with regard to which it is agreed that the particular commodity or particular service is a commodity or service that causes no decrease in net amount by discount reduction, and a single or plurality of non-particular commodities or non-particular services which is/ are linked to said particular commodity or particular service so as to bear the burden of royalty payment for the particular commodity or particular service;

it is possible to generate a value of a pre-taken royalty point or a value of amount of money obtained by conversion thereof by selling or providing said particular commodity or particular service, the pre-taken royalty point enabling a discount reduction in selling or providing said non-particular commodity or non-particular service;

it is possible to generate a value of prepaid royalty point or a value of amount of money obtained by conversion thereof by selling or providing said non-particular commodity or non-particular service, the prepaid royalty point enabling a discount reduction in selling or providing said particular commodity or particular service;

it is agreed that there is receivable royalty when said particular commodity or particular service is sold or provided, the receivable royalty being set a smaller amount of money than a sales price or provision price of said particular commodity or particular service; and

it is agreed that there is payable royalty when said non-particular commodity or non-particular service is sold or provided, the payable royalty being set at a smaller amount of money than a sale price or provision price of said non-particular commodity or non-particular service;

the calculation device being a calculation device for calculating discount reduction values including a discount made by issuing a coupon in selling or providing said particular commodity or particular service and said non-particular commodity or non-particular service, a value of said pre-taken royalty point or a value of amount of money obtained by conversion thereof and a value of said prepaid royalty point or a value of amount of money obtained by conversion thereof after the sales of or provision with said particular commodity or particular service and said non-particular commodity or non-particular service, and values of predetermined royalty for calculating net amounts brought by selling or providing said particular commodity or particular service and said non-particular commodity or non-particular service;

said calculation device comprising:

discount reduction value calculation means for comparing; each time when a predetermined term passes; a first sum of a value of amount of money obtained by converting a value of prepaid royalty point carried forward from a term preceding the predetermined term and a total amount of money of payable royalty generated during said predetermined term with a second sum of a value of amount of money obtained by converting a value of pre-taken royalty point carried forward from a term preceding said predetermined term and a total amount of receivable royalty generated during said predetermined term to decide which sum is greater or smaller; the term being long enough for carrying out the sales of or provision with said particular commodity or particular service a plurality of times and the sales of or provision with said non-particular commodity or non-particular service a plurality of times; and determining the value of the sum having a smaller value or a value of one of the first and second sums when the first and second sums have the same values, as a sum total of discount reduction values during said predetermined term;

royalty point calculation means for determining; each time when a predetermined term passes; a point value or an amount of money obtained by conversion thereof which corresponds to a difference between the first sum of a value of amount of money obtained by conversion of a value of prepaid royalty point carried forward from a term preceding said predetermined term and a total amount of payable royalty generated during said predetermined term and the second sum of a value of amount of money obtained by conversion of pre-taken royalty point carried forward from a term preceding said predetermined term and a total amount of receivable royalty generated during said predetermined term, as a value to be carried forward to a next term with respect to the value of said prepaid royalty point or a value of amount of money obtained by conversion thereof or the value of said pre-taken royalty point or a value of amount of money obtained by conversion thereof, included in a larger sum of the first and second sums; the term being long enough for carrying out the sales of or provision with said particular commodity or particular service a plurality of times and the sales of or provision with said non-particular commodity or non-particular service a plurality of times; calculating a value to be carried forward to a next term as zero with respect to a value of said pre-taken royalty point or a value of amount of money obtained by conversion thereof or a value of said prepaid royalty point or a value of amount of money obtained by conversion thereof, included in a smaller sum; and calculating values to be carried forward to a next term to zero with respect to a value of said pre-taken royalty point or a value of amount of money obtained by conversion thereof and a value of said prepaid royalty point or a value of amount of money obtained by conversion thereof when the values of the first and second sums are equal to each other; and

royalty calculation means for determining; each time when a predetermined term passes; a difference between a value of amount of money obtained by conversion of prepaid royalty point carried forward from a term preceding the predetermined term and a value of amount of money obtained by conversion of prepaid royalty point to be carried forward to a next term; the term being long enough for carrying out the sales of or provision with said particular commodity or particular service a plurality of times and the sales of or provision with said non-particular commodity or non-particular service a plurality of times; and calculating the difference as a value of royalty for adjusting a relationship between a total amount of money of said receivable royalty generated during the predetermined term and a total amount of money of said payable royalty generated during said predetermined term; to calculate a total net amount brought by the sales of or provision with said particular commodity or particular service generated during said predetermined term such that the total net amount is equivalent to a total amount of money of sale price or provision price of said particular commodity or particular service which price is greater than a total amount of money of said receivable royalty generated during said predetermined term, and to calculate a total net amount brought by the sales of or provision with said non-particular commodity or non-particular service generated during said predetermined term by deducting said total amount of money of said payable royalty generated during said predetermined term from the total amount of money of sales price or provision price of said non-particular commodity or non-particular service generated during said predetermined term.

5. A calculation device for use in a point or coupon service wherein a point or coupon for making a discount can be generated when selling a commodity or providing a service; and

further wherein there are a particular commodity or particular service with regard to which it is agreed that the particular commodity or particular service is a commodity or service that causes no decrease in net amount by discount reduction, and a single or plurality of non-particular commodities or non-particular services which is/are linked to said particular commodity or particular service so as to bear the burden of royalty payment for the particular commodity or particular service;

it is possible to generate a value of a pre-taken royalty point or a value of amount of money obtained by conversion thereof when said particular commodity or particular service is sold or provided, the pre-taken royalty point enabling a discount reduction in selling or providing said non-particular commodity or non-particular service;

it is agreed that there is receivable royalty when said particular commodity or particular service is sold or provided, the receivable royalty being set at an amount of money equivalent to, or smaller than, a sales price or provision prices of said particular commodity or particular service, and

it is agreed that there is payable royalty when said non-particular commodity or non-particular service is sold or provided, the payable royalty being set at a smaller amount of money than a sale price or provision price of said non-particular commodity or non-particular service;

the calculation device being a calculation device for calculating discount reduction values including a discount made by issuing a coupon in selling or providing said non-particular commodity or non-particular service, and a value of said pre-taken royalty point or a value of amount of money obtained by conversion thereof after the sales of or provision with said particular commodity or particular service and said non-particular commodity or non-particular service;

the calculation device comprising:

discount reduction value calculation means for performing predetermined operations to calculate a discount reduction value obtained by deducting a value of said pre-taken royalty point or a value of amount of money obtained by conversion thereof; and

royalty point calculation means for performing predetermined operation processing with regard to a value of said pre-taken royalty point or a value of amount of money obtained by conversion thereof before the sales of a commodity or the provision with a service, with regard to discount reduction value calculated by said discount reduction value calculation means, and with regard to an amount of money of said receivable royalty and an amount of money of said payable royalty, to calculate a value of said pre-taken royalty point or a value of amount of money obtained by conversion thereof;

wherein said royalty point calculation means adds a portion corresponding to an amount of money of said receivable royalty to a value of pre-taken royalty point or a value of amount of money obtained by conversion thereof before the sales of or provision with said particular commodity or particular service; to calculate a value of pre-taken royalty point or particular service or a value of amount of money obtained by conversion thereof after the sales of or provision with said particular commodity, each time when said particular commodity or particular service is sold or provided; for calculating a net amount brought by the sale of or provision with said particular commodity or particular service such that the net amount is equivalent to an amount of money of said receivable royalty when the amount of money of said receivable royalty is equivalent to the sales price or provision price of said particular commodity or particular service or that the net amount is equivalent to an amount of money of the sales price or provision price of said particular commodity or particular service when the amount of money of said receivable royalty is smaller than the sales price or provision price of said particular commodity or particular service;

said discount reduction value calculation means determines a discount reduction value caused by decreasing a value of said pre-taken royalty point or a value of amount of money obtained by conversion thereof, each time when said non-particular commodity or non-particular service is sold or provided; and

said royalty point calculation means calculates a value of pre-taken royalty point or a value of amount of money obtained by conversion thereof after the sales of or provision with said non-particular commodity or non-particular service by deducting a portion corresponding to the discount reduction value from a value of pre-taken royalty point or a value of amount of money obtained by conversion thereof before the sales of or provision with said non-particular commodity or non-particular service; for calculating a net amount brought by the sale of or provision with said non-particular commodity or non-particular service such that the net amount comes to be an amount of money obtained by deducting the discount reduction value that is calculated by said discount reduction value calculation means and whose upper limit is an amount of money of said payable royalty, from the sales price or provision price of said non-particular commodity or non-particular service; each time when said non-particular commodity or non-particular service is sold or provided.

6. A calculation device for use in a point or coupon service wherein a point or coupon for making a discount can be generated in selling a commodity or providing a service; and

further wherein there are a particular commodity or particular service with regard to which it is agreed that the particular commodity or particular service is a commodity or service that causes no decrease in net amount by discount reduction, and a single or plurality of non-particular commodities or non-particular services which is/ are linked to said particular commodity or particular service so as to bear the burden of royalty payment for the particular commodity or particular service;

it is possible to generate a value of a pre-taken royalty point or a value of amount of money obtained by conversion thereof when said particular commodity or particular service is sold or provided, the pre-taken royalty point enabling a discount reduction in selling or providing said non-particular commodity or non-particular service;

it is agreed that there is receivable royalty when said particular commodity or particular service is sold or provided, the receivable royalty being set at an amount of money equivalent to, or smaller than, a sales price or provision price of said particular commodity or particular service; and

it is agreed that there is payable royalty when said non-particular commodity or non-particular service is sold or provided, the payable royalty being set at a smaller amount of money than a sale price or provision price of said non-particular commodity or non-particular service;

the calculation device being a calculation device for calculating discount reduction values including a discount made by issuing a coupon in selling or providing said non-particular commodity or non-particular service, and a value of said pre-taken royalty point or a value of amount of money obtained by conversion thereof after the sales of or provision with said particular commodity or particular service and said non-particular commodity or non-particular service;

the calculation device comprising:

discount reduction value calculation means for comparing; each time when a predetermined term passes; a first sum of money of payable royalty generated during said predetermined term with a second sum of a value of amount of money obtained by conversion of a value of pre-taken royalty point carried forward from a term preceding said predetermined term and a total amount of receivable royalty generated during said predetermined term to decide which sum is greater or smaller; the term being long enough for carrying out the sales of or provision with said particular commodity or particular service a plurality of times and the sales of or provision with said non-particular commodity or non-particular service a plurality of times; and determining the value of the sum having a smaller value or one of the first and second sums having the same values, as a sum total of discount reduction value during said predetermined term; and

royalty point calculation means for comparing; each time when a predetermined term passes; the first sum of payable royalty generated during said predetermined term with the second sum of an amount of money obtained by conversion of a value of pre-taken royalty point carried forward from a term preceding said predetermined term and a total amount of money of receivable royalty generated during said predetermined term; the term being long enough for carrying out the sales of or provision with said particular commodity or particular service a plurality of times and the sales of or provision with said non-particular commodity or non-particular service a plurality of times; determining a point value or a value of money obtained by conversion thereof corresponding to a value obtained by deducting a total amount of payable royalty generated during said predetermined term from the total amount of a value of amount of money obtained by conversion of a value of pre-taken-royalty point carried forward from a term preceding said predetermined term and a total amount of money of receivable royalty generated during said predetermined term, as a value of said pre-taken royalty point or a value of amount of money obtained by conversion thereof to be carried forward to a neat term, when the second sum of an amount of money obtained by conversion of a value of pre-taken royalty point carried forward from a term preceding said predetermined term and a total amount of money of receivable royalty generated during said predetermined term is greater than or equivalent to the first sum; and calculating a value to be carried forward into zero with regard to a value of said pre-taken royalty point or a value of amount of money obtained by conversion thereof, when the second sum of an amount of money obtained by conversion of a value of pre-taken royalty point carried forward from a term preceding said predetermined term and a total amount of money of receivable royalty generated during said predetermined term is smaller than or equivalent to the first sum; so as to calculate a total net amount brought by the sale of or provision with said particular commodity or particular service during said predetermined term such that the total net amount is equivalent to a total amount of money of said receivable royalty generated during said predetermined term when the amount of money of said receivable royalty is equivalent to the sales price or provision price of said particular commodity or particular service; so as to calculate the total net amount such that it is equivalent to the total amount of the sales price or provision prices of said particular commodity or particular service generated during said predetermined term when the amount of said receivable royalty is smaller than the sales price or provision prices of said particular commodity or particular service; so as to calculate the total net amount brought by the sales of or provision with said non-particular commodity or non-particular service during said predetermined term, into a value obtained by deducting a total amount of money of payable royalty generated during said predetermined term from the total amount of money of the sales price or provision price of said non-particular commodity or non-particular service generated during said predetermined term, when the first sum of money of payable royalty generated during said predetermined term is compared with the second sum of a value of amount of money obtained by conversion of a value of pre-taken royalty point carried forward from a term preceding said predetermined term and a total amount of money of receivable royalty generated during said predetermined term to determine which is greater or smaller and when the second sum of a value of amount of money obtained by conversion of a value of pre-taken royalty point carried forward from a term preceding said predetermined term and a total amount of money of receivable royalty generated during said predetermined term is greater than or equivalent to the first sum; and so as to calculate the total net amount into a value obtained by deducting the total sum of the discount reduction value calculated by said discount reduction value calculation means from the total amount of money of sale price or provision price of said non-particular commodity or non-particular service generated during said predetermined term when the first sum of the payable royalty generated during said predetermined term is greater than or equivalent to the second sum.

**7.** A calculation method for use in a point or coupon service wherein a point or coupon for making a discount can be generated when selling a commodity or providing a service; and

further wherein there are a particular commodity or particular service with regard to which it is agreed that the particular commodity or particular service is a commodity or service that causes no decrease in net amount by discount reduction, and a single or plurality of non-particular commodities or non-particular services which is/are linked to said particular commodity or particular service so as to bear the burden of royalty payment for the particular commodity or particular service;

it is possible to generate a value of a pre-taken royalty point or a value of amount of money obtained by conversion thereof when said particular commodity or particular service is sold or provided, the pre-taken royalty point enabling a discount reduction in selling or providing said non-particular commodity or non-particular service;

it is possible to generate a value of prepaid royalty point or a value of amount of money obtained by conversion thereof when said non-particular commodity or non-particular service is sold or provided, the prepaid royalty point enabling a discount reduction in selling or providing said particular commodity or particular service;

it is agreed that there is receivable royalty when said particular commodity or particular service is sold or provided, the receivable royalty being equivalent to a sales price or provision price of said particular commodity or particular service; and

it is agreed that there is payable royalty when said non-particular commodity or non-particular service is sold or provided, the payable royalty being set at a smaller amount of money than a sale price or provision price of said non-particular commodity or non-particular service;

the calculation method being a calculation method for calculating discount reduction values including a discount made by issuing a coupon in selling or providing said particular commodity or particular service and said non-particular commodity or non-particular service, values of predetermined royalties for calculating net amounts brought by selling or providing said particular commodity or particular service and said non-particular commodity or non-particular service, and a value of said pre-taken royalty point or a value of amount of money obtained by conversion thereof and a value of said prepaid royalty point or a value of amount of money obtained by conversion thereof after the sales of or provision with said particular commodity or particular service and said non-particular commodity or non-particular service;

the calculation method comprising:

a step in which discount reduction value calculation means performs predetermined operations each time when said particular commodity or particular service is sold or provided, to calculate a discount reduction value obtained by deducting a value of said prepaid royalty point or a value of amount of money obtained by conversion thereof;

a step in which royalty calculation means determines a discount reduction value caused by deducting a value of said prepaid royalty point or a value of amount of money obtained by conversion thereof, as a post-taken royalty and offsets an amount of money of said post-taken royalty and the discount reduction value caused by deducting a value of said prepaid royalty point or a value of amount of money obtained by conversion thereof, to calculate the net amount obtained by selling or providing said particular commodity or particular service such that the net amount is equivalent to an amount of money of said receivable royalty each time when said particular commodity or particular service is sold or provided;

a step in which royalty point calculation means decreases a value of prepaid royalty point or a value of amount of money obtained by conversion thereof before the sales of or provision with said particular commodity or particular service, by a portion corresponding to the discount reduction value, to calculate a value of prepaid royalty point or a value of amount of money obtained by conversion thereof after the sales of or provision with said particular commodity or particular service; and adds a portion corresponding to a value obtained by deducting the discount reduction value from the amount of money of said receivable royalty to a value of pre-taken royalty point before the sales of or provision with said particular commodity or particular service or a value of amount of money obtained by conversion thereof, to calculate a value of prepaid royalty point after the sales of or provision with said particular commodity or particular service or a value of amount of money obtained by conversion thereof; each time when said particular commodity or particular service is sold or provided;

a step in which the discount reduction value calculation means determines a discount reduction value caused by decreasing a value of said pre-taken royalty point or a value of amount of money obtained by conversion thereof, each time when said non-particular commodity or non-particular service is sold or provided;

a step in which the royalty calculation means determines prepaid royalty by deducting a discount reduction value caused by decreasing a value of said pre-taken royalty point or a value of amount of money obtained by conversion thereof, from an amount of money of said payable royalty; and deducts a discount reduction value caused by decreasing an amount of money of said prepaid royalty and a value of said pre-taken royalty point or a value of amount of money obtained by conversion thereof from a sales price or provision price of said non-particular commodity or non-particular service, to calculate a net amount brought by the sales of or provision with said non-particular commodity or non-particular service such that the net amount is equivalent to an amount of money obtained by deducting an amount of payable royalty from the sales price or provision price of said non-particular commodity or non-particular service; each time when said non-particular commodity or non-particular service is sold or provided; and

a step in which the royalty point calculation means decreases a value of pre-taken royalty point or a value of amount of money obtained by conversion thereof before the sales of or provision with said non-particular commodity or non-particular service by a portion corresponding to the discount reduction value, to calculate a value of the pre-taken royalty point or a value of amount of money obtained by conversion thereof after the sales of or provision with said non-particular commodity or non-particular service; and adds a portion corresponding to a value caused by deducting the discount reduction value from an amount of money of said payable royalty to a value of prepaid royalty point or a value of amount of money obtained by conversion thereof before the sales of or provision with said non-particular commodity or non-particular service, to calculate a value of the prepaid royalty point or a value of amount of money obtained by conversion thereof after the sales of or provision with said non-particular commodity or non-particular service; each time when said non-particular commodity or non-particular service is sold or provided.

8.  A calculation method for use in a point or coupon service wherein a point or coupon for making a discount can be generated in selling a commodity or providing a service; and
    further wherein there are a particular commodity or particular service with regard to which it is agreed that the particular commodity or particular service is a commodity or service that causes no decrease in net amount by discount reduction, and a single or plurality of non-particular commodities or non-particular services which is/are linked to said particular commodity or particular service so as to bear the burden of royalty payment for the particular commodity or particular service;
    it is possible to generate a value of a pre-taken royalty point or a value of amount of money obtained by conversion thereof when said particular commodity or particular service is sold or provided, the pre-taken royalty point enabling a discount reduction in selling or providing said non-particular commodity or non-particular service;
    it is possible to generate a value of prepaid royalty point or a value of amount of money obtained by conversion thereof when said non-particular commodity or non-particular service is sold or provided, the prepaid royalty point enabling a discount reduction in selling or providing said particular commodity or particular service;
    it is agreed that there is receivable royalty when said particular commodity or particular service is sold or provided, the receivable royalty being equivalent to a sales price or provision price of said particular commodity or particular service; and
    it is agreed that there is payable royalty when said non-particular commodity or non-particular service is sold or provided, the payable royalty being set at a smaller amount of money than a sale price or provision price of said non-particular commodity or non-particular service;
    the calculation method being a calculation method for calculating discount reduction values including a discount made by issuing a coupon in selling or providing said particular commodity or particular service and said non-particular commodity or non-particular service, a value of said pre-taken royalty point or a value of amount of money obtained by conversion thereof and a value of said prepaid royalty point or a value of amount of money obtained by conversion thereof after the sales of or provision with said particular commodity or particular service and said non-particular commodity or non-particular service, and values of predetermined royalties for calculating net amounts brought by selling or providing said particular commodity or particular service and said non-particular commodity or non-particular service;

the calculation method comprising:

a step in which discount reduction value calculation means compares; each time when a predetermined term passes; a first sum of a value of amount of money obtained by converting a value of prepaid royalty point carried forward from a term preceding the predetermined term and a total amount of money of payable royalty generated during said predetermined term with a second sum of a value of amount of money obtained by converting a value of pre-taken royalty point carried forward from a term preceding said predetermined term and a total amount of receivable royalty generated during said predetermined term to decide which sum is greater or smaller; the term being long enough for carrying out the sales of or provision with said particular commodity or particular service a plurality of times and the sales of or provision with said non-particular commodity or non-particular service a plurality of times; and determine a value of the sum having a smaller value or a value of one of the first and second sums when the first and second sums have the same values, as a sum total of discount reduction values during said predetermined term;

a step in which royalty point calculation means determines; each time when a predetermined term passes; a point value or an amount of money obtained by conversion thereof which corresponds to a difference between the first sum of a value of amount of money obtained by conversion of a value of prepaid royalty point carried forward from a term preceding said predetermined term and a total amount of payable royalty generated during said predetermined term and the second sum of a value of amount of money obtained by conversion of pre-taken royalty point carried forward from a term preceding said predetermined term and a total amount of receivable royalty generated during said predetermined term, as a value to be carried forward to a next term with respect to the value of said prepaid royalty point or a value of amount of money obtained by conversion thereof or the value of said pre-taken royalty point or a value of amount of money obtained by conversion thereof, included in a larger sum of the first and second sums; the term being long enough for carrying out the sales of or provision with said particular commodity or particular service a plurality of times and the sales of or provision with said non-particular commodity or non-particular service a plurality of times; calculates a value to be carried forward to a next term as zero with respect to a value of said pre-taken royalty point or a value of amount of money obtained by conversion thereof or a value of said prepaid royalty point or a value of amount of money obtained by conversion thereof, included in a smaller sum; and calculates values to be carried forward to a next term to zero with respect to a value of said pre-taken royalty point or a value of amount of money obtained by conversion thereof and a value of said prepaid royalty point or a value of amount of money obtained by conversion thereof when the values of the first and second sums are equal to each other; and

a step in which royalty calculation means determines; each time when a predetermined term passes; a difference between a value of amount of money obtained by conversion of prepaid royalty point carried forward from a term preceding the predetermined term and a value of amount of money obtained by conversion of prepaid royalty point to be carried forward to a next term; the term being long enough for carrying out the sales of or provision with said particular commodity or particular service a plurality of times and the sales of or provision with said non-particular commodity or non-particular service a plurality of times; and calculates the difference as a value of royalty for adjusting a relationship between a total amount of money of said receivable royalty generated during the predetermined term and a total amount of money of said payable royalty generated during said predetermined term, to calculate a total net amount brought by the sales of or provision with said particular commodity or particular service generated during said predetermined term such that the total net amount is equivalent to a total amount of money of said receivable royalty generated during said predetermined term, and to calculate a total net amount brought by the sales of or provision with said non-particular commodity or non-particular service generated during said predetermined term by deducting said total amount of money of said payable royalty generated during said predetermined term from the total amount of money of sales price or provision price of said non-particular commodity or non-particular service generated during said predetermined term.

9.  A calculation method in a point or coupon service wherein a point or coupon for making a discount can be generated when selling a commodity or providing a service; and

further wherein there are a particular commodity or particular service with regard to which it is agreed that the particular commodity or particular service is a commodity or service that causes no decrease in net amount by discount reduction, and a single or plurality of non-particular commodities or non-particular services which is/ are linked to said particular commodity or particular service so as to bear the burden of royalty payment for the particular commodity or particular service;

it is possible to generate a value of a pre-taken royalty point or a value of amount of money obtained by conversion thereof when said particular commodity or particular service is sold or provided, the pre-taken royalty point enabling a discount reduction in selling or providing said non-particular commodity or non-particular service;

it is possible to generate a value of prepaid royalty point or a value of amount of money obtained by conversion thereof when said non-particular commodity or non-particular service is sold or provided, the prepaid royalty point enabling a discount reduction in selling or providing said particular commodity or particular service;

it is agreed that there is receivable royalty when said particular commodity or particular service is sold or provided, the receivable royalty being set at a smaller amount of money than a sales price or provision price of said particular commodity or particular service; and

it is agreed that there is payable royalty when said non-particular commodity or non-particular service is sold or provided, the payable royalty being set at a smaller amount of money than a sale price or provision price of said non-particular commodity or non-particular service;

the calculation method being a calculation method for calculating discount reduction values including a discount made by issuing a coupon in selling or providing said particular commodity or particular service and said non-particular commodity or non-particular service, values of predetermined royalties for calculating net amounts brought by selling or providing said particular commodity or particular service and said non-particular commodity or non-particular service, and a value of said pre-taken royalty point or a value of amount of money obtained by conversion thereof and a value of said prepaid royalty point or a value of amount of money obtained by conversion thereof after the sales of or provision with said particular commodity or particular service and said non-particular commodity or non-particular service,

the calculation method comprising:

a step in which discount reduction value calculation means performs predetermined processing to determine a discount reduction value obtained by deducting a value of said prepaid royalty point or a value of amount of money obtained by conversion thereof each time when said particular commodity or particular service is sold or provided;

a step in which royalty calculation means determines a discount reduction value caused by deducting a value of said prepaid royalty point or a value of amount of money obtained by conversion thereof, as a post-taken royalty and offsets at least an amount of money of said post-taken royalty and the discount reduction value caused by deducting a value of said prepaid royalty point or a value of amount of money obtained by conversion thereof, to calculate the net amount brought by selling or providing said particular commodity or particular service such that the net amount is equivalent to the sales price or provision price of said particular commodity or particular service which sales price or provision price is greater than said receivable royalty; each time when said particular commodity or particular service is sold or provided;

a step in which royalty point calculation means decreases a value of prepaid royalty point or a value of amount of money obtained by conversion thereof before the sales of or provision with said particular commodity or particular service, by a portion corresponding to the discount reduction value, to calculate a value of prepaid royalty point or a value of amount of money obtained by conversion thereof after the sales of or provision with said particular commodity or particular service; and adds a portion corresponding to a value obtained by deducting the discount reduction value from the amount of money of said receivable royalty to a value of pre-taken royalty point before the sales of or provision with said particular commodity or particular service or a value of amount of money obtained by conversion thereof, to calculate a value of pre-taken royalty point after the sales of or provision with said particular commodity or particular service or a value of amount of money obtained by conversion thereof; each time when said particular commodity or particular service is sold or provided;

a step in which the discount reduction value calculation means performs predetermined processing to determine a discount reduction value caused by decreasing a value of said pre-taken royalty point or a value of amount of money obtained by conversion thereof, each time when said non-particular commodity or non-particular service is sold or provided;

a step in which the royalty calculation means determines prepaid royalty by deducting a discount reduction value caused by decreasing a value of said pre-taken royalty point or a value of amount of money obtained by conversion thereof, from an amount of money of said payable royalty; and deducts a discount reduction value caused by decreasing an amount of money of said prepaid royalty and a value of said pre-taken royalty point or a value of amount of money obtained by conversion thereof from a sales price or provision price of said non-particular commodity or non-particular service; to calculate a net amount brought by the sales of or provision with said non-particular commodity or non-particular service such that the net amount is equivalent to an amount of money obtained by deducting an amount of payable royalty from the sales price or provision price of said non-particular commodity or non-particular service; each time when said non-particular commodity or non-particular service is sold or provided; and

a step in which the royalty point calculation means decreases a value of pre-taken royalty point or a value of amount of money obtained by conversion thereof before the sales of or provision with said non-particular commodity or non-particular service by a portion corresponding to a discount reduction value, to calculate a value of the pre-taken royalty point or a value of amount of money obtained by conversion thereof after the sales of or provision with said non-particular commodity or non-particular service; and adds a portion corresponding to a value caused by deducting the discount reduction value from an amount of money of said payable royalty to a value of prepaid royalty point or a value of amount of money obtained by conversion thereof before the sales of or provision with said non-particular commodity or non-particular service, to calculate a value of the prepaid royalty point or a value of amount of money obtained by conversion thereof after the sales of or provision with said non-particular commodity or non-particular service, each time when said non-particular commodity or non-particular service is sold or provided.

10. A calculation method for use in a point or coupon service in which a point or coupon for making a discount can be generated in selling a commodity or providing a service; and

further wherein there are a particular commodity or particular service with regard to which it is agreed that the particular commodity or particular service is a commodity or service that causes no decrease in net amount by discount reduction, and a single or plurality of non-particular commodities or non-particular services which is/are linked to said particular commodity or particular service so as to bear the burden of royalty payment for the particular commodity or particular service;

it is possible to generate a value of a pre-taken royalty point or a value of amount of money obtained by conversion thereof by selling or providing said particular commodity or particular service, the pre-taken royalty point enabling a discount reduction in selling or providing said non-particular commodity or non-particular service;

it is possible to generate a value of prepaid royalty point or a value of amount of money obtained by conversion thereof by selling or providing said non-particular commodity or non-particular service, the prepaid royalty point enabling a discount reduction in selling or providing said particular commodity or particular service; and

it is agreed that there is receivable royalty when said particular commodity or particular service is sold or provided, the receivable royalty being set a smaller amount of money than a sales price or provision price of said particular commodity or particular service; and

it is agreed that there is payable royalty when said non-particular commodity or non-particular service is sold or provided, the payable royalty being set at a smaller amount of money than a sale price or provision price of said non-particular commodity or non-particular service;

the calculation method being a calculation method for calculating discount reduction values including a discount made by issuing a coupon in selling or providing said particular commodity or particular service and said non-particular commodity or non-particular service, a value of said pre-taken royalty point or a value of amount of money obtained by conversion thereof and a value of said prepaid royalty point or a value of amount of money obtained by conversion thereof, after the sales of or provision with said particular commodity or particular service and said non-particular commodity or non-particular service and values of predetermined royalty for calculating net amounts brought by selling or providing said particular commodity or particular service and said non-particular commodity or non-particular service;

the calculation method comprising:

a step in which discount reduction value calculation means compares; each time when a predetermined term passes; a first sum of a value of amount of money obtained by converting a value of prepaid royalty point carried forward from a term preceding the predetermined term and a total amount of money of payable royalty generated during said predetermined term with a second sum of a value of amount of money obtained by converting a value of pre-taken royalty point carried forward from a term preceding said predetermined term and a total amount of receivable royalty generated during said predetermined term to decide which sum is greater or smaller; the term being long enough for carrying out the sales of or provision with said particular commodity or particular service a plurality of times and the sales of or provision with said non-particular commodity or non-particular service a plurality of times; and determining the value of the sum having a smaller value or a value of one of the first and second sums when the first and second sums have the same values, as a sum total of discount reduction values during said predetermined term;

a step in which royalty point calculation means determines; each time when a predetermined term passes; a point value or an amount of money obtained by conversion thereof which corresponds to a difference between the first sum of a value of amount of money obtained by conversion of a value of prepaid royalty point carried forward from a term preceding said predetermined term and a total amount of payable royalty generated during said predetermined term and the second sum of a value of amount of money obtained by conversion of pre-taken royalty point carried forward from a term preceding said predetermined term and a total amount of receivable royalty generated during said predetermined term, as a value to be carried forward to a next term with respect to the value of said prepaid royalty point or a value of amount of money obtained by conversion thereof or the value of said pre-taken royalty point or a value of amount of money obtained by conversion thereof, included in a larger sum of the first and second sums; the term being long enough for carrying out the sales of or provision with said particular commodity or particular service a plurality of times and the sales of or provision with said non-particular commodity or non-particular service a plurality of times; calculates a value to be carried forward to a next term as zero with respect to a value of said pre-taken royalty point or a value of amount of money obtained by conversion thereof or a value of said prepaid royalty point or a value of amount of money obtained by conversion thereof, included in a smaller sum; and calculates values to be carried forward to a next term to zero with respect to a value of said pre-taken royalty point or a value of amount of money obtained by conversion thereof and a value of said prepaid royalty point or a value of amount of money obtained by conversion thereof when the values of the first and second sums are equal to each other; and

a step in which royalty calculation means determines; each time when a predetermined term passes; a difference between a value of amount of money obtained by conversion of prepaid royalty point carried forward from a term preceding the predetermined term and a value of amount of money obtained by conversion of prepaid royalty point to be carried forward to a next term; the term being long enough for carrying out the sales of or provision with said particular commodity or particular service a plurality of times and the sales of or provision with said non-particular commodity or non-particular service a plurality of times; and calculate the difference as a value of royalty for adjusting a relationship between a total amount of money of said receivable royalty generated during the predetermined term and a total amount of money of said payable royalty generated during said predetermined term; to calculate a total net amount brought by the sales of or provision with said particular commodity or particular service generated during said predetermined term such that the total net amount is equivalent to a total amount of money of sale price or provision price of said particular commodity or particular service which price is greater than a total amount of money of said receivable royalty generated during said predetermined term, and to calculate a total net amount brought by the sales of or provision with said non-particular commodity or non-particular service generated during said predetermined term by deducting said total amount of money of said payable royalty generated during said predetermined term from the total amount of money of sales price or provision price of said non-particular commodity or non-particular service generated during said predetermined term.

**11.** A calculation method for use in a point or coupon service in which a point or coupon for making a discount can be generated when selling a commodity or providing a service; and

further wherein there are a particular commodity or particular service with regard to which it is agreed that the particular commodity or particular service is a commodity or service that causes no decrease in net amount by discount reduction, and a single or plurality of non-particular commodities or non-particular services which is/are linked to said particular commodity or particular service so as to bear the burden of royalty payment for the particular commodity or particular service;

it is possible to generate a value of a pre-taken royalty point or a value of amount of money obtained by conversion thereof when said particular commodity or particular service is sold or provided, the pre-taken royalty point enabling a discount reduction in selling or providing said non-particular commodity or non-particular service;

it is agreed that there is receivable royalty when said particular commodity or particular service is sold or provided, the receivable royalty being set at an amount of money equivalent to, or smaller than, a sales price or provision prices of said particular commodity or particular service, and

it is agreed that there is payable royalty when said non-particular commodity or non-particular service is sold or provided, the payable royalty being set at a smaller amount of money than a sale price or provision price of said non-particular commodity or non-particular service;

the calculation method being a calculation method for calculating discount reduction values including a discount made by issuing a coupon in selling or providing said non-particular commodity or non-particular service, and a value of said pre-taken royalty point or a value of amount of money obtained by conversion thereof after the sales of or provision with said particular commodity or particular service and said non-particular commodity or non-particular service;

the calculation method comprising:

a step in which royalty point calculation means adds a portion corresponding to an amount of money of said receivable royalty to a value of pre-taken royalty point or a value of amount of money obtained by conversion thereof before the sales of or provision with said particular commodity or particular service; to calculate a value of pre-taken royalty point or particular service or a value of amount of money obtained by conversion thereof after the sales of or provision with said particular commodity, each time when said particular commodity or particular service is sold or provided; for calculating a net amount brought by the sale of or provision with said particular commodity or particular service such that the net amount is equivalent to an amount of money of said receivable royalty when the amount of money of said receivable royalty is equivalent to the sales price or provision price of said particular commodity or particular service or that the net amount is equivalent to an amount of money of the sales price or provision price of said particular commodity or particular service when the amount of money of said receivable royalty is smaller than the sales price or provision price of said particular commodity or particular service;

a step in which discount reduction value calculation means performs predetermined operations to determine a discount reduction value caused by decreasing a value of said pre-taken royalty point or a value of amount of money obtained by conversion thereof, each time when said non-particular commodity or non-particular service is sold or provided; and

a step in which royalty point calculation means calculates a value of pre-taken royalty point or a value of amount of money obtained by conversion thereof after the sales of or provision with said non-particular commodity or non-particular service by deducting a portion corresponding to the discount reduction value from a value of pre-taken royalty point or a value of amount of money obtained by conversion thereof before the sales of or provision with said non-particular commodity or non-particular service; for calculating a net amount brought by the sale of or provision with said non-particular commodity or non-particular service such that the net amount comes to be an amount of money obtained by deducting the discount reduction value that is calculated by said discount reduction value calculation means and whose upper limit is an amount of money of said payable royalty, from the sales price or provision price of said non-particular commodity or non-particular service; each time when said non-particular commodity or non-particular service is sold or provided.

12. A calculation method for use in a point or coupon service wherein a point or coupon for making a discount can be generated in selling a commodity or providing a service; and

further wherein there are a particular commodity or particular service with regard to which it is agreed that the particular commodity or particular service is a commodity or service that causes no decrease in net amount by discount reduction, and a single or plurality of non-particular commodities or non-particular services which is/are linked to said particular commodity or particular service so as to bear the burden of royalty payment for the particular commodity or particular service;

it is possible to generate a value of a pre-taken royalty point or a value of amount of money obtained by conversion thereof when said particular commodity or particular service is sold or provided, the pre-taken royalty point enabling a discount reduction in selling or providing said non-particular commodity or non-particular service;

it is agreed that there is receivable royalty when said particular commodity or particular service is sold or provided, the receivable royalty being set at an amount of money equivalent to, or smaller than, a sales price or provision price of said particular commodity or particular service; and

it is agreed that there is payable royalty when said non-particular commodity or non-particular service is sold or provided, the payable royalty being set at a smaller amount of money than a sale price or provision price of said non-particular commodity or non-particular service;

the calculation method being a calculation method for calculating discount reduction values including a discount made by issuing a coupon in selling or providing said non-particular commodity or non-particular service, and a value of said pre-taken royalty point or a value of amount of money obtained by conversion thereof after the sales of or provision with said particular commodity or particular service and said non-particular commodity or non-particular service;

the calculation method comprising:

a step in which discount reduction value calculation means compares; each time when a predetermined term passes; a first sum of money of payable royalty generated during said predetermined term with a second sum of a value of amount of money obtained by conversion of a value of pre-taken royalty point carried forward from a term preceding said predetermined term and a total amount of receivable royalty generated during said predetermined term to decide which sum is greater or smaller; the term being long enough for carrying out the sales of or provision with said particular commodity or particular service a plurality of times and the sales of or provision with said non-particular commodity or non-particular service a plurality of times; and determining the value of the sum having a smaller value or one of the first and second sums having the same values, as a sum total of discount reduction value during said predetermined term; and

a step in which royalty point calculation means compares the first sum of payable royalty generated during said predetermined term with the second sum of an amount of money obtained by conversion of a value of pre-taken royalty point carried forward from a term preceding said predetermined term and a total amount of money of receivable royalty generated during said predetermined term; determines a point value or a value of money obtained by conversion thereof corresponding to a value obtained by deducting a total amount of payable royalty generated during said predetermined term from the total amount of a value of amount of money obtained by conversion of a value of pre-taken-royalty point carried forward from a term preceding said predetermined term and a total amount of money of receivable royalty generated during said predetermined term, as a value of said pre-taken royalty point or a value of amount of money obtained by conversion thereof to be carried forward to a neat term, when the second sum of an amount of money obtained by conversion of a value of pre-taken royalty point carried forward from a term preceding said predetermined term and a total amount of money of receivable royalty generated during said predetermined term is greater than or equivalent to the first sum; and calculates a value to be carried forward into zero with regard to a value of said pre-taken royalty point or a value of amount of money obtained by conversion thereof, when the second sum of an amount of money obtained by conversion of a value of pre-taken royalty point carried forward from a term preceding said predetermined term and a total amount of money of receivable royalty generated during said predetermined term is smaller than or equivalent to the first sum; so as to calculate a total net amount brought by the sale of or provision with said particular commodity or particular service during said predetermined term such that the total net amount is equivalent to a total amount of money of said receivable royalty generated during said predetermined term when the amount of money of said receivable royalty is equivalent to the sales price or provision price of said particular commodity or particular service; so as to calculate the total net amount such that it is equivalent to the total amount of the sales price or provision prices of said particular commodity or particular service generated during said predetermined term when the amount of said receivable royalty is smaller than the sales price or provision prices of said particular commodity or particular service; so as to calculate the total net amount brought by the sales of or provision with said non-particular commodity or non-particular service during said predetermined term, into a value obtained by deducting a total amount of money of payable royalty generated during said predetermined term from the total amount of money of the sales price or provision price of said non-particular commodity or non-particular service generated during said predetermined term, when the first sum of money of payable royalty generated during said predetermined term is compared with the second sum of a value of amount of money obtained by conversion of a value of pre-taken royalty point carried forward from a term preceding said predetermined term and a total amount of money of receivable royalty generated during said predetermined term to determine which is greater or smaller and when the second sum of a value of amount of money obtained by conversion of a value of pre-taken royalty point carried forward from a term preceding said predetermined term and a total amount of money of receivable royalty generated during said predetermined term is greater than or equivalent to the first sum; and so as to calculate the total net amount into a value obtained by deducting the total sum of the discount reduction value calculated by said discount reduction value calculation means from the total amount of money of sale price or provision price of said non-particular commodity or non-particular service generated during said predetermined term when the first sum of the payable royalty generated during said predetermined term is greater than or equivalent to the second sum.

13. A program enabling a computer to implement the calculation method recited in any one of claims 7 to 12.

14. A recording medium recording the program recited in claim 13 in such a manner in which the program is readable with a computer.

15. A calculation management system comprising:

the calculation device recited in any one of claims 1 to 6;

royalty point storage means for storing a value of pre-taken royalty point or a value of amount of money obtained by conversion thereof and a value of prepaid royalty point or a value of amount of money obtained by conversion thereof, calculated by the royalty point calculation means of the calculation device recited in claim 1, 2, 3 or 4, or storing a value of pre-taken royalty point or a value of amount of money obtained by conversion thereof, calculated by the royalty point calculation means of the calculation device recited in claim 5 or 6; and

conversion means;

wherein said conversion means checks the currency unit of the sales price or provision price of a particular commodity or particular service with regard to which it is agreed that it is a commodity or service that causes no decrease in net amount by discount reduction and a value of amount of money obtained by conversion of a point value stored in said royalty point storage means or the currency unit of the value of amount of money obtained by conversion thereof, to change the value of amount of money obtained by conversion of the point value stored in said royalty point storage means or the value of amount of money obtained by conversion thereof to an amount of money having the same currency unit as the currency unit of the sales price or provision price of said particular commodity or particular service according to an exchange rate when the current units differ; and checks the currency unit of the sales price or provision price of a single or plurality of non-particular commodities or non-particular services which is/are linked to said particular commodity or particular service so as to bear the burden of royalty payment for the particular commodity or particular service and the currency unit of the value of amount of money obtained by conversion of the point value stored in said royalty point storage means or the value of amount of money obtained by conversion thereof, to change the point value stored in said royalty point storage means to an amount of money having the same currency unit as the currency unit of the sales price or provision price of said non-particular commodity or non-particular service according to an exchange rate when the currency units differ; the conversion means causes the calculation device recited in any one of claims 1 to 6 to perform calculation processing with regard to said changed amounts of money; the conversion means changes the values of amounts of money obtained by conversion of pre-taken royalty point and prepaid royalty point calculated by the royalty point calculation means of the calculation device recited in claim 1, 2, 3 or 4 or values of amounts of money obtained by conversion thereof back to amounts of money having the currency unit to be used for changing a point value to be stored in said royalty point storage means or values of amounts of money obtained by conversion thereof, according to an exchange rate; or changes the value of amount of money obtained by conversion of point value of pre-taken royalty point calculated by the royalty point calculation means of the calculation device recited in claim 5 or 6 back to an amount of money having the currency unit to be used for changing a point value to be stored in said royalty point storage means or a value of amount of money obtained by conversion thereof, according to an exchange rate; and the conversion means causes said royalty point storage means to store a point value corresponding to the amount of money changed back in currency unit or a value of amount of money that has been obtained by conversion thereof and has been changed back in currency unit.

16. A calculation management system comprising:

the calculation device recited in any one of claims 1 to 6; and

royalty management means for generating and outputting transfer data in which part or the whole of predetermined royalty values calculated by the royalty calculation means of the calculation device recited in any one of claims 1 to 4 and net amounts brought by the sales of or provision with said particular commodity or particular service and a net amount brought by the sales of or provision with said non-particular commodity or non-particular service, determined by the calculation device recited in any one of claims 1 to 6, are linked to account numbers of accounts to which they are to be transferred.

17. A calculation management system comprising:

the calculation device recited in any one of claims 1 to 6;

royalty point storage means for storing a value of pre-taken royalty point or a value of amount of money obtained by conversion thereof and a value of prepaid royalty point or a value of amount of money obtained by conversion thereof calculated by the royalty point calculation means of the calculation device recited in claim 1, 2, 3 or 4

or storing a value of pre-taken royalty point or a value of amount of money obtained by conversion thereof calculated by the royalty point calculation means of the calculation device recited in claim 5 or 6;

royalty management means for generating and outputting transfer data in which some or all of predetermined royalty values calculated by the royalty calculation means of the calculation device recited in any one of claims 1 to 4 and net amounts brought by the sales of or provision with said particular commodity or particular service and a net amount brought by the sales of or provision with said non-particular commodity or non-particular service, determined by the calculation device recited in any one of claims 1 to 6, are linked to account numbers of accounts to which they are to be transferred; and

conversion means;

wherein said conversion means checks the currency unit of the sales price or provision price of a particular commodity or particular service with regard to which it is agreed that it is a commodity or service that causes no decrease in net amount by discount reduction and a value of amount of money obtained by conversion of a point value stored in said royalty point storage means or the currency unit of the value of amount of money obtained by conversion thereof, to change the value of amount of money obtained by conversion of the point value stored in said royalty point storage means or the value of amount of money obtained by conversion thereof to an amount of money having the same currency unit as the currency unit of the sales price or provision price of said particular commodity or particular service according to an exchange rate when the current units differ; and checks the currency unit of the sales price or provision price of a single or plurality of non-particular commodities or non-particular services which is/are linked to said particular commodity or particular service so as to bear the burden of royalty payment for the particular commodity or particular service and the currency unit of the value of amount of money obtained by conversion of the point value stored in said royalty point storage means or the value of amount of money obtained by conversion thereof, to change the point value stored in said royalty point storage means to an amount of money having the same currency unit as the currency unit of the sales price or provision price of said non-particular commodity or non-particular service according to an exchange rate when the currency units differ;
the conversion means causes the calculation device recited in any one of claims 1 to 6 to perform calculation processing with regard to said changed amounts of money;
the conversion means changes the values of amounts of money obtained by conversion of pre-taken royalty point and prepaid royalty point calculated by the royalty point calculation means of the calculation device recited in claim 1, 2, 3 or 4 or values of amounts of money obtained by conversion thereof back to amounts of money having the currency unit to be used for changing a point value to be stored in said royalty point storage means or values of amounts of money obtained by conversion thereof, according to an exchange rate; or changes the value of amount of money obtained by conversion of point value of pre-taken royalty point calculated by the royalty point calculation means of the calculation device recited in claim 5 or 6 back to an amount of money having the currency unit to be used for changing a point value to be stored in said royalty point storage means or a value of amount of money obtained by conversion thereof, according to an exchange rate; and
said royalty management means performs management to cause said conversion means to store a point value corresponding to said amount of money changed back in currency or a value of amount of money obtained by conversion thereof in said royalty point storage means, in response to input of signals to the effect that predetermined amount(s) of money of all or some of said predetermined royalty values and the net amounts has/have been transferred according said transfer data outputted.

**18.** A calculation transfer system comprising:

the calculation device recited in any one of claims 1 to 4;

royalty point storage means for storing a value of prepaid royalty point or a value of amount of money obtained by conversion thereof calculated by the royalty point calculation means of the calculation device recited in any one of claims 1 to 4, and

royalty point transfer processing means for performing processing, in response to a transfer request signal inputted by a user, to prepare transfer data in which a value of amount of money obtained by conversion of a value of prepaid royalty point stored in said royalty point storage means or a requested amount of money equivalent to, or smaller than, the value of amount of money obtained by conversion thereof, an account number of a deposit account from which the transfer is to be made and an account number of a user account to which the transfer is to be made are linked, to output the transfer data, and to cause said royalty point storage means to store a value of prepaid royalty point or a value of amount of money obtained by conversion thereof, obtained by deducting a point value corresponding to said requested amount of money for the transfer or a value of amount of money obtained by conversion thereof.

**19.** A calculation transfer system comprising:

the calculation device recited in any one of claims 1 to 4;

royalty point storage means for storing a value of prepaid royalty point or a value of amount of money obtained by conversion thereof calculated by the royalty point calculation means of the calculation device recited in any one of claims 1 to 4; and

royalty point transfer processing means for performing processing, in response to a transfer request signal inputted by a user, to prepare transfer data in which a requested amount of money for the transfer for adding a value of prepaid royalty point or a value of amount of money obtained by conversion thereof stored in said royalty point storage means, an account number of a user account from which the transfer is to be made and an account number of a deposit account to which the transfer is to be made are linked, to output the transfer data, and to cause said royalty point storage means to store a value of prepaid royalty point or a value of amount of money obtained by conversion thereof obtained by adding a point value or a value of amount of money obtained by conversion thereof corresponding to said requested amount of money for the transfer.

**20.** A point or coupon service system comprising:

particular commodity/service discrimination means for judging whether a sold commodity or provided service is a particular commodity or particular service with regard to which it is agreed that the particular commodity or particular service is a commodity or service that causes no decrease in net amount by discount reduction, or whether a sold commodity or provided service comes under a single or plurality of non-particular commodities or non-particular services which is/are linked to said particular commodity or particular service so as to bear the burden of royalty payment for the particular commodity or particular service; outputting purchase information including an amount of money of receivable royalty to the calculation device recited in claim 1, 3 or 5 when it is judged that the sold commodity or provided service is said particular commodity or particular service; and outputting purchase information including an amount of money of payable royalty to the calculation device recited in claim 1, 3 or 5 when it is judged that the sold commodity or provided service is said non-particular commodity or non-particular service.

**21.** A point or coupon service system comprising:

the calculation device recited in claim 2, 4 or 6;

particular commodity/service discrimination means for judging whether a sold commodity or provided service is a particular commodity or particular service with regard to which it is agreed that the particular commodity or particular service is a commodity or service that causes no decrease in net amount by discount reduction, or whether a sold commodity or provided service comes under a single or plurality of non-particular commodities or non-particular services which is/are linked to said particular commodity or particular service so as to bear the burden of royalty payment for the particular commodity or particular service; outputting purchase information including an amount of money of receivable royalty when it is judged that the sold commodity or provided service is said particular commodity or particular service; and outputting purchase information including an amount of money of payable royalty when it is judged that the sold commodity or provided service is said non-particular commodity or non-particular service; and

discriminated purchase history storage means for storing, as discriminated purchase history information, purchase information including said amount of money of receivable royalty and said amount of money of payable royalty outputted by said particular commodity/service discrimination means after the discrimination, so that the thus-stored discriminated purchase history information can be outputted to the calculation device recited in claim 2, 4 or 6.

**22.** A point or coupon service system comprising:

the calculation device recited in claim 2, 4 or 6;

purchase history storage means storing purchase information on a sold commodity or service; and

particular commodity/service discrimination means for judging whether purchase information read out from said purchase history storage means is purchase information on a particular commodity or particular service with regard to which it is agreed that the particular commodity or particular service is a commodity or service that causes no decrease in net amount by discount reduction, or whether it is purchase information on a single or plurality of non-particular commodities or non-particular services which is/are linked to said particular commodity or particular service so as to bear the burden of royalty payment for the particular commodity or particular service; and outputting, as discriminated purchase history information, purchase information including said amount of money of receivable royalty, which has been judged to be an information on said particular commodity or particular service, and purchase information including said amount of money of payable royalty, which has been judged to be an information on said non-particular commodity or non-particular service, to the calculation device recited in claim 2, 4 or 6.

**23.** A point or coupon service system in which there can be divided a net amount brought by sales of or provision with a net-profit-division-object commodity or net-amount-division-object service that is a particular commodity or particular service with regard to which it is agreed that the particular commodity or particular service is a commodity or service that causes no decrease in net amount by discount reduction and that the net amount therefrom are to be divided,

the point or coupon service system comprising:

the calculation device recited in any one of claims 1 to 6;

purchase information gathering means for gathering purchase data of the sold commodity or provided service and outputting the purchase information; and

net amount division processing means for judging whether or not the purchase information outputted by said purchase information gathering means is purchase information on said net-amount-division-object commodity or net-amount-division-object service, calculating a total amount of money obtained by totaling the sales price or provision price of said net-amount-division-object commodity or net-amount-division-object service that has been sold, when the purchase information is judged to be purchase information on the net-amount-division-object commodity or net-amount-division-object service; dividing the sales price or provision price included in the inputted purchase information on the net-amount-division-object commodity or net-amount-division-object service into predetermined division proportions according to a predetermined recovery definition table until said calculated total amount reaches a predetermined recovery amount of money; and dividing the sales price or provision price included in the inputted purchase information on the net-amount-division-object commodity or net-amount-division-object service into predetermined division proportions according to a predetermined division definition table after said calculated total amount reaches a predetermined recovery amount of money.

**24.** A point or coupon service system in which there can be divided a net amount brought by sales of or provision with a net-amount-division-object commodity or net-amount-division-object service that is a particular commodity or particular service with regard to which it is agreed that the particular commodity or particular service is a commodity or service that causes no decrease in net amount by discount reduction and that the net amount therefrom are to be divided,

the point or coupon service system comprising:

the calculation device recited in claim 2, 4 or 6;

purchase information gathering means for gathering purchase data of sold commodity or provided service and outputting purchase information;

purchase history storage means for storing, as purchase history information, the purchase information outputted by said purchase information gathering means; and

net amount division processing means for judging whether or not purchase information of purchase history information read out from said purchase history storage means is purchase information on said net-amount-division-object commodity or net-amount-division-object service; calculating a total amount of money obtained by totaling the sales price or provision price of said net-amount-division-object commodity or net-amount-division-object service that has been sold on the basis of purchase history information on net-amount-division-object commodity or net-amount-division-object service; dividing the sales price or provision price included in the inputted purchase history information on the net-amount-division-object commodity or net-amount-division-object service into predetermined division proportions according to a predetermined recovery definition table until said calculated total amount reaches a predetermined recovery amount of money; and dividing the sales price or provision price included in the inputted purchase history information on the net-amount-division-object commodity or net-amount-division-object service into predetermined division proportions according to a predetermined division definition table after said calculated total amount reaches a predetermined recovery amount of money.

25. A point or coupon service system in which an advertisement effect can be measured with regard to an advertisement-carrying commodity or advertisement-carrying service that is a particular commodity or particular service with regard to which it is agreed that the particular commodity or particular service is a commodity or service that causes no decrease in net amount by discount reduction, and that carries an advertisement of a single or plurality of non-particular commodities or non-particular services which is/are linked to said particular commodity or particular service so as to bear the burden of royalty payment for the particular commodity or particular service;
the point or coupon service system comprising:

the calculation device recited in any one of claims 1 to 6;

purchase information gathering means for gathering purchase data of sold commodity or provided service and outputting purchase information; and

advertisement effect measurement processing means for judging whether or not purchase information outputted by said purchase information gathering means is purchase information within an object term defined in a predetermined effect measurement plan table and is also purchase information on said non-particular commodity or non-particular service of which the advertisement is placed on said advertisement-carrying commodity or advertisement-carrying service; recording the number of times of purchases of the commodity or number of times of purchases of the service when the purchase information is on said non-particular commodity or non-particular service of which the advertisement is placed on said advertisement-carrying commodity or advertisement-carrying service; and calculating an advertisement effect fee of said non-particular commodity or non-particular service of which the advertisement is placed on said advertisement-carrying commodity or advertisement-carrying service when the total value of number of times of purchases of the commodity or service reaches a predetermined payment standard value or more.

26. A point or coupon service system in which an advertisement effect can be measured with regard to an advertisement-carrying commodity or advertisement-carrying service that is a particular commodity or particular service with regard to which it is agreed that the particular commodity or particular service is a commodity or service that causes no decrease in net amount by discount reduction, and that carries an advertisement of a single or plurality of non-particular commodities or non-particular services which is/are linked to said particular commodity or particular service so as to bear the burden of royalty payment for the particular commodity or particular service;
the point or coupon service system comprising:

the calculation device recited in any one of claims 1 to 6;

purchase information gathering means for gathering purchase data of sold commodity or provided service and outputting purchase information; and

advertisement effect measurement processing means for judging whether or not purchase information outputted by said purchase information gathering means is purchase information within an object term defined in a predetermined effect measurement plan table and is also purchase information on said non-particular commodity or non-particular service of which the advertisement is placed on said advertisement-carrying commodity or advertisement-carrying service; recording the number of common purchasers who have purchased said advertisement-carrying commodity or advertisement-carrying service and have purchased said non-particular commodity or non-particular service of which the advertisement is placed on said advertisement-carrying commodity or advertisement-carrying service when the purchase information is on said non-particular commodity or non-particular service of which the advertisement is placed on said advertisement-carrying commodity or advertisement-carrying service; and calculating an advertisement effect fee of said non-particular commodity or non-particular service of which the advertisement is placed on said advertisement-carrying commodity or advertisement-carrying service when the total value of the number of the common purchasers reaches a predetermined payment standard value or more.

27. A point or coupon service system in which an advertisement effect can be measured with regard to an advertisement-carrying commodity or advertisement-carrying service that is a particular commodity or particular service with regard to which it is agreed that the particular commodity or particular service is a commodity or service that causes no decrease in net amount by discount reduction, and that carries an advertisement of a single or plurality of non-particular commodities or non-particular services which is/are linked to said particular commodity or particular service so as to bear the burden of royalty payment for the particular commodity or particular service;
the point or coupon service system comprising:

the calculation device recited in claim 2, 4 or 6;

purchase information gathering means for gathering purchase data of sold commodity or provided service and outputting purchase information;

purchase history storage means for storing, as purchase history information, purchase information outputted by said purchase information gathering means; and

advertisement effect measurement processing means for judging whether or not purchase information of purchase history information read out from said purchase information storage means is purchase information within an object term defined in a predetermined effect measurement plan table and is also purchase information on said non-particular commodity or non-particular service of which the advertisement is placed on said advertisement-carrying commodity or advertisement-carrying service; recording the number of times of purchase of the commodity or the number of times of purchase of the service when the purchase information is on said non-particular commodity or non-particular service of which the advertisement is placed on said advertisement-carrying commodity or advertisement-carrying service; and calculating an advertisement effect fee of said non-particular commodity or non-particular service of which the advertisement is placed on said advertisement-carrying commodity or advertisement-carrying service when the total value of the number of times of the purchase of the commodity or service reaches a predetermined payment standard value or more.

28. A point or coupon service system in which an advertisement effect can be measured with regard to an advertisement-carrying commodity or advertisement-carrying service that is a particular commodity or particular service with regard to which it is agreed that the particular commodity or particular service is a commodity or service that causes no decrease in net amount by discount reduction, and that carries an advertisement of a single or plurality of non-particular commodities or non-particular services which is/are linked to said particular commodity or particular service so as to bear the burden of royalty payment for the particular commodity or particular service;
the point or coupon service system comprising:

the calculation device recited in claim 2, 4 or 6;

purchase information gathering means for gathering purchase data of sold commodity or provided service and outputting purchase information;

purchase history storage means for storing, as purchase history information, purchase information outputted by said purchase information gathering means; and

advertisement effect measurement processing means for judging whether or not purchase information of purchase history information read out from said purchase information storage means is purchase information within an object term defined in a predetermined effect measurement plan table and is also purchase information on said non-particular commodity or non-particular service of which the advertisement is placed on said advertisement-carrying commodity or advertisement-carrying service; recording the number of common purchasers who have purchased said advertisement-carrying commodity or advertisement-carrying service and have purchased said non-particular commodity or non-particular service of which the advertisement is placed on said advertisement-carrying commodity or advertisement-carrying service when the purchase information is on said non-particular commodity or non-particular service of which the advertisement is placed on said advertisement-carrying commodity or advertisement-carrying service; and calculating an advertisement effect fee of said non-particular commodity or non-particular service of which the advertisement is placed on said advertisement-carrying commodity or advertisement-carrying service when the total value of the number of the common purchasers reaches a predetermined payment standard value or more.

Fig. 1

## Fig.2

| Case No. | Particular content price (Yen) | Non-particular commodity price (Yen) | Receivable R/ Payable R (Yen) | Prepaid RP (Point) | Pre-taken RP (Point) | Discount reduction (Yen) | Consumer Payment amount (Yen) | Prepaid R (Yen) (→R deposit) | (R deposit→) Post-taken R (Yen) | Content seller net amount (Yen) | Commodity seller net amount (Yen) |
|---|---|---|---|---|---|---|---|---|---|---|---|
| 1 | 500 | | 500 | 0 | 500 | 0 | 500 | | | 500 | |
| 2 | 500 | | 500 | 0 | 1000 | 0 | 500 | | | 500 | |
| 3 | | 10000 | 1000 | 0 | 0 | 1000 | 9000 | | | | 9000 |
| 4 | | 10000 | 1000 | 1000 | 0 | 0 | 10000 | 1000 | | | 9000 |
| 5 | 500 | | 500 | 500 | 0 | 500 | 0 | -500 | 500 | 500 | |
| 6 | | 2000 | 200 | 700 | 0 | 0 | 2000 | 200 | | | 1800 |
| 7 | 1000 | | 1000 | 0 | 300 | 700 | 300 | -700 | 700 | 1000 | |
| 8 | | 10000 | 1000 | 700 | 0 | 300 | 9700 | 700 | | | 9000 |
| | | | | | | | | | | | |
| | | | | | | | | | | | |
| | | | | | | | | | | | |
| | | | | | | | | | | | |
| | | | | | | | | | | | |
| Total | 2500 | 32000 | 5700 | 700 | 0 | 2500 | 32000 | 700 | 1200 | 2500 | 28800 |

71

Royalty

**1** — Content seller
<each content>

Pre-taken R | Receivable R = Net amount | Sales price

**7** — Managing organization
<Royalty processing>

Pre-taken RP | Discount reduction

**5** — Commodity seller
<each commodity>

Sales price | Net amount

Payable R | Discount reduction

**3** — Consumer(user)

Particular content

Payment amount | Purchase price | Non-particular commodity

Discount amount
Payment amount

**Discount reduction**

Fig. 3

## Fig. 4

EP 1 598 758 A1

19

11a,11b,11c
13a,13b,13c

29

Royalty point
storage unit

23

25

Purchase data

Purchase
information
gathering unit

Particular
commodity /service
discrimination unit

27

Calculation unit

31

Royalty
management
unit

Fig. 5

## Fig. 6

Purchase information gathering unit (23)

- Data reader (33)
- Input unit (35)
- Control unit (37)
- Purchase information storage unit (39)
- Output unit (41)

Purchase data → 
→ Purchase information

## Fig. 7

25

Particular commodity/service discrimination unit

- Content ID = Mxxxx
- Royalty

- Commodity ID = Sxxxx
- Royalty

43 Particular commodity/service discrimination functioning unit

ID = Mxxxx

ID = Sxxxx

- Particular commodity/service startup signal
- Receivable royalty

- Non-particular commodity/service startup signal
- Payable royalty

Fig. 8

# Fig. 9

Content/commodity master 51

| Content/commodity ID |
| Particular/non-particular type |
| Receivable/payable royalty |
| Seller ID |

# Fig. 10

Content/commodity master 53

| Content/commodity ID |
| Receivable/payable royalty |
| Seller ID |

Seller master 55

| Seller ID |
| Particular/non-particular type |
| Group No. |

EP 1 598 758 A1

Fig. 11

Calculation unit 27

**Particular commodity/service processing unit** 57

· Particular commodity/service startup signal
· Receivable royalty

| Discount reduction value calculation functioning unit 63 | Royalty calculation functioning unit 65 | Royalty point calculation functioning unit 67 |

**Non-particular commodity/service processing unit** 59

· Non-particular commodity/service startup signal
· Payable royalty

| Discount reduction value calculation functioning unit 69 | Royalty calculation functioning unit 71 | Royalty point calculation functioning unit 73 |

Output unit 61

· Discount reduction value
· Post-taken royalty

· Discount reduction value
· Prepaid royalty

Fig. 12

```
Receivable R,
pre-taken RP,
prepaid RP          →   START

S1              Is there prepaid RP?      No prepaid RP
                                    N
                        Y
S2            Prepaid RP>=Receivable R?    No prepaid RP for receivable R portion
                                    N
                        Y

S3   Receivable R portion is set as discount reduction
     value
     (Discount reduction value←Receivable R)

     S9   Prepaid RP portion is set as discount reduction value
          (Discount reduction value←Prepaid RP)

     S6   Discount reduction value is set at zero
          (Discount reduction value←0)

S4   Portion reduced as discount for consumer is set as
     post-taken R
     (Post-taken R←Receivable R)

     S10  Portion reduced as discount for the consumer is set as a
          post-taken R
          (Post-taken R←Prepaid RP)

     S7   Post-taken R is set at zero
          (Post-taken R←0)

S5   Portion reduced as discount for consumer is
     deducted from prepaid RP
     (Prepaid RP←Prepaid RP-Receivable R

     S11  Points, which represent a portion deficient for discount
          reduction for the consumer, are set as pre-taken RP
          (Pre-taken RP←Pre-taken RP+Receivable R-Prepaid RP)

          Portion, which has not been reduced as
          discount for consumer, is set as pre-taken RP
          (Pre-taken RP←Pre-taken RP+Receivable R)
          S8

     S12  Prepaid RP is cleared
          (Prepaid RP←0)

          END

          Discount reduction value
          Post-taken R
          Pre-taken RP, Prepaid RP
```

| Case No. | | Particular content price (Yen) | Non-particular commodity price (Yen) | Receivable R (Yen) | Payable R (Yen) | Prepaid RP (Point) | Pre-taken RP (Point) | Discount reduction (Yen) | Consumer Payment amount (Yen) | Prepaid R (Yen) (→R deposit) | (R deposit →) Post-taken R (Yen) | Content seller net amount (Yen) | Commodity seller net amount (Yen) |
|---|---|---|---|---|---|---|---|---|---|---|---|---|---|
| <1> There is prepaid RP for receivable R portion | Initial value→ | | | | | 1000 | 0 | | | 1000 | 0 | | |
| | | 500 | | 500 | | | | | | | | | |
| | | | | | | | | 500 | | | | | |
| | | | | | | | | | 0 | | | | |
| | | | | | | 500 | | | | | | | |
| | | | | | | | | | | | 500 | | |
| | | | | | | | | | | 500 | | | |
| | | | | | | | | | | | | 500 | |
| | Result→ | 500 | | 500 | | 500 | 0 | 500 | 0 | 500 | 500 | 500 | |
| <2> There is no prepaid RP for receivable R portion | Initial value→ | | | | | 500 | 0 | | | 500 | 0 | | |
| | | 1300 | | 1300 | | | | | | | | | |
| | | | | | | | | 500 | | | | | |
| | | | | | | | | | 800 | | | | |
| | | | | | | 0 | | | | | | | |
| | | | | | | | | | | | 500 | | |
| | | | | | | | 800 | | | | 0 | | |
| | | | | | | | | | | | | 1300 | |
| | Result→ | 1300 | | 1300 | | 0 | 800 | 500 | 800 | 0 | 500 | 1300 | |
| <3> No prepaid RP | Initial value→ | | | 0 | | 0 | 0 | | | | 0 | | |
| | | 1000 | | 1000 | | | | | | | | | |
| | | | | | | | | 0 | | | | | |
| | | | | | | | | | 1000 | | | | |
| | | | | | | | 1000 | | | | | | |
| | | | | | | | | | | | 1000 | | |
| | Result→ | 1000 | | 1000 | | 0 | 1000 | 0 | 1000 | | 0 | 1000 | |

Fig. 13

Fig. 14

82

Payable R,
Pre-taken RP,
Prepaid RP

START

ST1 — Is there pre-taken RP? → No pre-taken RP
N
Y

ST2 — Pre-taken RP>=Payable R? → No pre-taken RP for payable R portion
N
Y

ST3 — Payable R portion is set as discount reduction value (Discount reduction value ← Payable R)

ST9 — Pre-taken RP portion is set as discount reduction value (Discount reduction value←Pre-taken RP)

ST6 — Discount reduction value is set at zero (Discount reduction value←0)

ST4 — Prepaid R is set at zero (Prepaid R←0)

ST10 — Portion deficient for discount reduction for consumer is set as prepaid R (Prepaid R←Payable R – Pre-taken RP)

ST7 — Portion that has not been reduced as discount for consumer is set as prepaid R (Prepaid R←Payable R)

ST5 — Point portion reduced as discount for the consumer is deducted from pre-taken RP (Pre-taken RP←Pre-taken RP-Payable R)

ST11 — Points of portion deficient for discount reduction for consumer are set as prepaid RP (Prepaid RP←Prepaid RP + Payable R - Pre-taken RP)

Points for portion that has not been reduced as discount for consumer is set as prepaid RP (Prepaid RP←Prepaid RP+Payable R)
ST8

ST12 — Pre-taken RP is cleared (Pre-taken RP ← 0)

END

Discount reduction value
Payable R
Pre-taken R, Prepaid RP

## Fig. 15

| Case No. | | Particular content price (Yen) | Non-particular commodity price (Yen) | Receivable R (Yen) | Payable R (Yen) | Prepaid RP (Point) | Pre-taken RP (Point) | Discount reduction (Yen) | Consumer Payment amount (Yen) | Prepaid R (Yen) (→R deposit) | (R deposit →) Post-taken R (Yen) | Content seller net amount (Yen) | Commodity seller net amount (Yen) |
|---|---|---|---|---|---|---|---|---|---|---|---|---|---|
| <4> There is pre-taken RP for payable R portion | Initial value→ | | 5000 | | 500 | 0 | 1200 | | | | | | |
| | | | | | | | 700 | 500 | 4500 | | | | 4500 |
| | Result→ | | 5000 | | 500 | 0 | 700 | 500 | 4500 | | | | 4500 |
| <5> There is no pre-taken RP for payable R portion | Initial value→ | | 10000 | | 1000 | 0 | 800 | | | | | | |
| | | | | | | 200 | 0 | 800 | 9200 | 200 | | | |
| | Result→ | | 10000 | | 1000 | 200 | 0 | 800 | 9200 | 200 | | | 9000 |
| <6> No pre-taken RP | Initial value→ | | 10000 | | 1000 | 0 | 0 | 0 | | | | | |
| | | | | | | 1000 | | 0 | 10000 | 1000 | | | |
| | Result→ | | 10000 | | 1000 | 1000 | 0 | 0 | 10000 | 1000 | | | 9000 |

# Fig. 16

Pre-taken royalty point record 75

| Point |
|-------|

Prepaid royalty point record 77

| Point |
|-------|

# Fig. 17

Royalty point record 79

| Identifier |
|-----------|
| Point |

# Fig. 18

Royalty point record 81

| Point |
|-------|

## Fig. 19

Royalty management unit — 31

- Seller ID
- Prepaid/Post-taken royalty

83 — Check functioning unit

85 — Transfer instruction timing storage unit (immediately/regularly)

99 — Timer

93 — Royalty totaling functioning unit

95 — Royalty read/write functioning unit

97 — Prepaid/post-taken royalty storage unit

87 — Royalty transfer data edit functioning unit

89 — Seller account number storage unit

90 — Royalty deposit account storage unit

91 — Output unit

Royalty transfer data

Regularly

Immediately

## Fig. 20

Particular commodity/service seller record
~101

| Seller ID |
|---|
| Post-taken royalty |
| Date of occurrence |
| Date of transfer |
| Purchase user ID |
| Purchased content/commodity ID |

(A)

Non-particular commodity/service seller record
~103

| Seller ID |
|---|
| Prepaid royalty |
| Date of occurrence |
| Date of transfer |
| Purchase user ID |
| Purchased content/commodity ID |

(B)

## Fig. 21

Content seller ~1    Center ~7(19)

Discount reduction

Sales of particular content

Post-taken R

<User>

Prepaid RP   Yes

No

Prepaid R

Sales of non-particular commodity

Discount reduction

Pre-taken RP   No

Yes

5 Commodity seller

Fig. 22

EP 1 598 758 A1

Content seller — 1
Receipt of R

Consumer(user) — 3    Center — 7(19)    Banking institution — 21

Discount reduction

Purchase of particular content → Prepaid RP — Yes / No

Post-taken R (account)    <Content seller>

Payment of R

R deposit (account)    <Managing organization>

Receipt of R

Purchase of non-particular commodity → Pre-taken RP — No / Yes

Prepaid R (account)    <Commodity seller>

Discount reduction

Payment of R — 5

Commodity seller

## Fig. 23

Consumer(user) 3

(After discount reduction)

Payment amount

Payment

Card company 104

Authorization payment

Credit

Content seller 1

Receipt of R

Banking institution 21

Payment of R

<Content seller>

Post-taken R (account)

<Managing organization>

R deposit (account)

Sales price - Prepaid R (= net amount) Payment

<Commodity seller>

Net amount (account)

Commodity seller 5

Receipt of net amount

Center 7(19)

<User>

Prepaid RP

Yes

No

Pre-taken RP

No

Yes

Consumer(user) 3

Discount reduction

Purchase of particular content

Purchase of non-particular commodity

Discount reduction

EP 1 598 758 A1

Fig. 24

Content seller 1

Receipt of R

Consumer(user) 3

Center 7(19)

Banking institution 21

Discount reduction

<User>

Prepaid RP

Yes

No

Post-taken R (account)   <Content seller>

Payment of R

Purchase of particular content

R deposit (account)   <Managing organization>

Receipt of R

Pre-taken RP

No

<Non-particular>

Prepaid R storage unit

Prepaid R (account)   <Commodity seller>

Purchase of non-particular commodity

Yes

Discount reduction

Payment of R   5

Commodity seller

## Fig. 25

Content seller

Receipt of R — 1

Consumer(user) — 3

Center — 7(19)

Banking institution — 21

Consumer(user) — 3

Discount reduction

<Content seller>

<User>

Post-taken R (account)

Prepaid RP    Yes

<Managing organization>

Payment of R

(After discount reduction)

No

Payment    Payment amount

R deposit (account)

Purchase of particular content

<Non-particular>

Sales price - Prepaid R (= net amount) Payment

Purchase of non-particular commodity

No

Prepaid R storage unit

<Commodity seller>

Pre-taken RP

Net amount (account)

Authorization Payment

Yes

Credit

Discount reduction

Card company

Receipt of net amount — 5

104

Commodity seller

EP 1 598 758 A1

Fig. 26

Fig. 27

Fig. 28

```
┌──────────────┐                  ╭─────────────╮
│ Receivable R │ ───────────────→ │    START    │
│ Pre-taken RP │                  ╰─────────────╯
└──────────────┘                         │
                                         ↓
        ┌──────────────────────────────────────────────────────────┐
SS1 ─── │   Receivable R portion is set as pre-taken RP            │
        │  (Pre-taken RP ← Pre-taken RP + Receivable R)            │
        └──────────────────────────────────────────────────────────┘
                                         │
                                         ↓
                          ╭─────────────╮           ┌──────────────┐
                          │    START    │ ────────→ │ Pre-taken RP │
                          ╰─────────────╯           └──────────────┘
```

## Fig. 29

Payable R
Pre-taken RP

START

SST1 — Is there pre-taken RP?
- N: No pre-taken RP

SST2 — Pre-taken RP >= Payable R?
- N: No pre-taken RP for payable R portion

SST3 — Payable R portion is set as discount reduction value (Discount reduction value ← Payable R)

SST4 — Point portion reduced as discount for consumer is deducted from pre-taken RP (Pre-taken RP ← Pre-taken RP - Payable R)

SST5 — Pre-taken RP portion is set as discount reduction value (Discount reduction value ← Pre-taken RP)

SST6 — Pre-taken RP is cleared (Pre-taken RP ← 0)

SST7 — Discount reduction value is set at zero (Discount reduction value ← 0)

Discount reduction value
Pre-taken RP

END

Fig. 30

EP 1 598 758 A1

## Fig. 31

| Purchase user ID |
|---|
| Purchased content/commodity ID |
| Seller ID |
| Sales price |
| Date of purchase |

~117

## Fig. 32

| Purchase user ID |
|---|
| Purchased content/commodity ID |
| Seller ID |
| Sales price |
| Date of purchase |
| Receivable/payable royalty |

~119

## Fig. 33

Particular commodity/service discrimination unit 109

Particular commodity/service discrimination functioning unit 121

Particular (ID = Mxxxx) → Particular type

Non-particular (ID = Sxxxx) → Non-particular type

Discriminated purchase history information

Purchase information

Purchase history information

Fig. 34

Particular commodity/service discrimination unit ⌐123

Purchase information

Purchase history information

Particular commodity/ service discrimination functioning unit ⌐125

Particular → Particular type

Non-particular → Non-particular type

Discriminated purchase history information

Discrimination information storage unit ⌐127

EP 1 598 758 A1

Fig. 35

| Purchase user ID |
| Purchased content/commodity ID |
| Seller ID |
| Sales price |
| Date of purchase |
| Receivable/payable royalty |
| Particular/non-particular type |

129

## Fig. 36

Fig. 37

Discriminated purchase history information
Pre-taken RP, prepaid RP

START

T1 — Purchase history is classified
(Purchase history → Σ Payable R
→ Σ Receivable R)

T2 — Is particular portion reduced as discount?

N — Non-particular portion is reduced (Prepaid RP + Σ Payable R) < (Pre-taken RP + Σ Receivable R)

Y — (prepaid RP + Σ Payable R) >= (Pre-taken RP + Σ Receivable R)

T3 — Σ Discount reduction values is set
(Σ discount reduction values ← (Pre-taken RP + Σ Receivable R))

T9 — Σ Discount reduction values is set
(Σ Discount reduction values ← (Prepaid RP + Σ Payable R))

T4 — Prepaid RP is tentatively stored
(Previous prepaid RP ← Prepaid RP)

T5 — Is RP to be carried over to next time a particular portion?

N — Non-particular portion (Prepaid RP + Σ Payable R) > (Pre-taken RP + Σ Receivable R)

Y — (Prepaid RP + Σ Payable R) < = (Pre-taken RP + Σ Receivable R)

T6 — Pre-taken RP is stored
(Pre-taken RP ← (Pre-taken RP + Σ Receivable R) - (Prepaid RP + Σ Payable R))

T10 — Prepaid RP is stored
(Prepaid RP ← (Prepaid RP + Σ Payable R) - (Pre-taken RP + Σ Receivable R))

T7 — Prepaid RP is cleared
(Prepaid RP ← 0)

T11 — Pre-taken RP is cleared
(Pre-taken RP ← 0)

T8 — Σ Prepaid R is set
(Σ Prepaid R ← Prepaid RP - previous prepaid RP)

END

Σ Discount reduction values
Σ Receivable R, Σ Payable R
Σ Prepaid R
Pre-taken RP, Prepaid RP

| Prepaid RP to be carried over to next time | Pre-taken RP to be carried over to next time | Consumer (user) |
|---|---|---|

Particular commodity/ service seller Σ Sales prices

Pre-taken RP

Σ Receivable R

Prepaid RP

Σ Payable R

Non-particular commodity/ service seller Σ Sales prices

Σ Net amounts

Prepaid RP

Σ Payable R

Σ Net amounts

Pre-taken RP

Σ Receivable R

Particular commodity/ service seller Σ Sales prices

Non-particular commodity/ service seller Σ Sales prices

Total sum of Σ Sales prices

Σ Discount reduction

Σ User payment amounts

Σ User purchase amounts

Fig. 38

EP 1 598 758 A1

Fig. 39

Royalty management unit

ΣReceivable royalty

ΣPayable royalty

ΣPrepaid royalty

Discriminated purchase history information

Royalty transfer data edit functioning unit — 141

Seller account number storage unit — 140

Royalty deposit account storage unit — 138

Output unit — 142

Transfer data

115

103

## Fig. 40

Fig. 41

Fig. 42

Center $\quad$ 7 (105) $\qquad$ Consumer (user) $\quad$ 3

**Purchase history information** | Discrimi-nation

**Refund**

(Discount non-reduction)

**Purchase amount**

\<Non-particular\>

Σ Payable R

Prepaid RP

T2, T5

Σ Discount reduction values

\<User\>

User (account)

Transfer $\qquad$ Transfer

Purchase of particular content

Pre-taken RP

Transfer instruction

\<Managing organization\>

R deposit (account)

\<Particular\>

Σ Receivable R

Purchase of non-particular commodity

\<Non-particular\>

Σ Net amounts | Σ Prepaid R

Transfer instruction

Transfer

Receivable R (account) | Net amount (account)

\<Content seller\> \<Commodity seller\>

Consumer (user) 3

21 Banking institution

## Fig. 43

# Fig. 44

Discriminated purchase history information
Pre-taken RP

START

TT1 — Purchase history is classified
$$\left(\begin{array}{l}\text{Purchase history} \rightarrow \Sigma\text{Payable R} \\ \uparrow \Sigma\text{Receivable R} \\ \uparrow \Sigma\text{Net amounts}\end{array}\right)$$

TT2 — Is particular portion reduced as discount?

N → Non-particular portion is reduced as discount   $\Sigma$Payable R $<$ (Pre-taken RP + $\Sigma$receivable R)

Y $\Sigma$Payable R $>=$ (Pre-taken RP + $\Sigma$receivable R)

TT3 — $\Sigma$Discount reduction values is set
($\Sigma$Discount reduction values ← (Pre-taken RP+$\Sigma$Receivable R))

TT6 — $\Sigma$Discount reduction values is set
($\Sigma$Discount reduction values ← $\Sigma$Payable R)

TT4 — Is there RP to be carried over to next time?

N $\Sigma$Payable R $>$ (Pre-taken RP + $\Sigma$Receivable R)

Y $\Sigma$Payable R $<=$ (Pre-taken RP + $\Sigma$Receivable R)

TT5 — Pre-taken RP is stored
Pre-taken RP ← (Pre-taken RP + $\Sigma$Receivable R) - $\Sigma$Payable R

TT7 — Re-calculation of $\Sigma$Net amounts on non-particular side
$\Sigma$Net amounts ← ($\Sigma$Net amounts + $\Sigma$Payable R) - (Pre-taken RP + $\Sigma$Receivable R)

TT8 — Pre-taken RP is cleared
(Pre-taken RP ← 0)

$\Sigma$Discount reduction values
$\Sigma$Receivable R, $\Sigma$Payable R
$\Sigma$Net amounts
Pre-taken RP

END

Fig. 45

Fig. 46

Fig. 47

Purchase data

11a,11b,11c
13a,13b,13c

Purchase
information
gathering unit

23

25

Particular commodity/
service discrimination
unit

29

Royalty point
storage unit

27

Calculation unit

31

Royalty
management
unit

151

Royalty point
transfer
processing unit

145

153

Net amount division
processing unit

155

Advertisement effect
measurement
processing unit

Fig. 48

EP 1 598 758 A1

112

EP 1 598 758 A1

**Fig. 49**

151

Royalty point transfer processing unit

159

Prepaid royalty point update functioning unit

161

Transfer instruction functioning unit

| Transfer type |
| User ID |
| Transfer point or amount of money |
| Banking institution code |
| Store number |
| Account number |
| Password |

163

Prepaid royalty point storage unit

29

Royalty deposit account storage unit

162

| Transfer from | Royalty deposit account banking instituion code |
| | Royalty deposit account store number |
| | Royalty deposit account number |
| Transfer to | User account banking institution code |
| | User account store number |
| | User account number |
| Transfer (bank transfer) amount | |
| Password | |

| Transfer from | User account banking institution code |
| | User account store number |
| | User account number |
| Transfer to | Royalty deposit account banking institution code |
| | Royalty deposit account store number |
| | Royalty deposit account number |
| Transfer (bank transfer) amount | |
| Password | |

## Fig.50

Transferable point
( = Prepaid royalty point)

```
Point transfer          U 1
login screen

      ↓

Point transfer          U 2
instruction screen

      ↓

Royalty point transfer  U 3
processing start
```

U 5
Deduction → Prepaid royalty point storage unit  163

Point (Royalty deposit account) → User account transfer instruction  U 4

Royalty deposit account 171 → User account 21 173
Transfer. Bank transfer
Banking institution

User account → Point (Royalty deposit account) transfer instruction  U 6

User account 21 173 → Royalty deposit account 171
Transfer. Bank transfer
Banking institution

Addition  U 7 → Prepaid royalty point storage unit  163

## Fig. 51

165

**Transfer type**

&#9675; Transfer point to user account

&#9675; Transfer point from user account

User ID

Login password

| Login | Cancel |

## Fig. 52

167

**Transfer from**

Transferable point     <u>XXXXXXXXX</u> Yen

Transfer instruction point   Yen

**Transfer to**

Banking institution code

Store number

Account number

Password

| Execute | Cancel |

## Fig. 53

169

**Transfer from**

Banking institution code [＿＿＿＿]

Store number [＿＿＿＿]

Account number [＿＿＿＿]

Password [＿＿＿＿]

Transferable amount　　XXX,XXX,XX

Transfer amount　　[＿＿＿＿] Yen

[ Execute ]　[ Cancel ]

Net amount division processing unit

181 Recovery definition storage unit

191 ΣRecovery amounts storage unit

153

189 Recovery amount calculation unit

195

·Content ID
·Sales price

175 Checking unit

193 Right holder mail address storage unit

Output unit

Notification of recovery amount
·Content ID
·Mail address
·Recovery amount

Purchase history information

177 Sales price updating unit

183 Division amount calculation unit

Notification of division amount
·Content ID
·Mail address
·Division amount

179 ΣSales prices storage unit

185 Division definition table storage unit

187 ΣDivision amounts storage unit

Fig. 54

EP 1 598 758 A1

Fig. 55

```
┌─────────────────┐
│ Content ID      │──────────────▶(  START  )
│ Sales price     │                    │
└─────────────────┘                    │        ⟋ SU1
                                       ▼
                        ┌─────────────────────────────────┐
                        │ Checking recovery definition table │
                        └─────────────────────────────────┘
                                       │           ⟋ SU2
                                       ▼
                  ◇ Does content ID represent an object whose ◇  N
                  ◇       net amount is to be divided?        ◇──────────────────┐
                                       │ Y                                        │
                                       │        ⟋ SU3                              │
                                       ▼                                          │
                        ┌─────────────────────────────────┐                      │
                        │ Sales amount is updated, and the │                      │
                        │ updated sales amount is stored in │                     │
                        │ Σ Sales prices storage unit       │                     │
                        └─────────────────────────────────┘                      │
                                       │         ⟋ SU4                            │
                                       ▼                                          │
                           ◇   Σ Sales amounts      ◇  N                          │
                           ◇ ≦ Recovery amount of money? ◇──────────┐            │
                                       │ Y                           │            │
                                       │        ⟋ SU5                 │  ⟋ SU6     │
                                       ▼                             ▼            │
        ┌───────────────────────────────────┐   ┌───────────────────────────────────┐
        │ Recovery amount is calculated according │ Division amounts are calculated according │
        │ to recovery definition table, and the │ to division definition table, and the │
        │ calculated recovery amount is stored in │ calculated division amounts are stored in │
        │ Σ Recovery amounts storage unit       │ Σ Division amounts storage unit       │
        └───────────────────────────────────┘   └───────────────────────────────────┘
                        │                                 │                        │
                        ├◀────────────────────────────────┘                        │
                        ├◀─────────────────────────────────────────────────────────┘
                        ▼
                    (  END  )────────────▶┌─────────────────────────────┐
                                          │ Mail address                │
                                          │ Recovery amount/Division amount │
                                          └─────────────────────────────┘
```

EP 1 598 758 A1

Fig. 56

| Content ID |
| --- |
| Definition unit |
| Transaction unit |

| Recovery definition table |
| --- |
| Division definition table |

**Recovery definition table**

| Right holder | Recovery amount 100,000,000 | Sponsor A | 50% | ΣRecovery amounts |
| --- | --- | --- | --- | --- |
| | | Sponsor B | 25% | ΣRecovery amounts |
| | | Sponsor C | 25% | ΣRecovery amounts |

**Division definition table**

| Right holder | Producer side | 30% | Producer D | 15% | ΣDivision amounts |
| --- | --- | --- | --- | --- | --- |
| | | | Producer E | 15% | ΣDivision amounts |
| | Investor or buyer side | 50% | Broad cast station F | 30% | ΣDivision amounts |
| | | | Advertisement company G | 20% | ΣDivision amounts |
| | Sponsor side | 20% | Sponsor A | 10% | ΣDivision amounts |
| | | | Sponsor B | 5% | ΣDivision amounts |
| | | | Sponsor C | 5% | ΣDivision amounts |

| ΣSales amounts storage unit |
| --- |
| Recovery amount storage unit |
| Division amount storage unit |

## Fig. 57

Division ($\Sigma$ Sales amount
$>$ Recovery amount)

Recovery ($\Sigma$ Sales amount $\leqq$
Recovery amount)

| | A · B · C |
| D · E | F · G |

| | C |
| A | B |

Advertisement
sponsor charge

Advertisement
time sale right–
broadcast right
charge

Content
production cost

amount

Fig. 58

EP 1 598 758 A1

## Fig. 59

Flowchart:

User ID / Content/commodity ID → START

SSU1 — Effect measurement plan table is checked

SSU2 — Object content or commodity (N / Y)

SSU3 — Within intended time period of effect measurement (N / Y)

SSU4 — Is commodity purchased? (N (Content purchased) / Y)

SSU16 — Content purchase user management record is checked

SSU5 — Commodity purchase user management record is checked

SSU6 — Is the user is a user who has not purchased said commodity? (N / Y)

SSU17 — No content purchase user management record? (N / Y)

SSU7 — Is the user a user who has purchased a content linked to said commodity? (N / Y)

SSU18 — Addition to content purchase user management record

SSU8 — Addition to commodity purchase management record

SSU9 — Σ number of matching users is counted up, and it is stored in Σ number of matching users storage unit

SSU10 — Σ number of purchases is counted out, and it is stored in Σ number of purchases storage unit

SSU11 — Is the type of measurement the number of purchases? (N / Y)

SSU14 — Σ number of matching users ≧ Payment standard value? (N / Y)

SSU12 — Σ number of purchases ≧ Payment standard value? (N / Y)

SSU15 — Σ fee is updated Σ fee=fee unit price × Σ number of matching users

SSU13 — Σ fee is updated Σ fee=fee unit price × Σ number of purchases

END

mail address / commodity ID, Σ number of purchases, Σ fee / Σ number of matching users

Fig. 60

| Advertisement producer ID |
|---|
| Plan unit |
| Transaction unit |

| Effect measurement plan table |
|---|
| Effect measurement value storage unit |

| Commodity ID |
|---|
| Seller ID |
| Object term |
| Fee unit price |
| Fee payment conditions |
| Content on which advertisement is placed |
| Σ number of matching users storage unit |
| Σ number of purchases storage unit |
| Σ Fee storage unit |

| Measurement type |
|---|
| Payment standard value |

| Content ID |
|---|
| |
| Content ID |

Content purchase user
management record 214

| Content ID |
|---|
| Date of purchase |
| Purchase user ID |

Commodity purchase user
management record 216

| Commodity ID |
|---|
| Date of purchase |
| Purchase user ID |

123

## Fig. 61

Fig. 62

EP 1 598 758 A1

231

# Program Guide

| Program category |
| --- |
| Movies |
| Music |
| Information |
| Travels |
| Hobbies |
| Cooking |
| Dramas |
| News |
| SF/Fantasy/Holler stories |
| Acion films |
| Animations |
| Infomercial |
| Variety shows |
| Laugh-in, Comedy |
| Education, cultural |
| Quiz |
| Game shows |
| Healty and Medicine |
| Children |
| Period dramas |
| Cars |
| Sports |
| Talk shows |
| Documentary |
| Fishing |
| Religion |
| Special |

Keyword searches [                    ] [Search] ◎all categories ◎currently displayed programs [to subscription]

[according to popularity ▼] Sort

| Content ID / Channel name | Program name | Charge system | Price | Possible discount | |
| --- | --- | --- | --- | --- | --- |
| MFJLV0293 / Channel A | Rebroadcasting live A | PPV | 200 Yen | 200 Yen | [Purchase] |
| MFJMV0294 / Channel B | Movie B | PPD | 300 Yen | 300 Yen | [Purchase] |
| MFJSP0295 / Channel C | Soccer C | PPM | 1,500 Yen | 1,500 Yen | [Purchase] |
| MFJDM0295 / Channel D | Drama D | PPS | 1,200 Yen | 1,200 Yen | [Purchase] |

[Purchase items to be confirmed] [All of purchase items to be cancelled]

[Previous page] [Next page]

Fig. 63

# Confirmation of purchase itemes

233

| Usable points you have so far | | | | 500 Yen | |
|---|---|---|---|---|---|

Two items are now placed in shopping cart.

| Content ID | Channel name | Charge system | Price | Subtotal | |
|---|---|---|---|---|---|
| Program name | | | | | |
| MFJLV0293 | Channel A | PPV | 200 Yen | 200 Yen | Purchase to be cancelled |
| Rebroadcasting live A | | | | | |
| MFJDM0295 | Channel D | PPS | 1,200 Yen | 1,200 Yen | Purchase to be cancelled |
| Drama D | | | | | |
| | | | Total | 1,400 Yen | |
| | | | Discount amount | 500 Yen | |
| | | | Amount after discount | 900 Yen | |
| | | | Consumption tax amount | 45 Yen | |
| | | | Total(Payment amount) | 945 Yen | |

| Usable point for discount in purchase of commodities after the purchase of programs | 900 Yen |
|---|---|

| Shopping continued | These are ordered |
|---|---|

**Program category**

Movies
Music
Information
Travels
Hobbies
Cooking
Dramas
News
SF/Fantasy/Holler stories
Acion films
Animations
Infomercial
Variety shows
Laugh-in, Comedy
Education, cultural
Quiz
Game shows
Healty and Medicine
Children
Period dramas
Cars
Sports
Talk shows
Documentary
Fishing
Religion
Special

# Subscription program guide

keyword searches [＿＿＿＿＿＿] [Search] ◎all categories  ◎currently displayed programs    [To unit purchase]

[according to popularity    ▼] sort

| Content ID | Category | Channel name | Monthly charge | Possible Discount | Contract term | |
|---|---|---|---|---|---|---|
| MTKWMV932 | Foreign films | Channel A | 800 Yen | 800 Yen | ☑ 1 Year<br>☐ 3 Years<br>☐ 5 Years | [Purchase] |
| MTKJMV534 | Japanese filmes | Channel B | 800 Yen | 800 Yen | ☐ 1 Year<br>☐ 3 Years<br>☐ 5 Years | [Purchase] |
| MTKGF5255 | Sports, golf | Channel C | 1,000 Yen | 1,000 Yen | ☐ 1 Year<br>☐ 3 Years<br>☐ 5 Years | [Purchase] |
| MTKSBB566 | Sports, Japanese baseball | Channel D | 900 Yen | 900 Yen | ☐ 1 Year<br>☐ 3 Years<br>☑ 5 Years | [Purchase] |
| MTKMJ5245 | Music, Japanese pops | Channel E | 800 Yen | 800 Yen | ☐ 1 Year<br>☐ 3 Years<br>☐ 5 Years | [Purchase] |
| MTKJDM566 | Drama, Japanese 1 | Channel F | 1,200 Yen | 1,200 Yen | ☑ 1 Year<br>☐ 3 Years<br>☐ 5 Years | [Purchase] |

[Purchase items to be confirmed]    [All of purchase items to be cancelled]

[Previous page]    [Next page]

Fig. 64

EP 1 598 758 A1

127

## ~237

# Confirmation of purchase items

| Usable points you have so far | 16,800 Yen |
|---|---|

Three items are placed in shopping cart at present.

| Content ID | Channel name | Payment classification | Monthly charge | Subtotal | |
|---|---|---|---|---|---|
| Category | | | | | |
| MTKWMV932 | Channel A | ○Monthly ●Lump sum payment | 800 Yen | 9,600 Yen | Purchase to be cancelled |
| Foreign film | | | | | |
| MTKSBB566 | Channel D | ●Monthly ○Lump sum payment | 900 Yen | 900 Yen | Purchase to be cancelled |
| Sports, Japanese baseball | | | | | |
| MTKJDM566 | Channel F | ●Monthly ○Lump sum payment | 1,200 Yen | 1,200 Yen | Purchase to be cancelled |
| Drama, Japanese 1 | | | | | |

| | | |
|---|---|---|
| Total | 11,700 Yen |
| Discount amount | 11,700 Yen |
| Amount after discount | 0 Yen |
| Consumption tax | 0 Yen |
| Total (Payment amount) | 0 Yen |

| Usable point for discount in purchase of commodities after the purchase of programs | 5,100 Yen |
|---|---|

| Shopping continued | These are ordered |
|---|---|

Fig. 65

EP 1 598 758 A1

**Commodity category**

computer
Electric appliances,
Cameras
Music
Books
Toys/Games /Hobbies
Sports and Leisure
Fashion
Watches, Accessories
Cosmetics
Health
Gourmet, Drinks
Housings, Living
Offices
Flowers and Greens
Gifts
Travels

# Commodity catalog

keyword searches [　　　　　] [ Search ]  ◎all categories   ◎currently displayed commodities

[in descending order of prices ▼] sort

| Commodity ID | Seller | Unit price | Possible Discount | Order quantity | |
|---|---|---|---|---|---|
| | Trade name | | | | |
| SMAA37283 | Maker A | 3,000 Yen | 300 Yen | [ 1 ] | [ Purchase ] |
| CD album V | | | | | |
| SFSC58728 | Flower shop C | 2,000 Yen | 200 Yen | [ 2 ] | [ Purchase ] |
| Bouquet gift A | | | | | |
| SBSB98725 | Publisher B | 3,500 Yen | 350 Yen | [　] | [ Purchase ] |
| Book ○○○○ | | | | | |
| SMDD87285 | Maker D | 170,000 Yen | 17,000 Yen | [ 1 ] | [ Purchase ] |
| Liquid crystal TV set HRP-S 20V Model | | | | | |

[ Purchase items are to be confirmed ]   [ All of purchase items are to be cancelled ]

[ Previous page ]   [ Next page ]

EP 1 598 758 A1

Fig. 66

# Confirmation of purchase items

| Usable point that you have so far | 900 Yen |
| --- | --- |

Four commodities are now placed in shopping cart.

| Commodity ID | Seller | Unit price | Order quantity | Subtotal | |
| --- | --- | --- | --- | --- | --- |
| | Trade name | | | | |
| SMAA37283 | Maker A | 3,000 Yen | 1 | 3,000 Yen | Purchase to be cancelled |
| CD album V | | | | | |
| SFSC58728 | Flower shop C | 2,000 Yen | 2 | 4,000 Yen | Purchase to be cancelled |
| Bouquet gift A | | | | | |
| SMDD87285 | Maker D | 170,000 Yen | 1 | 170,000 Yen | Purchase to be cancelled |
| Liquid crystal TV set HRP-S 20V Model | | | | | |

| | | |
| --- | --- | --- |
| | Total | 177,000 Yen |
| | Discount amount | 900 Yen |
| | Amount after discount | 176,100 Yen |
| | Consumption tax | 8,805 Yen |
| | Total (Payment amount) | 184,905 Yen |

| Usable point for discount in purchase of programs after the purchase of commodities | 16,800 Yen |
| --- | --- |

| Shopping continued | These are ordered |
| --- | --- |

EP 1 598 758 A1

Fig. 67

## Usage Bill

To:  Mr. ○○○○ ○○○○

1-2-3○○○○○○, XXX-ku, Tokyo 000-0000

| Previous point | 500 Yen |
|---|---|

| Point usable at next time | 5,100 Yen |
|---|---|

| Date | | | Store name and commodity name | Particulars of purchase | | Discount amount (Yen) | Amount after discount (Yen) | Consumption tax amount (Yen) | Payment details | |
|---|---|---|---|---|---|---|---|---|---|---|
| | | | | Purchase amount (Yen) | Payament classification | | | | Number of times this time | Payment amount (Yen) |
| 2002 | 10 | 1 | TV station P    Rebroadcasting live A | 200 | 1 | 200 | 0 | 0 | 1 | 0 |
| 2002 | 10 | 1 | TV station P    Drama D | 1200 | 1 | 300 | 900 | 45 | 1 | 945 |
| 2002 | 10 | 25 | Maker A          CD album V | 3000 | 1 | 900 | 2100 | 105 | 1 | 2205 |
| 2002 | 10 | 25 | Flower shop C          Bouquet gift A | 4000 | 1 | 0 | 4000 | 200 | 1 | 4200 |
| 2002 | 10 | 25 | Maker D   Liquid-crystal television set   HRP-S 20V model | 170000 | 1 | 0 | 170000 | 8500 | 1 | 178500 |
| 2002 | 10 | 31 | TV station F    Channel A | 9600 | 1 | 9600 | 0 | 0 | 1 | 0 |
| 2002 | 10 | 31 | TV station F    Channel D | 900 | 2 | 900 | 0 | 0 | 1 | 0 |
| 2002 | 10 | 31 | TV station F    Channel F | 1200 | 2 | 1200 | 0 | 0 | 1 | 0 |
| | | | | | | | | | Total amount of payment this time (Yen) | 185850 |

Payment classification 1: In a lump sum
Payment classification 2: Monthly

Fig. 68

EP 1 598 758 A1

Fig. 69

Usage Bill

To: Mr. ○○○○ ○○○○

1-2-3○○○○○, XXX-ku, Tokyo 000-0000

| Previous point | 500 Yen |
|---|---|

| Point usable at next time | 5,100 Yen |
|---|---|

| Date | Store name and commodity name | Particulars of purchase | | Payment details | |
|---|---|---|---|---|---|
| | | Purchase amount (Yen) | Payment classification | Number of times this time | Payment amount (Yen) |
| 2002 10 1 | TV station P Rebroadcasting live A | 200 | 1 | 1 | 200 |
| 2002 10 1 | TV station P Drama D | 1200 | 1 | 1 | 1200 |
| 2002 10 25 | Maker A    CD album V | 3000 | 1 | 1 | 3000 |
| 2002 10 25 | Flower shop C        Bouquet gift A | 4000 | 1 | 1 | 4000 |
| 2002 10 25 | Maker D Liquid-crystal television set   HRP-S 20V model | 170000 | 1 | 1 | 170000 |
| 2002 10 31 | TV station F Channel A | 9600 | 1 | 1 | 9600 |
| 2002 10 31 | TV station F Channel D | 900 | 2 | 1 | 900 |
| 2002 10 31 | TV station F Channel F | 1200 | 2 | 1 | 1200 |
| | | | | | |
| | | | | | |
| | | | | | |
| | | | | | |
| | | | | | |
| | | Discount amount (Yen) | | | 13100 |
| | | Amount after discount (Yen) | | | 177000 |
| | | Consumption tax amount (Yen) | | | 8850 |
| | | Total amount of payment this time (Yen) | | | 185850 |

Payment classification 1: In a lump sum
Payment classification 2: Monthly

132

## Fig. 70

Fig. 71

EC site — 11a, 11b, 11c

Purchase information gathering unit — 23

Confirmation information receipt unit — 218

15a, 15b, 15c

User terminal

22

User ID
Content/commodity ID

Discount reduction value

User — 3

13a, 13b, 13c

Store terminal

Purchase information gathering unit — 23

Confirmation information receipt unit — 218

Center — 245

263
265
267

User master

Content/commodity master

Seller master

Communication unit — 247

Contorol unit — 249

Communication unit — 251

Particular commodity/service discrimination unit — 253

255

Calculation unit

Royalty manegement unit — 257

259 — Royalty point storage unit

Prepaid/post-taken royalty storage unit — 261

Users 1~n

Sellers 1~n

Banking institution

Transfer bank code

Account number in transfer bank

Transfer-receiving bank code

Account number in transfer-receiving bank

Prepaid/post-taken royalty

22

21

## Fig. 72

## Fig. 73

## Fig. 74

## Fig. 75

Fig. 76

Fig. 77

**Royalty**

Content seller — 1

<each content>

Net amount

Pre-taken R
Post-taken R

Receivable R

Sales price

Managing organization
<Royalty processing> — 7

Pre-taken RP
Post-taken R

Discount reduction
Prepaid R

Discount reduction — Prepaid RP

Commodity seller — 5

<each commodity>

Sales price

Net amount

Payable R

Discount reduction
Prepaid R

**Discount reduction**

Consumer (User)

Particular content

Discount amount
Payment amount

Purchase price

Non-particular commodity

Discount amount
Payment amount

**Discount reduction**

3

Fig. 78

EP 1 598 758 A1

Fig.79

**Royalty**

Content seller ⌐1

<each content>

Net amount

Pre-taken R | Receivable R | Sales price

Managing organization ⌐7
<Royalty processing>

Pre-taken RP

Discount reduction

Commodity seller ⌐5

<each commodity>

Sales price | Net amount

Payable R | Discount reduction

**Discount reduction**

Consumer (User)

Particular content

Payment amount | Purchase price

Non-particular commodity

Discount reduction

Payment amount

⌐3

EP 1 598 758 A1

# INTERNATIONAL SEARCH REPORT

| International application No. |
| --- |
| PCT/JP03/02319 |

**A. CLASSIFICATION OF SUBJECT MATTER**
Int.Cl$^7$ G06F17/60

According to International Patent Classification (IPC) or to both national classification and IPC

**B. FIELDS SEARCHED**

Minimum documentation searched (classification system followed by classification symbols)
Int.Cl$^7$ G06F17/60

Documentation searched other than minimum documentation to the extent that such documents are included in the fields searched

| | | | |
| --- | --- | --- | --- |
| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)
JICST FILE(JOIS), WPI, INSPEC(DIALOG)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2002-312731 A (NEC Corp.), 25 October, 2002 (25.10.02), (Family: none) | 1–28 |
| Y | JP 2002-260097 A (Toshiba Tec Corp.), 13 September, 2002 (13.09.02), (Family: none) | 1–28 |
| Y | JP 2002-230449 A (NEC Infrontia Corp.), 16 August, 2002 (16.08.02), (Family: none) | 15–28 |
| Y | JP 2002-149937 A (SN Solutions Corp.), 24 May, 2002 (24.05.02), (Family: none) | 15–28 |

☐ Further documents are listed in the continuation of Box C.    ☐ See patent family annex.

| | |
| --- | --- |
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>24 March, 2003 (24.03.03) | Date of mailing of the international search report<br>08 April, 2003 (08.04.03) |
| Name and mailing address of the ISA/<br>Japanese Patent Office | Authorized officer |
| Facsimile No. | Telephone No. |

Form PCT/ISA/210 (second sheet) (July 1998)